(19) Europäisches Patentamt
European Patent Office
Office européen des brevets

(11) EP 3 960 777 A1

(12) EUROPEAN PATENT APPLICATION
published in accordance with Art. 153(4) EPC

(43) Date of publication:
**02.03.2022 Bulletin 2022/09**

(21) Application number: **20795104.7**

(22) Date of filing: **27.04.2020**

(51) International Patent Classification (IPC):
***C08F 6/16*** *(2006.01)* ***C08K 5/095*** *(2006.01)*
***C08K 5/098*** *(2006.01)* ***C08L 27/12*** *(2006.01)*
***B01J 20/26*** *(2006.01)* ***B01J 20/28*** *(2006.01)*
***B01J 41/05*** *(2017.01)* ***B01J 41/14*** *(2006.01)*
***B01J 47/018*** *(2017.01)*

(52) Cooperative Patent Classification (CPC):
**B01J 20/26; B01J 20/28; B01J 41/05; B01J 41/14; B01J 47/018; C08F 6/16; C08K 5/095; C08K 5/098; C08L 27/12**

(86) International application number:
**PCT/JP2020/018045**

(87) International publication number:
**WO 2020/218622 (29.10.2020 Gazette 2020/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.04.2019 JP 2019085982**

(71) Applicant: **Daikin Industries, Ltd.**
**Osaka 530-8323 (JP)**

(72) Inventors:
- **HAYASHI, Tadao**
  **Osaka-shi, Osaka 530-8323 (JP)**
- **TAIRA, Takahiro**
  **Osaka-shi, Osaka 530-8323 (JP)**
- **YOSHIDA, Hirotoshi**
  **Osaka-shi, Osaka 530-8323 (JP)**
- **OKUI, Chiaki**
  **Osaka-shi, Osaka 530-8323 (JP)**
- **YAMANAKA, Taku**
  **Osaka-shi, Osaka 530-8323 (JP)**
- **KATO, Taketo**
  **Osaka-shi, Osaka 530-8323 (JP)**

(74) Representative: **Hoffmann Eitle**
**Patent- und Rechtsanwälte PartmbB**
**Arabellastraße 30**
**81925 München (DE)**

# (54) FLUOROPOLYMER AQUEOUS DISPERSION PRODUCTION METHOD AND FLUOROPOLYMER AQUEOUS DISPERSION

(57) The present invention provides a method for producing a purified fluoropolymer aqueous dispersion, comprising: (A) bringing a fluoropolymer aqueous dispersion obtained using a hydrocarbon surfactant into contact with an anion exchange resin A or a synthetic adsorbent,
wherein the anion exchange resin A has:
an ion-exchange group represented by the following general formula (A1):

$$-N^+R^1R^2R^3X^-$$

wherein $R^1$, $R^2$, and $R^3$ are the same as or different from each other, and are each a hydrogen atom or an organic group, and at least one of $R^1$, $R^2$, and $R^3$ is an organic group having 3 or more carbon atoms; and X is a counter ion; or
an ion-exchange group represented by the following general formula (A2):

$$-NR^4R^5$$

wherein $R^4$ and $R^5$ are the same as or different from each other, and are each a hydrogen atom or an organic group,

EP 3 960 777 A1

and at least one of $R^4$ and $R^5$ is an organic group having 2 or more carbon atoms.

## Description

TECHNICAL FIELD

The present invention relates to a method for producing a fluoropolymer aqueous dispersion and to a fluoropolymer aqueous dispersion.

BACKGROUND ART

Fluorinated anionic surfactants have been used in the production of fluorine-containing polymers by emulsion polymerization. Recently, it has been proposed to use hydrocarbon surfactants instead of the fluorinated anionic surfactants (see, for example, Patent Documents 1 to 3).

RELATED ART

PATENT DOCUMENTS

Patent Document 1: U.S. Patent No. 9,255,164
Patent Document 2: U.S. Patent No. 8,563,670
Patent Document 3: U.S. Patent No. 9,074,025

SUMMARY OF THE INVENTION

PROBLEM TO BE SOLVED BY THE INVENTION

The present disclosure provides a method for producing a fluoropolymer aqueous dispersion in which the amount of a specific fluorine-containing compound is reduced, even when obtained using a hydrocarbon surfactant. The present disclosure also provides a novel fluoropolymer aqueous dispersion in which the amount of a specific fluorine-containing compound is reduced.

MEANS FOR SOLVING THE PROBLEM

The present disclosure provides a method for producing a purified fluoropolymer aqueous dispersion, comprising: (A) bringing a fluoropolymer aqueous dispersion obtained using a hydrocarbon surfactant into contact with an anion exchange resin A or a synthetic adsorbent, wherein the anion exchange resin A has: an ion-exchange group represented by the following general formula (A1):

$$-N^+R^1R^2R^3X^-$$

wherein $R^1$, $R^2$, and $R^3$ are the same as or different from each other, and are each a hydrogen atom or an organic group, and at least one of $R^1$, $R^2$, and $R^3$ is an organic group having 3 or more carbon atoms; and X is a counter ion; or an ion-exchange group represented by the following general formula (A2):

$$-NR^4R^5$$

wherein $R^4$ and $R^5$ are the same as or different from each other, and are each a hydrogen atom or an organic group, and at least one of $R^4$ and $R^5$ is an organic group having 2 or more carbon atoms.

In the general formula (A1), at least one of $R^1$, $R^2$, and $R^3$ is preferably an organic group having 4 or more carbon atoms. In the general formula (A1), $R^1$, $R^2$, and $R^3$ are also each preferably an organic group having 2 or more carbon atoms.

The synthetic adsorbent preferably has a pore volume of 0.6 to 2.5 $cm^3/g$.

In the production method of the present disclosure, the step (A) is preferably performed twice or more times.

It is preferable that the production method of the present disclosure further comprises (B) bringing the fluoropolymer aqueous dispersion into contact with an anion exchange resin B, and that the anion exchange resin B is different from the anion exchange resin A.

The anion exchange resin B preferably has: an ion-exchange group represented by the following general

formula (B1):

$$-N^{+}(CH_3)_3X^{-}$$

wherein X represents a counter ion; or an ion-exchange group represented by the following general formula (B2):

$$-N^{+}(CH_3)_2(C_2H_4OH)X^{-}$$

wherein X represents a counter ion.

The step (B) is preferably carried out before the step (A).

It is preferable that the production method of the present disclosure further comprises: (C) adding a nonionic surfactant to the fluoropolymer aqueous dispersion that has undergone the step (A) for concentration by phase separation, and it is more preferable that the step (C) is performed twice or more times.

It is preferable that, in the first step (C), the concentration by phase separation is performed by heating the fluoropolymer aqueous dispersion at a temperature 5°C lower than the cloud point of the nonionic surfactant or higher and then allowing it to stand still to separate it into a supernatant phase and a concentrated phase.

It is also preferable that, in the second step (C), the concentration by phase separation is performed by heating the fluoropolymer aqueous dispersion at a temperature 5°C lower than the cloud point of the nonionic surfactant or higher and then allowing it to stand still to separate it into a supernatant phase and a concentrated phase.

The present disclosure also provides a fluoropolymer aqueous dispersion comprising a fluoropolymer and water, the dispersion comprising a compound represented by the following general formula (1), wherein the total content of the compound represented by the following general formula (1) is 1,000 ppb or less based on the fluoropolymer:

General Formula (1): $(H-(CF_2)_m-COO)_pM^1$

wherein m is 3 to 19; $M^1$ is H, a metal atom, $NR^5_4$ where $R^5$ may be the same as or different from each other and is H or an organic group having 1 to 10 carbon atoms, imidazolium optionally having a substituent, pyridinium optionally having a substituent, or phosphonium optionally having a substituent; and p is 1 or 2.

## EFFECTS OF INVENTION

Since the production method of the present disclosure has the configuration described above, it is possible to obtain a fluoropolymer aqueous dispersion in which the amount of a specific fluorine-containing compound is reduced, even when obtained using a hydrocarbon surfactant.

## DESCRIPTION OF EMBODIMENTS

Before describing the present disclosure in detail, some terms used herein are defined or described below.

The fluororesin as used herein means a partially crystalline fluoropolymer which is a fluoroplastic. The fluororesin has a melting point and has thermoplasticity, and may be either melt-fabricable or non melt-processible.

The melt-fabricable as used herein means that a polymer has an ability to be processed in a molten state using a conventional processing device such as an extruder or an injection molding machine. Thus, a melt-fabricable fluororesin usually has a melt flow rate of 0.01 to 500 g/10 min as measured by the measurement method to be described later.

The fluoroelastomer as used herein means an amorphous fluoropolymer. The term "amorphous" means that a fluoropolymer has a melting peak (ΔH) of 4.5 J/g or lower as determined by differential scanning calorimetry (DSC) (temperature-increasing rate: 10°C/min) or differential thermal analysis (DTA) (temperature-increasing rate: 10°C/min). The fluoroelastomer exhibits elastomeric characteristics when crosslinked. The elastomeric characteristics mean that a polymer has an ability to be stretched and to retain its original length when the force required to stretch the polymer is no longer applied.

The partially fluorinated elastomer as used herein means a fluoropolymer containing a fluoromonomer unit, having a perfluoromonomer unit content of less than 90 mol% based on all polymerized units, having a glass transition temperature of 20°C or lower, and having a melting peak (ΔH) of 4.5 J/g or lower.

The perfluoroelastomer (perfluororubber) as used herein means a fluoropolymer having a perfluoromonomer unit content of 90 mol% or more based on all polymerized units, having a glass transition temperature of 20°C or lower, having a melting peak (ΔH) of 4.5 J/g or lower, and having a fluorine atom concentration in the fluoropolymer of 71% by mass or more. The fluorine atom concentration in the fluoropolymer as used herein is the concentration (% by mass) of the fluorine atoms contained in the fluoropolymer calculated based on the type and content of each monomer constituting the fluoropolymer.

The perfluoromonomer as used herein means a monomer free from a carbon-hydrogen bond in the molecule. The perfluoromonomer may be a monomer containing carbon atoms and fluorine atoms in which some of the fluorine atoms bonded to any of the carbon atoms are replaced by chlorine atoms, and may be a monomer containing a nitrogen atom, an oxygen atom, a sulfur atom, a phosphorus atom, a boron atom, or a silicon atom in addition to the carbon atoms. The perfluoromonomer is preferably a monomer in which all hydrogen atoms are replaced by fluorine atoms. The perfluoromonomer does not encompass a monomer that provides a crosslinking site.

The monomer that provides a crosslinking site is a monomer (cure-site monomer) having a crosslinkable group that provides the fluoropolymer with a crosslinking site for forming a crosslink with the curing agent.

The content of each monomer constituting the fluoropolymer can be calculated herein by any appropriate combination of NMR, FT-IR, elemental analysis, and X-ray fluorescence analysis in accordance with the type of the monomer.

The term "organic group" as used herein means a group containing one or more carbon atoms or a group obtainable by removing one hydrogen atom from an organic compound.

Examples of the "organic group" include:

an alkyl group optionally having one or more substituents,
an alkenyl group optionally having one or more substituents,
an alkynyl group optionally having one or more substituents,
a cycloalkyl group optionally having one or more substituents,
a cycloalkenyl group optionally having one or more substituents,
a cycloalkadienyl group optionally having one or more substituents,
an aryl group optionally having one or more substituents,
an aralkyl group optionally having one or more substituents,
a non-aromatic heterocyclic group optionally having one or more substituents,
a heteroaryl group optionally having one or more substituents,
a cyano group,
a formyl group,

$R^aO-$,

$R^aCO^-$ ,

$R^aSO_2-$ ,

$R^aCOO^-$ ,

$R^aNRaCO-$,

$R^aCONRa-$,

$R^aOCO^-$ ,

$R^aOSO_2-$, and

$R^aNRbSO_2-$,

wherein each $R^a$ is independently
an alkyl group optionally having one or more substituents,
an alkenyl group optionally having one or more substituents,
an alkynyl group optionally having one or more substituents,
a cycloalkyl group optionally having one or more substituents,
a cycloalkenyl group optionally having one or more substituents,
a cycloalkadienyl group optionally having one or more substituents,
an aryl group optionally having one or more substituents,
an aralkyl group optionally having one or more substituents,
a non-aromatic heterocyclic group optionally having one or more substituents, or
a heteroaryl group optionally having one or more substituents, and
each $R^b$ is independently H or an alkyl group optionally having one or more substituents.

The organic group is preferably an alkyl group optionally having one or more substituents.

The term "substituent" as used herein means a group capable of replacing another atom or group. Examples of the "substituent" include an aliphatic group, an aromatic group, a heterocyclic group, an acyl group, an acyloxy group, an acylamino group, an aliphatic oxy group, an aromatic oxy group, a heterocyclic oxy group, an aliphatic oxycarbonyl group, an aromatic oxycarbonyl group, a heterocyclic oxycarbonyl group, a carbamoyl group, an aliphatic sulfonyl group, an aromatic sulfonyl group, a heterocyclic sulfonyl group, an aliphatic sulfonyloxy group, an aromatic sulfonyloxy group, a heterocyclic sulfonyloxy group, a sulfamoyl group, an aliphatic sulfonamide group, an aromatic sulfonamide group, a heterocyclic sulfonamide group, an amino group, an aliphatic amino group, an aromatic amino group, a heterocyclic amino group, an aliphatic oxycarbonylamino group, an aromatic oxycarbonylamino group, a heterocyclic oxycarbonylamino group, an aliphatic sulfinyl group, an aromatic sulfinyl group, an aliphatic thio group, an aromatic thio group, a hydroxy group, a cyano group, a sulfo group, a carboxy group, an aliphatic oxyamino group, an aromatic oxyamino group, a carbamoylamino group, a sulfamoyl amino group, a halogen atom, a sulfamoyl carbamoyl group, a carbamoyl sulfamoyl group, a dialiphatic oxyphosphinyl group, and a diaromatic oxyphosphinyl group.

The aliphatic group may be saturated or unsaturated, and may have a hydroxy group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aliphatic group include alkyl groups having 1 to 8, preferably 1 to 4 carbon atoms in total, such as a methyl group, an ethyl group, a vinyl group, a cyclohexyl group, and a carbamoylmethyl group.

The aromatic group may have, for example, a nitro group, a halogen atom, an aliphatic oxy group, a carbamoyl group, an aliphatic oxycarbonyl group, an aliphatic thio group, an amino group, an aliphatic amino group, an acylamino group, a carbamoylamino group, or the like. Examples of the aromatic group include aryl groups having 6 to 12 carbon atoms, preferably 6 to 10 carbon atoms in total, such as a phenyl group, a 4-nitrophenyl group, a 4-acetylaminophenyl group, and a 4-methanesulfonylphenyl group.

The heterocyclic group may have a halogen atom, a hydroxy group, an aliphatic oxy group, a carbamoyl group, an aliphatic oxycarbonyl group, an aliphatic thio group, an amino group, an aliphatic amino group, an acylamino group, a carbamoylamino group, or the like. Examples of the heterocyclic group include 5- or 6-membered heterocyclic groups having 2 to 12, preferably 2 to 10 carbon atoms in total, such as a 2-tetrahydrofuryl group and a 2-pyrimidyl group.

The acyl group may have an aliphatic carbonyl group, an arylcarbonyl group, a heterocyclic carbonyl group, a hydroxy group, a halogen atom, an aromatic group, an aliphatic oxy group, a carbamoyl group, an aliphatic oxycarbonyl group, an aliphatic thio group, an amino group, an aliphatic amino group, an acylamino group, a carbamoylamino group, or the like. Examples of the acyl group include acyl groups having 2 to 8, preferably 2 to 4 carbon atoms in total, such as an acetyl group, a propanoyl group, a benzoyl group, and a 3-pyridinecarbonyl group.

The acylamino group may have an aliphatic group, an aromatic group, a heterocyclic group, or the like, and may have, for example, an acetylamino group, a benzoylamino group, a 2-pyridinecarbonylamino group, a propanoylamino group, or the like. Examples of the acylamino group include acylamino groups having 2 to 12, preferably 2 to 8 carbon atoms in total, and alkylcarbonylamino groups having 2 to 8 carbon atoms in total, such as an acetylamino group, a benzoylamino group, a 2-pyridinecarbonylamino group, and a propanoylamino group.

The aliphatic oxycarbonyl group may be saturated or unsaturated, and may have a hydroxy group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aliphatic oxycarbonyl group include alkoxycarbonyl groups having 2 to 8, preferably 2 to 4 carbon atoms in total, such as a methoxycarbonyl group, an ethoxycarbonyl group, and a (t)-butoxycarbonyl group.

The carbamoyl group may have an aliphatic group, an aromatic group, a heterocyclic group, or the like. Examples of the carbamoyl group include an unsubstituted carbamoyl group and alkylcarbamoyl groups having 2 to 9 carbon atoms in total, preferably an unsubstituted carbamoyl group and alkylcarbamoyl groups having 2 to 5 carbon atoms in total, such as a N-methylcarbamoyl group, a N,N-dimethylcarbamoyl group, and a N-phenylcarbamoyl group.

The aliphatic sulfonyl group may be saturated or unsaturated, and may have a hydroxy group, an aromatic group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aliphatic sulfonyl group include alkylsulfonyl groups having 1 to 6 carbon atoms in total, preferably 1 to 4 carbon atoms in total, such as a methanesulfonyl group.

The aromatic sulfonyl group may have a hydroxy group, an aliphatic group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aromatic sulfonyl group include arylsulfonyl groups having 6 to 10 carbon atoms in total, such as a benzenesulfonyl group.

The amino group may have an aliphatic group, an aromatic group, a heterocyclic group, or the like.

The acylamino group may have, for example, an acetylamino group, a benzoylamino group, a 2-pyridinecarbonylamino group, a propanoylamino group, or the like. Examples of the acylamino group include acylamino groups

having 2 to 12 carbon atoms in total, preferably 2 to 8 carbon atoms in total, and more preferably alkylcarbonylamino groups having 2 to 8 carbon atoms in total, such as an acetylamino group, a benzoylamino group, a 2-pyridinecarbonylamino group, and a propanoylamino group.

The aliphatic sulfonamide group, aromatic sulfonamide group, and heterocyclic sulfonamide group may be, for example, a methanesulfonamide group, a benzenesulfonamide group, a 2-pyridinesulfonamide group, respectively.

The sulfamoyl group may have an aliphatic group, an aromatic group, a heterocyclic group, or the like. Examples of the sulfamoyl group include a sulfamoyl group, alkylsulfamoyl groups having 1 to 9 carbon atoms in total, dialkylsulfamoyl groups having 2 to 10 carbon atoms in total, arylsulfamoyl groups having 7 to 13 carbon atoms in total, and heterocyclic sulfamoyl groups having 2 to 12 carbon atoms in total, more preferably a sulfamoyl group, alkylsulfamoyl groups having 1 to 7 carbon atoms in total, dialkylsulfamoyl groups having 3 to 6 carbon atoms in total, arylsulfamoyl groups having 6 to 11 carbon atoms in total, and heterocyclic sulfamoyl groups having 2 to 10 carbon atoms in total, such as a sulfamoyl group, a methylsulfamoyl group, a N,N-dimethylsulfamoyl group, a phenylsulfamoyl group, and a 4-pyridinesulfamoyl group.

The aliphatic oxy group may be saturated or unsaturated, and may have a methoxy group, an ethoxy group, an i-propyloxy group, a cyclohexyloxy group, a methoxyethoxy group, or the like. Examples of the aliphatic oxy group include alkoxy groups having 1 to 8, preferably 1 to 6 carbon atoms in total, such as a methoxy group, an ethoxy group, an i-propyloxy group, a cyclohexyloxy group, and a methoxyethoxy group.

The aromatic amino group and the heterocyclic amino group each may have an aliphatic group, an aliphatic oxy group, a halogen atom, a carbamoyl group, a heterocyclic group ring-fused with the aryl group, and an aliphatic oxycarbonyl group, preferably an aliphatic group having 1 to 4 carbon atoms in total, an aliphatic oxy group having 1 to 4 carbon atoms in total, a halogen atom, a carbamoyl group having 1 to 4 carbon atoms in total, a nitro group, or an aliphatic oxycarbonyl group having 2 to 4 carbon atoms in total.

The aliphatic thio group may be saturated or unsaturated, and examples thereof include alkylthio groups having 1 to 8 carbon atoms in total, more preferably 1 to 6 carbon atoms in total, such as a methylthio group, an ethylthio group, a carbamoylmethylthio group, and a t-butylthio group.

The carbamoylamino group may have an aliphatic group, an aryl group, a heterocyclic group, or the like. Examples of the carbamoylamino group include a carbamoylamino group, alkylcarbamoylamino groups having 2 to 9 carbon atoms in total, dialkylcarbamoylamino groups having 3 to 10 carbon atoms in total, arylcarbamoylamino groups having 7 to 13 carbon atoms in total, and heterocyclic carbamoylamino groups having 3 to 12 carbon atoms in total, preferably a carbamoylamino group, alkylcarbamoylamino groups having 2 to 7 carbon atoms in total, dialkylcarbamoylamino groups having 3 to 6 carbon atoms in total, arylcarbamoylamino groups having 7 to 11 carbon atoms in total, and heterocyclic carbamoylamino group having 3 to 10 carbon atoms in total, such as a carbamoylamino group, a methylcarbamoylamino group, a N,N-dimethylcarbamoylamino group, a phenylcarbamoylamino group, and a 4-pyridinecarbamoylamino group.

The ranges expressed by the endpoints as used herein each include all numerical values within the range (for example, the range of 1 to 10 includes 1.4, 1.9, 2.33, 5.75, 9.98, and the like).

The phrase "at least one" as used herein includes all numerical values equal to or greater than 1 (e.g., at least 2, at least 4, at least 6, at least 8, at least 10, at least 25, at least 50, at least 100, and the like).

Unless otherwise stated, ppm and ppb herein refer to values determined in terms of mass.

Next, the production method of the present disclosure and the fluoropolymer aqueous dispersion of the present disclosure will be specifically described.

The method for producing a purified fluoropolymer aqueous dispersion of the present disclosure comprises (A) bringing a fluoropolymer aqueous dispersion obtained using a hydrocarbon surfactant into contact with an anion exchange resin A or a synthetic adsorbent, and the anion exchange resin A has: an ion-exchange group represented by the following general formula (A1):

$$-N^+R^1R^2R^3X^-$$

wherein $R^1$, $R^2$, and $R^3$ are the same as or different from each other, and are each a hydrogen atom or an organic group, and at least one of $R^1$, $R^2$, and $R^3$ is an organic group having 3 or more carbon atoms; and X represents a counter ion; or an ion-exchange group represented by the following general formula (A2):

$$-NR^4R^5$$

wherein $R^4$ and $R^5$ are the same as or different from each other, and are each a hydrogen atom or an organic group, and at least one of $R^4$ and $R^5$ is an organic group having 2 or more carbon atoms. By bringing a fluoropolymer aqueous dispersion into contact with the specific anion exchange resin or synthetic adsorbent, a specific fluorine-containing compound can be efficiently removed from the fluoropolymer aqueous dispersion.

In the production method of the present disclosure, the "purified fluoropolymer aqueous dispersion" may be, and is not limited to, at least a fluoropolymer aqueous dispersion obtained through the step (A).

In addition, when simply referring to a "fluoropolymer aqueous dispersion" herein, unless otherwise noted, it refers to a fluoropolymer aqueous dispersion to be subjected to the step (A) (and optionally, step (B), step (C), etc., which will be further described later).

In the general formula (A1), $R^1$, $R^2$, and $R^3$ are the same as or different from each other, and are each a hydrogen atom or an organic group. $R^1$, $R^2$, and $R^3$ may all be organic groups, or one may be a hydrogen atom and two may each be an organic group. Furthermore, two may each be a hydrogen atom and one may be an organic group. The number of carbon atoms in the organic group is 1 or more. The number of carbon atoms in the organic group is preferably 2 or more. $R^1$, $R^2$, and $R^3$ are each preferably an organic group having 2 or more carbon atoms.

In the general formula (A1), at least one of $R^1$, $R^2$, and $R^3$ is an organic group having 3 or more carbon atoms. Among $R^1$, $R^2$, and $R^3$, one may be an organic group having 3 or more carbon atoms, and two may each be a hydrogen atom or an organic group having 1 or 2 carbon atoms. Alternatively, two may each be an organic group having 3 or more carbon atoms, and one may be a hydrogen atom or an organic group having 1 or 2 carbon atoms. $R^1$, $R^2$, and $R^3$ may all be organic groups having 3 or more carbon atoms.

In $R^1$, $R^2$, and $R^3$, the organic group preferably has 10 or less carbon atoms, more preferably 8 or less carbon atoms, and still more preferably 6 or less carbon atoms. The number of carbon atoms in the organic group may be 5 or less.

In the general formula (A1), at least one of $R^1$, $R^2$, and $R^3$ is preferably an organic group having 4 or more carbon atoms. This configuration allows for more efficient removal of a specific fluorine-containing compound.

In $R^1$, $R^2$, and $R^3$, the organic group is preferably an alkyl group, an alkanol group, or an alkenyl group, more preferably an alkyl group or an alkanol group, and still more preferably an alkyl group.

The term "alkyl group" as used herein is a generic name for the remaining group after removing one hydrogen atom from an aliphatic saturated hydrocarbon, and encompasses linear or branched alkyl groups having 1 or more carbon atoms, and cyclic alkyl groups having 3 or more carbon atoms.

The term "alkanol group" as used herein is a generic name for the remaining group after removing one hydrogen atom from an alkanol, and encompasses linear or branched alkanol groups having 1 or more carbon atoms, and cyclic alkanol groups having 3 or more carbon atoms.

$R^1$, $R^2$, and $R^3$ are the same as or different from each other, and are each an alkyl group having 2 or more carbon atoms or an alkanol group having 1 or more carbon atoms, and at least one of $R^1$, $R^2$, and $R^3$ is an alkyl group having 3 or more carbon atoms.

In a more preferred embodiment, $R^1$, $R^2$, and $R^3$ are the same as or different from each other, and are each an alkyl group having 2 or more carbon atoms or an alkanol group having 2 or more carbon atoms, and at least one of $R^1$, $R^2$, and $R^3$ is an alkyl group having 3 or more carbon atoms.

In another preferred embodiment, $R^1$, $R^2$, and $R^3$ are the same as or different from each other, and are each an alkyl group having 2 or more carbon atoms or an alkanol group having 1 or more carbon atoms, and at least one of $R^1$, $R^2$, and $R^3$ is an alkyl group having 4 or more carbon atoms.

In still another preferred embodiment, $R^1$, $R^2$, and $R^3$ are the same as or different from each other, and are each an alkyl group having 2 or more carbon atoms or an alkanol group having 2 or more carbon atoms, and at least one of $R^1$, $R^2$, and $R^3$ is an alkyl group having 4 or more carbon atoms.

The alkyl group preferably has 10 or less carbon atoms, more preferably 8 or less carbon atoms, and still more preferably 6 or less carbon atoms. The number of carbon atoms in the alkyl group may be 5 or less.

The alkanol group preferably has 10 or less carbon atoms, more preferably 8 or less carbon atoms, and still more preferably 6 or less carbon atoms. The number of carbon atoms in the alkanol group may be 5 or less.

In the general formula (A1), X is a counter ion. Examples of X include Cl, OH, Br, I, $NO_3$, and $SO_4$, and it is preferably Cl or OH. When X is a divalent anion such as $SO_4$, one counter ion is coordinated to two molecules of repeating units of the general formula (A1).

In the general formula (A2), $R^4$ and $R^5$ are the same as or different from each other, and are each a hydrogen atom or an organic group, and at least one of $R^4$ and $R^5$ is an organic group having 2 or more carbon atoms.

$R^4$ and $R^5$ may all be organic groups. Also, one may be a hydrogen atom and one may be an organic group.

In the general formula (A2), at least one of $R^4$ and $R^5$ is an organic group having 2 or more carbon atoms.

Among $R^4$ and $R^5$, one may be an organic group having 2 or more carbon atoms, and one may be a hydrogen atom or an organic group having 1 carbon atom. Alternatively, both $R^4$ and $R^5$ may be organic groups having 2 or more carbon atoms.

At least one of $R^4$ and $R^5$ may be an organic group having 3 or more carbon atoms, or may be an organic group having 4 or more carbon atoms.

It is also preferable that $R^4$ and $R^5$ are each an organic group having 2 or more carbon atoms.

In $R^4$ and $R^5$, the organic group preferably has 10 or less carbon atoms, more preferably 8 or less carbon atoms, and still more preferably 6 or less carbon atoms. The number of carbon atoms in the organic group may be 5 or less.

In $R^4$ and $R^5$, the organic group is preferably an alkyl group, an alkanol group, or an alkenyl group, more preferably an alkyl group or an alkanol group, and still more preferably an alkyl group.

In a more preferred embodiment, $R^4$ and $R^5$ are the same as or different from each other, and are each an alkyl group or an alkanol group, and at least one of $R^4$ and $R^5$ is an alkyl group having 2 or more carbon atoms or an alkanol group having 2 or more carbon atoms.

The alkyl group preferably has 10 or less carbon atoms, more preferably 8 or less carbon atoms, and still more preferably 6 or less carbon atoms. The number of carbon atoms in the alkyl group may be 5 or less.

The alkanol group preferably has 10 or less carbon atoms, more preferably 8 or less carbon atoms, and still more preferably 6 or less carbon atoms. The number of carbon atoms in the alkanol group may be 5 or less.

The anion exchange resin A is preferably one in which the group represented by the general formula (A1) or the group represented by the general formula (A2) is bonded to the resin matrix. An example of the anion exchange resin A is one in which the group represented by the general formula (A1) or the group represented by the general formula (A2) is bonded to a resin matrix composed of a styrene or acrylic polymer. The styrene or acrylic polymer as the resin matrix is not limited, but for example, the resin matrix used in known anion exchange resins can be used. From the viewpoint of the removal efficiency of fluorine-containing compounds, it is preferable that the anion exchange resin A has a styrene resin matrix.

The basicity of the anion exchange resin A can be set in a variety of ways depending on the polymer backbone and/or the type of ion-exchange group.

It is preferable that the anion exchange resin A has a pore size of 1 to 5,000 Å. From the viewpoint of removal efficiency, a pore size is preferably 50 Å or more, more preferably 100 Å or more, and still more preferably 150 Å or more. The pore size may be 200 Å or more, or may be 250 Å or more. Also, the pore size may be 1,000 Å or less. The pore size can be calculated by, for example, measuring the specific surface area and total pore volume by the gas adsorption method.

From the viewpoint of removal efficiency, the anion exchange resin A preferably has a total exchange capacity of 0.1 eq/L-Resin or more. The total exchange capacity is more preferably 0.3 eq/L-Resin or more, still more preferably 0.5 eq/L-Resin or more, and particularly preferably 0.7 eq/L-Resin or more. Also, the upper limit thereof is preferably 5.0 eq/L-Resin or less, more preferably 2.0 eq/L-Resin or less, and particularly preferably 1.5 eq/L-Resin or less.

The content of moisture of the anion exchange resin A is preferably 20% by mass or more, more preferably 30 to 70% by mass, and still more preferably 35 to 65% by mass. The content of moisture of the anion exchange resin A is 30% by mass or more, which enables efficient removal of the fluorine-containing compound. In addition, the fluorine-containing compound is easily diffused in particles of the anion exchange resin A. When the content of moisture of the anion exchange resin A is 70% by mass or less, a decrease in the intensity of the particles of the anion exchange resin A due to insufficient crosslinking can be suppressed.

The content of moisture can be measured by the following method.

First, 10 mL of a sample that has been made into a standard form is accurately weighed out in a measuring cylinder, this resin is wrapped in a fabric and centrifuged to remove the attached moisture, and then the mass of the resin is quickly measured. Next, the resin is dried in a thermostatic dryer at 105°C for 4 hours, then left to cool in a desiccator for 30 minutes, and the mass of the dried resin is measured to calculate the content of moisture according to the following formula.

$$\text{content of moisture (\% by mass)} = (\text{mass of resin before drying (g)} - \text{mass of resin after drying (g)})/\text{mass of resin before drying (g)} \times 100$$

The anion exchange resin A is usually spherical. The average particle size of anion exchange resin A is preferably 0.1 to 5 mm, more preferably 0.2 to 2 mm, and particularly preferably 0.3 to 1.5 mm. When the average particle size of anion exchange resin A is within the above range, the packed column of the anion exchange resin is less likely to be occluded. The average particle size is a value determined by the sieving method. Specifically, the anion exchange resin A is first taken in a sieve shaker and the particle size distribution is measured by sieving. Then, the size of the sieve opening corresponding to 50% of the total residue is determined, and this is used as the average particle size.

Commercially available products can be used as the anion exchange resin A, and examples thereof include PFA694E, A592E, etc. manufactured by Purolite Corporation.

The synthetic adsorbent is a porous resin having no ion-exchange group, and any known synthetic adsorbents can be employed. Examples of the ion-exchange group include an amino group, a quaternary ammonium group, a carboxylic acid group, and a sulfonic acid group. Specific examples of the synthetic adsorbent include styrene resins

such as styrene-divinylbenzene copolymers, acrylic resins such as (meth)acrylic ester-ethylene glycol dimethacrylate copolymers, methacrylic resins, polyvinyl resins, and dextran resins. Specific examples of commercially available synthetic adsorbents include styrene resins such as DIAION HP10, DIAION HP20, DIAION HP21, DIAION HP40, DIAION HP50, Sepabeads SP207, Sepabeads SP70, Sepabeads SP825, Sepabeads SP850, and Sepabeads SP207 (all manufactured by Mitsubishi Chemical Corporation), Amberlite XAD1180N, Amberlite XAD2000, Amberlite XAD4, and Amberlite FPX66 (all manufactured by DuPont de Nemours, Inc.); and acrylic resins such as DIAION HP2MG (manufactured by Mitsubishi Chemical Corporation) and Amberlite HXAD-7HP (manufactured by DuPont de Nemours, Inc.).

The synthetic adsorbent preferably has a pore size of 1 to 5,000 Å. From the viewpoint of removal efficiency, a pore size is preferably 50 Å or more, more preferably 100 Å or more, and still more preferably 150 Å or more. The pore size may be 200 Å or more, or may be 250 Å or more. Also, the pore size may be 1,000 Å or less, or may be 700 Å or less. The pore size can be calculated by, for example, measuring the specific surface area and total pore volume by the gas adsorption method.

The synthetic adsorbent preferably has a specific surface area of 300 $m^2/g$ or more. The specific surface area is more preferably 400 $m^2/g$ or more, still more preferably 500 $m^2/g$ or more, and particularly preferably 600 $m^2/g$ or more. The upper limit of the specific surface area is not limited, but it may be 2,000 $m^2/g$ or less, may be 1,500 $m^2/g$ or less, or may be 1,000 $m^2/g$ or less. The synthetic adsorbent preferably has a pore volume of 0.6 to 2.5 $cm^3/g$. The pore volume is more preferably 0.9 to 2.3 $cm^3/g$, still more preferably 1.1 to 2.1 $cm^3/g$, and particularly preferably 1.3 to 2.0 $cm^3/g$. When the pore volume is less than 0.6 $cm^3/g$, the adsorptivity of the fluorine-containing compound may become low, and when the pore volume is greater than 2.5 $cm^3/g$, the adsorbent may be damaged. The pore volume means the value measured by the nitrogen method.

From the viewpoint of increasing the removal efficiency of the fluorine-containing compound, the synthetic adsorbent preferably contains moisture. The moisture content is preferably 20 to 80% by mass, more preferably 40 to 75% by mass, and particularly preferably 50 to 70% by mass. When the moisture content of the synthetic adsorbent is less than 20% by mass, the removal efficiency of the fluorine-containing compound may become low, and when the moisture content is greater than 80% by mass, the weighing may become unstable.

The synthetic adsorbent is usually spherical. The average particle size of synthetic adsorbent is preferably 0.1 to 2.0 mm, more preferably 0.2 to 1.5 mm, and particularly preferably 0.3 to 1.0 mm. When the average particle size of synthetic adsorbent is less than 0.1 mm, it may become difficult to separate the synthetic adsorbent after bringing it into contact with the fluoropolymer aqueous dispersion, and when the average particle size is greater than 2.0 mm, the removal efficiency of the fluorine-containing compound may become low. The average particle size of the synthetic adsorbent means the 50% mass value obtained by plotting the integrated mass of the synthetic adsorbent classified with a sieve on a graph.

The temperature in the step (A) is not limited, and it may be 0 to 50°C. From the viewpoint of increasing removal efficiency, 5°C or higher is preferred. Further, the temperature is preferably 40°C or lower, and more preferably 35°C or lower. The temperature may be 20°C or lower.

The pressure in the step (A) is not limited, and it may be, for example, 0.1 to 10 atm. The step (A) can be performed at normal pressure (about 1 atm).

The contact time in the step (A) is not limited, and it may be 0.1 seconds to 100 hours, may be 1 second to 50 hours, or may be 1 second to 10 hours. Alternatively, the contact time may be 1 second to 1 hour.

In the step (A), the amount of the anion exchange resin A or synthetic adsorbent relative to the fluoropolymer aqueous dispersion is not limited, and it may be, for example, 0.01 to 1,000 g based on 1,000 g of the fluoropolymer aqueous dispersion. The amount thereof is preferably 0.1 g or more, more preferably 1 g or more, and still more preferably 5 g or more, based on 1,000 g of the fluoropolymer aqueous dispersion. Also, the amount thereof is preferably 500 g or less.

The step (A) may be a step in which the fluoropolymer aqueous dispersion is brought into contact with the anion exchange resin A or synthetic adsorbent, the fluoropolymer aqueous dispersion and the anion exchange resin A or synthetic adsorbent are then separated, and the fluoropolymer aqueous dispersion (purified fluoropolymer aqueous dispersion) is collected while the anion exchange resin A or synthetic adsorbent is collected.

In the production method of the present disclosure, the contacting in the step (A) may be either batch type or flow type.

Also, the step (A) may be carried out once, or may be repeated twice or more times. It is preferable that the step (A) is carried out twice or more times because the fluorine-containing compound can be further reduced. The upper limit of the number of times is not limited, and it may be, for example, 10 times or less.

As the method for bringing the fluoropolymer aqueous dispersion into contact with the anion exchange resin A or synthetic adsorbent, commonly employed methods can be employed. For example, the contacting can be performed by a method in which the anion exchange resin A or synthetic adsorbent is added to the fluoropolymer aqueous dispersion and the mixture is stirred, or by a column method in which the fluoropolymer aqueous dispersion is allowed to flow through a column packed with the anion exchange resin A or synthetic adsorbent. The packed column used in the column method may be any of the following: moving bed, fixed bed, or fluidized bed.

When using the method in which the anion exchange resin A or synthetic adsorbent is added to the fluoropolymer aqueous dispersion and the mixture is stirred, it is preferable that a separation step is performed after the step (A), in which the anion exchange resin A or synthetic adsorbent are separated from the fluoropolymer aqueous dispersion after the step (A). The method for separating the anion exchange resin A or synthetic adsorbent from the fluoropolymer aqueous dispersion after the step (A) is not limited, and for example, filtration, etc. can be used.

It is preferable that the production method of the present disclosure further comprises (B) bringing the fluoropolymer aqueous dispersion into contact with an anion exchange resin B.

The anion exchange resin B may be the same as or different from the anion exchange resin A, but it is preferably different from the anion exchange resin A.

The anion exchange resin B preferably has an ion-exchange group (except for the group represented by the general formula (A1) and the group represented by the general formula (A2)), and preferably has, for example, an amino group and/or a quaternary ammonium group. The ion-exchange group is preferably

a group represented by the following general formula (B1) :

$$-N^{+}(CH_3)_3X^{-}$$

wherein X represents a counter ion; or
a group represented by the following general formula (B2) :

$$-N^{+}(CH_3)_2(C_2H_4OH)X^{-}$$

wherein X represents a counter ion. Examples of X in the general formulas (B1) and (B2) include Cl, OH, Br, I, $NO_3$, and $SO_4$, and it is preferably Cl or OH. When X is a divalent anion such as $SO_4$, one counter ion is coordinated to two molecules of repeating units of the general formula (A1).

The anion exchange resin B is preferably one in which the ion-exchange group is bonded to a resin matrix, and examples of the resin matrix include a styrene or acrylic polymer. The styrene or acrylic polymer as the resin matrix is not limited, but for example, the resin matrix used in known anion exchange resins can be used. From the viewpoint of the removal efficiency of fluorine-containing compounds, it is preferable that the anion exchange resin B has a styrene resin matrix.

The anion exchange resin B may be weakly basic or may be strongly basic. It is preferably a strongly basic anion exchange resin.

The basicity of the anion exchange resin B can be set in a variety of ways depending on the polymer backbone and/or the type of ion-exchange group.

It is preferable that the anion exchange resin B has a pore size of 1 to 5,000 Å. From the viewpoint of removal efficiency, a pore size is preferably 50 Å or more, more preferably 100 Å or more, and still more preferably 150 Å or more. The pore size may be 200 Å or more, or may be 250 Å or more. Also, the pore size may be 1,000 Å or less. The pore size can be calculated by, for example, measuring the specific surface area and total pore volume by the gas adsorption method.

From the viewpoint of removal efficiency, the anion exchange resin B preferably has a total exchange capacity of 0.1 eq/L-Resin or more. The total exchange capacity is more preferably 0.3 eq/L-Resin or more, still more preferably 0.5 eq/L-Resin or more, and particularly preferably 0.7 eq/L-Resin or more. Also, although a larger total exchange capacity is better, the upper limit thereof is preferably 5.0 eq/L-Resin, more preferably 2.0 eq/L-Resin or less, and particularly preferably 1.5 eq/L-Resin or less.

The content of moisture of the anion exchange resin B is preferably 20% by mass or more, more preferably 30 to 70% by mass, and still more preferably 35 to 65% by mass. The content of moisture of the anion exchange resin B is 30% by mass or more, which enables efficient removal of the fluorine-containing compound. In addition, the fluorine-containing compound is easily diffused in particles of the anion exchange resin B. When the content of moisture of the anion exchange resin B is 70% by mass or less, a decrease in the intensity of the particles of the anion exchange resin B due to insufficient crosslinking can be suppressed.

The content of moisture can be measured by the same method as for the anion exchange resin A described above.

The anion exchange resin B is usually spherical. The average particle size of anion exchange resin B is preferably 0.1 to 5 mm, more preferably 0.2 to 2 mm, and particularly preferably 0.3 to 1.5 mm. When the average particle size of anion exchange resin B is within the above range, the packed column of the anion exchange resin is less likely to be occluded. The average particle size is a value determined by the sieving method. Specifically, the anion exchange resin B is first taken in a sieve shaker and the particle size distribution is measured by sieving. Then, the size

of the sieve opening corresponding to 50% of the total residue is determined, and this is used as the average particle size.

Commercially available products can be used as the anion exchange resin B, and for example, the DIAION (TM) SA series, etc. manufactured by Mitsubishi Chemical Corporation; A400, A300, etc. manufactured by Purolite Corporation; the Amberlite (TM) series and the Amberjet (TM) series such as IRA4002OH manufactured by DuPont de Nemours, Inc.; and the like can be used.

Although the step (B) may be carried out before the step (A) or may be carried out after the step (A), it is preferable carried out before the step (A) because the removal efficiency of the fluorine-containing compound is increased.

It is preferable that the production method of the present disclosure comprises the step (B), in which the fluoropolymer aqueous dispersion obtained by using a hydrocarbon surfactant is brought into contact with the anion exchange resin B, and the step (A), in which the fluoropolymer aqueous dispersion obtained through the step (B) is brought into contact with the anion exchange resin A or synthetic adsorbent.

The temperature in the step (B) is not limited, and it may be 0 to 50°C. From the viewpoint of increasing removal efficiency, 5°C or higher is preferred. Further, the temperature is preferably 40°C or lower, and more preferably 35°C or lower. The temperature may be 20°C or lower.

The pressure in the step (B) is not limited, and it may be, for example, 0.1 to 10 atm. The step (B) can be performed at normal pressure (about 1 atm).

The contact time in the step (B) is not limited, and it may be 0.1 seconds to 100 hours, may be 1 second to 50 hours, or may be 1 second to 10 hours. Alternatively, the contact time may be 1 second to 1 hour.

The contacting in the step (B) may be either batch type or flow type. The step (B) may be carried out once, or may be repeated twice or more times.

In the step (B), the amount of the anion exchange resin B relative to the fluoropolymer aqueous dispersion is not limited, and it may be, for example, 0.01 to 1,000 g based on 1,000 g of the fluoropolymer aqueous dispersion. The amount thereof is preferably 0.1 g or more, more preferably 1 g or more, and still more preferably 5 g or more, based on 1,000 g of the fluoropolymer aqueous dispersion. Also, the amount thereof is preferably 500 g or less.

As the method for bringing the fluoropolymer aqueous dispersion into contact with the anion exchange resin B, commonly employed methods can be employed, and the methods described in the step (A) can be adopted as appropriate. An example thereof is a method in which the anion exchange resin B is added to the fluoropolymer aqueous dispersion and the mixture is stirred.

When using the method in which the anion exchange resin B is added to the fluoropolymer aqueous dispersion and the mixture is stirred, it is preferable that, in the step (B), the fluoropolymer aqueous dispersion is brought into contact with the anion exchange resin B and the anion exchange resin B is then separated from the fluoropolymer aqueous dispersion after the step (B). The method for separating the anion exchange resin B from the fluoropolymer aqueous dispersion is not limited, and for example, filtration, etc. can be used. The step (B) can be a step in which the fluoropolymer aqueous dispersion is brought into contact with the anion exchange resin B and the anion exchange resin B is then collected.

The anion exchange resins A and B, as well as the synthetic adsorbent, used in the above steps A and B can also be treated with, for example, an alkali solution containing water and an organic solvent to elute the adsorbed fluorine-containing compound and reuse them. As the alkali, alkali metal hydroxides such as NaOH and KOH, and $NH_4OH$, etc. can be used. Also, the eluted fluorine-containing compound may be collected.

The production method of the present disclosure preferably comprises a step of adding a nonionic surfactant to the fluoropolymer aqueous dispersion before the step (A). A fluoropolymer aqueous dispersion obtained using a hydrocarbon surfactant usually contains the hydrocarbon surfactant, but the step (A) may reduce the amount of hydrocarbon surfactant and decrease the stability of the aqueous dispersion. By adding a nonionic surfactant before the step (A), the stability of the fluoropolymer aqueous dispersion that undergoes the step (A) can be improved. The amount of nonionic surfactant added is not limited, and it may be any amount that can maintain the stability of the fluoropolymer aqueous dispersion. For example, the nonionic surfactant is preferably 5% by mass or more, more preferably 10% by mass or more, and still more preferably 15% by mass or more, based on the fluoropolymer contained in the fluoropolymer aqueous dispersion.

In the case of carrying out the step (B) before the step (A), the step of adding a nonionic surfactant to the fluoropolymer aqueous dispersion is preferably included before the step (B).

In the step of adding the nonionic surfactant to the fluoropolymer aqueous dispersion, an example of the nonionic surfactant is a compound represented by the following general formula (i):

$$R^6\text{-O-}A^1\text{-H} \qquad \text{(i)}$$

wherein $R^6$ is a linear or branched primary or secondary alkyl group having 8 to 18 carbon atoms, and $A^1$ is a polyoxyalkylene chain.

$R^6$ preferably has 10 to 16, more preferably 12 to 16 carbon atoms. When $R^6$ has 18 or less carbon atoms, the

aqueous dispersion tends to have good dispersion stability. Further, when $R^6$ has more than 18 carbon atoms, it is difficult to handle due to its high flowing temperature. When $R^6$ has less than 8 carbon atoms, the surface tension of the aqueous dispersion becomes high, so that the permeability and wettability are likely to decrease.

The polyoxyalkylene chain may be composed of oxyethylene and oxypropylene. Preferably, the polyoxyalkylene chain is composed of an average repeating number of 5 to 20 oxyethylene groups and an average repeating number of 0 to 2 oxypropylene groups, and is a hydrophilic group. The number of oxyethylene units may have either a broad or narrow monomodal distribution as typically supplied, or a broader or bimodal distribution which may be obtained by blending. When the average number of repeating oxypropylene groups is more than 0, the oxyethylene groups and oxypropylene groups in the polyoxyalkylene chain may be arranged in blocks or randomly.

From the viewpoint of viscosity and stability of the aqueous dispersion, a polyoxyalkylene chain composed of an average repeating number of 7 to 12 oxyethylene groups and an average repeating number of 0 to 2 oxypropylene groups is preferred. In particular, when $A^1$ has 0.5 to 1.5 oxypropylene groups on average, low foaming properties are good, which is preferable.

More preferably, $R^6$ is (R') (R")HC-, where R' and R" are the same or different linear, branched, or cyclic alkyl groups, and the total amount of carbon atoms is at least 5, preferably 7 to 17. Preferably, at least one of R' and R" is a branched or cyclic hydrocarbon group.

Specific examples of the compound (polyoxyethylene alkyl ether) represented by the general formula (i) include $C_{13}H_{27}$-O- $(C_2H_4O)_{10}$-H, $C_{13}H_{27}$-O- $(C_2H_4O)_8$-H, $C_{12}H_{25}$-O-$(C_2H_4O)_{10}$-H, $C_{10}H_{21}$CH $(CH_3)CH_2$-O-$(C_2H_4O)_9$-H, $C_{13}H_{27}$-O-$(C_2H_4O)_9$-$(CH(CH_3)CH_2O)$-H, $C_{16}H_{33}$-O-$(C_2H_4O)_{10}$-H, and HC$(C_5H_{11})(C_7H_{15})$-O-$(C_2H_4O)_9$-H. Examples of commercially available products of the compound (polyoxyethylene alkyl ether) represented by the general formula (i) include Genapol X080 (product name, manufactured by Clariant), NOIGEN TDS series (manufactured by DKS Co., Ltd.) exemplified by NOIGEN TDS-80 (trade name), LEOCOL TD series (manufactured by Lion Corporation) exemplified by LEOCOL TD-90 (trade name), LIONOL (R) TD series (manufactured by Lion Corporation), T-Det A series (manufactured by Harcros Chemicals Inc.) exemplified by T-Det A 138 (trade name), and Tergitol (R) 15-S series (manufactured by Dow Chemical Co., Ltd.).

The nonionic surfactant is preferably an ethoxylate of 2,6,8-trimethyl-4-nonanol having about 4 to about 18 ethylene oxide units on average, an ethoxylate of 2,6,8-trimethyl-4-nonanol having about 6 to about 12 ethylene oxide units on average, or a mixture thereof. This type of nonionic surfactant is also commercially available, for example, as TERGITOL TMN-6, TERGITOL TMN-10, and TERGITOL TMN-100X (all product names, manufactured by Dow Chemical Co., Ltd.).

The hydrophobic group of the nonionic surfactant may be any of an alkylphenol group, a linear alkyl group, and a branched alkyl group. Examples of the polyoxyethylene alkylphenyl ether-based nonionic compound include, for example, a compound represented by the following general formula (ii):

$$R^7\text{-}C_6H_4O\text{-}A^2\text{-}H \qquad \text{(ii)}$$

wherein $R^7$ is a linear or branched primary or secondary alkyl group having 4 to 12 carbon atoms, and $A^2$ is a polyoxyalkylene chain.

Specific examples of the polyoxyethylene alkylphenyl ether-based nonionic compound include Triton (R) X-100 (trade name, manufactured by Dow Chemical Co., Ltd.).

Examples of the nonionic surfactant also include polyol compounds. Specific examples thereof include those described in International Publication No. WO2011/014715.

Typical examples of the polyol compound include compounds having one or more sugar units as a polyol unit. The sugar units may have been modified to contain at least one long chain. Examples of suitable polyol compounds containing at least one long chain moiety include alkyl glycosides, modified alkyl glycosides, sugar esters, and combinations thereof. Examples of the sugars include, but are not limited to, monosaccharides, oligosaccharides, and sorbitanes. Examples of monosaccharides include pentoses and hexoses. Typical examples of monosaccharides include ribose, glucose, galactose, mannose, fructose, arabinose, and xylose. Examples of oligosaccharides include oligomers of 2 to 10 of the same or different monosaccharides. Examples of oligosaccharides include, but are not limited to, saccharose, maltose, lactose, raffinose, and isomaltose.

Typically, sugars suitable for use as the polyol compound include cyclic compounds containing a 5-membered ring of four carbon atoms and one heteroatom (typically oxygen or sulfur, preferably oxygen atom), or cyclic compounds containing a 6-membered ring of five carbon atoms and one heteroatom as described above, preferably, an oxygen atom. These further contain at least two or at least three hydroxy groups (-OH groups) bonded to the carbon ring atoms. Typically, the sugars have been modified in that one or more of the hydrogen atoms of a hydroxy group (and/or hydroxyalkyl group) bonded to the carbon ring atoms has been substituted by the long chain residues such that an ether or ester bond is created between the long chain residue and the sugar moiety.

The sugar-based polyol may contain a single sugar unit or a plurality of sugar units. The single sugar unit or

the plurality of sugar units may be modified with long chain moieties as described above. Specific examples of sugar-based polyol compounds include glycosides, sugar esters, sorbitan esters, and mixtures and combinations thereof.

A preferred type of polyol compounds are alkyl or modified alkyl glucosides. These type of surfactants contains at least one glucose moiety. Examples of alkyl or modified alkyl glucosides include compounds represented by:

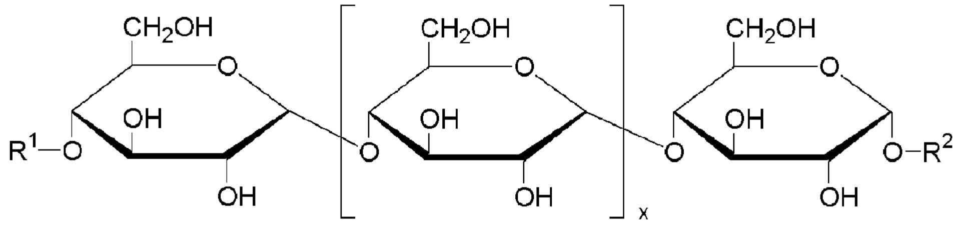

wherein x represents 0, 1, 2, 3, 4, or 5 and $R^1$ and $R^2$ each independently represent H or a long chain unit containing at least 6 carbon atoms, with the proviso that at least one of $R^1$ and $R^2$ is not H. Typical examples of $R^1$ and $R^2$ include aliphatic alcohol residues. Examples of the aliphatic alcohols include hexanol, heptanol, octanol, nonanol, decanol, undecanol, dodecanol (lauryl alcohol), tetradecanol, hexadecanol (cetyl alcohol), heptadecanol, octadecanol (stearyl alcohol), eicosanoic acid, and combinations thereof.

It is understood that the above formula represents specific examples of alkyl poly glucosides showing glucose in its pyranose form but other sugars or the same sugars but in different enantiomeric or diastereomeric forms may also be used.

Alkyl glucosides are available, for example, by acid-catalyzed reactions of glucose, starch, or n-butyl glucoside with aliphatic alcohols which typically yields a mixture of various alkyl glucosides (Alkyl polygylcoside, Rompp, Lexikon Chemie, Version 2.0, Stuttgart/New York, Georg Thieme Verlag, 1999). Examples of the aliphatic alcohols include hexanol, heptanol, octanol, nonanol, decanol, undecanol, dodecanol (lauryl alcohol), tetradecanol, hexadecanol (cetyl alcohol), heptadecanol, octadecanol (stearyl alcohol), eicosanoic acid, and combinations thereof. Alkyl glucosides are also commercially available under the trade name GLUCOPON or DISPONIL from Cognis GmbH, Dusseldorf, Germany.

Examples of other nonionic surfactants include bifunctional group block copolymers supplied from BASF SE as the Pluronic (R) R series, tridecyl alcohol alkoxylates supplied from BASF SE as the Iconol (R) TDA series, and hydrocarbon-containing siloxane surfactants.

The nonionic surfactant is preferably free from an aromatic moiety.

The production method of the present disclosure preferably comprises, after the step (A), a step of concentrating the fluoropolymer aqueous dispersion that has undergone the step (A).

Examples of the concentration method include the concentration by phase separation, ion exchanger method, and membrane concentration. The concentration by phase separation, ion exchanger method, and membrane concentration can be carried out under the conventionally known treatment conditions, and they can be carried out by, but not limited to, the methods described in International Publication No. WO 2004/050719, National Publication of International Patent Application No. 2002-532583, and Japanese Patent Laid-Open No. 55-120630.

Among the concentration methods above, the concentration by phase separation is preferred. The concentration by phase separation is usually carried out by adding a nonionic surfactant. It is preferable that the production method of the present disclosure further comprises: (C) adding a nonionic surfactant to the fluoropolymer aqueous dispersion that has undergone the step (A) for concentration by phase separation.

The concentration by phase separation can be carried out by, for example, heating the aqueous dispersion to which the nonionic surfactant has been added to separate it into a fluoropolymer-free phase (supernatant phase) and a fluoropolymer-containing phase (concentrated phase), removing the fluoropolymer-free phase, and collecting the fluoropolymer-containing phase.

The concentration by phase separation may be carried out by standing at a temperature 10°C lower than the cloud point of the nonionic surfactant used or higher. Also, the concentration by phase separation may be carried out by standing at a temperature 10°C higher than the cloud point or lower.

As the nonionic surfactant, the nonionic surfactants described in the step of adding the nonionic surfactant to the fluoropolymer aqueous dispersion, which is performed before the step (B) described above, may be used.

The nonionic surfactant is preferably free from an aromatic moiety.

In the concentration by phase separation, the amount of the nonionic surfactant added is not limited, but it can be added such that the amount is preferably 50% by mass or less, more preferably 20% by mass or less, and still more preferably 15% by mass or less, based on 100% by mass of the fluoropolymer. The amount added may be any amount within the above range, and for example, the nonionic surfactant can be added in an amount of 0.1% by mass or more based on 100% by mass of the fluoropolymer.

In the production method of the present disclosure, the step (C) is preferably carried out twice or more times. It is more preferable that the step (C) is carried out three times or more. The upper limit of the number of times is not limited, and it may be, for example, 10 times or less.

In the case of carrying out the step (C) twice or more times, it is preferable that the concentration by phase separation in the first step (C) is performed by heating the fluoropolymer aqueous dispersion at a temperature 5°C lower than the cloud point of the nonionic surfactant or higher and then allowing it to stand still to separate it into a supernatant phase and a concentrated phase. The heating temperature is more preferably a temperature 3°C lower than the cloud point or higher, still more preferably a temperature of the cloud point or higher, and particularly preferably a temperature above the cloud point.

It is also preferable that the concentration by phase separation in the second or later step (C) is performed by heating the fluoropolymer aqueous dispersion at a temperature 5°C lower than the cloud point of the nonionic surfactant or higher and then allowing it to stand still to separate it into a supernatant phase and a concentrated phase. The heating temperature is more preferably a temperature 3°C lower than the cloud point or higher, and particularly preferably a temperature of up to the cloud point.

The production method of the present disclosure can efficiently remove the following fluorine-containing compounds from the fluoropolymer aqueous dispersion to provide a purified fluoropolymer aqueous dispersion with a reduced amount of the following fluorine-containing compounds. It is preferable that the fluoropolymer aqueous dispersion to be subjected to the treatment contains a fluorine-containing compound represented by the following general formula (1) or (2):

General Formula (1): $(H-(CF_2)_m-COO)_pM^1$

wherein m is 3 to 19; $M^1$ is H, a metal atom, $NR^5_4$ where $R^5$ may be the same as or different from each other and is H or an organic group having 1 to 10 carbon atoms, imidazolium optionally having a substituent, pyridinium optionally having a substituent, or phosphonium optionally having a substituent; and p is 1 or 2.

General Formula (2): $(H-(CF_2)_n-SO_3)_qM^2$

wherein n is 4 to 20; $M^2$ is H, a metal atom, $NR^5_4$ where $R^5$ is as described above, imidazolium optionally having a substituent, pyridinium optionally having a substituent, or phosphonium optionally having a substituent; and q is 1 or 2.

Examples of the metal atom include monovalent and divalent metal atoms, alkali metals (Group 1), and alkaline earth metals (Group 2), and specific examples thereof include Na, K, and Li.

As for $R^5$, four $R^5$s are the same as or different from each other. $R^5$ may be H or an organic group having 1 to 10 carbon atoms, or may be H or an organic group having 1 to 4 carbon atoms. Alternatively, in one embodiment, it is an alkyl group having 1 to 10 carbon atoms, or an alkyl group having 1 to 4 carbon atoms. The regulations described above can be applied to all $R^5$ described below.

In the general formula (1), m may be 5 to 11.

In the general formula (2), n may be 6 to 12.

The fluoropolymer aqueous dispersion may contain the fluorine-containing compound represented by the general formula (1) and not contain the fluorine-containing compound represented by the general formula (2), it may not contain the fluorine-containing compound represented by the general formula (1) and contain the fluorine-containing compound represented by the general formula (2), or it may contain both the fluorine-containing compound represented by the general formula (1) and the fluorine-containing compound represented by the general formula (2).

Also, with no limitations, it may contain two or more kinds of fluorine-containing compounds encompassed in the general formula (1), it may contain two or more kinds of fluorine-containing compounds encompassed in the general formula (2), or it may contain two or more kinds of compounds encompassed in the general formula (1) and two or more kinds of fluorine-containing compounds encompassed in the general formula (2).

For example, the fluoropolymer aqueous dispersion may contain the fluorine-containing compound of the general formula (1) in which m is 6 and the fluorine-containing compound in which m is 12, or may contain the fluorine-containing compound of the general formula (2) in which n is 6 and the fluorine-containing compound in which n is 12. Also, the fluoropolymer aqueous dispersion may contain, among the fluorine-containing compounds represented by the general formula (1) and the compounds represented by the general formula (2), at least one of them, or may contain two or more of them, may contain three or more of them, or may contain four or more of them.

The fluoropolymer aqueous dispersion may contain, among the fluorine-containing compounds encompassed in the general formula (1), the fluorine-containing compounds in which m is 3, 5, 7, 9, 11, 13, 15, 17, and 19, but not the fluorine-containing compounds in which m is 4, 6, 8, 10, 12, 14, 16, and 18, it may contain the fluorine-containing compounds in which m is 4, 6, 8, 10, 12, 14, 16, 18, and 20, but not the fluorine-containing compounds in which m is 3, 5, 7, 9, 11, 13, 15, 17, and 19, or it may contain all of the fluorine-containing compounds in which m is 3 to 19.

Alternatively, the fluoropolymer aqueous dispersion may contain, among the fluorine-containing compounds

encompassed in the general formula (2), the fluorine-containing compounds in which n is 5, 7, 9, 11, 13, 15, 17, and 19, but not the fluorine-containing compounds in which n is 4, 6, 8, 10, 12, 14, 16, 18, and 20, it may contain the fluorine-containing compounds in which n is 4, 6, 8, 10, 12, 14, 16, 18, and 20, but not the fluorine-containing compounds in which n is 5, 7, 9, 11, 13, 15, 17, and 19, or it may contain all of the fluorine-containing compounds in which n is 4 to 20.

In the production method of the present disclosure, the concentration of the fluorine-containing compound represented by the general formula (1) or (2) in the fluoropolymer aqueous dispersion to be subjected to the treatment is not limited, and a fluoropolymer aqueous dispersion of any concentration can be treated.

In the fluoropolymer aqueous dispersion to be subjected to the treatment, the total content of the compounds represented by the general formulas (1) and (2) may be greater than 1 ppm, may be 2 ppm or more, may be 5 ppm or more, may be 10 ppm or more, or may be 50 ppm or more, based on the fluoropolymer. When the concentration of the fluorine-containing compound represented by the general formula (1) or (2) in the fluoropolymer aqueous dispersion is at a certain level or higher as described above, a higher removal efficiency is achieved.

Also, in the fluoropolymer aqueous dispersion to be subjected to the treatment, the total content of the fluorine-containing compounds represented by the general formulas (1) and (2) may be 30,000 ppm or less, may be 10,000 ppm or less, may be 5,000 ppm or less, may be 2,000 ppm or less, may be 1,000 ppm or less, may be 500 ppm or less, or may be 200 ppm or less, based on the fluoropolymer. When the total amount of the fluorine-containing compounds in the fluoropolymer aqueous dispersion is in the above range, the removal efficiency can be further enhanced. The total content is the sum of the contents of all fluorine-containing compounds encompassed in the general formula (1) and all fluorine-containing compounds encompassed in the general formula (2) .

As the fluoropolymer aqueous dispersion, a fluoropolymer aqueous dispersion obtained by polymerization of a fluoropolymer may be used as it is, or a fluoropolymer aqueous dispersion produced by polymerization of a fluoropolymer may be diluted or concentrated such that the total amount of the fluorine-containing compounds represented by the general formulas (1) and (2) is within the above range.

Unless otherwise stated, ppm herein refers to a value determined in terms of mass.

Each of the amounts of at least one of the fluorine-containing compounds of the general formula (1) in which m is 3, 4, 5, 6, 7, 8, 9, 10, 11, 12, 13, 14, 15, 16, 17, 18, or 19 may be 0.01 ppm or more, may be 0.1 ppm or more, may be 0.5 ppm or more, may be 1 ppm or more, may be greater than 1 ppm, may be 5 ppm or more, or may be 10 ppm or more based on the fluoropolymer.

When the concentration of the fluorine-containing compound represented by the general formula (1) in the fluoropolymer aqueous dispersion is at a certain level or higher as described above, a higher removal efficiency is achieved.

Also, each of the amounts of at least one of the fluorine-containing compounds of the general formula (1) in which m is 3, 4, 5, 6, 7, 8, 9, 10, 11, 12, 13, 14, 15, 16, 17, 18, or 19 may be 10,000 ppm or less, may be 5,000 ppm or less, may be 2,000 ppm or less, may be 1,000 ppm or less, may be 500 ppm or less, or may be 200 ppm or less based on the fluoropolymer. When the amount of the fluorine-containing compounds in the fluoropolymer aqueous dispersion is in the above range, the removal efficiency can be further enhanced.

The amount of the fluorine-containing compound of the general formula (1) in which m is 3 may be 0.01 ppm or more, may be 0.1 ppm or more, may be 0.5 ppm or more, may be 1 ppm or more, may be 5 ppm or more, or may be 10 ppm or more based on the fluoropolymer.

When the concentration of the fluorine-containing compound represented by the general formula (1) in the fluoropolymer aqueous dispersion is at a certain level or higher as described above, a higher removal efficiency is achieved.

Also, the amount of the fluorine-containing compound of the general formula (1) in which m is 3 may be 10,000 ppm or less, may be 5,000 ppm or less, may be 2,000 ppm or less, may be 1,000 ppm or less, may be 500 ppm or less, or may be 200 ppm or less based on the fluoropolymer. When the amount of the fluorine-containing compounds in the fluoropolymer aqueous dispersion is in the above range, the removal efficiency can be further enhanced.

The amount of the fluorine-containing compound of the general formula (1) in which m is 4 may be 0.01 ppm or more, may be 0.1 ppm or more, may be 0.5 ppm or more, may be 1 ppm or more, may be 5 ppm or more, or may be 10 ppm or more based on the fluoropolymer.

When the concentration of the fluorine-containing compound represented by the general formula (1) in the fluoropolymer aqueous dispersion is at a certain level or higher as described above, a higher removal efficiency is achieved.

Also, the amount of the fluorine-containing compound of the general formula (1) in which m is 4 may be 10,000 ppm or less, may be 5,000 ppm or less, may be 2,000 ppm or less, may be 1,000 ppm or less, may be 500 ppm or less, or may be 200 ppm or less based on the fluoropolymer. When the amount of the fluorine-containing compounds in the fluoropolymer aqueous dispersion is in the above range, the removal efficiency can be further enhanced.

The amount of the fluorine-containing compound of the general formula (1) in which m is 5 may be 0.01 ppm or more, may be 0.1 ppm or more, may be 0.5 ppm or more, may be 1 ppm or more, may be 5 ppm or more, or may be

10 ppm or more based on the fluoropolymer.

When the concentration of the fluorine-containing compound represented by the general formula (1) in the fluoropolymer aqueous dispersion is at a certain level or higher as described above, a higher removal efficiency is achieved.

Also, the amount of the fluorine-containing compound of the general formula (1) in which m is 5 may be 10,000 ppm or less, may be 5,000 ppm or less, may be 2,000 ppm or less, may be 1,000 ppm or less, may be 500 ppm or less, or may be 200 ppm or less based on the fluoropolymer. When the amount of the fluorine-containing compounds in the fluoropolymer aqueous dispersion is in the above range, the removal efficiency can be further enhanced.

The amount of the fluorine-containing compound of the general formula (1) in which m is 6 may be 0.01 ppm or more, may be 0.1 ppm or more, may be 0.5 ppm or more, may be 1 ppm or more, may be 5 ppm or more, or may be 10 ppm or more based on the fluoropolymer.

When the concentration of the fluorine-containing compound represented by the general formula (1) in the fluoropolymer aqueous dispersion is at a certain level or higher as described above, a higher removal efficiency is achieved.

Also, the amount of the fluorine-containing compound of the general formula (1) in which m is 6 may be 10,000 ppm or less, may be 5,000 ppm or less, may be 2,000 ppm or less, may be 1,000 ppm or less, may be 500 ppm or less, or may be 200 ppm or less based on the fluoropolymer. When the amount of the fluorine-containing compounds in the fluoropolymer aqueous dispersion is in the above range, the removal efficiency can be further enhanced.

The amount of the fluorine-containing compound of the general formula (1) in which m is 7 may be 0.01 ppm or more, may be 0.1 ppm or more, may be 0.5 ppm or more, may be 1 ppm or more, may be 5 ppm or more, or may be 10 ppm or more based on the fluoropolymer.

When the concentration of the fluorine-containing compound represented by the general formula (1) in the fluoropolymer aqueous dispersion is at a certain level or higher as described above, a higher removal efficiency is achieved.

Also, the amount of the fluorine-containing compound of the general formula (1) in which m is 7 may be 10,000 ppm or less, may be 5,000 ppm or less, may be 2,000 ppm or less, may be 1,000 ppm or less, may be 500 ppm or less, or may be 200 ppm or less based on the fluoropolymer. When the amount of the fluorine-containing compounds in the fluoropolymer aqueous dispersion is in the above range, the removal efficiency can be further enhanced.

The amount of the fluorine-containing compound of the general formula (1) in which m is 8 may be 0.01 ppm or more, may be 0.1 ppm or more, may be 0.5 ppm or more, may be 1 ppm or more, may be 5 ppm or more, or may be 10 ppm or more based on the fluoropolymer.

When the concentration of the fluorine-containing compound represented by the general formula (1) in the fluoropolymer aqueous dispersion is at a certain level or higher as described above, a higher removal efficiency is achieved.

Also, the amount of the fluorine-containing compound of the general formula (1) in which m is 8 may be 10,000 ppm or less, may be 5,000 ppm or less, may be 2,000 ppm or less, may be 1,000 ppm or less, may be 500 ppm or less, or may be 200 ppm or less based on the fluoropolymer. When the amount of the fluorine-containing compounds in the fluoropolymer aqueous dispersion is in the above range, the removal efficiency can be further enhanced.

The amount of the fluorine-containing compound of the general formula (1) in which m is 9 may be 0.01 ppm or more, may be 0.1 ppm or more, may be 0.5 ppm or more, may be 1 ppm or more, may be 5 ppm or more, or may be 10 ppm or more based on the fluoropolymer.

When the concentration of the fluorine-containing compound represented by the general formula (1) in the fluoropolymer aqueous dispersion is at a certain level or higher as described above, a higher removal efficiency is achieved.

Also, the amount of the fluorine-containing compound of the general formula (1) in which m is 9 may be 10,000 ppm or less, may be 5,000 ppm or less, may be 2,000 ppm or less, may be 1,000 ppm or less, may be 500 ppm or less, or may be 200 ppm or less based on the fluoropolymer. When the amount of the fluorine-containing compounds in the fluoropolymer aqueous dispersion is in the above range, the removal efficiency can be further enhanced.

The amount of the fluorine-containing compound of the general formula (1) in which m is 10 may be 0.01 ppm or more, may be 0.1 ppm or more, may be 0.5 ppm or more, may be 1 ppm or more, may be 5 ppm or more, or may be 10 ppm or more based on the fluoropolymer.

When the concentration of the fluorine-containing compound represented by the general formula (1) in the fluoropolymer aqueous dispersion is at a certain level or higher as described above, a higher removal efficiency is achieved.

Also, the amount of the fluorine-containing compound of the general formula (1) in which m is 10 may be 10,000 ppm or less, may be 5,000 ppm or less, may be 2,000 ppm or less, may be 1,000 ppm or less, may be 500 ppm or less, or may be 200 ppm or less based on the fluoropolymer. When the amount of the fluorine-containing compounds in the fluoropolymer aqueous dispersion is in the above range, the removal efficiency can be further enhanced.

The amount of the fluorine-containing compound of the general formula (1) in which m is 11 may be 0.01 ppm or more, may be 0.1 ppm or more, may be 0.5 ppm or more, may be 1 ppm or more, may be 5 ppm or more, or may be 10 ppm or more based on the fluoropolymer.

When the concentration of the fluorine-containing compound represented by the general formula (1) in the fluoropolymer aqueous dispersion is at a certain level or higher as described above, a higher removal efficiency is achieved.

Also, the amount of the fluorine-containing compound of the general formula (1) in which m is 11 may be 10,000 ppm or less, may be 5,000 ppm or less, may be 2,000 ppm or less, may be 1,000 ppm or less, may be 500 ppm or less, or may be 200 ppm or less based on the fluoropolymer. When the amount of the fluorine-containing compounds in the fluoropolymer aqueous dispersion is in the above range, the removal efficiency can be further enhanced.

The amount of the fluorine-containing compound of the general formula (1) in which m is 12 may be 0.01 ppm or more, may be 0.1 ppm or more, may be 0.5 ppm or more, may be 1 ppm or more, may be 5 ppm or more, or may be 10 ppm or more based on the fluoropolymer.

When the concentration of the fluorine-containing compound represented by the general formula (1) in the fluoropolymer aqueous dispersion is at a certain level or higher as described above, a higher removal efficiency is achieved.

Also, the amount of the fluorine-containing compound of the general formula (1) in which m is 12 may be 10,000 ppm or less, may be 5,000 ppm or less, may be 2,000 ppm or less, may be 1,000 ppm or less, may be 500 ppm or less, or may be 200 ppm or less based on the fluoropolymer. When the amount of the fluorine-containing compounds in the fluoropolymer aqueous dispersion is in the above range, the removal efficiency can be further enhanced.

The amount of the fluorine-containing compound of the general formula (1) in which m is 13 may be 0.01 ppm or more, may be 0.1 ppm or more, may be 0.5 ppm or more, may be 1 ppm or more, may be 5 ppm or more, or may be 10 ppm or more based on the fluoropolymer.

When the concentration of the fluorine-containing compound represented by the general formula (1) in the fluoropolymer aqueous dispersion is at a certain level or higher as described above, a higher removal efficiency is achieved.

Also, the amount of the fluorine-containing compound of the general formula (1) in which m is 13 may be 10,000 ppm or less, may be 5,000 ppm or less, may be 2,000 ppm or less, may be 1,000 ppm or less, may be 500 ppm or less, or may be 200 ppm or less based on the fluoropolymer. When the amount of the fluorine-containing compounds in the fluoropolymer aqueous dispersion is in the above range, the removal efficiency can be further enhanced.

The amount of the fluorine-containing compound of the general formula (1) in which m is 14 may be 0.01 ppm or more, may be 0.1 ppm or more, may be 0.5 ppm or more, may be 1 ppm or more, may be 5 ppm or more, or may be 10 ppm or more based on the fluoropolymer.

When the concentration of the fluorine-containing compound represented by the general formula (1) in the fluoropolymer aqueous dispersion is at a certain level or higher as described above, a higher removal efficiency is achieved.

Also, the amount of the fluorine-containing compound of the general formula (1) in which m is 14 may be 10,000 ppm or less, may be 5,000 ppm or less, may be 2,000 ppm or less, may be 1,000 ppm or less, may be 500 ppm or less, or may be 200 ppm or less based on the fluoropolymer. When the amount of the fluorine-containing compounds in the fluoropolymer aqueous dispersion is in the above range, the removal efficiency can be further enhanced.

The amount of the fluorine-containing compound of the general formula (1) in which m is 15 may be 0.01 ppm or more, may be 0.1 ppm or more, may be 0.5 ppm or more, may be 1 ppm or more, may be 5 ppm or more, or may be 10 ppm or more based on the fluoropolymer.

When the concentration of the fluorine-containing compound represented by the general formula (1) in the fluoropolymer aqueous dispersion is at a certain level or higher as described above, a higher removal efficiency is achieved.

Also, the amount of the fluorine-containing compound of the general formula (1) in which m is 15 may be 10,000 ppm or less, may be 5,000 ppm or less, may be 2,000 ppm or less, may be 1,000 ppm or less, may be 500 ppm or less, or may be 200 ppm or less based on the fluoropolymer. When the amount of the fluorine-containing compounds in the fluoropolymer aqueous dispersion is in the above range, the removal efficiency can be further enhanced.

The amount of the fluorine-containing compound of the general formula (1) in which m is 16 may be 0.01 ppm or more, may be 0.1 ppm or more, may be 0.5 ppm or more, may be 1 ppm or more, may be 5 ppm or more, or may be 10 ppm or more based on the fluoropolymer.

When the concentration of the fluorine-containing compound represented by the general formula (1) in the fluoropolymer aqueous dispersion is at a certain level or higher as described above, a higher removal efficiency is achieved.

Also, the amount of the fluorine-containing compound of the general formula (1) in which m is 16 may be 10,000 ppm or less, may be 5,000 ppm or less, may be 2,000 ppm or less, may be 1,000 ppm or less, may be 500 ppm or less,

or may be 200 ppm or less based on the fluoropolymer. When the amount of the fluorine-containing compounds in the fluoropolymer aqueous dispersion is in the above range, the removal efficiency can be further enhanced.

The amount of the fluorine-containing compound of the general formula (1) in which m is 17 may be 0.01 ppm or more, may be 0.1 ppm or more, may be 0.5 ppm or more, may be 1 ppm or more, may be 5 ppm or more, or may be 10 ppm or more based on the fluoropolymer.

When the concentration of the fluorine-containing compound represented by the general formula (1) in the fluoropolymer aqueous dispersion is at a certain level or higher as described above, a higher removal efficiency is achieved.

Also, the amount of the fluorine-containing compound of the general formula (1) in which m is 17 may be 10,000 ppm or less, may be 5,000 ppm or less, may be 2,000 ppm or less, may be 1,000 ppm or less, may be 500 ppm or less, or may be 200 ppm or less based on the fluoropolymer. When the amount of the fluorine-containing compounds in the fluoropolymer aqueous dispersion is in the above range, the removal efficiency can be further enhanced.

The amount of the fluorine-containing compound of the general formula (1) in which m is 18 may be 0.01 ppm or more, may be 0.1 ppm or more, may be 0.5 ppm or more, may be 1 ppm or more, may be 5 ppm or more, or may be 10 ppm or more based on the fluoropolymer.

When the concentration of the fluorine-containing compound represented by the general formula (1) in the fluoropolymer aqueous dispersion is at a certain level or higher as described above, a higher removal efficiency is achieved.

Also, the amount of the fluorine-containing compound of the general formula (1) in which m is 18 may be 10,000 ppm or less, may be 5,000 ppm or less, may be 2,000 ppm or less, may be 1,000 ppm or less, may be 500 ppm or less, or may be 200 ppm or less based on the fluoropolymer. When the amount of the fluorine-containing compounds in the fluoropolymer aqueous dispersion is in the above range, the removal efficiency can be further enhanced.

The amount of the fluorine-containing compound of the general formula (1) in which m is 19 may be 0.01 ppm or more, may be 0.1 ppm or more, may be 0.5 ppm or more, may be 1 ppm or more, may be 5 ppm or more, or may be 10 ppm or more based on the fluoropolymer.

When the concentration of the fluorine-containing compound represented by the general formula (1) in the fluoropolymer aqueous dispersion is at a certain level or higher as described above, a higher removal efficiency is achieved.

Also, the amount of the fluorine-containing compound of the general formula (1) in which m is 19 may be 10,000 ppm or less, may be 5,000 ppm or less, may be 2,000 ppm or less, may be 1,000 ppm or less, may be 500 ppm or less, or may be 200 ppm or less based on the fluoropolymer. When the amount of the fluorine-containing compounds in the fluoropolymer aqueous dispersion is in the above range, the removal efficiency can be further enhanced.

Each of the amounts of at least one of the fluorine-containing compounds of the general formula (2) in which n is 4, 5, 6, 7, 8, 9, 10, 11, 12, 13, 14, 15, 16, 17, 18, 19, or 20 may be 0.01 ppm or more, may be 0.1 ppm or more, may be 0.5 ppm or more, may be 1 ppm or more, may be 5 ppm or more, or may be 10 ppm or more based on the fluoropolymer. When the concentration of the fluorine-containing compound represented by the general formula (2) in the fluoropolymer aqueous dispersion is at a certain level or higher as described above, a higher removal efficiency is achieved.

Also, each of the amounts of at least one of the fluorine-containing compounds of the general formula (2) in which n is 4, 5, 6, 7, 8, 9, 10, 11, 12, 13, 14, 15, 16, 17, 18, 19, or 20 may be 10,000 ppm or less, may be 5,000 ppm or less, or may be 2,000 ppm or less, and furthermore, it may be 1,000 ppm or less, may be 500 ppm or less, or may be 200 ppm or less based on the fluoropolymer. When the amount of the fluorine-containing compounds in the fluoropolymer aqueous dispersion is in the above range, the removal efficiency can be further enhanced.

The amount of the fluorine-containing compound of the general formula (2) in which n is 4 may be 0.01 ppm or more, may be 0.1 ppm or more, may be 0.5 ppm or more, may be 1 ppm or more, may be 5 ppm or more, or may be 10 ppm or more based on the fluoropolymer. When the concentration of the fluorine-containing compound represented by the general formula (2) in the fluoropolymer aqueous dispersion is at a certain level or higher as described above, a higher removal efficiency is achieved.

Also, the amount of the fluorine-containing compound of the general formula (2) in which n is 4 may be 10,000 ppm or less, may be 5,000 ppm or less, may be 2,000 ppm or less, may be 1,000 ppm or less, may be 500 ppm or less, or may be 200 ppm or less based on the fluoropolymer. When the amount of the fluorine-containing compounds in the fluoropolymer aqueous dispersion is in the above range, the removal efficiency can be further enhanced.

The amount of the fluorine-containing compound of the general formula (2) in which n is 5 may be 0.01 ppm or more, may be 0.1 ppm or more, may be 0.5 ppm or more, may be 1 ppm or more, may be 5 ppm or more, or may be 10 ppm or more based on the fluoropolymer. When the concentration of the fluorine-containing compound represented by the general formula (2) in the fluoropolymer aqueous dispersion is at a certain level or higher as described above, a higher removal efficiency is achieved.

Also, the amount of the fluorine-containing compound of the general formula (2) in which n is 5 may be 10,000 ppm or less, may be 5,000 ppm or less, may be 2,000 ppm or less, may be 1,000 ppm or less, may be 500 ppm or less,

or may be 200 ppm or less based on the fluoropolymer. When the amount of the fluorine-containing compounds in the fluoropolymer aqueous dispersion is in the above range, the removal efficiency can be further enhanced.

The amount of the fluorine-containing compound of the general formula (2) in which n is 6 may be 0.01 ppm or more, may be 0.1 ppm or more, may be 0.5 ppm or more, may be 1 ppm or more, may be 5 ppm or more, or may be 10 ppm or more based on the fluoropolymer. When the concentration of the fluorine-containing compound represented by the general formula (2) in the fluoropolymer aqueous dispersion is at a certain level or higher as described above, a higher removal efficiency is achieved.

Also, the amount of the fluorine-containing compound of the general formula (2) in which n is 6 may be 10,000 ppm or less, may be 5,000 ppm or less, may be 2,000 ppm or less, may be 1,000 ppm or less, may be 500 ppm or less, or may be 200 ppm or less based on the fluoropolymer. When the amount of the fluorine-containing compounds in the fluoropolymer aqueous dispersion is in the above range, the removal efficiency can be further enhanced.

The amount of the fluorine-containing compound of the general formula (2) in which n is 7 may be 0.01 ppm or more, may be 0.1 ppm or more, may be 0.5 ppm or more, may be 1 ppm or more, may be 5 ppm or more, or may be 10 ppm or more based on the fluoropolymer. When the concentration of the fluorine-containing compound represented by the general formula (2) in the fluoropolymer aqueous dispersion is at a certain level or higher as described above, a higher removal efficiency is achieved.

Also, the amount of the fluorine-containing compound of the general formula (2) in which n is 7 may be 10,000 ppm or less, may be 5,000 ppm or less, may be 2,000 ppm or less, may be 1,000 ppm or less, may be 500 ppm or less, or may be 200 ppm or less based on the fluoropolymer. When the amount of the fluorine-containing compounds in the fluoropolymer aqueous dispersion is in the above range, the removal efficiency can be further enhanced.

The amount of the fluorine-containing compound of the general formula (2) in which n is 8 may be 0.01 ppm or more, may be 0.1 ppm or more, may be 0.5 ppm or more, may be 1 ppm or more, may be 5 ppm or more, or may be 10 ppm or more based on the fluoropolymer. When the concentration of the fluorine-containing compound represented by the general formula (2) in the fluoropolymer aqueous dispersion is at a certain level or higher as described above, a higher removal efficiency is achieved.

Also, the amount of the fluorine-containing compound of the general formula (2) in which n is 8 may be 10,000 ppm or less, may be 5,000 ppm or less, may be 2,000 ppm or less, may be 1,000 ppm or less, may be 500 ppm or less, or may be 200 ppm or less based on the fluoropolymer. When the amount of the fluorine-containing compounds in the fluoropolymer aqueous dispersion is in the above range, the removal efficiency can be further enhanced.

The amount of the fluorine-containing compound of the general formula (2) in which n is 9 may be 0.01 ppm or more, may be 0.1 ppm or more, may be 0.5 ppm or more, may be 1 ppm or more, may be 5 ppm or more, or may be 10 ppm or more based on the fluoropolymer. When the concentration of the fluorine-containing compound represented by the general formula (2) in the fluoropolymer aqueous dispersion is at a certain level or higher as described above, a higher removal efficiency is achieved.

Also, the amount of the fluorine-containing compound of the general formula (2) in which n is 9 may be 10,000 ppm or less, may be 5,000 ppm or less, may be 2,000 ppm or less, may be 1,000 ppm or less, may be 500 ppm or less, or may be 200 ppm or less based on the fluoropolymer. When the amount of the fluorine-containing compounds in the fluoropolymer aqueous dispersion is in the above range, the removal efficiency can be further enhanced.

The amount of the fluorine-containing compound of the general formula (2) in which n is 10 may be 0.01 ppm or more, may be 0.1 ppm or more, may be 0.5 ppm or more, may be 1 ppm or more, may be 5 ppm or more, or may be 10 ppm or more based on the fluoropolymer. When the concentration of the fluorine-containing compound represented by the general formula (2) in the fluoropolymer aqueous dispersion is at a certain level or higher as described above, a higher removal efficiency is achieved.

Also, the amount of the fluorine-containing compound of the general formula (2) in which n is 10 may be 10,000 ppm or less, may be 5,000 ppm or less, may be 2,000 ppm or less, may be 1,000 ppm or less, may be 500 ppm or less, or may be 200 ppm or less based on the fluoropolymer. When the amount of the fluorine-containing compounds in the fluoropolymer aqueous dispersion is in the above range, the removal efficiency can be further enhanced.

The amount of the fluorine-containing compound of the general formula (2) in which n is 11 may be 0.01 ppm or more, may be 0.1 ppm or more, may be 0.5 ppm or more, may be 1 ppm or more, may be 5 ppm or more, or may be 10 ppm or more based on the fluoropolymer. When the concentration of the fluorine-containing compound represented by the general formula (2) in the fluoropolymer aqueous dispersion is at a certain level or higher as described above, a higher removal efficiency is achieved.

Also, the amount of the fluorine-containing compound of the general formula (2) in which n is 11 may be 10,000 ppm or less, may be 5,000 ppm or less, may be 2,000 ppm or less, may be 1,000 ppm or less, may be 500 ppm or less, or may be 200 ppm or less based on the fluoropolymer. When the amount of the fluorine-containing compounds in the fluoropolymer aqueous dispersion is in the above range, the removal efficiency can be further enhanced.

The amount of the fluorine-containing compound of the general formula (2) in which n is 12 may be 0.01 ppm or more, may be 0.1 ppm or more, may be 0.5 ppm or more, may be 1 ppm or more, may be 5 ppm or more, or may be

10 ppm or more based on the fluoropolymer. When the concentration of the fluorine-containing compound represented by the general formula (2) in the fluoropolymer aqueous dispersion is at a certain level or higher as described above, a higher removal efficiency is achieved.

Also, the amount of the fluorine-containing compound of the general formula (2) in which n is 12 may be 10,000 ppm or less, may be 5,000 ppm or less, may be 2,000 ppm or less, may be 1,000 ppm or less, may be 500 ppm or less, or may be 200 ppm or less based on the fluoropolymer. When the amount of the fluorine-containing compounds in the fluoropolymer aqueous dispersion is in the above range, the removal efficiency can be further enhanced.

The amount of the fluorine-containing compound of the general formula (2) in which n is 13 may be 0.01 ppm or more, may be 0.1 ppm or more, may be 0.5 ppm or more, may be 1 ppm or more, may be 5 ppm or more, or may be 10 ppm or more based on the fluoropolymer. When the concentration of the fluorine-containing compound represented by the general formula (2) in the fluoropolymer aqueous dispersion is at a certain level or higher as described above, a higher removal efficiency is achieved.

Also, the amount of the fluorine-containing compound of the general formula (2) in which n is 13 may be 10,000 ppm or less, may be 5,000 ppm or less, may be 2,000 ppm or less, may be 1,000 ppm or less, may be 500 ppm or less, or may be 200 ppm or less based on the fluoropolymer. When the amount of the fluorine-containing compounds in the fluoropolymer aqueous dispersion is in the above range, the removal efficiency can be further enhanced.

The amount of the fluorine-containing compound of the general formula (2) in which n is 14 may be 0.01 ppm or more, may be 0.1 ppm or more, may be 0.5 ppm or more, may be 1 ppm or more, may be 5 ppm or more, or may be 10 ppm or more based on the fluoropolymer. When the concentration of the fluorine-containing compound represented by the general formula (2) in the fluoropolymer aqueous dispersion is at a certain level or higher as described above, a higher removal efficiency is achieved.

Also, the amount of the fluorine-containing compound of the general formula (2) in which n is 14 may be 10,000 ppm or less, may be 5,000 ppm or less, may be 2,000 ppm or less, may be 1,000 ppm or less, may be 500 ppm or less, or may be 200 ppm or less based on the fluoropolymer. When the amount of the fluorine-containing compounds in the fluoropolymer aqueous dispersion is in the above range, the removal efficiency can be further enhanced.

The amount of the fluorine-containing compound of the general formula (2) in which n is 15 may be 0.01 ppm or more, may be 0.1 ppm or more, may be 0.5 ppm or more, may be 1 ppm or more, may be 5 ppm or more, or may be 10 ppm or more based on the fluoropolymer. When the concentration of the fluorine-containing compound represented by the general formula (2) in the fluoropolymer aqueous dispersion is at a certain level or higher as described above, a higher removal efficiency is achieved.

Also, the amount of the fluorine-containing compound of the general formula (2) in which n is 15 may be 10,000 ppm or less, may be 5,000 ppm or less, may be 2,000 ppm or less, may be 1,000 ppm or less, may be 500 ppm or less, or may be 200 ppm or less based on the fluoropolymer. When the amount of the fluorine-containing compounds in the fluoropolymer aqueous dispersion is in the above range, the removal efficiency can be further enhanced.

The amount of the fluorine-containing compound of the general formula (2) in which n is 16 may be 0.01 ppm or more, may be 0.1 ppm or more, may be 0.5 ppm or more, may be 1 ppm or more, may be 5 ppm or more, or may be 10 ppm or more based on the fluoropolymer. When the concentration of the fluorine-containing compound represented by the general formula (2) in the fluoropolymer aqueous dispersion is at a certain level or higher as described above, a higher removal efficiency is achieved.

Also, the amount of the fluorine-containing compound of the general formula (2) in which n is 16 may be 10,000 ppm or less, may be 5,000 ppm or less, may be 2,000 ppm or less, may be 1,000 ppm or less, may be 500 ppm or less, or may be 200 ppm or less based on the fluoropolymer. When the amount of the fluorine-containing compounds in the fluoropolymer aqueous dispersion is in the above range, the removal efficiency can be further enhanced.

The amount of the fluorine-containing compound of the general formula (2) in which n is 17 may be 0.01 ppm or more, may be 0.1 ppm or more, may be 0.5 ppm or more, may be 1 ppm or more, may be 5 ppm or more, or may be 10 ppm or more based on the fluoropolymer. When the concentration of the fluorine-containing compound represented by the general formula (2) in the fluoropolymer aqueous dispersion is at a certain level or higher as described above, a higher removal efficiency is achieved.

Also, the amount of the fluorine-containing compound of the general formula (2) in which n is 17 may be 10,000 ppm or less, may be 5,000 ppm or less, may be 2,000 ppm or less, may be 1,000 ppm or less, may be 500 ppm or less, or may be 200 ppm or less based on the fluoropolymer. When the amount of the fluorine-containing compounds in the fluoropolymer aqueous dispersion is in the above range, the removal efficiency can be further enhanced.

The amount of the fluorine-containing compound of the general formula (2) in which n is 18 may be 0.01 ppm or more, may be 0.1 ppm or more, may be 0.5 ppm or more, may be 1 ppm or more, may be 5 ppm or more, or may be 10 ppm or more based on the fluoropolymer. When the concentration of the fluorine-containing compound represented by the general formula (2) in the fluoropolymer aqueous dispersion is at a certain level or higher as described above, a higher removal efficiency is achieved.

Also, the amount of the fluorine-containing compound of the general formula (2) in which n is 18 may be 10,000

ppm or less, may be 5,000 ppm or less, may be 2,000 ppm or less, may be 1,000 ppm or less, may be 500 ppm or less, or may be 200 ppm or less based on the fluoropolymer. When the amount of the fluorine-containing compounds in the fluoropolymer aqueous dispersion is in the above range, the removal efficiency can be further enhanced.

The amount of the fluorine-containing compound of the general formula (2) in which n is 19 may be 0.01 ppm or more, may be 0.1 ppm or more, may be 0.5 ppm or more, may be 1 ppm or more, may be 5 ppm or more, or may be 10 ppm or more based on the fluoropolymer. When the concentration of the fluorine-containing compound represented by the general formula (2) in the fluoropolymer aqueous dispersion is at a certain level or higher as described above, a higher removal efficiency is achieved.

Also, the amount of the fluorine-containing compound of the general formula (2) in which n is 19 may be 10,000 ppm or less, may be 5,000 ppm or less, may be 2,000 ppm or less, may be 1,000 ppm or less, may be 500 ppm or less, or may be 200 ppm or less based on the fluoropolymer. When the amount of the fluorine-containing compounds in the fluoropolymer aqueous dispersion is in the above range, the removal efficiency can be further enhanced.

The amount of the fluorine-containing compound of the general formula (2) in which n is 20 may be 0.01 ppm or more, may be 0.1 ppm or more, may be 0.5 ppm or more, may be 1 ppm or more, may be 5 ppm or more, or may be 10 ppm or more based on the fluoropolymer. When the concentration of the fluorine-containing compound represented by the general formula (2) in the fluoropolymer aqueous dispersion is at a certain level or higher as described above, a higher removal efficiency is achieved.

Also, the amount of the fluorine-containing compound of the general formula (2) in which n is 20 may be 10,000 ppm or less, may be 5,000 ppm or less, may be 2,000 ppm or less, may be 1,000 ppm or less, may be 500 ppm or less, or may be 200 ppm or less based on the fluoropolymer. When the amount of the fluorine-containing compounds in the fluoropolymer aqueous dispersion is in the above range, the removal efficiency can be further enhanced.

It is preferable that the fluoropolymer aqueous dispersion at least contains the fluorine-containing compounds of the general formula (1) in which m is 7 or more, or the fluorine-containing compounds of the general formula (2) in which n is 8 or more.

It is more preferable that the fluoropolymer aqueous dispersion contains the fluorine-containing compounds of the general formula (1) in which m is 9 or more or the fluorine-containing compounds of the general formula (2) in which n is 10 or more, and it is still more preferable that it contains the fluorine-containing compounds of the general formula (1) in which m is 11 or more or the fluorine-containing compounds of the general formula (2) in which n is 12 or more.

It is preferable that the fluoropolymer aqueous dispersion contains the compound represented by the general formula (1). The production method of the present disclosure is particularly effective when the fluoropolymer aqueous dispersion contains the compound represented by the general formula (1). The production method of the present disclosure is particularly effective when the fluoropolymer aqueous dispersion contains the fluorine-containing compounds of the general formula (1) in which m is 7 or more, more preferably the fluorine-containing compounds in which m is 9 or more, and still more preferably the fluorine-containing compounds in which m is 11 or more.

In the fluoropolymer aqueous dispersion, the fluoropolymer is at a concentration of 10 to 90% by mass of the fluoropolymer aqueous dispersion. The lower limit of the concentration of the fluoropolymer is preferably 15% by mass, more preferably 20% by mass, while the upper limit thereof is preferably 80% by mass, more preferably 70% by mass.

The fluoropolymer aqueous dispersion usually contains an aqueous medium such as water. The term "aqueous medium" as used herein means water, and a mixed medium containing water and a water-soluble organic solvent (for example, an alcohol such as methanol, ethanol, or propanol, an ester such as methyl acetate, a ketone such as acetone, or an ether such as dimethyl ether).

The pH of the fluoropolymer aqueous dispersion may be, for example, 1.5 to 13.5 or may be 2 to 13, and is not limited. For example, the pH of the fluoropolymer aqueous dispersions in the step A and the step B may be 2 to 12 or may be 2 to 11.

As the method for adjusting the pH of the fluoropolymer aqueous dispersion, examples thereof include a method in which an acid or an alkali is added to adjust the pH before the step A or the step B.

For example, when the step B and the step A are carried out in this order, the pH of the fluoropolymer aqueous dispersion in the step B may be acidic, and the fluoropolymer aqueous dispersion subjected to the step A may be alkaline.

The fluoropolymer aqueous dispersion containing the fluorine-containing compound represented by the general formula (1) or the general formula (2) can be obtained by polymerization using a hydrocarbon surfactant.

The fluoropolymer aqueous dispersion is one obtained using a hydrocarbon surfactant. More specifically, the fluoropolymer aqueous dispersion is preferably one obtained by polymerizing a fluoromonomer in an aqueous medium in the presence of a hydrocarbon surfactant.

It is preferable that the production method of the present disclosure comprises polymerizing a fluoromonomer in an aqueous medium in the presence of a hydrocarbon surfactant to provide a fluoropolymer aqueous dispersion.

The fluoromonomer preferably has at least one double bond.

The fluoromonomer is preferably at least one selected from the group consisting of tetrafluoroethylene (TFE), hexafluoropropylene (HFP), chlorotrifluoroethylene (CTFE), vinyl fluoride, vinylidene fluoride (VDF), trifluoroethylene,

fluoroalkyl vinyl ether, fluoroalkyl ethylene, fluoroalkyl allyl ether, trifluoropropylene, pentafluoropropylene, trifluorobutene, tetrafluoroisobutene, hexafluoroisobutene, a fluoromonomer represented by the general formula (100): $CHX^{101}=CX^{102}Rf^{101}$ (wherein one of $X^{101}$ and $X^{102}$ is H and the other is F, and $Rf^{101}$ is a linear or branched fluoroalkyl group having 1 to 12 carbon atoms), a fluorinated vinyl heterocyclic compound, and a monomer that provides a crosslinking site.

The fluoroalkyl vinyl ether is preferably, for example, at least one selected from the group consisting of:

a fluoromonomer represented by the general formula (110) :

$$CF_2=CF\text{-}ORf^{111}$$

wherein $Rf^{111}$ represents a perfluoroorganic group;
a fluoromonomer represented by the general formula (120) :

$$CF_2=CF\text{-}OCH_2\text{-}Rf^{121}$$

wherein $Rf^{121}$ represents a perfluoroalkyl group having 1 to 5 carbon atoms;
a fluoromonomer represented by the general formula (130) :

$$CF_2=CFOCF_2ORf^{131}$$

wherein $Rf^{131}$ is a linear or branched perfluoroalkyl group having 1 to 6 carbon atoms, a cyclic perfluoroalkyl group having 5 to 6 carbon atoms, or a linear or branched perfluorooxyalkyl group having 2 to 6 carbon atoms and containing 1 to 3 oxygen atoms;
a fluoromonomer represented by the general formula (140) :

$$CF_2=CFO(CF_2CF(Y^{141})O)_m(CF_2)_nF$$

wherein $Y^{141}$ represents a fluorine atom or a trifluoromethyl group; m is an integer of 1 to 4; and n is an integer of 1 to 4; and
a fluoromonomer represented by the general formula (150) :

$$CF_2=CF\text{-}O\text{-}(CF_2CFY^{151}\text{-}O)_n\text{-}(CFY^{152})_m\text{-}A^{151}$$

wherein $Y^{151}$ represents a fluorine atom, a chlorine atom, a $-SO_2F$ group, or a perfluoroalkyl group; the perfluoroalkyl group optionally contains ether oxygen and a $-SO_2F$ group; n represents an integer of 0 to 3; n $Y^{151}$s are the same as or different from each other; $Y^{152}$ represents a fluorine atom, a chlorine atom, or a $-SO_2F$ group; m represents an integer of 1 to 5; m $Y^{152}$s are the same as or different from each other; $A^{151}$ represents - $SO_2X^{151}$, $-COZ^{151}$, or $-POZ^{152}Z^{153}$; $X^{151}$ represents F, Cl, Br, I, $-OR^{151}$, or $-NR^{152}R^{153}$; $Z^{151}$, $Z^{152}$, and $Z^{153}$ are the same as or different from each other, and each represent $-NR^{154}R^{155}$ or $-OR^{156}$; $R^{151}$, $R^{152}$, $R^{153}$, $R^{154}$, $R^{155}$, and $R^{156}$ are the same as or different from each other, and each represent H, ammonium, an alkali metal, or an alkyl group, aryl group, or sulfonyl-containing group optionally containing a fluorine atom.

The "perfluoroorganic group" as used herein means an organic group in which all hydrogen atoms bonded to the carbon atoms are replaced by fluorine atoms. The perfluoroorganic group optionally has ether oxygen.

An example of the fluoromonomer represented by the general formula (110) is a fluoromonomer in which $Rf^{111}$ is a perfluoroalkyl group having 1 to 10 carbon atoms. The perfluoroalkyl group preferably has 1 to 5 carbon atoms.

Examples of the perfluoroorganic group in the general formula (110) include a perfluoromethyl group, a perfluoroethyl group, a perfluoropropyl group, a perfluorobutyl group, a perfluoropentyl group, and a perfluorohexyl group.

Examples of the fluoromonomer represented by the general formula (110) also include those represented by the general formula (110) in which $Rf^{111}$ is a perfluoro(alkoxyalkyl) group having 4 to 9 carbon atoms; those in which $Rf^{111}$ is a group represented by the following formula:

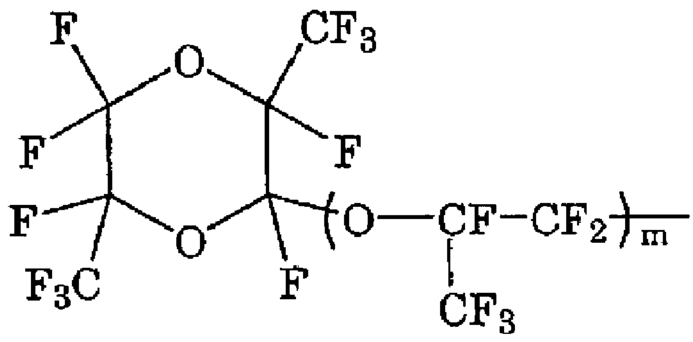

wherein m represents 0 or an integer of 1 to 4; and those in which $Rf^{111}$ is a group represented by the following formula:

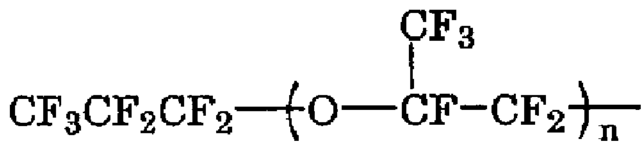

wherein n represents an integer of 1 to 4.

Of these, the fluoromonomer represented by the general formula (110) is preferably a fluoromonomer represented by the general formula (160):

$$CF_2=CF\text{-}ORf^{161}$$

wherein $Rf^{161}$ represents a perfluoroalkyl group having 1 to 10 carbon atoms.

$Rf^{161}$ is preferably a perfluoroalkyl group having 1 to 5 carbon atoms.

The fluoroalkyl vinyl ether is preferably at least one selected from the group consisting of fluoromonomers represented by the general formulas (160), (130), and (140) .

The fluoromonomer represented by the general formula (160) is preferably at least one selected from the group consisting of perfluoro(methyl vinyl ether), perfluoro(ethyl vinyl ether), and perfluoro(propyl vinyl ether), and is more preferably at least one selected from the group consisting of perfluoro(methyl vinyl ether) and perfluoro(propyl vinyl ether).

The fluoromonomer represented by the general formula (130) is preferably at least one selected from the group consisting of $CF_2=CFOCF_2OCF_3$, $CF_2=CFOCF_2OCF_2CF_3$, and $CF_2=CFOCF_2OCF_2CF_2OCF_3$.

The fluoromonomer represented by the general formula (140) is preferably at least one selected from the group consisting of $CF_2=CFOCF_2CF(CF_3)O(CF_2)_3F$, $CF_2=CFO(CF_2CF(CF_3)O)_2(CF_2)_3F$, and $CF_2=CFO(CF_2CF(CF_3)O)_2(CF_2)_2F$.

The fluoromonomer represented by the general formula (150) is preferably at least one selected from the group consisting of $CF_2=CFOCF_2CF_2SO_2F$, $CF_2=CFOCF_2CF(CF_3)OCF_2CF_2SO_2F$, $CF_2=CFOCF_2CF(CF_2CF_2SO_2F)OCF_2CF_2SO_2F$, and $CF_2=CFOCF_2CF(SO_2F)_2$.

The fluoromonomer represented by the general formula (100) is preferably a fluoromonomer in which $Rf^{101}$ is a linear fluoroalkyl group, and more preferably a fluoromonomer in which $Rf^{101}$ is a linear perfluoroalkyl group. $Rf^{101}$ preferably has 1 to 6 carbon atoms. Examples of the fluoromonomer represented by the general formula (100) include $CH_2=CFCF_3$, $CH_2=CFCF_2CF_3$, $CH_2=CFCF_2CF_2CF_3$, $CH_2=CFCF_2CF_2CF_2H$, $CH_2=CFCF_2CF_2CF_2CF_3$, $CHF=CHCF_3$ (E isomer), and $CHF=CHCF_3$ (Z isomer), of which preferred is 2,3,3,3-tetrafluoropropylene represented by $CH_2=CFCF_3$.

The fluoroalkyl ethylene is preferably a fluoroalkyl ethylene represented by the general formula (170) :

$$CH_2=CH\text{-}(CF_2)_n\text{-}X^{171}$$

(wherein $X^{171}$ is H or F; and n is an integer of 3 to 10), and more preferably at least one selected from the group consisting of $CH_2=CH\text{-}C_4F_9$ and $CH_2=CH\text{-}C_6F_{13}$.

An example of the fluoroalkyl allyl ether is a fluoromonomer represented by the general formula (180):

$$CF_2=CF\text{-}CF_2\text{-}ORf^{111}$$

wherein $Rf^{111}$ represents a perfluoroorganic group.

$Rf^{111}$ in the general formula (180) is the same as $Rf^{111}$ in the general formula (110). $Rf^{111}$ is preferably a perfluoroalkyl group having 1 to 10 carbon atoms or a perfluoroalkoxyalkyl group having 1 to 10 carbon atoms. The fluoroalkyl allyl ether represented by the general formula (180) is preferably at least one selected from the group consisting of $CF_2=CF-CF_2-O-CF_3$, $CF_2=CF-CF_2-O-C_2F_5$, $CF_2=CF-CF_2-O-C_3F_7$, and $CF_2=CF-CF_2-O-C_4F_9$, more preferably at least one selected from the group consisting of $CF_2=CF-CF_2-O-C_2F_5$, $CF_2=CF-CF_2-O-C_3F_7$, and $CF_2=CF-CF_2-O-C_4F_9$, and still more preferably $CF_2=CF-CF_2-O-CF_2CF_2CF_3$.

An example of the fluorinated vinyl heterocyclic compound is a fluorinated vinyl heterocyclic compound represented by the general formula (230):

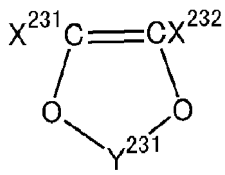

wherein $X^{231}$ and $X^{232}$ are each independently F, Cl, a methoxy group, or a fluorinated methoxy group; and $Y^{231}$ is represented by the formula $Y^{232}$ or $Y^{233}$:

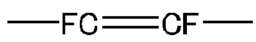 $(Y^{232})$

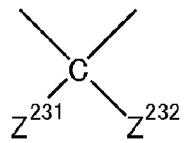 $(Y^{233})$

wherein $Z^{231}$ and $Z^{232}$ are each independently F or a fluorinated alkyl group having 1 to 3 carbon atoms.

The monomer that provides a crosslinking site is preferably at least one selected from the group consisting of:

a fluoromonomer represented by the general formula (180) :

$$CX^{181}{}_2=CX^{182}-R_f{}^{181}CHR^{181}X^{183}$$

wherein $X^{181}$ and $X^{182}$ are each independently a hydrogen atom, a fluorine atom, or $CH_3$; $R_f{}^{181}$ is a fluoroalkylene group, a perfluoroalkylene group, a fluoro(poly)oxyalkylene group, or a perfluoro(poly)oxyalkylene group; $R^{181}$ is a hydrogen atom or $CH_3$; and $X^{183}$ is an iodine atom or a bromine atom;
a fluoromonomer represented by the general formula (190) :

$$CX^{191}{}_2=CX^{192}-R_f{}^{191}X^{193}$$

wherein $X^{191}$ and $X^{192}$ are each independently a hydrogen atom, a fluorine atom, or $CH_3$; $R_f{}^{191}$ is a fluoroalkylene group, a perfluoroalkylene group, a fluoropolyoxyalkylene group, or a perfluoropolyoxyalkylene group; and $X^{193}$ is an iodine atom or a bromine atom;
a fluoromonomer represented by the general formula (200) :

$$CF_2=CFO(CF_2CF(CF_3)O)_m(CF_2)_n-X^{201}$$

wherein m is an integer of 0 to 5; n is an integer of 1 to 3; and $X^{201}$ is a cyano group, a carboxyl group, an alkoxycarbonyl group, an iodine atom, a bromine atom, or $-CH_2I$; and
a fluoromonomer represented by the general formula (210) :

$$CH_2=CFCF_2O(CF(CF_3)CF_2O)_m(CF(CF_3))_n-X^{211}$$

wherein m is an integer of 0 to 5; n is an integer of 1 to 3; and $X^{211}$ is a cyano group, a carboxyl group, an alkoxycarbonyl group, an iodine atom, a bromine atom, or-$CH_2OH$; and
a monomer represented by the general formula (220):

$CR^{221}R^{222}=CR^{223}-Z^{221}-CR^{224}=CR^{225}R^{226}$

wherein $R^{221}$, $R^{222}$, $R^{223}$, $R^{224}$, $R^{225}$, and $R^{226}$ are the same as or different from each other, and are each a hydrogen atom or an alkyl group having 1 to 5 carbon atoms; $Z^{221}$ is a linear or branched alkylene group having 1 to 18 carbon atoms and optionally having an oxygen atom, a cycloalkylene group having 3 to 18 carbon atoms, an at least partially fluorinated alkylene or oxyalkylene group having 1 to 10 carbon atoms, or a (per)fluoropolyoxyalkylene group which is represented by: $-(Q)_p-CF_2O-(CF_2CF_2O)_m(CF_2O)_n-CF_2-(Q)_p-$ (wherein Q is an alkylene group or an oxyalkylene group; p is 0 or 1; and m/n is 0.2 to 5) and has a molecular weight of 500 to 10,000.

$X^{183}$ and $X^{193}$ are each preferably an iodine atom. $R_f^{181}$ and $R_f^{191}$ are each preferably a perfluoroalkylene group having 1 to 5 carbon atoms. $R^{181}$ is preferably a hydrogen atom. $X^{201}$ is preferably a cyano group, an alkoxycarbonyl group, an iodine atom, a bromine atom, or $-CH_2I$. $X^{211}$ is preferably a cyano group, an alkoxycarbonyl group, an iodine atom, a bromine atom, or $-CH_2OH$.

The monomer that provides a crosslinking site is preferably at least one selected from the group consisting of $CF_2=CFOCF_2CF(CF_3)OCF_2CF_2CN$, $CF_2=CFOCF_2CF(CF_3)OCF_2CF_2COOH$, $CF_2=CFOCF_2CF(CF_3)OCF_2CF_2CH_2I$, $CF_2=CFOCF_2CF_2CH_2I$, $CH_2=CFCF_2OCF(CF_3)CF_2OCF(CF_3)CN$, $CH_2=CFCF_2OCF(CF_3)CF_2OCF(CF_3)COOH$, $CH_2=CFCF_2OCF(CF_3)CF_2OCF(CF_3)CH_2OH$, $CH_2=CHCF_2CF_2I$, $CH_2=CH(CF_2)_2CH=CH_2$, $CH_2=CH(CF_2)_6CH=CH_2$, and $CF_2=CFO(CF_2)_5CN$, and is more preferably at least one selected from the group consisting of $CF_2=CFOCF_2CF(CF_3)OCF_2CF_2CN$ and $CF_2=CFOCF_2CF_2CH_2I$.

In the polymerization, the fluoromonomer may be polymerized with a fluorine-free monomer. An example of the fluorine-free monomer is a hydrocarbon monomer reactive with the fluoromonomer. Examples of the hydrocarbon monomer include alkenes such as ethylene, propylene, butylene, and isobutylene; alkyl vinyl ethers such as ethyl vinyl ether, propyl vinyl ether, butyl vinyl ether, isobutyl vinyl ether, and cyclohexyl vinyl ether; vinyl esters such as vinyl acetate, vinyl propionate, vinyl n-butyrate, vinyl isobutyrate, vinyl valerate, vinyl pivalate, vinyl caproate, vinyl caprylate, vinyl caprate, vinyl versatate, vinyl laurate, vinyl myristate, vinyl palmitate, vinyl stearate, vinyl benzoate, vinyl para-t-butylbenzoate, vinyl cyclohexanecarboxylate, monochlorovinyl acetate, vinyl adipate, vinyl acrylate, vinyl methacrylate, vinyl crotonate, vinyl sorbate, vinyl cinnamate, vinyl undecylenate, vinyl hydroxyacetate, vinyl hydroxypropionate, vinyl hydroxybutyrate, vinyl hydroxyvalerate, vinyl hydroxyisobutyrate, and vinyl hydroxycyclohexanecarboxylate; alkyl allyl ethers such as ethyl allyl ether, propyl allyl ether, butyl allyl ether, isobutyl allyl ether, and cyclohexyl allyl ether; and alkyl allyl esters such as ethyl allyl ester, propyl allyl ester, butyl allyl ester, isobutyl allyl ester, and cyclohexyl allyl ester.

The fluorine-free monomer may also be a functional group-containing hydrocarbon monomer (other than monomers that provide a crosslinking site). Examples of the functional group-containing hydrocarbon monomer include hydroxy alkyl vinyl ethers such as hydroxyethyl vinyl ether, hydroxypropyl vinyl ether, hydroxybutyl vinyl ether, hydroxyisobutyl vinyl ether, and hydroxycyclohexyl vinyl ether; fluorine-free monomers having carboxyl groups such as itaconic acid, succinic acid, succinic anhydride, fumaric acid, fumaric anhydride, crotonic acid, maleic acid, maleic anhydride, and perfluorobutenoic acid; fluorine-free monomers having a glycidyl group such as glycidyl vinyl ether and glycidyl allyl ether; fluorine-free monomers having an amino group such as aminoalkyl vinyl ether and aminoalkyl allyl ether; and fluorine-free monomers having an amide group such as (meth)acrylamide and methylol acrylamide.

In the polymerization, an aqueous dispersion containing desired fluoropolymer particles (fluoropolymer aqueous dispersion) can be obtained by polymerizing one or two or more of the above fluoromonomers.

The polymerization is also preferably performed in the presence of a nonionic surfactant. The nonionic surfactant is preferably at least one selected from the group consisting of:

a compound represented by the general formula (240):

$R_f^{241}-(X^{241})_n-Y^{241}$

wherein $Rf^{241}$ is a partially fluorinated alkyl group or a fully fluorinated alkyl group having 1 to 12 carbon atoms; n is 0 or 1; $X^{241}$ is -O-, -COO-, or -OCO-; $Y^{241}$ is $-(CH_2)_pH$, $-(CH_2)_pOH$, or $-(OR^{241})_q(OR^{242})_rOH$; p is an integer of 1 to 12; q is an integer of 1 to 12; r is an integer of 0 to 12; and $R^{241}$ and $R^{242}$ are each an alkylene group having 2 to 4 carbon atoms, with the proviso that $R^{241}$ and $R^{242}$ are different from each other;
a block polymer represented by the general formula (250) :

$H(OR^{251})_u(OR^{252})_vOH$

wherein $R^{251}$ and $R^{252}$ are each an alkylene group having 1 to 4 carbon atoms; and u and v are each an integer of 1 to 5, with the proviso that $R^{251}$ and $R^{252}$ are different from each other;

a nonionic polymer having a hydrophobic group containing a hydrocarbon group having 8 to 20 carbon atoms and a hydrophilic group containing a polyalkylene oxide in the molecule; and
a silicon compound represented by the general formula (260):

$$R^{261}{}_m\text{-Si-}(OR^{262})_{4-m}$$

wherein $R^{261}$ is an alkyl group having 1 to 12 carbon atoms; $R^{262}$ is an alkyl group having 1 to 4 carbon atoms; and m is an integer of 1 to 3.

Specific examples of the block polymer represented by the general formula (250) include block polymers composed of at least two segments selected from the group consisting of polyoxyethylene, polyoxypropylene, and polyoxybutylene. Examples thereof include polyoxyethylene-polyoxypropylene block polymers and polyoxyethylene-polyoxybutylene block polymers, and not only A-B block polymers but also A-B-A block polymers are preferred. More preferably, use of a polyoxyethylene-polyoxypropylene block polymer or a polyoxypropylene-polyoxyethylene-polyoxypropylene block polymer allows to prepare a stable fluoropolymer dispersion at a high concentration. In addition, the content of the polyoxyethylene segment is preferably 10 to 50% in view of reducing generation of agglomerates considered to be caused by re-agglomeration, and more preferably 20 to 40% because it allows for the preparation of low viscosity fluoropolymer dispersions. The polyoxyethylene segment may have a molecular weight of, but not limited to, 1,000 to 7,000 g/mol, and in particular, the use of a polyoxyethylene segment having a molecular weight of 2,500 to 6,500 g/mol allows to prepare a dispersion having a low viscosity and excellent dispersibility.

In the polymerization, a nucleating agent may be used. The nucleating agent is preferably used in an amount appropriately selected in accordance with the type of the nucleating agent. For example, the amount thereof is 1,000 ppm or less, more preferably 500 ppm or less, still more preferably 100 ppm or less, particularly preferably 50 ppm or less, and still further preferably 10 ppm or less, based on the aqueous medium.

The use of the above nucleating agent allows for obtaining a fluoropolymer having a smaller primary particle size than that in the case of polymerization in the absence of the above nucleating agent.

Examples of the nucleating agent include dicarboxylic acids, perfluoropolyether (PFPE) acids or salts thereof, and hydrocarbon surfactants. The nucleating agent is preferably free from an aromatic ring, and is preferably an aliphatic compound.

Although the nucleating agent is preferably added before addition of the polymerization initiator or simultaneously with addition of the polymerization initiator, it is also possible to adjust the particle size distribution by adding the nucleating agent during the polymerization.

The amount of the dicarboxylic acid is preferably 1,000 ppm or less, more preferably 500 ppm or less, and still more preferably 100 ppm or less, based on the aqueous medium.

The perfluoropolyether (PFPE) acids or salts thereof may have any chain structure in which the oxygen atoms in the main chain of the molecule are separated by saturated carbon fluoride groups having 1 to 3 carbon atoms. Two or more carbon fluoride groups may be present in the molecule. Representative structures thereof have the repeating units represented by the following formulas:

$$(\text{-CFCF}_3\text{-CF}_2\text{-O-})_n \quad \text{(VII)}$$

$$(\text{-CF}_2\text{-CF}_2\text{-CF}_2\text{-O-})_n \quad \text{(VIII)}$$

$$(\text{-CF}_2\text{-CF}_2\text{-O-})_n\text{-}(\text{-CF}_2\text{-O-})_m \quad \text{(IX)}$$

$$(\text{-CF}_2\text{-CFCF}_3\text{-O-})_n\text{-}(\text{-CF}_2\text{-O-})_m \quad \text{(X)}$$

These structures are described in Kasai, J. Appl. Polymer Sci., 57, 797 (1995). As disclosed in this document, the PFPE acid or a salt thereof may have a carboxylic acid group or a salt thereof at one end or both ends. The PFPE acid or a salt thereof may also have a sulfonic acid, a phosphonic acid group, or a salt thereof at one end or both ends. The PFPE acid or a salt thereof may have different groups at each end. Regarding monofunctional PFPE, the other end of the molecule is usually perfluorinated, but may contain a hydrogen or chlorine atom. The PFPE acid or a salt thereof has at least two ether oxygen atoms, preferably at least four ether oxygen atoms, and still more preferably at least six ether oxygen atoms. Preferably, at least one carbon fluoride group separating ether oxygen atoms, more preferably at least two of such carbon fluoride groups, have 2 or 3 carbon atoms. Still more preferably, at least 50% of the carbon fluoride groups separating ether oxygen atoms has 2 or 3 carbon atoms. Also preferably, the PFPE acid or a salt thereof has at least 15 carbon atoms in total, and for example, a preferable minimum value of n or n + m in the repeating unit structure is preferably at least 5. Two or more of the PFPE acids and salts thereof having an acid group at one end or

both ends may be used in the production method of the present disclosure. The PFPE acid or a salt thereof preferably has a number average molecular weight of less than 6,000 g/mol.

The hydrocarbon surfactant to be used as the nucleating agent is preferably added in an amount of 40 ppm or less, more preferably 30 ppm or less, and still more preferably 20 ppm or less, based on the aqueous medium. The amounts in ppm of the oleophilic nucleation sites present in the aqueous medium will be less than the amounts in ppm disclosed herein as being added to the aqueous medium. Thus, the amounts of oleophilic nucleation sites will each be less than the 50 ppm, 40 ppm, 30 ppm, and 20 ppm as mentioned above. Since it is considered that oleophilic nucleation sites exist as molecules, only a small amount of the hydrocarbon-containing surfactant can generate a large amount of oleophilic nucleation sites. Thus, addition of as little as 1 ppm of the hydrocarbon-containing surfactant to the aqueous medium can provide beneficial effect. The lower limit value thereof is preferably 0.01 ppm, and more preferably 0.1 ppm.

The hydrocarbon surfactant encompasses nonionic surfactants and cationic surfactants, including siloxane surfactants such as those disclosed in U.S. Patent No. 7,897,682 (Brothers et al.) and U.S. Patent No. 7,977,438 (Brothers et al.).

The hydrocarbon surfactant is preferably a nonionic surfactant. In other words, the nucleating agent is preferably a nonionic surfactant. The nonionic surfactant may be free from an aromatic moiety.

As the nonionic surfactant, the nonionic surfactants described in the step of adding the nonionic surfactant to the fluoropolymer aqueous dispersion, which is performed before the step (B) described above, may be used.

Also, in the polymerization, in addition to the hydrocarbon surfactant and other compounds having a surfactant function used as necessary, an additive may also be used to stabilize each compound. Examples of the additive include a buffer, a pH adjuster, a stabilizing aid, and a dispersion stabilizer.

The stabilizing aid is preferably paraffin wax, fluorine-containing oil, a fluorine-containing solvent, silicone oil, or the like. The stabilizing aids may be used alone or in combination of two or more. The stabilizing aid is more preferably paraffin wax. The paraffin wax may be in the form of liquid, semi-solid, or solid at room temperature, and is preferably a saturated hydrocarbon having 12 or more carbon atoms. The paraffin wax usually preferably has a melting point of 40 to 65°C, and more preferably 50 to 65°C.

The amount of the stabilizing aid used is preferably 0.1 to 12% by mass, and more preferably 0.1 to 8% by mass, based on the mass of the aqueous medium used. It is desirable that the stabilizing aid is sufficiently hydrophobic so that the stabilizing aid is completely separated from the fluoropolymer aqueous dispersion, such as PTFE aqueous emulsion, after emulsion polymerization of a fluoromonomer, such as TFE, and does not serve as a contaminating component.

The polymerization is performed by charging a polymerization reactor with an aqueous medium, the hydrocarbon surfactant, monomers, and optionally other additives, stirring the contents of the reactor, maintaining the reactor at a predetermined polymerization temperature, and adding a predetermined amount of a polymerization initiator to thereby initiate the polymerization reaction. After the initiation of the polymerization reaction, the components such as the monomers, the polymerization initiator, a chain transfer agent, and the hydrocarbon surfactant may additionally be added depending on the purpose. The hydrocarbon surfactant may be added after the polymerization reaction is initiated.

The polymerization is usually performed at a polymerization temperature of 5 to 120°C and a polymerization pressure of 0.05 to 10 MPaG. The polymerization temperature and the polymerization pressure are determined as appropriate in accordance with the types of the monomers used, the molecular weight of the target fluoropolymer, and the reaction rate.

For example, the polymerization temperature is more preferably 30°C or higher, and still more preferably 50°C or higher. Further, the polymerization temperature is more preferably 120°C or lower, and still more preferably 100°C or lower.

Further, the polymerization pressure is more preferably 0.3 MPaG or higher, still more preferably 0.5 MPaG or higher, and more preferably 5.0 MPaG or lower, still more preferably 3.0 MPaG or lower. In particular, from the viewpoint of improving the yield of fluoropolymer, the polymerization pressure is preferably 1.0 MPaG or more, more preferably 1.2 MPaG or more, still more preferably 1.5 MPaG or more, and particularly preferably 2.0 MPaG or more.

The total amount of the hydrocarbon surfactant added is preferably 0.0001 to 10% by mass based on 100% by mass of the aqueous medium. The lower limit thereof is more preferably 0.001% by mass, while the upper limit thereof is more preferably 1% by mass. Less than 0.0001% by mass of the surfactant may cause insufficient dispersibility. More than 10% by mass of the surfactant may fail to give the effects corresponding to its amount; on the contrary, such an amount of the surfactant may cause a reduction in the polymerization rate or even stop the reaction. The amount of the compound added is appropriately determined in accordance with factors such as the types of the monomers used and the molecular weight of the target fluoropolymer.

In the polymerization, the fluoromonomer is preferably polymerized substantially in the absence of a fluorine-containing surfactant.

The expression "substantially in the absence of a fluorine-containing surfactant" as used herein means that the amount of the fluorine-containing surfactant in the aqueous medium is 10 ppm or less, preferably 1 ppm or less,

more preferably 100 ppb or less, still more preferably 10 ppb or less, and further preferably 1 ppb or less.

Examples of the fluorine-containing surfactant include anionic fluorine-containing surfactants.

The anionic fluorine-containing surfactant may be, for example, a fluorine atom-containing surfactant having 20 or less carbon atoms in total in the portion excluding the anionic group.

The fluorine-containing surfactant may also be a surfactant containing fluorine having a molecular weight of 800 or less in the anionic moiety.

The "anionic moiety" means the portion of the fluorine-containing surfactant excluding the cation. For example, in the case of $F(CF_2)_{n1}COOM$ represented by the formula (I) described later, the anionic moiety is the "$F(CF_2)_{n1}COO$" portion.

Examples of the fluorine-containing surfactant also include fluorine-containing surfactants having a Log POW of 3.5 or less. The Log POW is a partition coefficient between 1-octanol and water, which is represented by Log P (wherein P represents the ratio between the concentration of the fluorine-containing surfactant in octanol and the concentration of the fluorine-containing surfactant in water in a phase-separated octanol/water (1:1) liquid mixture containing the fluorine-containing surfactant).

Log POW is determined as follows. Specifically, HPLC is performed on standard substances (heptanoic acid, octanoic acid, nonanoic acid, and decanoic acid) each having a known octanol/water partition coefficient using TOSOH ODS-120T column ($\phi$4.6 mm $\times$ 250 mm, Tosoh Corp.) as a column and acetonitrile/0.6% by mass $HClO_4$ aqueous solution =1/1 (vol/vol %) as an eluent at a flow rate of 1.0 ml/min, a sample amount of 300 $\mu$L, and a column temperature of 40°C; with a detection light of UV 210 nm. For each standard substance, a calibration curve is drawn with respect to the elution time and the known octanol/water partition coefficient. Based on the calibration curve, Log POW is calculated from the elution time of the sample liquid in HPLC.

Specific examples of the fluorine-containing surfactant include those disclosed in U.S. Patent Application Publication No. 2007/0015864, U.S. Patent Application Publication No. 2007/0015865, U.S. Patent Application Publication No. 2007/0015866, and U.S. Patent Application Publication No. 2007/0276103, U.S. Patent Application Publication No. 2007/0117914, U.S. Patent Application Publication No. 2007/142541, U.S. Patent Application Publication No. 2008/0015319, U.S. Patent No. 3,250,808, U.S. Patent No. 3,271,341, Japanese Patent Laid-Open No. 2003-119204, International Publication No. WO2005/042593, International Publication No. WO2008/060461, International Publication No. WO2007/046377, International Publication No. WO2007/119526, International Publication No. WO2007/046482, International Publication No. WO2007/046345, U.S. Patent Application Publication No. 2014/0228531, International Publication No. WO2013/189824, and International Publication No. WO2013/189826.

Examples of the anionic fluorine-containing surfactant include a compound represented by the following general formula ($N^0$):

$$X^{n0}\text{-}Rf^{n0}\text{-}Y^0 \quad (N^0)$$

wherein $X^{n0}$ is H, Cl, or F; $Rf^{n0}$ is a linear, branched, or cyclic alkylene group having 3 to 20 carbon atoms in which some or all of H are replaced by F; the alkylene group optionally containing one or more ether bonds in which some of H are replaced by Cl; and $Y^0$ is an anionic group.

The anionic group $Y^0$ may be -COOM, $-SO_2M$, or $-SO_3M$, and may be -COOM or $-SO_3M$.

M is H, a metal atom, $NR^7_4$, imidazolium optionally having a substituent, pyridinium optionally having a substituent, or phosphonium optionally having a substituent, wherein $R^7$ is H or an organic group.

Examples of the metal atom include alkali metals (Group 1) and alkaline earth metals (Group 2), such as Na, K, or Li.

$R^7$ may be H or a $C_{1-10}$ organic group, may be H or a $C_{1-4}$ organic group, and may be H or a $C_{1-4}$ alkyl group.

M may be H, a metal atom, or $NR^7_4$, may be H, an alkali metal (Group 1), an alkaline earth metal (Group 2), or $NR^7_4$, and may be H, Na, K, Li, or $NH_4$.

$Rf^{n0}$ may be one in which 50% or more of H has been replaced by fluorine.

Examples of the compound represented by the general formula ($N^0$) include:

a compound represented by the following general formula ($N^1$):

$$X^{n0}\text{-}(CF_2)_{m1}\text{-}Y^0 \quad (N^1)$$

wherein $X^{n0}$ is H, Cl, and F; m1 is an integer of 3 to 15; and $Y^0$ is as defined above;

a compound represented by the following general formula ($N^2$):

$$Rf^{n1}\text{-}O\text{-}(CF(CF_3)CF_2O)_{m2}CFX^{n1}\text{-}Y^0 \quad (N^2)$$

wherein $Rf^{n1}$ is a perfluoroalkyl group having 1 to 5 carbon atoms; m2 is an integer of 0 to 3; $X^{n1}$ is F or $CF_3$; and $Y^0$ is as defined above;
a compound represented by the following general formula ($N^3$):

$$Rf^{n2}(CH_2)_{m3}\text{-}(Rf^{n3})_q\text{-}Y^0 \quad (N^3)$$

wherein $Rf^{n2}$ is a partially or fully fluorinated alkyl group having 1 to 13 carbon atoms and optionally containing an ether bond; m3 is an integer of 1 to 3; $Rf^{n3}$ is a linear or branched perfluoroalkylene group having 1 to 3 carbon atoms; q is 0 or 1; and $Y^0$ is as defined above;
a compound represented by the following general formula ($N^4$):

$$Rf^{n4}\text{-O-}(CY^{n1}Y^{n2})_pCF_2\text{-}Y^0 \quad (N^4)$$

wherein $Rf^{n4}$ is a linear or branched partially or fully fluorinated alkyl group having 1 to 12 carbon atoms and optionally containing an ether bond; and $Y^{n1}$ and $Y^{n2}$ are the same or different and are each H or F; p is 0 or 1; and $Y^0$ is as defined above; and
a compound represented by the general formula ($N^5$):

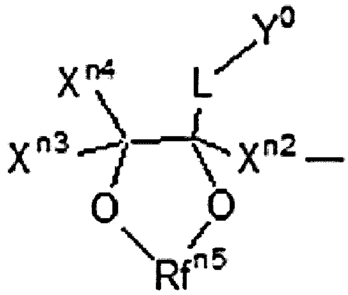

($N^5$)

wherein $X^{n2}$, $X^{n3}$, and $X^{n4}$ may be the same or different and are each H, F, or a linear or branched partially or fully fluorinated alkyl group having 1 to 6 carbon atoms and optionally containing an ether bond; $Rf^{n5}$ is a linear or branched partially or fully fluorinated alkylene group having 1 to 3 carbon atoms and optionally containing an ether bond; L is a linking group; and $Y^0$ is as defined above, with the proviso that the total carbon number of $X^{n2}$, $X^{n3}$, $X^{n4}$, and $Rf^{n5}$ is 18 or less.

More specific examples of the compound represented by the above general formula ($N^0$) include a perfluorocarboxylic acid (I) represented by the following general formula (I), an ω-H perfluorocarboxylic acid (II) represented by the following general formula (II), a perfluoropolyethercarboxylic acid (III) represented by the following general formula (III), a perfluoroalkylalkylenecarboxylic acid (IV) represented by the following general formula (IV), a perfluoroalkoxyfluorocarboxylic acid (V) represented by the following general formula (V), a perfluoroalkylsulfonic acid (VI) represented by the following general formula (VI), an ω-H perfluorosulfonic acid (VII) represented by the following general formula (VII), a perfluoroalkylalkylene sulfonic acid (VIII) represented by the following general formula (VIII), an alkylalkylene carboxylic acid (IX) represented by the following general formula (IX), a fluorocarboxylic acid (X) represented by the following general formula (X), an alkoxyfluorosulfonic acid (XI) represented by the following general formula (XI), a compound (XII) represented by the following general formula (XII), and a compound (XIII) represented by the following general formula (XIII).

The perfluorocarboxylic acid (I) is represented by the following general formula (I):

$$F(CF_2)_{n1}COOM \qquad (I)$$

wherein n1 is an integer of 3 to 14; and M is H, a metal atom, $NR^7_4$, imidazolium optionally having a substituent, pyridinium optionally having a substituent, or phosphonium optionally having a substituent, wherein $R^7$ is H or an organic group.

The ω-H perfluorocarboxylic acid (II) is represented by the following general formula (II):

$$H(CF_2)_{n2}COOM \qquad (II)$$

wherein n2 is an integer of 4 to 15; and M is as defined above.

The perfluoropolyethercarboxylic acid (III) is represented by the following general formula (III):

$$Rf^1\text{-O-}(CF(CF_3)CF_2O)_{n3}CF(CF_3)COOM \qquad (III)$$

wherein $Rf^1$ is a perfluoroalkyl group having 1 to 5 carbon atoms; n3 is an integer of 0 to 3; and M is as defined above.

The perfluoroalkylalkylenecarboxylic acid (IV) is represented by the following general formula (IV):

$$Rf^2(CH_2)_{n4}Rf^3COOM \qquad (IV)$$

wherein $Rf^2$ is a perfluoroalkyl group having 1 to 5 carbon atoms; $Rf^3$ is a linear or branched perfluoroalkylene group having 1 to 3 carbon atoms; n4 is an integer of 1 to 3; and M is as defined above.

The alkoxyfluorocarboxylic acid (V) is represented by the following general formula (V):

$$Rf^4\text{-O-}CY^1Y^2CF_2\text{-COOM} \qquad (V)$$

wherein $Rf^4$ is a linear or branched partially or fully fluorinated alkyl group having 1 to 12 carbon atoms and optionally containing an ether bond; $Y^1$ and $Y^2$ are the same or different and are each H or F; and M is as defined above.

The perfluoroalkylsulfonic acid (VI) is represented by the following general formula (VI):

$$F(CF_2)_{n5}SO_3M \qquad (VI)$$

wherein n5 is an integer of 3 to 14; and M is as defined above.

The ω-H perfluorosulfonic acid (VII) is represented by the following general formula (VII):

$$H(CF_2)_{n6}SO_3M \qquad (VII)$$

wherein n6 is an integer of 4 to 14; and M is as defined above.

The perfluoroalkylalkylenesulfonic acid (VIII) is represented by the following general formula (VIII):

$$Rf^5(CH_2)_{n7}SO_3M \qquad (VIII)$$

wherein $Rf^5$ is a perfluoroalkyl group having 1 to 13 carbon atoms; n7 is an integer of 1 to 3; and M is as defined above.

The alkylalkylenecarboxylic acid (IX) is represented by the following general formula (IX):

$$Rf^6(CH_2)_{n8}COOM \qquad (IX)$$

wherein $Rf^6$ is a linear or branched partially or fully fluorinated alkyl group having 1 to 13 carbon atoms and optionally containing an ether bond; n8 is an integer of 1 to 3; and M is as defined above.

The fluorocarboxylic acid (X) is represented by the following general formula (X):

$$Rf^7\text{-O-}Rf^8\text{-O-}CF_2\text{-COOM} \qquad (X)$$

wherein $Rf^7$ is a linear or branched partially or fully fluorinated alkyl group having 1 to 6 carbon atoms and optionally containing an ether bond; $Rf^8$ is a linear or branched partially or fully fluorinated alkyl group having 1 to 6 carbon atoms; and M is as defined above.

The alkoxyfluorosulfonic acid (XI) is represented by the following general formula (XI):

$$Rf^9\text{-O-}CY^1Y^2CF_2\text{-}SO_3M \qquad (XI)$$

wherein $Rf^9$ is a linear or branched partially or fully fluorinated alkyl group having 1 to 12 carbon atoms and optionally containing an ether bond and optionally containing chlorine; $Y^1$ and $Y^2$ are the same or different and are each H or F; and M is as defined above.

The compound (XII) is represented by the following general formula (XII):

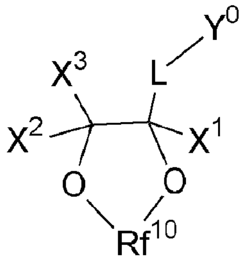

(XII)

wherein $X^1$, $X^2$, and $X^3$ may be the same or different and are H, F, and a linear or branched partially or fully fluorinated alkyl group having 1 to 6 carbon atoms and optionally containing an ether bond; $Rf^{10}$ is a perfluoroalkylene group having 1 to 3 carbon atoms; L is a linking group; and $Y^0$ is an anionic group.

$Y^0$ may be $-COOM$, $-SO_2M$, or $-SO_3M$, and may be $-SO_3M$ or COOM, where M is as defined above.

Examples of L include a single bond, a partially or fully fluorinated alkylene group having 1 to 10 carbon atoms and optionally containing an ether bond.

The compound (XIII) is represented by the following general formula (XIII):

$$Rf^{11}\text{-}O\text{-}(CF_2CF(CF_3)O)_{n9}(CF_2O)_{n10}CF_2COOM \qquad (XIII)$$

wherein $Rf^{11}$ is a fluoroalkyl group having 1 to 5 carbon atoms and containing chlorine; n9 is an integer of 0 to 3; n10 is an integer of 0 to 3; and M is as defined above. An example of the compound (XIII) is $CF_2ClO(CF_2CF(CF_3)O)_{n9}(CF_2O)_{n10}CF_2COONH_4$ (a mixture with an average molecular weight of 750, wherein n9 and n10 are as described above).

As described above, examples of the anionic fluorine-containing surfactant include a carboxylic acid-based surfactant and a sulfonic acid-based surfactant.

The polymerization initiator may be any polymerization initiator capable of generating radicals within the polymerization temperature range, and known oil-soluble and/or water-soluble polymerization initiators may be used. The polymerization initiator may be combined with a reducing agent, for example, to form a redox agent, which initiates the polymerization. The concentration of the polymerization initiator is appropriately determined depending on the types of the monomers, the molecular weight of the target fluoropolymer, and the reaction rate.

The polymerization initiator to be used may be an oil-soluble radical polymerization initiator or a water-soluble radical polymerization initiator.

The oil-soluble radical polymerization initiator may be a known oil-soluble peroxide, and representative examples thereof include dialkyl peroxycarbonates such as diisopropyl peroxydicarbonate and di-sec-butyl peroxydicarbonate; peroxy esters such as t-butyl peroxyisobutyrate and t-butyl peroxypivalate; and dialkyl peroxides such as di-t-butyl peroxide, as well as di[perfluoro (or fluorochloro) acyl] peroxides such as di(ω-hydro-dodecafluorohexanoyl)peroxide, di(ω-hydro-tetradecafluoroheptanoyl)peroxide, di(ω-hydro-hexadecafluorononanoyl)peroxide, di(perfluorobutyryl)peroxide, di(perfluorovaleryl)peroxide, di(perfluorohexanoyl)peroxide, di(perfluoroheptanoyl)peroxide, di(perfluorooctanoyl)peroxide, di(perfluorononanoyl)peroxide, di(ω-chloro-hexafluorobutyryl)peroxide, di(ω-chloro-decafluorohexanoyl)peroxide, di(ω-chloro-tetradecafluorooctanoyl)peroxide, ω-hydro-dodecafluoroheptanoyl-ω-hydrohexadecafluorononanoyl-peroxide, ω-chloro-hexafluorobutyryl-ω-chloro-decafluorohexanoyl-peroxide, ω-hydrododecafluoroheptanoyl-perfluorobutyryl-peroxide, di(dichloropentafluorobutanoyl)peroxide, di(trichlorooctafluorohexanoyl)peroxide, di(tetrachloroundecafluorooctanoyl)peroxide, di(pentachlorotetradecafluorodecanoyl)peroxide, and di(undecachlorodotoriacontafluorodocosanoyl)peroxide.

The water-soluble radical polymerization initiator may be a known water-soluble peroxide, and examples thereof include ammonium salts, potassium salts, and sodium salts of persulfuric acid, perchloric acid, and percarbonic acid, organic peroxides such as disuccinic acid peroxide and diglutaric acid peroxide, t-butyl permaleate, and t-butyl hydroperoxide. A reducing agent may also be contained together, and the use amount thereof may be 0.1 to 20 times that of the peroxide.

For example, in a case where the polymerization is performed at a low temperature of 30°C or lower, the polymerization initiator used is preferably a redox initiator obtained by combining an oxidizing agent and a reducing agent. Examples of the oxidizing agent include persulfates, organic peroxides, potassium permanganate, manganese triacetate, and ammonium cerium nitrate. Examples of the reducing agent include bromates, diimines, and oxalic acid. Examples of the persulfates include ammonium persulfate and potassium persulfate. In order to increase the decomposition rate of the initiator, the combination of the redox initiator may preferably contain a copper salt or an iron salt. An example of the copper salt is copper(II) sulfate and an example of the iron salt is iron(II) sulfate.

Examples of the redox initiator include potassium permanganate/oxalic acid, ammonium persulfate/bisulfite/iron(II) sulfate, ammonium persulfate/sulfite/iron(II) sulfate, ammonium persulfate/sulfite, ammonium persulfate/iron(II) sulfate, manganese triacetate/oxalic acid, cerium ammonium nitrate/oxalic acid, bromate/sulfite, and bromate/bisulfite, and potassium permanganate/oxalic acid and ammonium persulfate/sulfite/iron(II) sulfate are preferred. In the case of using a redox initiator, either an oxidizing agent or a reducing agent may be charged into a polymerization tank in advance, followed by adding the other continuously or intermittently thereto to initiate the polymerization. For example, in the case of using potassium permanganate/oxalic acid, preferably, oxalic acid is charged into a polymerization tank and potassium permanganate is continuously added thereto.

The polymerization initiator may be added in any amount, and the initiator in an amount that does not significantly decrease the polymerization rate (e.g., several ppm in water) or more may be added all at once in the initial stage of polymerization, or may be added sequentially or continuously. The upper limit thereof falls within a range where the reaction temperature is allowed to increase while the polymerization reaction heat is removed through the device surfaces. The upper limit thereof is more preferably within a range where the polymerization reaction heat can be removed through the device surfaces.

The aqueous medium is a reaction medium in which the polymerization is performed, and means a liquid containing water. The aqueous medium may be any medium containing water, and it may be one containing water and, for example, any of fluorine-free organic solvents such as alcohols, ethers, and ketones, and/or fluorine-containing organic solvents having a boiling point of 40°C or lower.

In the polymerization, a known chain transfer agent, radical scavenger, and decomposer may be further added to adjust the polymerization rate and the molecular weight depending on the purpose.

Examples of the chain transfer agent include esters such as dimethyl malonate, diethyl malonate, methyl acetate, ethyl acetate, butyl acetate, and dimethyl succinate, as well as isopentane, methane, ethane, propane, methanol, isopropanol, acetone, various mercaptans, various halogenated hydrocarbons such as carbon tetrachloride, and cyclohexane.

The chain transfer agent to be used may be a bromine compound or an iodine compound. An example of a polymerization method using a bromine compound or an iodine compound is a method of performing polymerization of a fluoromonomer in an aqueous medium substantially in the absence of oxygen and in the presence of a bromine compound or an iodine compound (iodine transfer polymerization). Representative examples of the bromine compound or the iodine compound to be used include compounds represented by the general formula:

$$R^aI_xBr_y$$

wherein x and y are each an integer of 0 to 2 and satisfy $1 \leq x + y \leq 2$; and $R^a$ is a saturated or unsaturated fluorohydrocarbon or chlorofluorohydrocarbon group having 1 to 16 carbon atoms, or a hydrocarbon group having 1 to 3 carbon atoms, each of which optionally contains an oxygen atom. By using a bromine compound or an iodine compound, iodine or bromine is introduced into the polymer, and serves as a crosslinking point.

Examples of the bromine compound or iodine compound include 1,3-diiodoperfluoropropane, 2-iodoperfluoropropane, 1,3-diiodo-2-chloroperfluoropropane, 1,4-diiodoperfluorobutane, 1,5-diiodo-2,4-dichloroperfluoropentane, 1,6-diiodoperfluorohexane, 1,8-diiodoperfluorooctane, 1,12-diiodoperfluorododecane, 1,16-diiodoperfluorohexadecane, diiodomethane, 1,2-diiodoethane, 1, 3-diiodo-n-propane, $CF_2Br_2$, $BrCF_2CF_2Br$, $CF_3CFBrCF_2Br$, $CFClBr_2$, $BrCF_2CFClBr$, CFBrClCFClBr, $BrCF_2CF_2CF_2Br$, $BrCF_2CFBrOCF_3$, 1-bromo-2-iodoperfluoroethane, 1-bromo-3-iodoperfluoropropane, 1-bromo-4-iodoperfluorobutane, 2-bromo-3-iodoperfluorobutane, 3-bromo-4-iodoperfluorobutene-1,2-bromo-4-iodoperfluorobutene-1, and a monoiodo- and monobromo-substitution product, diiodo- and monobromo-substitution product, and (2-iodoethyl)- and (2-bromoethyl)-substitution product of benzene. These compounds may be used alone or in any combination.

Of these, 1,4-diiodoperfluorobutane, 1,6-diiodoperfluorohexane, and 2-iodoperfluoropropane are preferably used from the viewpoints of polymerization reactivity, crosslinkability, availability, and the like.

The amount of the chain transfer agent used is usually 1 to 50,000 ppm, preferably 1 to 20,000 ppm, based on the total amount of the fluoromonomer fed.

The chain transfer agent may be added to the reaction vessel at once before initiation of the polymerization, may be added at once after initiation of the polymerization, may be added in multiple portions during the polymerization, or may be added continuously during the polymerization.

As the radical scavenger, used is a compound that does not have the ability to re-start after addition or chain transfer to free groups in the polymerization system. Specifically, used is a compound with the ability to easily undergo a chain transfer reaction with primary radicals or propagating radicals to subsequently produce stable radicals that do not react with the monomer, or a compound with the ability to easily undergo an addition reaction with primary radicals or propagating radicals to produce stable radicals.

In general, those called chain transfer agents are characterized by their activity in terms of chain transfer constant and re-start efficiency, and among chain transfer agents, those with almost 0% re-start efficiency are called

radical scavengers.

The radical scavenger can also be described as, for example, a compound whose chain transfer constant to the fluoromonomer at the polymerization temperature is greater than the polymerization rate constant and whose re-start efficiency is substantially 0%. The expression "re-start efficiency is substantially 0%" means that the generated radicals make the radical scavenger a stable radical.

Preferably, the radical scavenger is a compound in which the chain transfer constant (Cs) (= chain transfer rate constant (kc)/polymerization rate constant (kp)) to the fluoromonomer at the polymerization temperature is greater than 0.1. The compound more preferably has a chain transfer constant (Cs) of 0.5 or more, still more preferably 1.0 or more, further preferably 5.0 or more, and particularly preferably 10 or more.

The radical scavenger in the present disclosure is preferably at least one selected from the group consisting of, for example, aromatic hydroxy compounds, aromatic amines, N,N-diethylhydroxylamine, quinone compounds, terpenes, thiocyanic acid salts, and cupric chloride ($CuCl_2$).

Examples of the aromatic hydroxy compound include non-substituted phenols, polyvalent phenols, salicylic acid, m- or p-salicylic acid, gallic acid, and naphthols.

Examples of the non-substituted phenols include o-, m-, or p-nitrophenol, o-, m-, or p-aminophenol, and p-nitrosophenol. Examples of the polyvalent phenols include catechol, resorcinol, hydroquinone, pyrogallol, phloroglucine, and naphthoresorcinol.

Examples of the aromatic amines include o-, m-, or p-phenylenediamine and benzidine.

Examples of the quinone compounds include o-, m-, or p-benzoquinone, 1,4-naphthoquinone, and alizarin.

Examples of the thiocyanic acid salts include ammonium thiocyanate ($NH_4SCN$), potassium thiocyanate (KSCN), and sodium thiocyanate (NaSCN).

As the radical scavenger, aromatic hydroxy compounds are preferred among others, non-substituted phenols or polyvalent phenols are more preferred, and hydroquinone is still more preferred.

From the viewpoint of reducing the standard specific gravity, the amount of the radical scavenger added is preferably an amount equivalent to 3 to 500% (molar basis) of the polymerization initiator concentration. The lower limit is more preferably 5% (molar basis), still more preferably 8% (molar basis), still more preferably 10% (molar basis), further preferably 13% (molar basis) or 15% (molar basis), still further preferably 20% (molar basis), particularly preferably 25% (molar basis), particularly preferably 30% (molar basis), and particularly preferably 35% (molar basis). The upper limit is more preferably 400% (molar basis), still more preferably 300% (molar basis), further preferably 200% (molar basis), and particularly preferably 100% (molar basis).

The decomposer of the polymerization initiator may be any compound that can decompose the polymerization initiator used. For example, at least one selected from the group consisting of sulfites, bisulfites, bromates, diimines, diimine salts, oxalic acid, oxalates, copper salts, and iron salts is preferred. Examples of the sulfites include sodium sulfite and ammonium sulfite. An example of the copper salt is copper(II) sulfate and an example of the iron salt is iron(II) sulfate.

The decomposer of the polymerization initiator is added in an amount in the range of 3 to 300% by mass based on the amount of oxidizing agent combined as the polymerization initiator (redox initiator). The amount is preferably 3 to 150% by mass, and still more preferably 15 to 100% by mass.

From the viewpoint of reducing the standard specific gravity, the decomposer of the polymerization initiator is preferably added in an amount equivalent to 3 to 500% (molar basis) of the polymerization initiator concentration. The lower limit is more preferably 5% (molar basis), still more preferably 8% (molar basis), still more preferably 10% (molar basis), still more preferably 13% (molar basis), and further preferably 15% (molar basis). The upper limit is more preferably 400% (molar basis), still more preferably 300% (molar basis), further preferably 200% (molar basis), and particularly preferably 100% (molar basis).

During polymerization of the fluoromonomer, the radical scavenger or decomposer of the polymerization initiator is preferably added when the concentration of the fluoropolymer formed in the aqueous medium (concentration based on the total of aqueous medium and fluoropolymer) is 5% by mass or more. It is more preferably added when the concentration of the fluoropolymer is 8% by mass or more, and still more preferably added when the concentration is 10% by mass or more.

The radical scavenger or decomposer of the polymerization initiator is also preferably added when the concentration of the fluoropolymer formed in the aqueous medium is 40% by mass or less. It is more preferably added when the concentration of the fluoropolymer is 35% by mass or less, and still more preferably added when the concentration is 30% by mass or less.

During polymerization of the fluoromonomer, the radical scavenger or decomposer of the polymerization initiator may be added continuously. During polymerization of the fluoromonomer, the radical scavenger or decomposer of the polymerization initiator can be added not at once, but over time, and without interruption or in divided portions.

The production method of the present disclosure may comprise: (I) polymerizing the fluoromonomer in an aqueous medium in the presence of the hydrocarbon surfactant to provide an aqueous dispersion of particles of a

fluorine-containing polymer (A); and (II) polymerizing (seed-polymerizing) the fluoromonomer to the particles of the fluorine-containing polymer (A) in the aqueous dispersion of the particles of the fluorine-containing polymer (A).

Examples of the fluoropolymer include a TFE polymer in which TFE is the monomer having the highest mole fraction (hereinafter, "most abundant monomer") among the monomers in the polymer, a VDF polymer in which VDF is the most abundant monomer, and a CTFE polymer in which CTFE is the most abundant monomer.

Examples of the fluoropolymer also include: (I) non melt-processible fluororesins, including tetrafluoroethylene polymers (TFE polymers (PTFE)); (II) melt-fabricable fluororesins, including ethylene/TFE copolymers (ETFE), TFE/HFP copolymers (FEP), TFE/perfluoro(alkyl vinyl ether) copolymers (e.g., PFA, MFA), TFE/perfluoroallyl ether copolymers, TFE/VDF copolymers, and electrolyte polymer precursors; and (III) fluoroelastomers, including TFE/propylene copolymers, TFE/propylene/third monomer copolymers (the third monomer may be VDF, HFP, CTFE, fluoroalkyl vinyl ether, or the like), TFE/fluoroalkyl vinyl ether copolymers; HFP/ethylene copolymers, HFP/ethylene/TFE copolymers; PVDF; thermoplastic elastomers such as VDF/HFP copolymers, HFP/ethylene copolymers, and VDF/TFE/HFP copolymers; and fluorine-containing segmented polymers disclosed in Japanese Patent Publication No. 61-49327.

The TFE polymer may suitably be a TFE homopolymer, or may be a copolymer containing (1) TFE, (2) one or two or more fluorine-containing monomers each of which is different from TFE and has 2 to 8 carbon atoms, in particular VDF, HFP, or CTFE, and (3) another monomer. Examples of (3) the another monomer include fluoro(alkyl vinyl ethers) having an alkyl group having 1 to 5 carbon atoms, particularly 1 to 3 carbon atoms; fluorodioxoles; perfluoroalkyl ethylenes; and $\omega$-hydroperfluoroolefins.

The TFE polymer may also be a copolymer of TFE and one or two or more fluorine-free monomers. Examples of the fluorine-free monomers include alkenes such as ethylene and propylene; vinyl esters; and vinyl ethers. The TFE polymer may also be a copolymer of TFE, one or two or more fluorine-containing monomers having 2 to 8 carbon atoms, and one or two or more fluorine-free monomers.

The VDF polymer may suitably be a VDF homopolymer (PVDF), or may be a copolymer containing (1) VDF, (2) one or two or more fluoroolefins each of which is different from VDF and has 2 to 8 carbon atoms, in particular TFE, HFP, or CTFE, and (3) a perfluoro(alkyl vinyl ether) having an alkyl group having 1 to 5 carbon atoms, particularly 1 to 3 carbon atoms, or the like.

The CTFE polymer may suitably be a CTFE homopolymer, or may be a copolymer containing (1) CTFE, (2) one or two or more fluoroolefins each of which is different from CTFE and has 2 to 8 carbon atoms, in particular TFE or HFP, and (3) a perfluoro(alkyl vinyl ether) having an alkyl group having 1 to 5 carbon atoms, particularly 1 to 3 carbon atoms.

The CTFE polymer may also be a copolymer of CTFE and one or two or more fluorine-free monomers, and examples of the fluorine-free monomers include alkenes such as ethylene and propylene; vinyl esters; and vinyl ethers.

The fluoropolymer may be vitreous, plastic, or elastomeric. The fluoropolymer is amorphous or partially crystallized, and may be subjected to compression firing, melt fabrication, or non-melt fabrication.

The polymerization can suitably provide, for example, (I) non melt-processible fluororesins, including tetrafluoroethylene polymers (TFE polymers (PTFE)); (II) melt-fabricable fluororesins, including ethylene/TFE copolymers (ETFE), TFE/HFP copolymers (FEP), TFE/perfluoro(alkyl vinyl ether) copolymers (e.g., PFA, MFA), TFE/perfluoroallyl ether copolymers, TFE/VDF copolymers, and electrolyte polymer precursors; and (III) fluoroelastomers, including TFE/propylene copolymers, TFE/propylene/third monomer copolymers (the third monomer may be VDF, HFP, CTFE, fluoroalkyl vinyl ether, or the like), TFE/fluoroalkyl vinyl ether copolymers; HFP/ethylene copolymers, HFP/ethylene/TFE copolymers; PVDF; thermoplastic elastomers such as VDF/HFP copolymers, HFP/ethylene copolymers, and VDF/TFE/HFP copolymers; and fluorine-containing segmented polymers disclosed in Japanese Patent Publication No. 61-49327.

The fluoropolymer is preferably a fluororesin, more preferably a fluororesin having a fluorine substitution percentage, calculated by the following formula, of 50% or higher, still more preferably a fluororesin having the fluorine substitution percentage of higher than 50%, further preferably a fluororesin having the fluorine substitution percentage of 55% or higher, further preferably a fluororesin having the fluorine substitution percentage of 60% or higher, further preferably a fluororesin having the fluorine substitution percentage of 75% or higher, particularly preferably a fluororesin having the fluorine substitution percentage of 80% or higher, and most preferably a fluororesin having the fluorine substitution percentage of 90 to 100%, i.e., a perfluororesin.

(Formula)

Fluorine substitution percentage (%) = (number of fluorine atoms bonded to carbon atoms constituting fluoropolymer) / ((number of hydrogen atoms bonded to carbon atoms constituting fluoropolymer) + (number of fluorine atoms and chlorine atoms bonded to carbon atoms constituting fluoropolymer)) $\times$ 100

The perfluororesin is more preferably a fluororesin having a fluorine substitution percentage of 95 to 100%, still more preferably PTFE, FEP, or PFA, particularly preferably PTFE, and most preferably high-molecular-weight PTFE.

The fluoropolymer may have a core-shell structure. An example of the fluoropolymer having a core-shell structure

is a PTFE including a core of high-molecular-weight PTFE and a shell of a lower-molecular-weight PTFE or a modified PTFE in the particle. An example of such a PTFE is PTFE disclosed in National Publication of International Patent Application No. 2005-527652.

The core-shell structure may have the following structures.

| | | | |
|---|---|---|---|
| Core: | TFE homopolymer | Shell: | TFE homopolymer |
| Core: | modified PTFE | Shell: | TFE homopolymer |
| Core: | modified PTFE | Shell: | modified PTFE |
| Core: | TFE homopolymer | Shell: | modified PTFE |
| Core: | low-molecular-weight PTFE | Shell: | high-molecular-weight PTFE |
| Core: | high-molecular-weight PTFE | Shell: | low-molecular-weight PTFE |

In the fluoropolymer having a core-shell structure, the lower limit of the proportion of the core is preferably 0.5% by mass, more preferably 1.0% by mass, still more preferably 3.0% by mass, particularly preferably 5.0% by mass, and most preferably 10.0% by mass. The upper limit of the proportion of the core is preferably 99.5% by mass, more preferably 99.0% by mass, still more preferably 98.0% by mass, further preferably 97.0% by mass, particularly preferably 95.0% by mass, and most preferably 90.0% by mass.

In the fluoropolymer having a core-shell structure, the lower limit of the proportion of the shell is preferably 0.5% by mass, more preferably 1.0% by mass, still more preferably 3.0% by mass, particularly preferably 5.0% by mass, and most preferably 10.0% by mass. The upper limit of the proportion of the shell is preferably 99.5% by mass, more preferably 99.0% by mass, still more preferably 98.0% by mass, further preferably 97.0% by mass, particularly preferably 95.0% by mass, and most preferably 90.0% by mass.

In the fluoropolymer having a core-shell structure, the core or the shell may be composed of two or more layers. For example, the fluoropolymer may have a trilayer structure including a core center portion of a modified PTFE, a core outer layer portion of a TFE homopolymer, and a shell of a modified PTFE.

Examples of the fluoropolymer having a core-shell structure also include those in which a single particle of the fluoropolymer has a plurality of cores.

(I) The non melt-processible fluororesins, (II) the melt-fabricable fluororesins, and (III) the fluoroelastomers are preferably produced in the following manner.

(I) Non melt-processible fluororesins

In the production method of the present disclosure, polymerization of TFE is usually performed at a polymerization temperature of 10 to 150°C and a polymerization pressure of 0.05 to 5 MPaG. For example, the polymerization temperature is more preferably 30°C or higher, and still more preferably 50°C or higher. Further, the polymerization temperature is more preferably 120°C or lower, and still more preferably 100°C or lower. Further, the polymerization pressure is more preferably 0.3 MPaG or higher, still more preferably 0.5 MPaG or higher, and more preferably 5.0 MPaG or lower, still more preferably 3.0 MPaG or lower. In particular, from the viewpoint of improving the yield of fluoropolymer, the polymerization pressure is preferably 1.0 MPaG or more, more preferably 1.2 MPaG or more, still more preferably 1.5 MPaG or more, and more preferably 2.0 MPaG or more.

In an embodiment, the polymerization reaction is initiated by charging pure water into a pressure-resistant reaction vessel equipped with a stirrer, deoxidizing the system, charging TFE, increasing the temperature to a predetermined level, and adding a polymerization initiator. When the pressure decreases as the reaction progresses, additional TFE is fed continuously or intermittently to maintain the initial pressure. When the amount of TFE fed reaches a predetermined level, feeding is stopped, and then TFE in the reaction vessel is purged and the temperature is returned to room temperature, whereby the reaction is completed. Additional TFE may be added continuously or intermittently to prevent pressure drop.

In production of the TFE polymer (PTFE), various known modifying monomers may be used in combination. The TFE polymer as used herein is a concept that encompasses not only a TFE homopolymer but also a non melt-processible copolymer of TFE and a modifying monomer (hereinafter, referred to as a "modified PTFE").

Examples of the modifying monomer include perhaloolefins such as HFP and CTFE; fluoro(alkyl vinyl ethers) having an alkyl group having 1 to 5 carbon atoms, particularly 1 to 3 carbon atoms; cyclic fluorinated monomers such as fluorodioxole; perhaloalkyl ethylenes; and ω-hydroperhaloolefins. The modifying monomer may be added all at once in the initial stage, or may be added continuously or intermittently in portions depending on the purpose and the manner of TFE feeding.

When the TFE polymer is polytetrafluoroethylene (PTFE), in addition to TFE, various conventionally known modifying monomers may be used in combination. PTFE as used herein is a concept that encompasses not only a TFE

homopolymer but also a non melt-processible copolymer of TFE and a modifying monomer (hereinafter, referred to as a "modified PTFE").

The total amount of the modifying monomer unit is preferably in the range of 0.00001 to 1.0% by mass based on all polymerized units in PTFE. The lower limit of the total amount thereof is more preferably 0.0001% by mass, still more preferably 0.001% by mass, and further preferably 0.005% by mass. The upper limit is, in the preferred order, 0.90% by mass, 0.50% by mass, 0.40% by mass, 0.30% by mass, 0.20% by mass, 0.15% by mass, 0.10% by mass, or 0.05% by mass.

The modifying monomer unit as used herein means a portion of the molecular structure of the TFE polymer as a part derived from the modifying monomer.

Examples of the modifying monomer include perhaloolefins such as HFP, CTFE, and perfluorovinyl ethers; fluoro(alkyl vinyl ethers) having an alkyl group having 1 to 5 carbon atoms, particularly 1 to 3 carbon atoms; cyclic fluorinated monomers such as fluorodioxole; perhaloalkyl ethylenes such as (perfluoroalkyl)ethylenes; and ω-hydroperhaloolefins. The modifying monomer may be added all at once in the initial stage, or may be added continuously or intermittently in portions depending on the purpose and the manner of TFE feeding.

The modifying monomer may be any modifying monomer copolymerizable with TFE, and examples thereof include a fluoromonomer and a non-fluoromonomer. Further, one or more kinds of the modifying monomers may be used.

An example of the non-fluoromonomer is, but not limited to, a monomer represented by the general formula:

$$CH_2=CR^{Q1}-LR^{Q2}$$

wherein $R^{Q1}$ represents a hydrogen atom or an alkyl group; L is a single bond, -CO-O-*, -O-CO-*, or -O-; * represents a bond position with $R^{Q2}$; and $R^{Q2}$ represents a hydrogen atom, an alkyl group, or a nitrile group.

Examples of the non-fluoromonomer include methyl acrylate, methyl methacrylate, ethyl acrylate, ethyl methacrylate, propyl acrylate, propyl methacrylate, butyl acrylate, butyl methacrylate, hexyl methacrylate, cyclohexyl methacrylate, vinyl methacrylate, vinyl acetate, acrylic acid, methacrylic acid, acrylonitrile, methacrylonitrile, ethyl vinyl ether, and cyclohexyl vinyl ether. Of these, the non-fluoromonomer is preferably butyl methacrylate, vinyl acetate, or acrylic acid.

Examples of the fluoromonomer include perfluoroolefins such as hexafluoropropylene (HFP); hydrogen-containing fluoroolefins such as trifluoroethylene and vinylidene fluoride (VDF); perhaloolefins such as chlorotrifluoroethylene; perfluorovinyl ethers; (perfluoroalkyl)ethylenes; and perfluoroallyl ethers.

Examples of the perfluorovinyl ether include, but are not limited to, a perfluoro unsaturated compound represented by the following general formula (3A):

$$CF_2=CF-ORf \qquad (3A)$$

wherein Rf represents a perfluoroorganic group. The "perfluoroorganic group" as used herein means an organic group in which all hydrogen atoms bonded to the carbon atoms are replaced by fluorine atoms. The perfluoroorganic group optionally has ether oxygen.

Examples of the perfluorovinyl ether include perfluoro(alkyl vinyl ether) (PAVE) in which Rf is a perfluoroalkyl group having 1 to 10 carbon atoms in the general formula (3A). The perfluoroalkyl group preferably has 1 to 5 carbon atoms.

Examples of the perfluoroalkyl group in PAVE include a perfluoromethyl group, a perfluoroethyl group, a perfluoropropyl group, a perfluorobutyl group, a perfluoropentyl group, and a perfluorohexyl group.

Examples of the perfluorovinyl ether also include those represented by the general formula (3A) in which Rf is a perfluoro(alkoxyalkyl) group having 4 to 9 carbon atoms; those in which Rf is a group represented by the following formula:

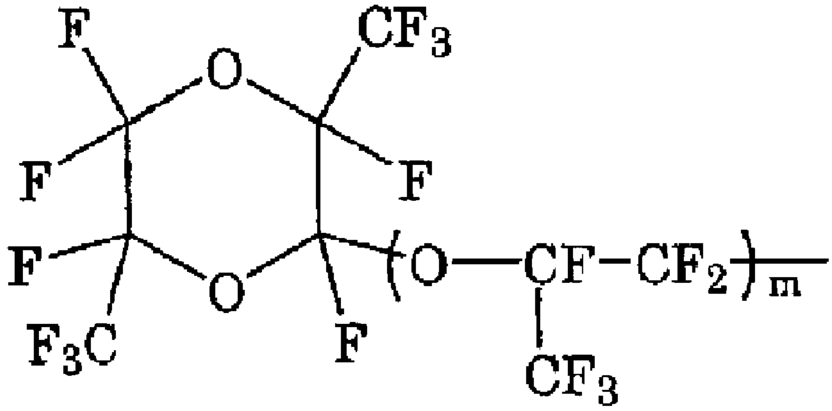

wherein m represents 0 or an integer of 1 to 4; and those in which Rf is a group represented by the following formula:

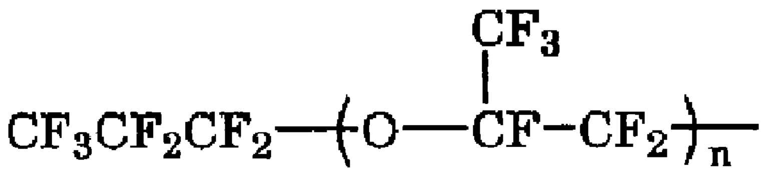

wherein n represents an integer of 1 to 4.

Examples of the hydrogen-containing fluoroolefin include $CH_2$=$CF_2$, CFH=$CH_2$, CFH=$CF_2$, $CF_2$=$CFCF_3$, $CH_2$=$CFCF_3$, $CH_2$=$CHCF_3$, CHF=$CHCF_3$ (E isomer), and CHF=$CHCF_3$ (Z isomer).

Examples of the (perfluoroalkyl)ethylene (PFAE) include, but are not limited to, (perfluorobutyl)ethylene (PFBE) and (perfluorohexyl)ethylene.

An example of the perfluoroallyl ether is a fluoromonomer represented by the general formula:

$CF_2$=CF-$CF_2$-ORf

wherein Rf represents a perfluoroorganic group.

Rf in the above general formula is the same as Rf in the general formula (A). Rf is preferably a perfluoroalkyl group having 1 to 10 carbon atoms or a perfluoroalkoxyalkyl group having 1 to 10 carbon atoms. The perfluoroallyl ether is preferably at least one selected from the group consisting of $CF_2$=CF-$CF_2$-O-$CF_3$, $CF_2$=CF-$CF_2$-O-$C_2F_5$, $CF_2$=CF-$CF_2$-O-$C_3F_7$, and $CF_2$=CF-$CF_2$-O-$C_4F_9$, more preferably at least one selected from the group consisting of $CF_2$=CF-$CF_2$-O-$C_2F_5$, $CF_2$=CF-$CF_2$-O-$C_3F_7$, and $CF_2$=CF-$CF_2$-O-$C_4F_9$, and still more preferably $CF_2$=CF-$CF_2$-O-$CF_2CF_2CF_3$.

In the case of using TFE as a fluoromonomer to produce PTFE as a fluoropolymer, a (polyfluoroalkyl)ethylene and/or a comonomer (3) having a monomer reactivity ratio rTFE in copolymerization with TFE of 0.1 to 8 may be mixed in the polymerization system in an amount of 0.001 to 0.01% by mass relative to the final PTFE yield at the initiation of polymerization of TFE, so that a PTFE aqueous dispersion can be produced which has high stability enough to maintain properties such as processability and moldability in the following steps and which is capable of providing a molded article having high heat resistance.

Here, the monomer reactivity ratio in copolymerization with TFE is a value obtained by dividing the rate constant in the case that propagating radicals react with TFE by the rate constant in the case that the propagating radicals react with comonomers, in the case that the propagating radicals are terminals of the repeating unit derived from TFE. A smaller monomer reactivity ratio indicates higher reactivity of the comonomers with TFE. The reactivity ratio can be determined by copolymerizing the comonomer with TFE varying the charging compositional features, determining the compositional features in the polymer formed immediately after initiation, and calculating the reactivity ratio by Fineman-Ross equation based on the compositional features.

The copolymerization is performed using 3,600 g of deionized degassed water, 1,000 ppm of ammonium perfluorooctanoate based on the water, and 100 g of paraffin wax contained in an autoclave made of stainless steel with an internal volume of 6.0 L at a pressure of 0.78 MPaG and a temperature of 70°C. A comonomer in an amount of 0.05 g, 0.1 g, 0.2 g, 0.5 g, or 1.0 g is added into the reactor, and then 0.072 g of ammonium persulfate (20 ppm based on the water) is added thereto. To maintain the polymerization pressure at 0.78 MPaG, TFE is continuously fed thereinto.

When the charged amount of TFE reaches 1,000 g, stirring is stopped and the pressure is released until the pressure in the reactor decreases to the atmospheric pressure. After cooling, the paraffin wax is separated to obtain an aqueous dispersion containing the resulting polymer. The aqueous dispersion is stirred so that the resulting polymer coagulates, and the polymer is dried at 150°C. The compositional features in the resulting polymer are calculated by appropriate combination of NMR, FT-IR, elemental analysis, and X-ray fluorescence analysis depending on the types of the monomers.

The modifying monomer is also preferably exemplified by a comonomer (3) having a monomer reactivity ratio of 0.1 to 8. The presence of the comonomer (3) makes it possible to obtain PTFE particles having a small particle size, and to thereby obtain an aqueous dispersion having high dispersion stability.

The comonomer (3) having a monomer reactivity ratio of 0.1 to 8 is preferably at least one selected from the group consisting of comonomers represented by the formulas (3a) to (3d):

$CH_2=CH-Rf^1$ (3a)

wherein $Rf^1$ is a perfluoroalkyl group having 1 to 10 carbon atoms;

$CF_2=CF-O-Rf^2$ (3b)

wherein $Rf^2$ is a perfluoroalkyl group having 1 to 2 carbon atoms;

$CF_2=CF-O-(CF_2)_nCF=CF_2$ (3c)

wherein n is 1 or 2; and

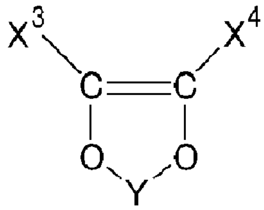
(3d)

wherein $X^3$ and $X^4$ are each F, Cl, or a methoxy group; and Y is represented by the formula Y1 or Y2;

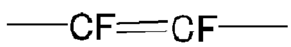
(Y1)

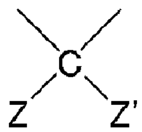
(Y2)

in the formula Y2, Z and Z' are each F or a fluorinated alkyl group having 1 to 3 carbon atoms.

The content of the comonomer (3) unit is preferably in the range of 0.0001 to 1.0% by mass based on all polymerized units in PTFE. The lower limit thereof is more preferably 0.0001% by mass, still more preferably 0.0005% by mass, further preferably 0.001% by mass, and particularly preferably 0.005% by mass. The upper limit is, in the preferred order, 0.90% by mass, 0.50% by mass, 0.40% by mass, 0.30% by mass, 0.20% by mass, 0.15% by mass, 0.10% by mass, 0.08% by mass, 0.05% by mass, or 0.01% by mass.

The modifying monomer is preferably at least one selected from the group consisting of hexafluoropropylene, chlorotrifluoroethylene, vinylidene fluoride, perfluoro(alkyl vinyl ethers), (perfluoroalkyl)ethylenes, ethylene, and modifying monomers having a functional group capable of reacting by radical polymerization and a hydrophilic group, in view of obtaining an aqueous dispersion with a small average primary particle size, a small aspect ratio of primary particles, and excellent stability. The use of the modifying monomer allows for obtaining an aqueous dispersion of PTFE with a smaller average primary particle size, a small aspect ratio of primary particles, and excellent dispersion stability.

From the viewpoint of reactivity with TFE, the modifying monomer preferably contains at least one selected from the group consisting of hexafluoropropylene, perfluoro(alkyl vinyl ether), and (perfluoroalkyl)ethylene.

More preferably, the modifying monomer contains at least one selected from the group consisting of hexafluoropropylene, perfluoro(methyl vinyl ether), perfluoro(propyl vinyl ether), (perfluorobutyl)ethylene, (perfluorohexyl)ethylene, and (perfluorooctyl)ethylene.

The total amount of the hexafluoropropylene unit, perfluoro(alkyl vinyl ether) unit, and (perfluoroalkyl)ethylene unit is preferably in the range of 0.00001 to 1.0% by mass based on all polymerized units in PTFE. The lower limit of the total amount thereof is more preferably 0.0001% by mass, still more preferably 0.0005% by mass, further preferably 0.001% by mass, still further preferably 0.005% by mass, and particularly preferably 0.009% by mass. The upper limit is, in the preferred order, 0.9% by mass, 0.50% by mass, 0.40% by mass, 0.30% by mass, 0.20% by mass, 0.15% by mass, 0.10% by mass, 0.08% by mass, 0.05% by mass, or 0.01% by mass.

The modifying monomer preferably includes a modifying monomer having a functional group capable of reacting by radical polymerization and a hydrophilic group (hereinafter, referred to as a "modifying monomer (A) ") .

The presence of the modifying monomer (A) makes it possible to obtain PTFE particles having a small primary particle size, and to thereby obtain an aqueous dispersion having high dispersion stability. Also, the aspect ratio of the primary particles can be made small.

The amount of the modifying monomer (A) used is preferably an amount greater than the amount equivalent to 0.1 ppm of the aqueous medium, more preferably an amount greater than 0.5 ppm, still more preferably an amount greater than 1.0 ppm, further preferably an amount greater than 5 ppm, and particularly preferably an amount greater than 10 ppm. When the amount of the modifying monomer (A) is too small, the particle size of PTFE obtained may not be small enough.

The amount of the modifying monomer (A) used may be within the above range, but for example, the upper limit can be set to 5,000 ppm. In the production method, the modifying monomer (A) may also be added into the system during the reaction in order to improve the stability of the aqueous dispersion during or after the reaction.

Since the modifying monomer (A) is highly water-soluble, even if the unreacted modifying monomer (A) remains in the aqueous dispersion, it can be easily removed by the concentration step or the coagulation and washing steps.

The modifying monomer (A) is incorporated in the produced polymer in the process of polymerization, but since the concentration of the modifying monomer (A) in the polymerization system itself is low and the amount incorporated into the polymer is small, there is no problem of the heat resistance of PTFE being degraded or coloring after sintering.

Examples of the hydrophilic group in the modifying monomer (A) include $-NH_2$, $-PO_3M$, $-P(O)(OM)_2$, $-OPO_3M$,$-OP(O)(OM)_2$, $-SO_3M$, $-OSO_3M$, and -COOM, wherein M represents H, a metal atom, $NR^7_4$, imidazolium optionally having a substituent, pyridinium optionally having a substituent, or phosphonium optionally having a substituent, wherein $R^7$ is H or an organic group, and may be the same or different, and any two thereof may be bonded to each other to form a ring. Of these, the hydrophilic group is preferably $-SO_3M$ or -COOM.

The organic group in $R^7$ is preferably an alkyl group. $R^7$ is preferably H or a $C_{1-10}$ organic group, more preferably H or a $C_{1-4}$ organic group, and still more preferably H or a $C_{1-4}$ alkyl group.

Examples of the metal atom include monovalent and divalent metal atoms, alkali metals (Group 1) and alkaline earth metals (Group 2), and preferred is Na, K, or Li.

Examples of the "functional group capable of reacting by radical polymerization" in the modifying monomer (A) include groups having an ethylenically unsaturated bond, such as a vinyl group or an allyl group. The group having an ethylenically unsaturated bond can be represented by the following formula:

$$CX_1X_3=CX_2R-$$

wherein $X_1$, $X_2$, and $X_3$ are each independently F, Cl, H, $CF_3$, $CF_2H$, $CFH_2$, or $CH_3$; and R is a linking group. Examples of the linking group of R include a linking group as $R^a$ described later.

Preferred are groups having an unsaturated bond, such as $-CH=CH_2$, $-CF=CH_2$, $-CH=CF_2$, $-CF=CF_2$, $-CH_2-CH=CH_2$,$-CF_2-CF=CH_2$, $-CF_2-CF=CF_2$, $-(C=O)-CH=CH_2$, $-(C=O)-CF=CH_2$,$-(C=O)-CH=CF_2$, $-(C=O)-CF=CF_2$, $-(C=O)-C(CH_3)=CH_2$, $-(C=O)-C(CF_3)=CH_2$, $-(C=O)-C(CH_3)=CF_2$, $-(C=O)-C(CF_3)=CF_2$, $-O-CH_2-CH=CH_2$, $-O-CF_2-CF=CH_2$, $-O-CH_2-CH=CF_2$, and $-O-CF_2-CF=CF_2$.

Since the modifying monomer (A) has a functional group capable of reacting by radical polymerization, it is presumed that, when used in the polymerization, it reacts with the fluorine-containing monomer in the initial stage of the polymerization reaction to form particles that have a hydrophilic group derived from the modifying monomer (A) and are highly stable. Thus, polymerization in the presence of the modifying monomer (A) is considered to increase the number of particles.

The polymerization may be carried out in the presence of one kind of the modifying monomer (A), or in the presence of two or more kinds thereof.

In the polymerization, a compound having an unsaturated bond can be used as the modifying monomer (A).

The modifying monomer (A) is preferably at least one selected from the group consisting of compounds represented by the general formula (4A):

$$CX^1X^3=CX^2R^a-(CZ^1Z^2)_k-Y^3 \qquad (4A)$$

wherein $X^1$, $X^2$, and $X^3$ are each independently F, Cl, H, or $CF_3$; $Y^3$ is a hydrophilic group; $R^a$ is a linking group; $Z^1$ and $Z^2$ are each independently H, F, or $CF_3$; and k is 0 or 1.

Examples of the hydrophilic group include $-NH_2$, $-PO_3M$, $-P(O)(OM)_2$, $-OPO_3M$, $-OP(O)(OM)_2$, $-SO_3M$, $-OSO_3M$, and -COOM, wherein M represents H, a metal atom, $NR^7_4$, imidazolium optionally having a substituent, pyridinium optionally having a substituent, or phosphonium optionally having a substituent, wherein $R^7$ is H or an organic group, and may be the same or different, and any two thereof may be bonded to each other to form a ring. Of these, the hydrophilic group is preferably $-SO_3M$ or -COOM. $R^7$ is preferably H or a $C_{1-10}$ organic group, more preferably H or a $C_{1-4}$ organic group, and still more preferably H or a $C_{1-4}$ alkyl group.

Examples of the metal atom include monovalent and divalent metal atoms, alkali metals (Group 1) and alkaline earth metals (Group 2), and preferred is Na, K, or Li.

The use of the modifying monomer (A) allows for obtaining an aqueous dispersion having a smaller average primary particle size and superior stability. Also, the aspect ratio of the primary particles can be made smaller.

$R^a$ is a linking group. The "linking group" as used herein refers to a divalent linking group. The linking group may be a single bond and preferably contains at least one carbon atom, and the number of carbon atoms may be 2 or more, 4 or more, 8 or more, 10 or more, or 20 or more. The upper limit thereof is not limited, but may be 100 or less, and may be 50 or less, for example.

The linking group may be linear or branched, cyclic or acyclic, saturated or unsaturated, substituted or unsubstituted, and optionally contains one or more heteroatoms selected from the group consisting of sulfur, oxygen, and nitrogen, and optionally contains one or more functional groups selected from the group consisting of esters, amides, sulfonamides, carbonyls, carbonates, urethanes, ureas and carbamates. The linking group may be free from carbon atoms and may be a catenary heteroatom such as oxygen, sulfur, or nitrogen.

$R^a$ is preferably a catenary heteroatom such as oxygen, sulfur, or nitrogen, or a divalent organic group.

When $R^a$ is a divalent organic group, the hydrogen atom bonded to the carbon atom may be replaced by a halogen other than fluorine, such as chlorine, and may or may not contain a double bond. Further, $R^a$ may be linear or branched, and may be cyclic or acyclic. $R^a$ may also contain a functional group (e.g., ester, ether, ketone, amine, halide, etc.).

$R^a$ may also be a fluorine-free divalent organic group or a partially fluorinated or perfluorinated divalent organic group.

$R^a$ may be, for example, a hydrocarbon group in which a fluorine atom is not bonded to a carbon atom, a hydrocarbon group in which some of the hydrogen atoms bonded to a carbon atom are replaced by fluorine atoms, a hydrocarbon group in which all of the hydrogen atoms bonded to the carbon atoms are replaced by fluorine atoms, -(C=O)-, -(C=O)-O-, or a hydrocarbon group containing - (C=O)-, and these groups optionally contain an oxygen atom, optionally contain a double bond, and optionally contain a functional group.

$R^a$ is preferably -(C=O)-, -(C=O)-O-, or a hydrocarbon group having 1 to 100 carbon atoms that optionally contains an ether bond and optionally contains a -(C=O)-, wherein some or all of the hydrogen atoms bonded to the carbon atoms in the hydrocarbon group may be replaced by fluorine.

$R^a$ is preferably at least one selected from $-(CH_2)_a-$, $-(CF_2)_a-$, $-O-(CF_2)_a-$, $-(CF_2)_a-O-(CF_2)_b-$, $-O(CF_2)_a-O-(CF_2)_b-$, $-(CF_2)_a-[O-(CF_2)_b]_c-$, $-O(CF_2)_a-[O-(CF_2)_b]_c-$, $-[(CF_2)a-O]_b-[(CF_2)_c-O_d-$, $-O[(CF_2)_a-O]_b-[(CF_2)c-O]_d-$, $-O-[CF_2CF(CF_3) O]_a-(CF_2)_b-$, -(C=O)-, -(C=O)-O-, $-(C=O)-(CH_2)_a-$, $-(C=O)-(CF_2)_a-$, $-(C=O)-O-(CH_2)_a-$, $-(C=O)-O-(CF_2)_a-$, $-(C=O)-[(CH_2)_a-O]_b-$, $-(C=O)-[(CF_2)a-O]_b-$, $-(C=O)-O[(CH_2)_a-O]_b-$, $-(C=O)-O[(CF_2)_a-O]_b-$, $-(C=O)-O[(CH_2)_a-O]_b-(CH_2)_c-$, $-(C=O)-O[(CF_2)_a-O]_b-(CF_2)_c-$, $-(C=O)-(CH_2)_a-O-(CH_2)_b-$, $-(C=O)-(CF_2)_a-O-(CF_2)_b-$, $-(C=O)-O-(CH_2)_a-O-(CH_2)_b-$, $-(C=O)-O-(CF_2)_a-O-(CF_2)_b-$, $-(C=O)-O-C_6H_4-$, and combinations thereof.

In the formula, a, b, c, and d are independently at least 1 or more. a, b, c and d may independently be 2 or more, 3 or more, 4 or more, 10 or more, or 20 or more. The upper limits of a, b, c, and d are 100, for example.

Specific examples suitable for $R^a$ include $-CF_2-O-$, $-CF_2-O-CF_2-$, $-CF_2-O-CH_2-$, $-CF_2-O-CH_2CF_2-$, $-CF_2-O-CF_2CF_2-$, $-CF_2-O-CF_2CH_2-$, $-CF_2-O-CF_2CF_2CH_2-$, $-CF_2-O-CF(CF_3)$ -, $-CF_2-O-CF(CF_3)CF_2-$, $-CF_2-O-CF(CF_3)CF_2-O-$, $-CF_2-O-CF(CF_3)CH_2-$, -(C=O)-, -(C=O)-O-, $-(C=O)-(CH_2)-$, $-(C=O)-(CF_2)-$, $-(C=O)-O-(CH_2)-$, $-(C=O)-O-(CF_2)-$, $-(C=O)-[(CH_2)_2-O]_n-$, $-(C=O)-[(CF_2)_2-O]_n-$, $-(C=O)-O[(CH_2)_2-O]_n-$, $-(C=O)-O[(CF_2)_2-O]-$, $-(C=O)-O[(CH_2)_2O]_n-(CH_2)-$, $-(C=O)-O[(CF_2)_2-O]_n-(CF_2)$ $-(C=O)-(CH_2)_2-O-(CH_2)-$, $-(C=O)-(CF_2)_2-O-(CF_2)-$, $-(C=O)-O-(CH_2)_2-O-(CH_2)-$, $-(C=O)-O-(CF_2)_2-O-(CF_2)-$, and $-(C=O)-O-C_6H_4-$. In particular, preferred for $R^a$ among these is $-CF_2-O-$, $-CF_2-O-CF_2-$, $-CF_2-O-CF_2CF_2-$, $-CF_2-O-CF(CF_3)$ -, $-CF_2-O-CF(CF_3)$ $CF_2-$, $-CF_2-O-CF(CF_3)CF_2-O-$, -(C=O)-, -(C=O)-O-, $-(C=O)-(CH_2)-$, $-(C=O)-O-(CH_2)-$, $-(C=O)-O[(CH_2)_2-O]_n-$, $-(C=O)-O[(CH_2)_2-O]_n-(CH_2)-$, $-(C=O)-(CH_2)_2-O-(CH_2)-$, or $-(C=O)-O-C_6H_4-$.

In the formula, n is an integer of 1 to 10.

$-R^a-(CZ^1Z^2)_k$ in the general formula (4A) is preferably $-CF_2-O-CF_2-$, $-CF_2-O-CF(CF_3)$ -, $-CF_2-O-C(CF_3)_2-$, $-CF_2-O-CF_2-CF_2-$, $-CF_2-O-CF_2-CF(CF_3)$ -, $-CF_2-O-CF_2-C(CF_3)_2-$, $-CF_2-O-CF_2CF_2-CF_2-$, $-CF_2-O-$

$CF_2CF_2$-$CF(CF_3)$-, -$CF_2$-O-$CF_2CF_2$-$C(CF_3)_2$-, -$CF_2$-O-$CF(CF_3)$-$CF_2$-, -$CF_2$-O-$CF(CF_3)$-$CF(CF_3)$-,-$CF_2$-O-$CF(CF_3)$-$C(CF_3)_2$-, -$CF_2$-O-$CF(CF_3)$-$CF_2$-, -$CF_2$-O-$CF(CF_3)$-$CF(CF_3)$-, -$CF_2$-O-$CF(CF_3)$-$C(CF_3)_2$-, -$CF_2$-O-$CF(CF_3)CF_2$-$CF_2$-,-$CF_2$-O-$CF(CF_3)CF_2$-$CF(CF_3)$-, -$CF_2$-O-$CF(CF_3)CF_2$-$C(CF_3)_2$-, -$CF_2$-O-$CF(CF_3)$ $CF_2$-O-$CF_2$-, -$CF_2$-O-$CF(CF_3)CF_2$-O-$CF(CF_3)$-, -$CF_2$-O-$CF(CF_3)CF_2$-O-$C(CF_3)_2$-, -(C=O)-, -(C=O)-O-, -(C=O)-$(CH_2)$-, -(C=O)-$(CF_2)$-, -(C=O)-O-$(CH_2)$-, -(C=O)-O-$(CF_2)$-, -(C=O)-$[(CH_2)_2$-$O]_n$-$(CH_2)$-, -(C=O)-$[(CF_2)_2$-$O]_n$-$(CF_2)$-, -(C=O)-$[(CH_2)_2$-$O]_n$-$(CH_2)$-$(CH_2)$-, -(C=O)-$[(CF_2)_2$-$O]_n$-$(CF_2)$-$(CF_2)$-,-(C=O)-$O[(CH_2)_2$-O]n-$(CF_2)$-, -(C=O)-$O[(CH_2)_2$-$O]_n$-$(CH_2)$-$(CH_2)$-, -(C=O)-$O[(CF_2)_2$-$O]_n$-$(CF_2)$-, -(C=O)-$O[(CF_2)_2$-$O]_n$-$(CF_2)$-$(CF_2)$ -(C=O)-$(CH_2)_2$-O-$(CH_2)$-$(CH_2)$-, -(C=O)-$(CF_2)_2$-O-$(CF_2)$-$(CF_2)$-, -(C=O)-O-$(CH_2)_2$-O-$(CH_2)$-$(CH_2)$-, -(C=O)-O-$(CF_2)_2O$-$(CF_2)$-$(CF_2)$-, -(C=O)-O-$(CH_2)_2$-O-$(CH_2)$-$C(CF_3)_2$-, -(C=O)-O-$(CF_2)_2$-O-$(CF_2)$-$C(CF_3)_2$-, or -(C=O)-O-$C_6H_4$-$C(CF_3)_2$-, and is more preferably -$CF_2$-O-$CF(CF_3)$-, -$CF_2$-O-$CF_2$-$CF(CF_3)$-, -$CF_2$-O-$CF_2CF_2$-$CF(CF_3)$-, -$CF_2$-O-$CF(CF_3)$ -CF $(CF_3)$ -, -$CF_2$-O-$CF(CF_3)$ $CF_2$-$CF(CF_3)$ -, -$CF_2$-O-$CF(CF_3)$ $CF_2$-O-$CF(CF_3)$ -, -(C=O)-, -(C=O)-O-$(CH_2)$-, -(C=O)-O-$(CH_2)$-$(CH_2)$-, -(C=O)-$O[(CH_2)_2$-$O]_n$-$(CH_2)$-$(CH_2)$-, -(C=O)-O-$(CH_2)_2$-O-$(CH_2)$-$C(CF_3)$ $_2$-, or -(C=O)-O-$C_6H_4$-$C(CF_3)_2$-.

In the formula, n is an integer of 1 to 10.

Specific examples of the compound represented by the general formula (4A) include compounds represented by the following formulas:

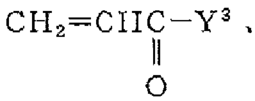, 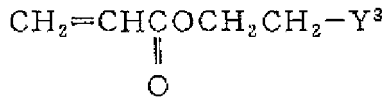, 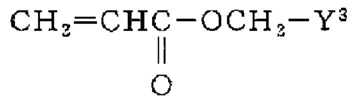,

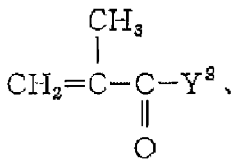, 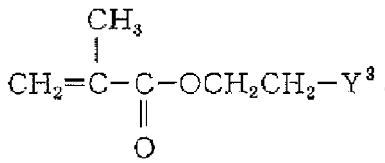, 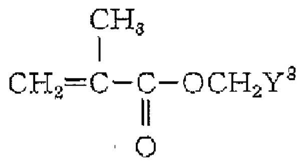,

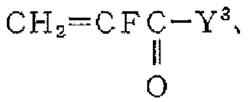, 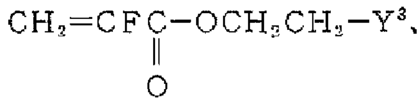, 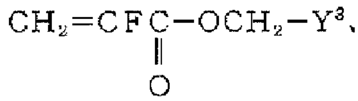,

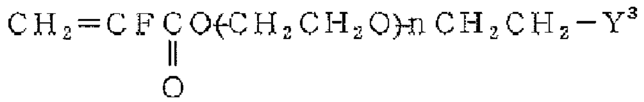,

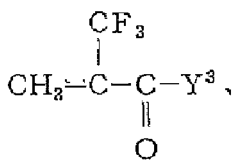, 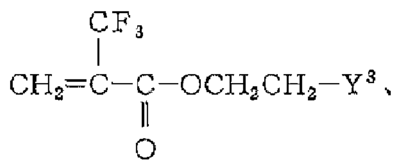,

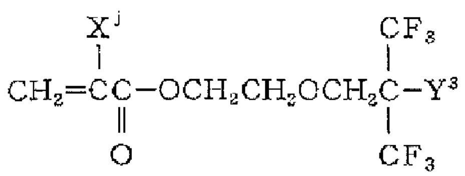 (i),

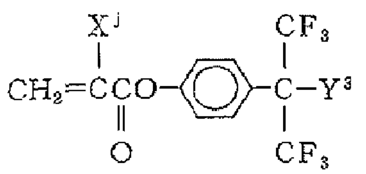 (ii)

wherein $X^j$ and $Y^3$ are as described above; and n is an integer of 1 to 10.

$R^a$ is preferably a divalent group represented by the following general formula (r1):

$$-(C{=}O)_h-(O)i-CF_2-O-(CX^6{}_2)_e-\{O-CF(CF_3)\}_f-(O)_g- \qquad (r1)$$

wherein $X^6$ is each independently H, F, or $CF_3$; e is an integer of 0 to 3; f is an integer of 0 to 3; g is 0 or 1; h is 0 or 1; and i is 0 or 1,
and is also preferably a divalent group represented by the following general formula (r2):

$$-(C{=}O)_h-(O)_i-CF_2-O-(CX^7{}_2)_e-(O)_g- \qquad (r2)$$

wherein $X^7$ is each independently H, F, or $CF_3$; e is an integer of 0 to 3; g is 0 or 1; h is 0 or 1; and i is 0 or 1.

$-R^a-(CZ^1Z^2)_k-$ in the general formula (4A) is also preferably a divalent group represented by the following formula (t1):

$$-(C{=}O)_h-(O)_i-CF_2-O-(CX^6{}_2)e-\{O-CF(CF_3)\}_f-(O)_g-CZ^1Z^2- \qquad (t1)$$

wherein $X^6$ is each independently H, F, or $CF_3$; e is an integer of 0 to 3; f is an integer of 0 to 3; g is 0 or 1; h is 0 or 1; i is 0 or 1; and $Z^1$ and $Z^2$ are each independently F or $CF_3$,
and is more preferably a group in which one of $Z^1$ and $Z^2$ is F and the other is $CF_3$ in the formula (t1).

Also, in the general formula (4A), $-R^a-(CZ^1Z^2)_k-$ is preferably a divalent group represented by the following formula (t2):

$$-(C{=}O)_h-(O)_i-CF_2-O-(CX^7{}_2)_e-(O)_g-CZ^1Z^2- \qquad (t2)$$

wherein $X^7$ is each independently H, F, or $CF_3$; e is an integer of 0 to 3; g is 0 or 1; h is 0 or 1; i is 0 or 1; and $Z^1$ and $Z^2$ are each independently H, F, or $CF_3$,
and is more preferably a group in which one of $Z^1$ and $Z^2$ is F and the other is $CF_3$ in the formula (t2).

The compound represented by the general formula (4A) also preferably has a C-F bond and does not have a C-H bond, in the portion excluding the hydrophilic group ($Y^3$). In other words, in the general formula (4A), $X^i$, $X^j$, and $X^k$ are all F, and $R^a$ is preferably a perfluoroalkylene group having 1 or more carbon atoms; the perfluoroalkylene group may be either linear or branched, may be either cyclic or acyclic, and may contain at least one catenary heteroatom. The perfluoroalkylene group may have 2 to 20 carbon atoms or 4 to 18 carbon atoms.

The compound represented by the general formula (4A) may be partially fluorinated. In other words, the compound represented by the general formula (4A) also preferably has at least one hydrogen atom bonded to a carbon atom and at least one fluorine atom bonded to a carbon atom, in the portion excluding the hydrophilic group ($Y^3$).

The compound represented by the general formula (4A) is also preferably a compound represented by the following formula (4a):

$$CF_2{=}CF-O-Rf^0-Y^3 \qquad (4a)$$

wherein $Y^3$ is a hydrophilic group; and $Rf^0$ is a perfluorinated divalent linking group which is perfluorinated and may be a linear or branched, cyclic or acyclic, saturated or unsaturated, substituted or unsubstituted, and optionally contains one or more heteroatoms selected from the group consisting of sulfur, oxygen, and nitrogen.

The compound represented by the general formula (4A) is also preferably a compound represented by the following formula (4b):

$$CH_2{=}CH-O-Rf^0-Y^3 \qquad (4b)$$

wherein $Y^3$ is a hydrophilic group; and $Rf^0$ is a perfluorinated divalent linking group as defined in the formula (4a).

In the general formula (4A), $Y^3$ is preferably - $OSO_3M$.

Examples of the compound represented by the general formula (4A) when $Y^3$ is $-OSO_3M$ include

$CF_2$=CF($OCF_2CF_2CH_2OSO_3$M), $CH_2$=CH(($CF_2)_4CH_2OSO_3$M), $CF_2$=CF(O($CF_2)_4CH_2OSO_3$M), $CF_2$=CF($OCF_2$CF($CF_3$) $CH_2OSO_3$M), $CF_2$=CF($OCF_2$CF($CF_3$) $OCF_2CF_2CH_2OSO_3$M), $CH_2$=CH(($CF_2)_4CH_2OSO_3$M), $CF_2$=CF($OCF_2CF_2SO_2$N($CH_3$)$CH_2CH_2OSO_3$M), $CH_2$=CH($CF_2CF_2CH_2OSO_3$M), $CF_2$=CF($OCF_2CF_2CF_2CF_2S0_2$N($CH_3$)$CH_2CH_2OSO_3$M), and $CH_2$=CH($CF_2CF_2CH_2OSO_3$M). In the formula, M is as described above.

In the general formula (4A), $Y^3$ is preferably -$SO_3$M.

Examples of the compound represented by the general formula (4A) when $Y^3$ is -$SO_3$M include: $CF_2$=CF($OCF_2CF_2SO_3$M), $CF_2$=CF(O($CF_2)_4SO_3$M), $CF_2$=CF($OCF_2$CF($CF_3$) $SO_3$M), $CF_2$=CF($OCF_2$CF($CF_3$) $OCF_2CF_2SO_3$M), $CH_2$=CH($CF_2CF_2SO_3$M), $CF_2$=CF($OCF_2$CF($CF_3$) $OCF_2CF_2CF_2CF_2SO_3$M), $CH_2$=CH(($CF_2)_4SO_3$M), $CH_2$=CH($CF_2CF_2SO_3$M), and $CH_2$=CH(($CF_2)_3SO_3$M). In the formula, M is as described above.

In the general formula (4A), $Y^3$ is preferably - COOM.

Examples of the compound represented by the general formula (4A) when $Y^3$ is -COOM include $CF_2$=CF($OCF_2CF_2$COOM), $CF_2$=CF($OCF_2CF_2CF_2$COOM), $CF_2$=CF(O($CF_2)_s$COOM), $CF_2$=CF($OCF_2$CF($CF_3$) COOM), $CF_2$=CF($OCF_2$CF($CF_3$) O($CF_2)_n$COOM) (n is greater than 1), $CH_2$=CH($CF_2CF_2$COOM), $CH_2$=CH(($CF_2)_4$COOM), $CH_2$=CH($CF_2CF_2$COOM), $CH_2$=CH(($CF_2)_3$COOM), $CF_2$=CF($OCF_2CF_2SO_2$NR'$CH_2$COOM), $CF_2$=CF(O($CF_2)_4S0_2$NR'$CH_2$COOM), $CF_2$=CF($OCF_2$CF($CF_3$) $SO_2$NR'$CH_2$COOM), $CF_2$=CF($OCF_2$CF($CF_3$) $OCF_2CF_2SO_2$NR'$CH_2$COOM), $CH_2$=CH($CF_2CF_2SO_2$NR'$CH_2$COOM), $CF_2$=CF($OCF_2$CF($CF_3$)$OCF_2CF_2CF_2CF_2SO_2$NR'$CH_2$COOM), $CH_2$=CH(($CF_2)_4SO_2$NR'$CH_2$COOM), $CH_2$=CH($CF_2CF_2SO_2$NR'$CH_2$COOM), and $CH_2$=CH(($CF_2)_3SO_2$NR'$CH_2$COOM). In the formula, R' is H or a $C_{1-4}$ alkyl group, and M is as described above.

In the general formula (4A), $Y^3$ is preferably-$OPO_3$M or -OP(O)(OM$)_2$. Examples of the compound represented by the general formula (4A) when $Y^3$ is -$OPO_3$M or -OP(O)(OM$)_2$ include $CF_2$=CF($OCF_2CF_2CH_2$OP(O)(OM$)_2$), $CF_2$=CF(O($CF_2)_4CH_2$OP(O)(OM$)_2$), $CF_2$=CF($OCF_2$CF($CF_3$) $CH_2$OP(O)(OM$)_2$), $CF_2$=CF($OCF_2$CF($CF_3$)$OCF_2CF_2CH_2$OP(O)(OM$)_2$), $CF_2$=CF($OCF_2CF_2SO_2$N($CH_3$)$CH_2CH_2$OP(O)(OM$)_2$), $CF_2$=CF($OCF_2CF_2CF_2CF_2SO_2$N($CH_3$)$CH_2CH_2$OP(O)(OM$)_2$), $CH_2$=CH($CF_2CF_2CH_2$OP(O)(OM$)_2$, $CH_2$=CH(($CF_2)_4CH_2$OP(O)(OM$)_2$), $CH_2$=CH($CF_2CF_2CH_2$OP(O)(OM$)_2$), and $CH_2$=CH(($CF_2)_3CH_2$OP(O)(OM$)_2$). In the formula, M is as described above.

In the general formula (4A), $Y^3$ is preferably -$PO_3$M or -P(O)(OM$)_2$. Examples of the compound represented by the general formula (4A) when $Y^3$ is -$PO_3$M or -P(O) (OM$)_2$ include $CF_{2=}$CF($OCF_2CF_2$P(O)(OM$)_2$), $CF_{2=}$CF (O($CF_2)_4$P(O)(OM$)_2$), $CF_{2=}$CF($OCF_2$CF($CF_3$)P(O)(OM$)_2$), $CF_2$=CF($OCF_2$CF($CF_3$)$OCF_2CF_2$P(O)(OM$)_2$), $CH_2$=CH($CF_2CF_2$P(O)(OM$)_2$), $CH_{2=}$CH(($CF_2)_4$P (O) (OM$)_2$), $CH_{2=}$CH($CF_2CF_2$P(O)(OM$)_2$), and $CH_2$=CH(($CF_2)_3$P (O) (OM$)_2$), wherein M is as described above.

The compound represented by the general formula (4A) is preferably at least one selected from the group consisting of:

a monomer represented by the following general formula (5A):

$CX_2$=CY(-$CZ_2$-O-Rf-$Y^3$) (5A)

wherein X is the same or different and is -H or -F; Y is -H, -F, an alkyl group, or a fluorine-containing alkyl group; Z is the same or different and -H, -F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond; and $Y^3$ is as described above;

a monomer represented by the following general formula (6A):

$CX_2$=CY(-O-Rf-$Y^3$) (6A)

wherein X is the same or different and is -H or -F; Y is -H, -F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond; and $Y^3$ is as described above; and

a monomer represented by the following general formula (7A):

$CX_2$=CY (-Rf-$Y^3$) (7A)

wherein X is the same or different and is -H or -F; Y is -H, -F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond; and $Y^3$ is as described above.

In the general formula (5A), each X is -H or -F. X may be both -H, may be both -F, or at least one thereof may be -H. For example, one thereof may be -F and the other may be -H, or both may be -H.

In the general formula (5A), Y is -H, -F, an alkyl group, or a fluorine-containing alkyl group.

The alkyl group is an alkyl group free from fluorine atoms and may have one or more carbon atoms. The alkyl group preferably has 6 or less carbon atoms, more preferably 4 or less carbon atoms, and still more preferably 3 or less carbon atoms.

The fluorine-containing alkyl group is an alkyl group containing at least one fluorine atom, and may have one or more carbon atoms. The fluorine-containing alkyl group preferably has 6 or less carbon atoms, more preferably 4 or less carbon atoms, and still more preferably 3 or less carbon atoms.

Y is preferably -H, -F, or $-CF_3$, and more preferably -F.

In the general formula (5A), Z is the same or different and is -H, -F, an alkyl group, or a fluoroalkyl group.

The alkyl group is an alkyl group free from fluorine atoms and may have one or more carbon atoms. The alkyl group preferably has 6 or less carbon atoms, more preferably 4 or less carbon atoms, and still more preferably 3 or less carbon atoms.

The fluorine-containing alkyl group is an alkyl group containing at least one fluorine atom, and may have one or more carbon atoms. The fluorine-containing alkyl group preferably has 6 or less carbon atoms, more preferably 4 or less carbon atoms, and still more preferably 3 or less carbon atoms.

Z is preferably -H, -F, or $-CF_3$, and more preferably -F.

In the general formula (5A), at least one of X, Y, and Z preferably contains a fluorine atom. For example, X, Y, and Z may be -H, -F, and -F, respectively.

In the general formula (5A), Rf is a fluorine-containing alkylene group having 1 to 40 carbon atoms or a fluorine-containing alkylene group having 2 to 100 carbon atoms and having an ether bond.

The fluorine-containing alkylene group preferably has 2 or more carbon atoms. The fluorine-containing alkylene group also preferably has 30 or less carbon atoms, more preferably 20 or less carbon atoms, and still more preferably 10 or less carbon atoms. Examples of the fluorine-containing alkylene group include $-CF_2-$, $-CH_2CF_2-$, $-CF_2CF_2-$, $-CF_2CH_2-$, $-CF_2CF_2CH_2-$, $-CF(CF_3)-$, $-CF\ (CF_3)\ CF_2-$, and $-CF(CF_3)CH_2-$. The fluorine-containing alkylene group is preferably a perfluoroalkylene group.

The fluorine-containing alkylene group having an ether bond preferably has 3 or more carbon atoms. The fluorine-containing alkylene group having an ether bond preferably has 60 or less carbon atoms, more preferably 30 or less carbon atoms, and still more preferably 12 or less carbon atoms.

The fluorine-containing alkylene group having an ether bond is preferably a divalent group represented by the following formula:

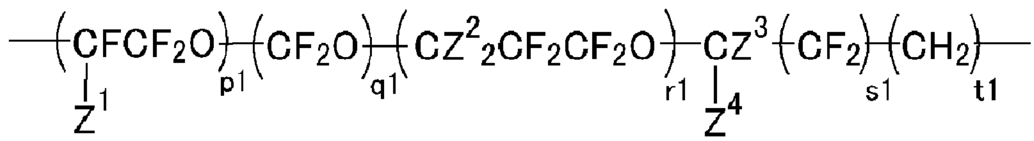

wherein $Z^1$ is F or $CF_3$; $Z^2$ and $Z^3$ are each H or F; $Z^4$ is H, F, or $CF_3$; p1 + q1 + r1 is an integer of 0 to 10; s1 is 0 or 1; and t1 is an integer of 0 to 5.

Specific examples of the fluorine-containing alkylene group having an ether bond include $-CF(CF_3)CF_2-O-CF(CF_3)-$, $-(CF(CF_3)CF_2-O)_n-CF(CF_3)-$ (where n is an integer of 1 to 10), $-CF(CF_3)CF_2-O-CF(CF_3)CH_2-$,$-(CF(CF_3)CF_2-O)_n-CF(CF_3)\ CH_2-$ (where n is an integer of 1 to 10), $-CH_2CF_2CF_2O-CH_2CF_2CH_2-$, $-CF_2CF_2CF_2O-CF_2CF_2-$,$-CF_2CF_2CF_2O-CF_2CF_2CH_2-$, $-CF_2CF_2O-CF_2-$, and $-CF_2CF_2O-CF_2CH_2-$. The fluorine-containing alkylene group having an ether bond is preferably a perfluoroalkylene group.

In the general formula (5A), $Y^3$ is -COOM, $-SO_3M$, or $-OSO_3M$, wherein M is H, a metal atom, $NR^7_4$, imidazolium optionally having a substituent, pyridinium optionally having a substituent, or phosphonium optionally having a substituent, wherein $R^7$ is H or an organic group, and may be the same or different. Any two thereof may be bonded to each other to form a ring.

The organic group in $R^7$ is preferably an alkyl group. $R^7$ is preferably H or a $C_{1-10}$ organic group, more preferably H or a $C_{1-4}$ organic group, and still more preferably H or a $C_{1-4}$ alkyl group.

Examples of the metal atom include alkali metals (Group 1) and alkaline earth metals (Group 2), and preferred is Na, K, or Li.

M is preferably -H, a metal atom, or $-NR^7_4$, more preferably -H, an alkali metal (Group 1), an alkaline earth metal (Group 2), or $-NR^7_4$, still more preferably -H, -Na, -K, -Li, or $-NH_4$, further preferably -Na, -K, or $-NH_4$, particularly preferably -Na or $-NH_4$, and most preferably $-NH_4$.

$Y^3$ is preferably -COOM or $-SO_3M$, and more preferably -COOM.

The monomer represented by the general formula (5A) is preferably a monomer (5a) represented by the following general formula (5a):

$CH_2{=}CF(-CF_2-O-Rf-Y^3)$ (5a)

wherein Rf and $Y^3$ are as described above.

Specific examples of the monomer represented by the general formula (5a) include a monomer represented by the following formula:

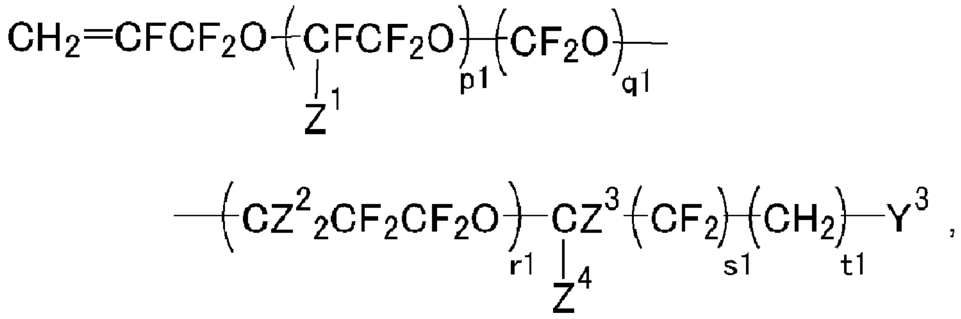

wherein $Z^1$ is F or $CF_3$; $Z^2$ and $Z^3$ are each H or F; $Z^4$ is H, F, or $CF_3$; p1+q1+r1 is an integer of 0 to 10; s1 is 0 or 1; t1 is an integer of 0 to 5; and $Y^3$ is as described above, with the proviso that when $Z^3$ and $Z^4$ are both H, p1+q1+r1+s1 is not 0. More specifically, preferred examples thereof include:

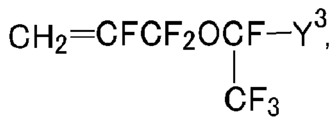 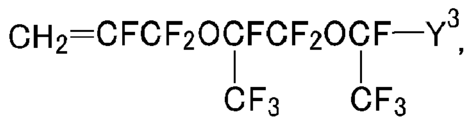

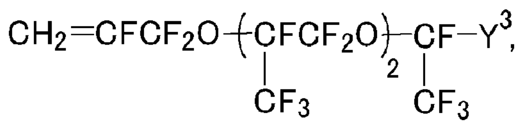 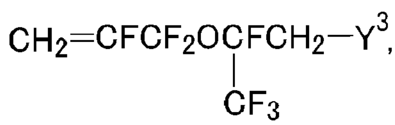

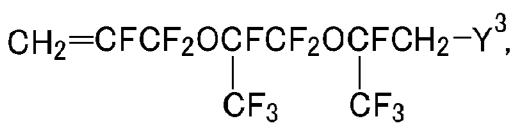 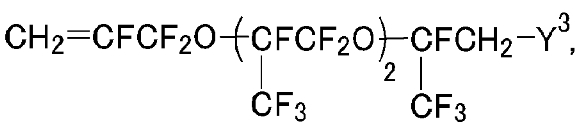

$CH_2{=}CFCF_2OCH_2CF_2-Y^3$, $CH_2{=}CFCF_2O(CH_2CF_2CF_2O)CH_2CF_2-Y^3$,

$CH_2{=}CFCF_2OCH_2CF_2CH_2-Y^3$

$CH_2{=}CFCF_2O(CH_2CF_2CF_2O)CH_2CF_2CH_2-Y^3$,

$CH_2{=}CFCF_2OCF_2CF_2-Y^3$ $CH_2{=}CFCF_2O(CF_2CF_2CF_2O)CF_2CF_2—Y^3$

$CH_2{=}CFCF_2OCF_2CF_2CH_2-Y^3$

$CH_2{=}CFCF_2O(CF_2CF_2CF_2O)CF_2CF_2CH_2-Y^3$,

$CH_2{=}CFCF_2OCF_2-Y^3$, $CH_2{=}CFCF_2O(CF_2CF_2O)CF_2-Y^3$,

$CH_2{=}CFCF_2OCF_2CH_2-Y^3$,

$CH_2{=}CFCF_2O(CF_2CF_2O)CF_2CH_2-Y^3$,

Of these, preferred are:

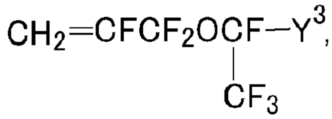 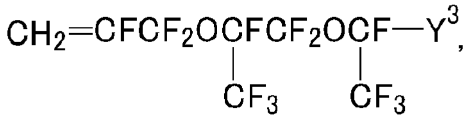

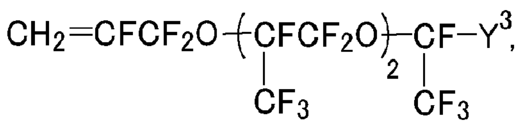 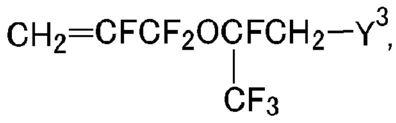

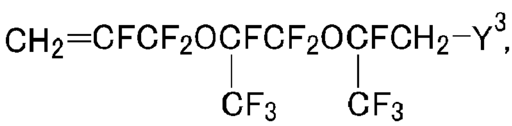 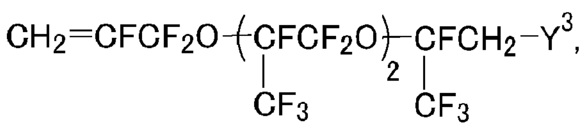

In the monomer represented by the general formula (5a), $Y^3$ in the formula (5a) is preferably -COOM. Specifically, the monomer represented by the general formula (5a) is preferably at least one selected from the group consisting of $CH_2=CFCF_2OCF(CF_3)COOM$ and $CH_2=CFCF_2OCF(CF_3)CF_2OCF(CF_3)COOM$ (wherein M is as defined above), and more preferably $CH_2=CFCF_2OCF(CF_3)COOM$.
The monomer represented by the general formula (5A) is preferably a monomer (5b) represented by the following general formula (5b):

$$CX^2_2=CFCF_2\text{-}O\text{-}(CF(CF_3)CF_2O)_{n5}\text{-}CF(CF_3)\text{-}Y^3 \qquad (5b)$$

wherein each $X^2$ is the same, and each represent F or H; n5 represents 0 or an integer of 1 to 10; and $Y^3$ is as defined above.
In the formula (5b), n5 is preferably 0 or an integer of 1 to 5, more preferably 0, 1, or 2, and still more preferably 0 or 1 from the viewpoint of stability of the resulting aqueous dispersion. $Y^3$ is preferably -COOM from the viewpoint of obtaining appropriate water-solubility and stability of the aqueous dispersion, and M is preferably H or $NH_4$ from the viewpoint of being less likely to remain as impurities and improving the heat resistance of the resulting molded body.
Examples of the perfluorovinylalkyl compound represented by the formula (5b) include $CH_2=CFCF_2OCF(CF_3)COOM$ and $CH_2=CFCF_2OCF(CF_3)CF_2OCF(CF_3)COOM$, wherein M is as defined above.
Examples of the monomer represented by the general formula (5A) further include a monomer represented by the following general formula (5c):

$$CF_2=CFCF_2\text{-}O\text{-}Rf\text{-}Y^3 \qquad (5c)$$

wherein Rf and $Y^3$ are as described above.
More specific examples thereof include:

**$CF_2=CFCF_2OCF_2CF_2CF_2\text{-}Y^3$,**

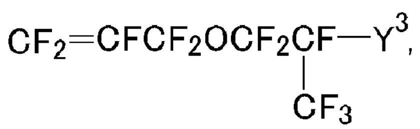

$CF_2=CFCF_2OCF_2CF_2CF_2CH_2\text{-}Y^3$,

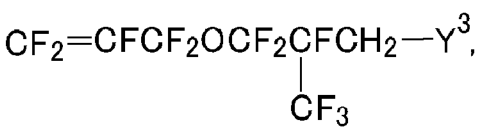

In the general formula (6A), each X is -H or -F. X may be both -F, or at least one thereof may be -H. For example, one thereof may be -F and the other may be -H, or both may be -H.

In the general formula (6A), Y is -H, -F, an alkyl group, or a fluorine-containing alkyl group.

The alkyl group is an alkyl group free from fluorine atoms and may have one or more carbon atoms. The alkyl group preferably has 6 or less carbon atoms, more preferably 4 or less carbon atoms, and still more preferably 3 or less carbon atoms.

The fluorine-containing alkyl group is an alkyl group containing at least one fluorine atom, and may have one or more carbon atoms. The fluorine-containing alkyl group preferably has 6 or less carbon atoms, more preferably 4 or less carbon atoms, and still more preferably 3 or less carbon atoms.

Y is preferably -H, -F, or $-CF_3$, and more preferably -F.

In the general formula (6A), at least one of X and Y preferably contains a fluorine atom. For example, X, Y, and Z may be -H, -F, and -F, respectively.

In the general formula (6A), Rf is a fluorine-containing alkylene group having 1 to 40 carbon atoms or a fluorine-containing alkylene group having 2 to 100 carbon atoms and having an ether bond. The fluorine-containing alkylene group preferably has 30 or less carbon atoms, more preferably 20 or less carbon atoms, and still more preferably 10 or less carbon atoms. The fluorine-containing alkylene group preferably has 2 or more carbon atoms. The fluorine-containing alkylene group also preferably has 30 or less carbon atoms, more preferably 20 or less carbon atoms, and still more preferably 10 or less carbon atoms. Examples of the fluorine-containing alkylene group include $-CF_2-$, $-CH_2CF_2-$, $-CF_2CF_2-$, $-CF_2CH_2-$, $-CF_2CF_2CH_2-$, $-CF(CF_3)-$, $-CF(CF_3)CF_2-$, and $-CF(CF_3)CH_2-$. The fluorine-containing alkylene group is preferably a perfluoroalkylene group.

In the general formula (6A), $Y^3$ is preferably - COOM, $-SO_3M$, or $-OSO_3M$, wherein M is H, a metal atom, $NR^7_4$, imidazolium optionally having a substituent, pyridinium optionally having a substituent, or phosphonium optionally having a substituent, wherein $R^7$ is H or an organic group, and may be the same or different, and any two thereof may be bonded to each other to form a ring.

The organic group of $R^7$ is preferably an alkyl group. $R^7$ is preferably H or a $C_{1-10}$ organic group, more preferably H or a $C_{1-4}$ organic group, and still more preferably H or a $C_{1-4}$ alkyl group.

Examples of the metal atom include alkali metals (Group 1) and alkaline earth metals (Group 2), and preferred is Na, K, or Li.

M is preferably -H, a metal atom, or $-NR^7_4$, more preferably -H, an alkali metal (Group 1), an alkaline earth metal (Group 2), or $-NR^7_4$, still more preferably -H, -Na, -K, -Li, or $-NH_4$, further preferably -Na, -K, or - $NH_4$, particularly preferably -Na or $-NH_4$, and most preferably $-NH_4$.

$Y^3$ is preferably -COOM or $-SO_3M$, and more preferably -COOM.

The monomer represented by the general formula (6A) is preferably at least one selected from the group consisting of monomers represented by the following general formulas (6a), (6b), (6c), (6d), and (6e):

$$CF_2=CF-O-(CF_2)_{n1}-Y^3 \qquad (6a)$$

wherein n1 represents an integer of 1 to 10, and $Y^3$ is as defined above;

$$CF_2=CF-O-(CF_2C(CF_3)F)_{n2}-Y^3 \qquad (6b)$$

wherein n2 represents an integer of 1 to 5, and $Y^3$ is as defined above;

$$CF_2=CF-O-(CFX^1)_{n3}-Y^3 \qquad (6c)$$

wherein $X^1$ represents F or $CF_3$; n3 represents an integer of 1 to 10; and $Y^3$ is as defined above; and

$$CF_2=CF-O-(CF_2CFX^1O)_{n4}-(CF_2)_{n6}-Y^3 \qquad (6d)$$

wherein n4 represents an integer of 1 to 10, n6 represents an integer of 1 to 3, and $Y^3$ and $X^1$ are as defined above; and

$$CF_2=CF-O-(CF_2CF_2CFX^1O)_{n5}-CF_2CF_2CF_2-Y^3 \qquad (6e)$$

wherein n5 represents an integer of 0 to 10, and $Y^3$ and $X^1$ are as defined above.

In the formula (6a), n1 is preferably an integer of 5 or less, and more preferably an integer of 2 or less. $Y^3$ is preferably -COOM from the viewpoint of obtaining appropriate water-solubility and stability of the aqueous dispersion, and M is preferably H or $NH_4$ from the viewpoint of being less likely to remain as impurities and improving the heat resistance of the resulting molded body.

Examples of the monomer represented by the formula (6a) include $CF_2=CF-O-CF_2COOM$, $CF_{2=}CF(OCF_2CF_2COOM)$, and $CF_{2=}CF(OCF_2CF_2CF_2COOM)$, wherein M is as described above.

In the formula (6b), n2 is preferably an integer of 3 or less from the viewpoint of stability of the resulting aqueous dispersion, $Y^3$ is preferably -COOM from the viewpoint of obtaining appropriate water-solubility and stability of the aqueous dispersion, and M is preferably H or $NH_4$ from the viewpoint of being less likely to remain as impurities and improving the heat resistance of the resulting molded body.

In the formula (6c), n3 is preferably an integer of 5 or less from the viewpoint of water-solubility, $Y^3$ is preferably -COOM from the viewpoint of obtaining appropriate water-solubility and stability of the aqueous dispersion, and M is preferably H or $NH_4$ from the viewpoint of improving dispersion stability.

In the formula (6d), $X^1$ is preferably $-CF_3$ from the viewpoint of stability of the aqueous dispersion, n4 is preferably an integer of 5 or less from the viewpoint of water-solubility, $Y^3$ is preferably -COOM from the viewpoint of obtaining appropriate water-solubility and stability of the aqueous dispersion, and M is preferably H or $NH_4$.

Examples of the monomer represented by the formula (6d) include $CF_2=CFOCF_2CF(CF_3)OCF_2CF_2COOM$, $CF_2=CFOCF_2CF(CF_3)OCF_2COOM$, and $CF_2=CFOCF_2CF(CF_3)OCF_2CF_2CF_2OOM$, wherein M represents H, $NH_4$, or an alkali metal.

In the general formula (6e), n5 is preferably an integer of 5 or less from the viewpoint of water-solubility, $Y^3$ is preferably -COOM from the viewpoint of obtaining appropriate water-solubility and excellent sedimentation stability of the composition, and M is preferably H or $NH_4$.

An example of the monomer represented by the general formula (6e) is $CF_2=CFOCF_2CF_2CF_2COOM$, wherein M represents H, $NH_4$, or an alkali metal.

In the general formula (7A), Rf is preferably a fluorine-containing alkylene group having 1 to 40 carbon atoms. In the general formula (7A), at least one of X and Y preferably contains a fluorine atom.

The monomer represented by the general formula (7A) is preferably at least one selected from the group consisting of:

a monomer represented by the following general formula (7a):

$$CF_2=CF-(CF_2)_{n1}-Y^3 \qquad (7a)$$

wherein n1 represents an integer of 1 to 10; and $Y^3$ is as defined above; and
a monomer represented by the following general formula (7b):

$$CF_2=CF-(CF_2C(CF_3)F)_{n2}-Y^3 \qquad (7b)$$

wherein n2 represents an integer of 1 to 5; and $Y^3$ is as defined above.

$Y^3$ is preferably $-SO_3M$ or -COOM, and M is preferably H, a metal atom, $NR^7{}_4$, imidazolium optionally having a substituent, pyridinium optionally having a substituent, or phosphonium optionally having a substituent. $R^7$ represents H or an organic group.

In the formula (7a), n1 is preferably an integer of 5 or less, and more preferably an integer of 2 or less. $Y^3$ is preferably -COOM from the viewpoint of obtaining appropriate water-solubility and stability of the aqueous dispersion, and M is preferably H or $NH_4$ from the viewpoint of being less likely to remain as impurities and improving the heat resistance of the resulting molded body.

Examples of the perfluorovinylalkyl compound represented by the formula (7a) include $CF_2=CFCF_2COOM$, wherein M is as defined above.

In the formula (7b), n2 is preferably an integer of 3 or less from the viewpoint of stability of the resulting aqueous dispersion, $Y^3$ is preferably -COOM from the viewpoint of obtaining appropriate water-solubility and stability of the aqueous dispersion, and M is preferably H or $NH_4$ from the viewpoint of being less likely to remain as impurities and improving the heat resistance of the resulting molded body.

The modifying monomer preferably includes the modifying monomer (A), preferably includes at least one selected from the group consisting of compounds represented by the general formula (5a), the general formula (5b), the general formula (6a), the general formula (6b), the general formula (6c), and the general formula (6d), and more preferably includes the compound represented by the general formula (5a) or the general formula (5b).

The content of the modifying monomer (A) is preferably in the range of 0.00001 to 1.0% by mass. The lower limit thereof is more preferably 0.0001% by mass, still more preferably 0.001% by mass, further preferably 0.005% by mass. The upper limit is, in the preferred order, 0.90% by mass, 0.50% by mass, 0.40% by mass, 0.30% by mass, 0.20% by mass, 0.15% by mass, 0.10% by mass, 0.08% by mass, 0.05% by mass, or 0.01% by mass.

In production of the TFE polymer, the hydrocarbon surfactant can be used within the use range described

above. The hydrocarbon surfactant may be added in any concentration within the above range, and is usually added at a critical micelle concentration (CMC) or lower at the initiation of polymerization. Too large an amount of the surfactant added may cause generation of needle-shaped particles having a large aspect ratio and gelling of the aqueous dispersion, impairing the stability. The lower limit of the amount of the hydrocarbon surfactant used is preferably 0.0001% by mass, more preferably 0.001% by mass, still more preferably 0.01% by mass, and particularly preferably 0.1% by mass, based on the aqueous medium. The upper limit of the amount of the hydrocarbon surfactant used is preferably 10% by mass, more preferably 5% by mass, still more preferably 3% by mass, and particularly preferably 2% by mass, based on the aqueous medium.

The hydrocarbon surfactant may be added to the reaction vessel at once before initiation of the polymerization, may be added at once after initiation of the polymerization, may be added in multiple portions during the polymerization, or may be added continuously during the polymerization.

In production of the TFE polymer, the polymerization initiator used may be an organic peroxide such as a persulfate (e.g., ammonium persulfate), disuccinic acid peroxide, or diglutaric acid peroxide alone or in the form of a mixture thereof. An organic peroxide may also be used together with a reducing agent, such as sodium sulfite, to form a redox system. During the polymerization, a radical scavenger such as hydroquinone or catechol may be added, or a decomposer of the peroxide such as ammonium sulfite may be added, to adjust the radical concentration in the system.

The redox polymerization initiator is preferably a redox initiator obtained by combining an oxidizing agent and a reducing agent. Examples of the oxidizing agent include persulfates, organic peroxides, potassium permanganate, manganese triacetate, and ammonium cerium nitrate. Examples of the reducing agent include sulfites, bisulfites, bromates, diimines, and oxalic acid. Examples of the persulfates include ammonium persulfate and potassium persulfate. Examples of the sulfites include sodium sulfite and ammonium sulfite. In order to increase the decomposition rate of the initiator, the combination of the redox initiator may preferably contain a copper salt or an iron salt. An example of the copper salt is copper(II) sulfate and an example of the iron salt is iron(II) sulfate.

Examples of the redox initiator include potassium permanganate/oxalic acid, ammonium persulfate/bisulfite/iron sulfate, manganese triacetate/oxalic acid, cerium ammonium nitrate/oxalic acid, and bromate/bisulfite, and potassium permanganate/oxalic acid is preferred. In the case of using a redox initiator, either an oxidizing agent or a reducing agent may be charged into a polymerization tank in advance, followed by adding the other continuously or intermittently thereto to initiate the polymerization. For example, in the case of potassium permanganate/oxalic acid, preferably, oxalic acid is charged into a polymerization tank and potassium permanganate is continuously added thereto.

In production of the TFE polymer, a known chain transfer agent may be used. Examples thereof include saturated hydrocarbons such as methane, ethane, propane, and butane, halogenated hydrocarbons such as chloromethane, dichloromethane, and difluoroethane, alcohols such as methanol, ethanol, and isopropanol, and hydrogen. The chain transfer agent is preferably one in a gas state at a normal temperature and normal pressure.

The amount of the chain transfer agent used is usually 1 to 10,000 ppm, preferably 1 to 5,000 ppm, based on the total amount of TFE fed.

In production of the TFE polymer, a saturated hydrocarbon that is substantially inert to the reaction, that is in a liquid state under the reaction conditions, and that has 12 or more carbon atoms may be used as a dispersion stabilizer for the reaction system in an amount of 2 to 10 parts by mass based on 100 parts by mass of the aqueous medium. Ammonium carbonate, ammonium phosphate, or the like may be added as a buffer to adjust the pH during the reaction.

At completion of the polymerization for the TFE polymer, an aqueous dispersion having a solid concentration of 1.0 to 70% by mass and containing the TFE polymer with an average primary particle size of 50 to 500 nm can be obtained. The aqueous dispersion contains the hydrocarbon surfactant and the fluoropolymer. Also, the use of the hydrocarbon surfactant allows for obtaining an aqueous dispersion having particles of the TFE polymer having a fine particle size as small as 0.5 μm or smaller.

The lower limit of the solid concentration is preferably 5% by mass, more preferably 8% by mass. The upper limit thereof may be, but is not limited to, 40% by mass or 35% by mass.

The lower limit of the average primary particle size is preferably 100 nm, more preferably 150 nm. The upper limit thereof is preferably 400 nm, more preferably 350 nm.

Fine powder can be produced by coagulating the aqueous dispersion of the TFE polymer obtained by the production method of the present disclosure. The aqueous dispersion of the TFE polymer can be formed into fine powder through coagulation, washing, and drying. The resulting fine powder may be used for various applications. Coagulation of the aqueous dispersion of the TFE polymer is usually performed by diluting the aqueous dispersion obtained by polymerization of polymer latex, for example, with water to a polymer concentration of 5 to 20% by mass, optionally adjusting the pH to a neutral or alkaline, and stirring the polymer more vigorously than during the reaction in a vessel equipped with a stirrer. The coagulation may be performed under stirring while adding a water-soluble organic compound such as methanol or acetone, an inorganic salt such as potassium nitrate or ammonium carbonate, or an inorganic acid such as hydrochloric acid, sulfuric acid, or nitric acid as a coagulating agent. The coagulation may be continuously performed using a device such as an inline mixer.

From the viewpoint of productivity, the concentration of the non-agglomerated TFE polymer in the discharge water generated by the agglomeration is preferably low, more preferably less than 0.4% by mass, and particularly preferably less than 0.3% by mass.

Pigment-containing or filler-containing TFE polymer fine powder in which pigments and fillers are uniformly mixed can be obtained by adding pigments for coloring and various fillers for improving mechanical properties before or during the coagulation.

The wet powder obtained by coagulating the TFE polymer in the aqueous dispersion is usually dried by means of vacuum, high-frequency waves, hot air, or the like while keeping the wet powder in a state in which the wet powder is less fluidized, preferably in a stationary state. Friction between the powder particles especially at high temperature usually has unfavorable effects on the TFE polymer in the form of fine powder. This is because the particles made of such a TFE polymer are easily formed into fibrils even with a small shearing force and lose its original, stable particulate structure.

The drying is performed at a drying temperature of 10 to 300°C (10 to 250°C), preferably 100 to 300°C (100 to 200°C) .

The resulting fine powder of the TFE polymer is preferred for molding, and suitable applications thereof include tubes for hydraulic systems or fuel systems of aircraft or automobiles, flexible hoses for chemicals or vapors, and electric wire coating.

The aqueous dispersion of the TFE polymer is preferably mixed with a nonionic surfactant to stabilize and further concentrate the aqueous dispersion, and then further mixed with, depending on its purpose, an organic or inorganic filler to form a composition and used in a variety of applications. The composition, when applied to a metal or ceramic substrate, can provide a coating surface having non-stickiness, a low coefficient of friction, and excellent gloss, smoothness, abrasion resistance, weather resistance, and heat resistance, which is suitable for coating of rolls and cooking utensils and impregnation of glass cloth.

The aqueous dispersion of the TFE polymer may also be used to prepare an organosol of the TFE polymer. The organosol may contain the TFE polymer and an organic solvent, and examples of the organic solvent include ether-based solvents, ketone-based solvents, alcohol-based solvents, amide-based solvents, ester-based solvents, aliphatic hydrocarbon-based solvents, aromatic hydrocarbon-based solvents, and halogenated hydrocarbon-based solvents. Preferably used are N-methyl-2-pyrrolidone and dimethylacetamide. The organosol may be prepared by the method disclosed in International Publication No. WO2012/002038, for example.

The aqueous dispersion of the TFE polymer or the fine powder of the TFE polymer obtained from such an aqueous dispersion is also preferably used as a processing aid. When used as a processing aid, the aqueous dispersion or the fine powder is mixed with a host polymer, for example, to improve the melt strength of the host polymer in melt fabrication and to improve the mechanical strength, electric properties, incombustibility, anti-drop performance during combustion, and slidability of the resulting polymer.

The aqueous dispersion of the TFE polymer or the fine powder of the TFE polymer is also preferably used as a binder for batteries or used for dustproof applications.

The aqueous dispersion of the TFE polymer or the fine powder of the TFE polymer is also preferably combined with a resin other than the TFE polymer to form a processing aid before use. The aqueous dispersion or the fine powder is suitable as a material of the PTFEs disclosed in, for example, Japanese Patent Laid-Open No. 11-49912, U.S. Patent No. 5,804,654, Japanese Patent Laid-Open No. 11-29679, and Japanese Patent Laid-Open No. 2003-2980. Processing aids containing the aqueous dispersion or the fine powder are not inferior in any way to the processing aids disclosed in the publications.

The aqueous dispersion of the TFE polymer is also preferably mixed with an aqueous dispersion of a melt-fabricable fluororesin so that the components coagulate to form co-coagulated powder. The co-coagulated powder is suitable as a processing aid.

Examples of the melt-fabricable fluororesin include FEP, PFA, TFE/perfluoroallyl ether copolymers, ETFE, and ethylene/TFE/HFP copolymers (EFEP), of which FEP is preferred.

The fluorine-free resin to which the co-coagulated powder is added may be in the form of powder, pellets, or emulsion. In order to achieve sufficient mixing of the resins, the addition is preferably performed by a known method such as extrusion kneading or roll kneading under a shearing force.

The aqueous dispersion also preferably contains the melt-fabricable fluororesin. Examples of the melt-fabricable fluororesin include FEP, PFA, TFE/perfluoroallyl ether copolymers, ETFE, and EFEP. The aqueous dispersion of the TFE polymer containing the melt-fabricable fluororesin may be used as a coating material. The melt-fabricable fluororesin enables sufficient fusion of the TFE polymer particles, improving the film-formability and providing the resulting film with gloss.

Examples of the applications of the aqueous dispersion include, but are not limited to, those in which the aqueous dispersion is directly used, such as coating achieved by applying the aqueous dispersion to a substrate, drying the dispersion, and optionally sintering the workpiece; impregnation achieved by impregnating a porous support such

as nonwoven fabric or a resin molded article with the aqueous dispersion, drying the dispersion, and preferably sintering the workpiece; and casting achieved by applying the aqueous dispersion to a substrate such as glass, drying the dispersion, optionally immersing the workpiece into water to remove the substrate and to thereby provide a thin film. Examples of such applications include aqueous dispersion-type coating materials, tent membranes, conveyor belts, printed circuit boards (CCL), binders for electrodes, and water repellents for electrodes.

The aqueous dispersion of the TFE polymer is also preferably used as a dust suppression treatment agent. The dust suppression treatment agent may be used in a method for suppressing dust from a dust-generating substance by mixing the dust suppression treatment agent with the dust-generating substance and subjecting the mixture to a compression-shear action at a temperature of 20 to 200°C to fibrillate the TFE polymer, for example, methods disclosed in Japanese Patent No. 2,827,152 and Japanese Patent No. 2,538,783.

The aqueous dispersion of the TFE polymer can suitably be used for the dust suppression treatment agent composition disclosed in International Publication No. WO2007/004250, and can also suitably be used for the method of dust suppression treatment disclosed in International Publication No. WO2007/000812.

The dust suppression treatment agent is suitably used in the fields of building-products, soil stabilizers, solidifying materials, fertilizers, landfill of incineration ash and harmful substance, explosion proof equipment, cosmetics, sands for pet excretion represented by cat sand, and the like.

The aqueous dispersion of the TFE polymer is also preferably used as a material for producing TFE polymer fibers by a dispersion spinning method. The dispersion spinning method is a method in which the aqueous dispersion of the TFE polymer and an aqueous dispersion of a matrix polymer are mixed and the mixture is extruded to form an intermediate fiber structure, and then the intermediate fiber structure is fired to decompose the matrix polymer and sinter the TFE polymer particles, thereby providing TFE polymer fibers.

The surfactant described above may be used to produce a high-molecular-weight PTFE. In other words, even without using a conventional fluorine-containing surfactant, the production method of the present disclosure using the surfactant can surprisingly produce PTFE having a molecular weight equivalent to that of PTFE obtained by a production method using such a conventional fluorine-containing surfactant.

The high-molecular-weight PTFE powder obtained by polymerization has stretchability and non melt processability, and is also useful as a material for a stretched body (porous body). When the stretched body is in the form of a film (PTFE stretched film or PTFE porous film), the stretched body can be formed by stretching by a known PTFE stretching method. Stretching allows easy formation of fibrils of PTFE, resulting in a high-molecular-weight PTFE porous body (film) including nodes and fibers.

Preferably, roll-stretching a sheet-shaped or rod-shaped paste extrudate in an extruding direction can provide a uniaxially stretched film.

Further stretching in a transverse direction using a tenter, for example, can provide a biaxially stretched film.

Prebaking treatment is also preferably performed before stretching.

This PTFE stretched body is a porous body having a high porosity, and can suitably be used as a filter material for a variety of microfiltration filters such as air filters and chemical filters and a support member for polymer electrolyte films.

The PTFE stretched body is also useful as a material of products used in the fields of textiles, of medical treatment, of electrochemistry, of sealants, of air filters, of ventilation/internal pressure adjustment, of liquid filters, and of consumer goods.

The following provides examples of specific applications.

Electrochemical field

Examples of the applications in this field include prepregs for dielectric materials, EMI-shielding materials, and heat conductive materials. More specifically, examples thereof include printed circuit boards, electromagnetic interference shielding materials, insulating heat conductive materials, and insulating materials.

Sealant field

Examples of the applications in this field include gaskets, packings, pump diaphragms, pump tubes, and sealants for aircraft.

Air filter field

Examples of the applications in this field include ULPA filters (for production of semiconductors), HEPA filters (for hospitals and for production of semiconductors), cylindrical cartridge filters (for industries), bag filters (for industries), heat-resistant bag filters (for exhaust gas treatment), heat-resistant pleated filters (for exhaust gas treatment), SINBRAN

filters (for industries), catalyst filters (for exhaust gas treatment), adsorbent-attached filters (for HDD embedment), adsorbent-attached vent filters (for HDD embedment), vent filters (for HDD embedment, for example), filters for cleaners (for cleaners), general-purpose multilayer felt materials, cartridge filters for GT (for interchangeable items for GT), and cooling filters (for housings of electronic devices).

Ventilation/internal pressure adjustment field Examples of the applications in this field include materials for freeze drying such as vessels for freeze drying, ventilation materials for automobiles for electronic circuits and lamps, applications relating to vessels such as vessel caps, protective ventilation for electronic devices, including small devices such as tablet terminals and mobile phone terminals, and ventilation for medical treatment.

Liquid filter field

Examples of the applications in this field include liquid filters for semiconductors (for production of semiconductors), hydrophilic PTFE filters (for production of semiconductors), filters for chemicals (for chemical treatment), filters for pure water production lines (for production of pure water), and back-washing liquid filters (for treatment of industrial discharge water).

Consumer goods field

Examples of the applications in this field include clothes, cable guides (movable wires for motorcycles), clothes for motor cyclists, cast liners (medical supporters), filters for cleaners, bagpipes (musical instrument), cables (signal cables for guitars, etc.), and strings (for string instrument).

Textile field

Examples of the applications in this field include PTFE fibers (fiber materials), machine threads (textiles), weaving yarns (textiles), and ropes.

Medical treatment field

Examples of the applications in this field include implants (stretched articles), artificial blood vessels, catheters, general surgical operations (tissue reinforcing materials), products for head and neck (dura mater alternatives), oral health (tissue regenerative medicine), and orthopedics (bandages).

The surfactant described above may also be used to produce a low-molecular-weight PTFE.

The low-molecular-weight PTFE may be produced by polymerization, or may be produced by reducing the molecular weight of a high-molecular-weight PTFE obtained by polymerization by a known method (e.g., thermolysis, radiolysis).

A low-molecular-weight PTFE having a molecular weight of 600,000 or less (also referred to as PTFE micropowder) has excellent chemical stability and a very low surface energy, and is less likely to generate fibrils, and is therefore suitably used as an additive for improving the lubricity and the texture of the coating surface in production of plastics, inks, cosmetics, coating materials, greases, parts of office automation equipment, and toners (e.g., see Japanese Patent Laid-Open No. 10-147617).

A low-molecular-weight PTFE may be obtained by dispersing a polymerization initiator and the surfactant in an aqueous medium in the presence of a chain transfer agent, and then polymerizing TFE alone or TFE and a monomer copolymerizable with TFE.

In the case of using the low-molecular-weight PTFE obtained by the polymerization in the form of powder, the powder particles may be obtained by coagulating the aqueous dispersion.

The high-molecular-weight PTFE as used herein means a non melt-processible and fibrillatable PTFE. The low-molecular-weight PTFE as used herein means a melt-fabricable and non-fibrillatable PTFE.

The term "non melt-processible" means a feature of polymer that the melt flow rate thereof cannot be measured at a temperature higher than the crystal melting point in conformity with ASTM D 1238 and D 2116.

The presence or absence of the fibrillation ability can be determined by "paste extrusion", a representative method of molding a "high-molecular-weight PTFE powder" which is a powder of a TFE polymer. Usually, the high-molecular-weight PTFE can be paste-extruded when it is fibrillatable. When a non-fired molded product obtained by paste extrusion shows substantially no strength or elongation (for example, when it shows an elongation of 0% and is broken when stretched), it can be regarded as non-fibrillatable.

The high-molecular-weight PTFE preferably has a standard specific gravity (SSG) of 2.130 to 2.280. The standard specific gravity is determined by the water replacement method in conformity with ASTM D 792 using a sample molded in conformity with ASTM D4895-89. The "high-molecular-weight" as used herein means that the standard specific

gravity is within the above range.

The low-molecular-weight PTFE has a complex viscosity at 380°C of 1 × $10^2$ to 7 × $10^5$ Pa·s. The "low-molecular-weight" as used herein means that the complex viscosity is within the above range.

The high-molecular-weight PTFE has a complex viscosity significantly higher than that of the low-molecular-weight PTFE, and the complex viscosity thereof is difficult to measure accurately. The complex viscosity of the low-molecular-weight PTFE is measurable, but the low-molecular-weight PTFE has difficulty in providing a molded article to be used in measurement of the standard specific gravity. Thus, it is difficult to measure its accurate standard specific gravity. Accordingly, in the present disclosure, the standard specific gravity is used as an index of the molecular weight of the high-molecular-weight PTFE, while the complex viscosity is used as an index of the molecular weight of the low-molecular-weight PTFE. It should be noted that there is no known measuring method for directly specifying the molecular weight of either the high-molecular-weight PTFE or the low-molecular-weight

PTFE.

The high-molecular-weight PTFE preferably has a peak temperature of 333 to 347°C, more preferably 335 to 345°C. The low-molecular-weight PTFE preferably has a peak temperature of 322 to 333°C, more preferably 324 to 332°C. The peak temperature is the temperature corresponding to the maximum value on a heat-of-fusion curve with a temperature-increasing rate of 10°C/min using a differential scanning calorimeter (DSC) for a PTFE which has never been heated up to 300°C or higher. The peak temperature can be specified as the temperature corresponding to the maximum value appearing in the differential thermal (DTA) curve obtained by increasing the temperature of PTFE without a history of being heated to a temperature of 300°C or higher at 10°C /min using TG/DTA (simultaneous thermogravimetric analyzer).

Preferably, the high-molecular-weight PTFE has at least one endothermic peak in a range of 333 to 347°C on a heat-of-fusion curve with a temperature-increasing rate of 10°C/min using a differential scanning calorimeter (DSC) for a PTFE which has never been heated up to 300°C or higher, and has an enthalpy of fusion of 62 mJ/mg or higher at 290 to 350°C calculated from the heat-of-fusion curve.

The PTFE fine powder obtained by using the surfactant described above may also be used to produce unfired tape (green tape).

The surfactant, decomposition products and by-products of the surfactant by-produced from the surfactant, residual monomers, and the like may be collected from discharge water generated in the coagulation or the washing and/or from off gas generated in the drying, and then purified to reuse the surfactant, the decomposition products and by-products of the surfactant by-produced by the surfactant, and the residual monomers. The collection and the purification may be performed by known methods, although not limited thereto. For example, they may be performed by the methods disclosed in National Publication of International Patent Application No. 2011-520020.

(II) Melt-fabricable fluororesins (1) In the production method of the present disclosure, the polymerization for FEP is preferably performed at a polymerization temperature of 10 to 150°C and a polymerization pressure of 0.3 to 6.0 MpaG.

FEP preferably has a monomer composition ratio (% by mass) of TFE:HFP = (60 to 98):(2 to 40), more preferably (60 to 95):(5 to 40), and still more preferably (85 to 92):(8 to 15) . The FEP may be modified with a perfluoro(alkyl vinyl ether) as a third component within a range of 0.1 to 2% by mass of all monomers.

In the polymerization for FEP, the surfactant may be used within the use range of the production method of the present disclosure, and is usually added in an amount of 0.0001 to 10% by mass based on 100% by mass of the aqueous medium.

In the polymerization for FEP, the chain transfer agent used is preferably cyclohexane, methanol, ethanol, propanol, ethane, propane, butane, pentane, hexane, carbon tetrachloride, chloroform, methylene chloride, methyl chloride, or the like, and the pH buffer used is preferably ammonium carbonate, disodium hydrogen phosphate, or the like.

The aqueous dispersion of FEP obtained by the production method of the present disclosure may optionally be subjected to post-treatment such as concentration, and then the concentrate may be dried and powdered, and the powder may be melt-extruded into pellets. The aqueous medium in the FEP aqueous dispersion may optionally contain an additive such as a nonionic surfactant and may contain a water-soluble organic solvent such as a water-soluble alcohol or may be free from a water-soluble organic solvent.

The melt extrusion may be performed under any appropriately set extrusion conditions usually capable of providing pellets.

In the production method of the present disclosure, although the resulting FEP may contain an end group such as $-CF_3$ or $-CF_2H$ on at least one of the polymer main chain and a polymer side chain, it is preferred that the content of thermally unstable groups such as -COOH, - $CH_2OH$, -COF,-CF=CF-, $-CONH_2$, or $-COOCH_3$ (hereinafter, referred to as an "unstable end group") is low or absent.

The unstable end group is chemically unstable, and thus not only reduces the heat resistance of the resin but

also causes increase in the attenuation of the resulting electric wire.

The production method of the present disclosure is preferably performed in such a way that a polymer in which the total number of unstable end groups and $-CF_2H$ end groups at the completion of the polymerization is 50 or less per $1 \times 10^6$ carbon atoms is produced. The number of such groups is more preferably less than 20, still more preferably 5 or less, per $1 \times 10^6$ carbon atoms. There may also be neither unstable end groups nor $-CF_2H$ end groups, i.e. all end groups may be $-CF_3$ end groups.

The unstable end groups and the $-CF_2H$ end groups may be fluorinated and converted into the $-CF_3$ end groups and thereby stabilized. Examples of the fluorination method include, but not limited to, methods of exposing the polymer to a fluorine radical source that generates fluorine radicals under fluorination conditions. Examples of the fluorine radical source include fluorine gas, $CoF_3$, $AgF_2$, $UF_6$, $OF_2$, $N_2F_2$, $CF_3OF$, and halogen fluorides such as $IF_5$ and $ClF_3$. Of these, preferred is a method of bringing a fluorination gas and the FEP obtained by the production method of the present disclosure into direct contact with each other. In order to control the reaction, the contact is preferably performed using a diluted fluorine gas having a fluorine gas concentration of 10 to 50% by mass. The diluted fluorine gas is obtainable by diluting fluorine gas with an inert gas such as nitrogen gas or argon gas. The fluorine gas treatment may be performed at a temperature of 100 to 250°C. The treatment temperature is not limited to this range and may be appropriately set in accordance with the situation. The fluorine gas treatment is preferably performed by feeding a diluted fluorine gas into the reactor continuously or intermittently. This fluorination may be performed on dry powder after the polymerization or on melt-extruded pellets.

The FEP obtained by the production method of the present disclosure has good moldability and is less likely to cause molding defects, as well as has properties such as heat resistance, chemical resistance, solvent resistance, insulation, and electric properties.

The FEP powder may be produced by a method of drying the fluoropolymer aqueous dispersion containing the FEP obtained by the above-described production method of the present disclosure to powder the FEP.

The powder may be fluorinated. The fluorinated powder may be produced by a method of feeding a fluorine gas to the powder obtained by the above-described method for producing a powder to fluorinate the powder to obtain a fluorinated powder.

The FEP pellets may be produced by a method of pelletizing the FEP obtained by the above-described production method of the present disclosure.

The pellets may be fluorinated. The fluorinated pellets may be produced by a method of feeding a fluorine gas to the pellets obtained by the above-described method for producing pellets to fluorinate the pellets to obtain fluorinated pellets.

Thus, this FEP may be used in production of a variety of molded articles such as coating materials for electric wires, foamed electric wires, cables, and wires, tubes, films, sheets, and filaments.

(2) In the production method of the present disclosure, the polymerization for a TFE/perfluoro(alkyl vinyl ether) copolymer such as PFA or MFA and a TFE/perfluoroallyl ether copolymer is usually preferably performed at a polymerization temperature of 10 to 100°C and a polymerization pressure of 0.3 to 6.0 MpaG.

The TFE/perfluoro(alkyl vinyl ether) copolymer preferably has a monomer composition ratio (mol%) of TFE:perfluoro(alkyl vinyl ether) = (90 to 99.7):(0.3 to 10), more preferably (97 to 99):(1 to 3). The perfluoro(alkyl vinyl ether) used is preferably one represented by the formula: $CF_2=CFORf^4$, wherein $Rf^4$ is a perfluoroalkyl group having 1 to 6 carbon atoms.

The TFE/perfluoroallyl ether copolymer preferably has a monomer composition ratio (mol%) of TFE: perfluoroallyl ether = (90 to 99.7):(0.3 to 10), more preferably (97 to 99):(1 to 3). The perfluoroallyl ether used is preferably one represented by the formula: $CF_2=CFCF_2ORf^4$, wherein $Rf^4$ is a perfluoroalkyl group having 1 to 6 carbon atoms.

In the polymerization for the TFE/perfluoro(alkyl vinyl ether) copolymer and the TFE/perfluoroallyl ether copolymer, the surfactant may be used within the use range of the production method of the present disclosure, and is usually preferably added in an amount of 0.0001 to 10% by mass based on 100% by mass of the aqueous medium.

In the polymerization for the TFE/perfluoro(alkyl vinyl ether) copolymer and the TFE/perfluoroallyl ether copolymer, the chain transfer agent used is preferably cyclohexane, methanol, ethanol, propanol, propane, butane, pentane, hexane, carbon tetrachloride, chloroform, methylene chloride, methyl chloride, methane, ethane, or the like, and the pH buffer used is preferably ammonium carbonate, disodium hydrogen phosphate, or the like.

The aqueous dispersion of the TFE/perfluoro(alkyl vinyl ether) copolymer such as PFA or MFA and the TFE/perfluoroallyl ether copolymer obtained by the production method of the present disclosure may optionally be subjected to post-treatment such as concentration, and then the concentrate may be dried and powdered, and the powder may be melt-extruded into pellets. The aqueous medium in the aqueous dispersion may optionally contain an additive such as a nonionic surfactant and may contain a water-soluble organic solvent such as a water-soluble alcohol or may be free from a water-soluble organic solvent.

The melt extrusion may be performed under any appropriately set extrusion conditions usually capable of providing pellets.

In order to improve the heat resistance of the copolymer and to reinforce a chemical permeation suppression effect of a molded article, the copolymer is preferably subjected to a fluorine gas treatment.

The fluorine gas treatment is performed by bringing fluorine gas into contact with a chemical permeation suppressant. However, since the reaction with fluorine is extremely exothermic, it is preferable to dilute fluorine with an inert gas such as nitrogen. The amount of fluorine in the fluorine gas/inert gas mixture is 1 to 100% by weight, preferably 10 to 25% by weight. The treatment temperature is 150 to 250°C, preferably 200 to 250°C and the fluorine gas treatment duration is 3 to 16 hours, preferably 4 to 12 hours. The fluorine gas treatment is performed at a gas pressure in the range of 1 to 10 atm, preferably atmospheric pressure. In the case of using a reactor at atmospheric pressure, the fluorine gas/inert gas mixture may be continuously passed through the reactor. This results in conversion of unstable ends of the copolymer into $-CF_3$ ends, thermally stabilizing the copolymer.

The copolymer and the composition thereof may be molded by compression molding, transfer molding, extrusion molding, injection molding, blow molding, or the like as in the case of conventional PFA.

Such a molding technique can provide a desired molded article. Examples of the molded article include sheets, films, packings, round bars, square bars, pipes, tubes, round tanks, square tanks, tanks, wafer carriers, wafer boxes, beakers, filter housings, flowmeters, pumps, valves, cocks, connectors, nuts, electric wires, and heat-resistant electric wires.

Preferred among these are tubes, pipes, tanks, connectors, and the like to be used for a variety of chemical reaction devices, semiconductor manufacturing devices, and acidic or alkaline chemical feeding devices each requiring chemical impermeability.

To the aqueous dispersion of the TFE/perfluoro(alkyl vinyl ether) copolymer such as PFA or MFA and the TFE/perfluoroallyl ether copolymer, a nonionic surfactant may also be appropriately added, and optionally polyethersulfone, polyamide-imide, and/or polyimide, and metal powder are dissolved or dispersed in an organic solvent. Thereby, a primer composition can be obtained. This primer composition may be used for a method of applying a fluororesin to a metal surface. The method includes applying the primer composition to a metal surface, applying a melt-fabricable fluororesin composition to the resulting primer layer, and firing the melt-fabricable fluororesin composition layer together with the primer layer.

(3) In the production method of the present disclosure, the polymerization for ETFE is preferably performed at a polymerization temperature of 10 to 100°C and a polymerization pressure of 0.3 to 2.0 MPaG.

The ETFE preferably has a monomer composition ratio (mol%) of TFE:ethylene = (50 to 99):(50 to 1). The ETFE may be modified with a third monomer within a range of 0 to 20% by mass of all monomers. The composition ratio thereof is preferably TFE:ethylene:third monomer = (63 to 94):(27 to 2):(1 to 10). The third monomer is preferably perfluorobutyl ethylene, perfluorohexyl ethylene, 3,3,4,4,5,5,6,6,7,7,8,8,8-tridecafluorooct-1-ene, 2,3,3,4,4,5,5-heptafluoro-1-pentene ($CH_2=CFCF_2CF_2CF_2H$), or 2-trifluoromethyl-3,3,3-trifluoropropene ($(CF_3)_2C=CH_2$).

In the polymerization for ETFE, the surfactant may be used within the use range of the production method of the present disclosure, and is usually added in an amount of 0.0001 to 10% by mass based on 100% by mass of the aqueous medium.

In the polymerization for ETFE, the chain transfer agent used is preferably cyclohexane, methanol, ethanol, propanol, ethane, propane, butane, pentane, hexane, carbon tetrachloride, chloroform, methylene chloride, methyl chloride, or the like.

The aqueous dispersion of ETFE obtained by the production method of the present disclosure may optionally be subjected to post-treatment such as concentration, and then the concentrate may be dried and powdered, and the powder may be melt-extruded into pellets. The aqueous medium in the aqueous dispersion may optionally contain an additive such as a nonionic surfactant and may contain a water-soluble organic solvent such as a water-soluble alcohol or may be free from a water-soluble organic solvent.

The melt extrusion may be performed under any appropriately set extrusion conditions usually capable of providing pellets.

The ETFE may be extrusion-molded into a sheet. In other words, powder or pellets of ETFE in a molten state may be continuously extruded through a die and then cooled to provide a sheet-shaped molded article. The ETFE may be mixed with an additive.

Known additives may be incorporated as appropriate. Specific examples thereof include ultraviolet absorbers, photostabilizers, antioxidants, infrared absorbers, flame retarders, flame-retardant fillers, organic pigments, inorganic pigments, and dyes. From the viewpoint of excellent weather resistance, inorganic additives are preferred.

The content of the additive in the ETFE sheet is preferably 20% by mass or less, and particularly preferably 10% by mass or less, based on the total mass of the ETFE sheet.

The ETFE sheet has excellent mechanical strength and appearance, and thus can suitably be used for film materials (e.g., roof materials, ceiling materials, outer wall materials, inner wall materials, and coating materials) of film-structured buildings (e.g., sports facilities, gardening facilities, and atriums).

In addition to the film materials of film-structured buildings, the ETFE sheet is also useful for, for example,

outdoor boards (e.g., noise-blocking walls, windbreak fences, breakwater fences, roof panels of carports, shopping arcades, footpath walls, and roof materials), shatter-resistant window films, heat-resistant waterproof sheets, building materials (e.g., tent materials of warehouse tents, film materials for shading, partial roof materials for skylights, window materials alternative to glass, film materials for flame-retardant partitions, curtains, outer wall reinforcement, waterproof films, anti-smoke films, non-flammable transparent partitions, road reinforcement, interiors (e.g., lighting, wall surfaces, and blinds), exteriors (e.g., tents and signboards)), living and leisure goods (e.g., fishing rods, rackets, golf clubs, and screens), automobile materials (e.g., hoods, damping materials, and bodies), aircraft materials, shipment materials, exteriors of home appliances, tanks, vessel inner walls, filters, film materials for construction works, electronic materials (e.g., printed circuit boards, circuit boards, insulating films, and release films), surface materials for solar cell modules, mirror protection materials for solar thermal energy, and surface materials for solar water heaters.

(4) The production method of the present disclosure may be used to produce an electrolyte polymer precursor. In the production method of the present disclosure, the polymerization for the electrolyte polymer precursor is preferably performed at a polymerization temperature of 10 to 100°C and a polymerization pressure of 0.1 to 2.0 MPaG. The electrolyte polymer precursor contains a vinyl ether monomer as described below and can be converted into an ion-exchangeable polymer through a hydrolysis treatment.

An example of the vinyl ether monomer to be used for the electrolyte polymer precursor is a fluoromonomer represented by the general formula (150) :

$$CF_2{=}CF\text{-}O\text{-}(CF_2CFY^{151}\text{-}O)_n\text{-}(CFY^{152})_m\text{-}A^{151}$$

wherein $Y^{151}$ represents a fluorine atom, a chlorine atom, a $-SO_2F$ group, or a perfluoroalkyl group; the perfluoroalkyl group optionally containing ether oxygen and a $-SO_2F$ group; n represents an integer of 0 to 3; n $Y^{151}$s are the same as or different from each other; $Y^{152}$ represents a fluorine atom, a chlorine atom, or a $-SO_2F$ group; m represents an integer of 1 to 5; m $Y^{152}$s are the same as or different from each other; $A^{151}$ represents - $SO_2X^{151}$,$-COZ^{151}$, or $-POZ^{152}Z^{153}$; $X^{151}$ represents F, Cl, Br, I, $-OR^{151}$, or-$NR^{152}R^{153}$; $Z^{151}$, $Z^{152}$, and $Z^{153}$ are the same as or different from each other, and each represent $-NR^{154}R^{155}$ or $-OR^{156}$; and $R^{151}$, $R^{152}$, $R^{153}$, $R^{154}$, $R^{155}$, and $R^{156}$ are the same as or different from each other, and each represent H, ammonium, an alkali metal, or an alkyl group, aryl group, or sulfonyl-containing group optionally containing a fluorine atom. The electrolyte polymer precursor preferably has a monomer composition ratio (mol%) of TFE:vinyl ether = (50 to 99):(50 to 1), more preferably TFE:vinyl ether = (50 to 93):(50 to 7).

The electrolyte polymer precursor may be modified with a third monomer within a range of 0 to 20% by mass of all monomers. Examples of the third monomer include multifunctional monomers such as CTFE, vinylidene fluoride, perfluoroalkyl vinyl ether, and divinylbenzene.

The electrolyte polymer precursor thereby obtained may be molded into a film, followed by hydrolysis using an alkali solution and a treatment using a mineral acid, and thereby used as a polymer electrolyte film for fuel cells, electrolysis devices, redox flow batteries, and the like.

The electrolyte polymer precursor may be hydrolyzed using an alkali solution while the dispersed state thereof is maintained, thereby providing an electrolyte polymer dispersion.

This dispersion may be then heated up to 120°C or higher in a pressurized vessel and thereby dissolved in, for example, a solvent mixture of water and an alcohol, i.e., converted into a solution state.

The solution thereby obtained may be used as a binder for electrodes. Also, the solution may be combined with a variety of additives and cast to form a film, and the film may be used for antifouling films, organic actuators, or the like.

(5) TFE/VDF copolymer

In the production method of the present disclosure, the polymerization for the TFE/VDF copolymer may be performed at any polymerization temperature, for examples, 0 to 100°C. The polymerization pressure is determined as appropriate in accordance with the other polymerization conditions such as the polymerization temperature, and may be usually 0 to 9.8 MPaG.

The TFE/VDF copolymer preferably has a monomer composition ratio (mol%) of TFE:VDF = (5 to 90):(95 to 10). The TFE/VDF copolymer may be modified with a third monomer within a range of 0 to 50 mol% of all monomers. The composition ratio thereof is preferably TFE:ethylene:third monomer = (30 to 85):(10 to 69.9):(0.1 to 10).

The third monomer is preferably a monomer represented by the formula:

$$CX^{11}X^{12}{=}CX^{13}(CX^{14}X^{15})_{n11}X^{16}$$

wherein $X^{11}$ to $X^{16}$ are the same as or different from each other, and each represent H, F, or Cl; n11 represents an integer of 0 to 8, with the proviso that the third monomer is other than TFE and VDF; or a monomer represented by the formula:

$$CX^{21}X^{22}=CX^{23}\text{-}O(CX^{24}X^{25})_{n21}X^{26}$$

wherein $X^{21}$ to $X^{26}$ are the same as or different from each other, and each represent H, F, or Cl; and n21 represents an integer of 0 to 8.

The third monomer may be a fluorine-free ethylenic monomer. From the viewpoint of maintaining the heat resistance and the chemical resistance, the fluorine-free ethylenic monomer is preferably selected from ethylenic monomers having 6 or less carbon atoms. Examples thereof include ethylene, propylene, 1-butene, 2-butene, vinyl chloride, vinylidene chloride, alkyl vinyl ethers (e.g., methyl vinyl ether, ethyl vinyl ether, and propyl vinyl ether), maleic acid, itaconic acid, 3-butenoic acid, 4-pentenoic acid, vinylsulfonic acid, acrylic acid, and methacrylic acid.

In the polymerization for the TFE/VDF copolymer, the surfactant described above may be used within the use range of the production method of the present disclosure, and is usually added in an amount of 0.0001 to 5% by mass based on 100% by mass of the aqueous medium.

The TFE/VDF copolymer obtained by the polymerization may be amidated by bringing it into contact with a nitrogen compound capable of generating ammonia water, ammonia gas, or ammonia.

The TFE/VDF copolymer obtained by the above-described method may also preferably be used as a material for providing TFE/VDF copolymer fibers by a spinning-drawing method. The spinning-drawing method is a method for obtaining a TFE/VDF copolymer fiber by melt spinning a TFE/VDF copolymer, cooling and solidifying it to obtain an undrawn yarn, and then running the undrawn yarn in a heating cylinder to draw the undrawn yarn.

The TFE/VDF copolymer may be dissolved in an organic solvent to provide a solution of the TFE/VDF copolymer. Examples of the organic solvent include nitrogen-containing organic solvents such as N-methyl-2-pyrrolidone, N,N-dimethyl acetamide, and dimethyl formamide; ketone-based solvents such as acetone, methyl ethyl ketone, cyclohexanone, and methyl isobutyl ketone; ester-based solvents such as ethyl acetate and butyl acetate; ether-based solvents such as tetrahydrofuran and dioxane; and general-purpose organic solvents having a low boiling point such as solvent mixtures thereof. The solution may be used as a binder for batteries.

The aqueous dispersion of the TFE/VDF copolymer may preferably be used to coat a porous substrate formed from a polyolefin resin to provide a composite porous film. The aqueous dispersion may also preferably contain inorganic particles and/or organic particles dispersed therein and be used to coat a porous substrate to provide a composite porous film. The composite porous film thereby obtained may be used as a separator for lithium secondary batteries.

The powder of the melt-fabricable fluororesin is suitably used as a powdery coating material. When applied to a substrate, the powdery coating material made of the melt-fabricable fluororesin powder can provide a film having a smooth surface. The melt-fabricable fluororesin powder having an average particle size of 1 μm or greater and smaller than 100 μm is particularly suitable as a powdery coating material used for electrostatic coating. The melt-fabricable fluororesin powder having an average particle size of 100 μm or greater and 1,000 μm or smaller is particularly suitable as a powdery coating material used for rotational coating or rotational molding.

The melt-fabricable fluororesin powder can be produced by a method of drying the aqueous dispersion of the melt-fabricable fluororesin obtained by the above-described production method of the present disclosure to powder the melt-fabricable fluororesin. The method for producing the melt-fabricable fluororesin powder is also one aspect of the present disclosure.

(III) Fluoroelastomers

In the production method of the present disclosure, the polymerization reaction for the fluoroelastomer is initiated by charging pure water and the surfactant into a pressure-resistant reaction vessel equipped with a stirrer, deoxidizing the system, charging the monomers, increasing the temperature to a predetermined level, and adding a polymerization initiator. The pressure decreases as the reaction progresses, and additional monomers are fed continuously or intermittently to maintain the initial pressure. When the amount of the monomers fed reaches a predetermined level, feeding is stopped, and the monomers in the reaction vessel are purged and the temperature is returned to room temperature, whereby the reaction is completed. In this case, polymer latex can be continuously taken out of the reaction vessel.

In particular, in the case of producing a thermoplastic elastomer as the fluoroelastomer, it is also possible to use a method in which fluoropolymer fine particles are synthesized at a high concentration defined as described above and then diluted for further polymerization as disclosed in International Publication No. WO00/01741, whereby the final polymerization rate can be increased as compared with ordinary polymerization.

The polymerization for the fluoroelastomer may be performed under conditions appropriately selected from the viewpoints of physical properties of the target polymer and control of the polymerization rate, and is performed at a polymerization temperature of usually -20 to 200°C, preferably 5 to 150°C, and a polymerization pressure of usually 0.5 to 10 MPaG, preferably 1 to 7 MPaG. The polymerization medium preferably has a pH usually maintained at 2.5 to 13 using a pH adjuster to be described later by a known method, for example.

Examples of the monomer used in the polymerization for the fluoroelastomer include vinylidene fluoride, as well as fluorine-containing ethylenically unsaturated monomers having fluorine atoms at least as much as the carbon atoms therein and copolymerizable with vinylidene fluoride. Examples of the fluorine-containing ethylenically unsaturated monomers include trifluoropropene, pentafluoropropene, hexafluorobutene, and octafluorobutene. Of these, hexafluoropropene is particularly preferred because of the properties of the elastomer obtained when hexafluoropropene blocks the crystal growth of the polymer. Examples of the fluorine-containing ethylenically unsaturated monomers also include trifluoroethylene, TFE, and CTFE. Fluorine-containing monomers containing one or two or more chlorine and/or bromine substituents may also be used. Perfluoro(alkyl vinyl ethers) such as perfluoro(methyl vinyl ether) may also be used. TFE and HFP are preferred for producing fluoroelastomer.

The fluoroelastomer preferably has a monomer composition ratio (% by mass) of vinylidene fluoride:HFP:TFE = (20 to 70):(30 to 48):(0 to 32). The fluoroelastomer having this composition ratio exhibits good elastomeric characteristics, chemical resistance, and thermal stability.

In the polymerization for the fluoroelastomer, the surfactant may be used within the use range of the production method of the present disclosure, and is usually added in an amount of 0.0001 to 20% by mass, preferably 10% by mass or less, and more preferably 2% by mass or less, based on 100% by mass of the aqueous medium.

In the polymerization for the fluoroelastomer, the polymerization initiator used may be a known inorganic radical polymerization initiator. The radical polymerization initiator may be further activated with a reducing agent such as sulfite, bisulfite, metabisulfite, hyposulfite, thiosulfate, phosphite, or hypophosphite of sodium, potassium, or ammonium, or with an easily oxidizable metal compound such as an iron(I) salt, a copper(I) salt, or a silver salt. A preferred inorganic radical polymerization initiator is ammonium persulfate, which is more preferably used in redox systems together with ammonium persulfate and sodium bisulfite.

The concentration of the polymerization initiator added is appropriately determined in accordance with the molecular weight of the target fluoropolymer and the polymerization reaction rate, and is set to 0.0001 to 10% by mass, preferably 0.01 to 5% by mass, based on 100% by mass of the total amount of the monomers.

In the polymerization for the fluoroelastomer, a known chain transfer agent may be used, and examples thereof include hydrocarbons, esters, ethers, alcohols, ketones, chlorine compounds, and carbonates. A hydrocarbon, an ester, an ether, an alcohol, a chlorine compound, an iodine compound, or the like may be used as the thermoplastic elastomer, for example. Of these, preferred are acetone and isopropyl alcohol. From the viewpoint of reducing a reaction rate drop in polymerization for a thermoplastic elastomer, isopentane, diethyl malonate, and ethyl acetate are preferred. Diiodine compounds such as $I(CF_2)_4I$, $I(CF_2)_6I$, and $ICH_2I$ are preferred because they can iodize ends of the polymer and allow the resulting polymer to serve as a reactive polymer.

The amount of the chain transfer agent used is usually $0.5 \times 10^{-3}$ to $5 \times 10^{-3}$ mol%, preferably $1.0 \times 10^{-3}$ to $3.5 \times 10^{-3}$ mol%, based on the total amount of the monomers fed.

Paraffin wax may preferably be used as an emulsification stabilizer on the polymerization for the fluoroelastomer, for example. A phosphate, sodium hydroxide, potassium hydroxide, or the like may preferably be used as a pH adjuster in the polymerization for a thermoplastic elastomer, for example.

At completion of the polymerization, the aqueous dispersion containing the fluoroelastomer obtained by the production method of the present disclosure has a solid concentration of 1.0 to 40% by mass, an average particle size of 0.03 to 1 $\mu$m, preferably 0.05 to 0.5 $\mu$m, and a number average molecular weight of 1,000 to 2,000,000.

The aqueous dispersion of the fluoroelastomer obtained by the production method of the present disclosure may optionally be mixed with a dispersion stabilizer such as a hydrocarbon surfactant or be concentrated, for example, to form a dispersion suitable for rubber molding. The dispersion is subjected to treatments such as pH adjustment, solidification, and heating. The treatments are performed as follows.

The pH adjustment is performed such that a mineral acid such as nitric acid, sulfuric acid, hydrochloric acid, or phosphoric acid and/or a carboxylic acid or the like having 5 or less carbon atoms and having pKa = 4.2 or lower is added to adjust the pH to 2 or lower.

The solidification is performed by adding an alkaline earth metal salt. Examples of the alkaline earth metal salt include nitrates, chlorates, and acetates of calcium or magnesium.

Although the pH adjustment and the solidification may be performed in any order, the pH adjustment is preferably performed prior to performing the solidification.

These operations are followed by washing with the same volume of water as the fluoroelastomer to remove a small amount of impurities such as buffer solution and salts present in the fluoroelastomer and drying of the fluoroelastomer. The drying is usually performed at about 70 to 200°C while the air is circulated in a drying furnace at high temperature.

The fluoroelastomer may be either a partially fluorinated elastomer or a perfluoroelastomer.

Examples of the partially fluorinated elastomer include vinylidene fluoride (VdF)-based fluoroelastomers, tetrafluoroethylene (TFE)/propylene (Pr)-based fluoroelastomers, tetrafluoroethylene (TFE)/propylene/vinylidene fluoride (VdF)-based fluoroelastomers, ethylene/hexafluoropropylene (HFP)-based fluoroelastomers, ethylene/hexafluoropropylene (HFP)/vinylidene fluoride (VdF)-based fluoroelastomers, and ethylene/hexafluoropropylene (HFP)/tetrafluoroethylene (TFE)-based fluoroelastomers. Of these, the partially fluorinated elastomer is preferably at least one selected from the group consisting of vinylidene fluoride-based fluoroelastomers and tetrafluoroethylene/propylene-based fluoroelastomers.

The vinylidene fluoride-based fluoroelastomer is preferably a copolymer containing 45 to 85 mol% of vinylidene fluoride and 55 to 15 mol% of at least one monomer copolymerizable with and different from vinylidene fluoride. The vinylidene fluoride-based fluoroelastomer is more preferably a copolymer containing 50 to 80 mol% of vinylidene fluoride and 50 to 20 mol% of at least one monomer copolymerizable with and different from vinylidene fluoride.

Examples of the at least one monomer copolymerizable with and different from vinylidene fluoride include monomers such as tetrafluoroethylene (TFE), hexafluoropropylene (HFP), fluoroalkyl vinyl ethers, chlorotrifluoroethylene (CTFE), trifluoroethylene, trifluoropropylene, pentafluoropropylene, trifluorobutene, tetrafluoroisobutene, hexafluoroisobutene, vinyl fluoride, a fluoromonomer represented by the general formula (100): $CH_2=CFRf^{101}$ (wherein $Rf^{101}$ is a linear or branched fluoroalkyl group having 1 to 12 carbon atoms), a fluoromonomer represented by the general formula (170): $CH_2=CH-(CF_2)_n-X^{171}$ (wherein $X^{171}$ is H or F; and n is an integer of 3 to 10), and a monomer that provides a crosslinking site; and non-fluorinated monomers such as ethylene, propylene, and alkyl vinyl ethers. These may be used alone or in any combination thereof. Of these, preferred is at least one selected from the group consisting of TFE, HFP, fluoroalkyl vinyl ether, and CTFE. The fluoroalkyl vinyl ether is preferably a fluoromonomer represented by the general formula (160).

Specific examples of the vinylidene fluoride-based fluoroelastomers include VdF/HFP-based rubber, VdF/HFP/TFE-based rubber, VdF/CTFE-based rubber, VdF/CTFE/TFE-based rubber, rubber based on VDF and a fluoromonomer represented by the general formula (100), rubber based on VDF, a fluoromonomer represented by the general formula (100), and TFE, rubber based on VDF and perfluoro(methyl vinyl ether) (PMVE), VDF/PMVE/TFE-based rubber, and VDF/PMVE/TFE/HFP-based rubber. The rubber based on VDF and a fluoromonomer represented by the general formula (100) is preferably $VDF/CH_2=CFCF_3$-based rubber. The rubber based on VDF, a fluoromonomer represented by the formula (100), and TFE is preferably $VDF/TFE/CH_2=CFCF_3$-based rubber.

The $VDF/CH_2=CFCF_3$-based rubber is preferably a copolymer containing 40 to 99.5 mol% of VDF and 0.5 to 60 mol% of $CH_2=CFCF_3$, more preferably a copolymer containing 50 to 85 mol% of VDF and 20 to 50 mol% of $CH_2=CFCF_3$.

The tetrafluoroethylene/propylene-based fluoroelastomer is preferably a copolymer containing 45 to 70 mol% of tetrafluoroethylene, 55 to 30 mol% of propylene, and 0 to 5 mol% of a fluoromonomer that provides a crosslinking site.

The fluoroelastomer may be a perfluoroelastomer. The perfluoroelastomer is preferably at least one selected from the group consisting of perfluoroelastomers containing TFE, such as a copolymer containing TFE and a fluoromonomer represented by the general formula (160), (130), or (140) and a copolymer containing TFE, a fluoromonomer represented by the general formula (160), (130), or (140), and a monomer that provides a crosslinking site.

In the case of the TFE/PMVE copolymer, the composition ratio thereof is preferably 45 to 90/10 to 55 (mol%), more preferably 55 to 80/20 to 45, and still more preferably 55 to 70/30 to 45.

In the case of the copolymer of TFE, PMVE, and a monomer that provides a crosslinking site, the composition ratio thereof is preferably 45 to 89.9/10 to 54.9/0.01 to 4 (mol%), more preferably 55 to 77.9/20 to 49.9/0.1 to 3.5, and still more preferably 55 to 69.8/30 to 44.8/0.2 to 3.

In the case of the copolymer of TFE and a fluoromonomer represented by the general formula (160), (130), or (140) having 4 to 12 carbon atoms, the composition ratio thereof is preferably 50 to 90/10 to 50 (mol%), more preferably 60 to 88/12 to 40, and still more preferably 65 to 85/15 to 35.

In the case of the copolymer of TFE, a fluoromonomer represented by the general formula (160), (130), or (140) having 4 to 12 carbon atoms, and a monomer that provides a crosslinking site, the composition ratio thereof is preferably 50 to 89.9/10 to 49.9/0.01 to 4 (mol%), more preferably 60 to 87.9/12 to 39.9/0.1 to 3.5, and still more preferably 65 to 84.8/15 to 34.8/0.2 to 3.

When these copolymers have compositional features outside these ranges, the properties as a rubber elastic body are lost, and the properties tend to be close to those of a resin.

The perfluoroelastomer is preferably at least one selected from the group consisting of copolymers of TFE, a fluoromonomer represented by the general formula (140), and a fluoromonomer that provides a crosslinking site, copolymers of TFE and a perfluorovinyl ether represented by the general formula (140), copolymers of TFE and a fluoromonomer represented by the general formula (160), and copolymers of TFE, a fluoromonomer represented by the general formula (160), and a monomer that provides a crosslinking site.

Examples of the perfluoroelastomer further include the perfluoroelastomers disclosed in documents such as International Publication No. WO97/24381, Japanese Patent Publication No. 61-57324, Japanese Patent Publication No. 04-81608, and Japanese Patent Publication No. 05-13961.

From the viewpoint of achieving an excellent compression set at high temperature, the fluoroelastomer preferably has a glass transition temperature of -70°C or higher, more preferably -60°C or higher, and still more preferably -50°C or higher. From the viewpoint of achieving good cold resistance, the glass transition temperature is preferably

5°C or lower, more preferably 0°C or lower, and still more preferably -3°C or lower.

The glass transition temperature can be determined as follows. Specifically, using a differential scanning calorimeter (DSC822e, manufactured by Mettler-Toledo International Inc.), 10 mg of a sample is heated at a rate of 10°C/min to give a DSC curve, and the temperature is read at the midpoint of two intersections between each of the extension lines of the base lines before and after the secondary transition of the DSC curve and the tangent line at the inflection point of the DSC curve.

From the viewpoint of achieving good heat resistance, the fluoroelastomer preferably has a Mooney viscosity ML(1+20) at 170°C of 30 or higher, more preferably 40 or higher, and still more preferably 50 or higher. From the viewpoint of achieving good processability, the Mooney viscosity is preferably 150 or lower, more preferably 120 or lower, and still more preferably 110 or lower.

From the viewpoint of achieving good heat resistance, the fluoroelastomer preferably has a Mooney viscosity ML(1+20) at 140°C of 30 or higher, more preferably 40 or higher, and still more preferably 50 or higher. From the viewpoint of achieving good processability, the Mooney viscosity is preferably 180 or lower, more preferably 150 or lower, and still more preferably 110 or lower.

From the viewpoint of achieving good heat resistance, the fluoroelastomer preferably has a Mooney viscosity ML(1+10) at 100°C of 10 or higher, more preferably 20 or higher, and still more preferably 30 or higher. From the viewpoint of achieving good processability, the Mooney viscosity is preferably 120 or lower, more preferably 100 or lower, and still more preferably 80 or lower.

The Mooney viscosity can be determined using a Mooney viscometer MV2000E manufactured by Alpha Technologies Inc. at 170°C, 140°C, or 100°C in conformity with JIS K 6300.

The aqueous dispersion of the fluoroelastomer obtained by the production method of the present disclosure may be used in the form of a gum or a crumb obtained by conventionally known coagulation, drying, and any other treatment on the aqueous dispersion. The surfactant used in the production method of the present disclosure can improve the stability of the aqueous dispersion, and is more preferably used in a polymerization method in which substances insoluble in water such as an initiator, including an organic peroxide, and a chain transfer agent, including an iodine or bromine compound, are added during the polymerization defined as described above.

The gum is a small particulate mass of the fluoroelastomer. The crumb is an amorphous mass of the fluoroelastomer resulting from fusion of particles that cannot maintain the form of small particles as gum at room temperature.

The fluoroelastomer may be mixed with an additive such as a curing agent and a filler to be processed into a fluoroelastomer composition.

Examples of the curing agent include polyols, polyamines, organic peroxides, organotins, bis(aminophenol)tetraamine, and bis(thioaminophenol).

The fluoroelastomer composition is made of the above fluoroelastomer, and thus is substantially free from an emulsifier and is excellent in that it is easily crosslinked during molding.

The fluoroelastomer may be molded to form a fluoroelastomer molded body. The molding may be performed by any method such as a known method using the above-mentioned curing agent.

The fluoroelastomer molded body is suitable for seals, gaskets, electric wire coatings, hoses, tubes, laminated products, and accessories, particularly parts for semiconductor manufacturing devices and automobile parts.

As for the hydrocarbon surfactant used in the production of the fluoropolymer, for example, those described in National Publication of International Patent Application Nos. 2013-542308, 2013-542309, and 2013-542310 can be used.

The hydrocarbon surfactant may be a surfactant that has hydrophilic moiety and hydrophobic moiety in the same molecule. They may be cationic, nonionic, or anionic.

The cationic hydrocarbon surfactant usually has a positively charged hydrophilic moiety, such as an alkylated ammonium halide like an alkylated ammonium bromide, and a hydrophobic moiety, such as a long chain fatty acid.

The anionic hydrocarbon surfactant usually has a hydrophilic moiety formed of carboxylate, sulfonate, or sulfate, and a hydrophobic moiety which is a long chain hydrocarbon moiety such as an alkyl.

The nonionic hydrocarbon surfactant usually does not include a charged group and has a hydrophobic moiety which is a long chain hydrocarbon. The hydrophilic moiety of the nonionic hydrocarbon surfactant includes a water-soluble functional group, such as a chain of ethylene ether derived from polymerization with ethylene oxide.

Examples of nonionic hydrocarbon surfactant

Polyoxyethylene alkyl ethers, polyoxyethylene alkylphenyl ethers, polyoxyethylene alkyl esters, sorbitan alkyl esters, polyoxyethylene sorbitan alkyl esters, glycerol esters, and derivatives thereof.

Specific examples of polyoxyethylene alkyl ethers: polyoxyethylene lauryl ether, polyoxyethylene cetyl ether, polyoxyethylene stearyl ether, polyoxyethylene oleyl ether, polyoxyethylene behenyl ether, etc.

Specific examples of polyoxyethylene alkylphenyl ethers: polyoxyethylene nonylphenyl ether, polyoxyethylene octylphenyl ether, etc.

Specific examples of polyoxyethylene alkyl esters: polyethylene glycol monolaurate, polyethylene glycol monooleate, polyethylene glycol monostearate, etc.
Specific examples of sorbitan alkyl esters: polyoxyethylene sorbitan monolaurate, polyoxyethylene sorbitan monopalmitate, polyoxyethylene sorbitan monostearate, polyoxyethylene sorbitan monooleate, etc.
Specific examples of polyoxyethylene sorbitan alkyl esters: polyoxyethylene sorbitan monolaurate, polyoxyethylene sorbitan monopalmitate, polyoxyethylene sorbitan monostearate, etc.
Specific examples of glycerol esters: glycerol monomyristate, glycerol monostearate, glycerol monooleate, etc.
Specific examples of the derivatives: polyoxyethylene alkylamines, polyoxyethylene alkylphenyl-formaldehyde condensates, polyoxyethylene alkyl ether phosphates, etc.
The ethers and esters may have an HLB value of 10 to 18.
Examples of the nonionic hydrocarbon surfactant include the Triton (R) X series (X15, X45, X100, etc.), the Tergitol (R) 15-S series, the Tergitol (R) TMN series (TMN-6, TMN-10, TMN-100, etc.), and the Tergitol (R) L series manufactured by Dow Chemical Co., Ltd., and the Pluronic (R) series (31R1, 17R2, 10R5, 25R4 (m-22, n-23)) and the Iconol (R) TDA series (TDA-6, TDA-9, TDA-10) manufactured by BASF SE.
Examples of the anionic hydrocarbon surfactant include Versatic (R) 10 by Resolution Performance Products and the Avanel S series (S-70, S-74, etc.) by BASF SE.
Another example of the anionic hydrocarbon surfactant is an anionic surfactant represented by R-L-M, wherein R is a linear or branched alkyl group having 1 or more carbon atoms and optionally having a substituent, or a cyclic alkyl group having 3 or more carbon atoms and optionally having a substituent, and optionally contains a monovalent or divalent heterocycle or optionally forms a ring when having 3 or more carbon atoms; L is $-ArSO_3^-$, $-SO_3^-$, $-SO_4^-$, $-PO_3^-$, or $-COO^-$; M is H, a metal atom, $NR^5_4$, imidazolium optionally having a substituent, pyridinium optionally having a substituent, or phosphonium optionally having a substituent; $R^5$ is H or an organic group; and $-ArSO_3^-$ is an arylsulfonic acid salt. $R^5$ is preferably H or an organic group having 1 to 10 carbon atoms, and more preferably H or an organic group having 1 to 4 carbon atoms.
Specific examples thereof include one represented by $CH_3-(CH_2)_n-L-M$, wherein n is an integer of 6 to 17; and L and M are as described above, typified by lauric acid, lauryl sulfate (dodecyl sulfate), and the like.
A mixture of those in which R is an alkyl group having 12 to 16 carbon atoms and L-M is a sulfuric acid salt can also be used.
Another example of the anionic hydrocarbon surfactant is an anionic surfactant represented by $R^6(-L-M)_2$, wherein $R^6$ is a linear or branched alkylene group having 1 or more carbon atoms and optionally having a substituent, or a cyclic alkylene group having 3 or more carbon atoms and optionally having a substituent, and optionally contains a monovalent or divalent heterocycle or optionally forms a ring when having 3 or more carbon atoms; L is $-ArSO_3^-$, $-SO_3^-$, $-SO_4^-$, $-PO_3^-$, or $-COO^-$; M is H, a metal atom, $NR^5_4$, imidazolium optionally having a substituent, pyridinium optionally having a substituent, or phosphonium optionally having a substituent; $R^5$ is H or an organic group; and $-ArSO_3^-$ is an arylsulfonic acid salt.
Another example of the anionic hydrocarbon surfactant is an anionic surfactant represented by $R^7(-L-M)_3$, wherein $R^7$ is a linear or branched alkylidyne group having 1 or more carbon atoms and optionally having a substituent, or a cyclic alkylidyne group having 3 or more carbon atoms and optionally having a substituent, and optionally contains a monovalent or divalent heterocycle or optionally forms a ring when having 3 or more carbon atoms; L is $-ArSO_3^-$, $-SO_3^-$, $-SO_4$-, $-PO_3^-$, or$-COO^-$; M is H, a metal atom, $NR^5_4$, imidazolium optionally having a substituent, pyridinium optionally having a substituent, or phosphonium optionally having a substituent; $R^5$ is H or an organic group; and $-ArSO_3^-$ is an arylsulfonic acid salt.
$R^5$ is preferably H or an alkyl group, more preferably H or an alkyl group having 1 to 10 carbon atoms, and still more preferably H or an alkyl group having 1 to 4 carbon atoms.
The term "substituent" as used herein means a group capable of replacing another atom or group, unless otherwise noted. Examples of the "substituent" include an aliphatic group, an aromatic group, a heterocyclic group, an acyl group, an acyloxy group, an acylamino group, an aliphatic oxy group, an aromatic oxy group, a heterocyclic oxy group, an aliphatic oxycarbonyl group, an aromatic oxycarbonyl group, a heterocyclic oxycarbonyl group, a carbamoyl group, an aliphatic sulfonyl group, an aromatic sulfonyl group, a heterocyclic sulfonyl group, an aliphatic sulfonyloxy group, an aromatic sulfonyloxy group, a heterocyclic sulfonyloxy group, a sulfamoyl group, an aliphatic sulfonamide group, an aromatic sulfonamide group, a heterocyclic sulfonamide group, an amino group, an aliphatic amino group, an aromatic amino group, a heterocyclic amino group, an aliphatic oxycarbonylamino group, an aromatic oxycarbonylamino group, a heterocyclic oxycarbonylamino group, an aliphatic sulfinyl group, an aromatic sulfinyl group, an aliphatic thio group, an aromatic thio group, a hydroxy group, a cyano group, a sulfo group, a carboxy group, an aliphatic oxyamino group, an aromatic oxyamino group, a carbamoylamino group, a sulfamoyl amino group, a halogen atom, a sulfamoyl carbamoyl group, a carbamoyl sulfamoyl group, a dialiphatic oxyphosphinyl group, and a diaromatic oxyphosphinyl group.
Examples of the hydrocarbon surfactant also include a siloxane hydrocarbon surfactant. Examples of the siloxane hydrocarbon surfactant include those described in Silicone Surfactants, R.M. Hill, Marcel Dekker, Inc., ISBN:

0-8247-00104. The structure of the siloxane hydrocarbon surfactant includes defined hydrophobic moiety and hydrophilic moiety. The hydrophobic moiety contains one or more dihydrocarbyl siloxane units, where the substituents on the silicone atoms are completely hydrocarbon.

In the sense that the carbon atoms of the hydrocarbyl groups are fully substituted with hydrogen atoms where they can be substituted by halogen such as fluorine, these siloxane hydrocarbon surfactants can also be regarded as hydrocarbon surfactants, i.e. the monovalent substituents on the carbon atoms of the hydrocarbyl groups are hydrogen.

The hydrophilic moiety of the siloxane hydrocarbon surfactant may contain one or more polar moieties including ionic groups such as sulfate, sulfonate, phosphonate, phosphate ester, carboxylate, carbonate, sulfosuccinate, taurate (as the free acid, a salt or an ester), phosphine oxides, betaine, betaine copolyol, or quaternary ammonium salts. Ionic hydrophobic moieties may also contain ionically functionalized siloxane grafts.

Examples of such siloxane hydrocarbon surfactants include polydimethylsiloxane-graft-(meth)acrylic acid salts, polydimethylsiloxane-graft-polyacrylate salts, and polydimethylsiloxane-grafted quaternary amines.

The polar moieties of the hydrophilic moiety of the siloxane hydrocarbon surfactant may contain nonionic groups formed by polyethers, such as polyethylene oxide (PEO), and mixed polyethylene oxide/propylene oxide polyethers (PEO/PPO); mono- and disaccharides; and water-soluble heterocycles such as pyrrolidinone. The ratio of ethylene oxide to propylene oxide (EO/PO) may be varied in mixed polyethylene oxide/propylene oxide polyethers.

The hydrophilic moiety of the siloxane hydrocarbon surfactant may also contain a combination of ionic moiety and nonionic moiety. Such moieties include, for example, ionically end-functionalized or randomly functionalized polyether or polyol. Preferred for the practice of the present disclosure are siloxane hydrocarbon surfactants that have nonionic moieties, i.e., are nonionic siloxane hydrocarbon surfactants.

The arrangement of the hydrophobic and hydrophilic moieties of the structure of a siloxane hydrocarbon surfactant may take the form of a diblock polymer (AB), triblock polymer (ABA), wherein the "B" represents the siloxane portion of the molecule, or a multi-block polymer. Alternatively, the siloxane hydrocarbon surfactant may contain a graft polymer.

The siloxane hydrocarbon surfactants also include those disclosed in U.S. Patent No. 6,841,616.

Examples of the siloxane-based anionic hydrocarbon surfactant include Noveon (R) by Lubrizol Advanced Materials, Inc. and SilSense™ PE-100 silicone and SilSense™ CA-1 silicone available from Consumer Specialties.

Examples of the anionic hydrocarbon surfactant also include a sulfosuccinate surfactant Lankropol (R) K8300 by Akzo Nobel Surface Chemistry LLC.

Examples of the sulfosuccinate surfactant include sodium diisodecyl sulfosuccinate (Emulsogen (R) SB10 by Clariant) and sodium diisotridecyl sulfosuccinate (Polirol (R) TR/LNA by Cesapinia Chemicals).

Examples of the hydrocarbon surfactants also include PolyFox (R) surfactants by Omnova Solutions, Inc. (PolyFox™ PF-156A, PolyFox™ PF-136A, etc.).

The hydrocarbon surfactant is preferably an anionic hydrocarbon surfactant. As the anionic hydrocarbon surfactant, those described above can be employed. For example, the following hydrocarbon surfactants can be suitably employed.

Examples of the anionic hydrocarbon surfactant include a compound (α) represented by the following formula (α):

$$R^{10}\text{-COOM} \qquad (\alpha)$$

wherein $R^{10}$ is a monovalent organic group containing 1 or more carbon atoms; M is H, a metal atom, $NR^{11}_4$, imidazolium optionally having a substituent, pyridinium optionally having a substituent, or phosphonium optionally having a substituent, where $R^{11}$ is H or an organic group and may be the same as or different from each other. $R^{11}$ is preferably H or a $C_{1-10}$ organic group, and more preferably H or a $C_{1-4}$ organic group.

From the viewpoint of surfactant function, the number of carbon atoms in $R^{10}$ is preferably 2 or more, and more preferably 3 or more. From the viewpoint of water-solubility, the number of carbon atoms in $R^{10}$ is preferably 29 or less, and more preferably 23 or less.

Examples of the metal atom as M include alkali metals (Group 1) and alkaline earth metals (Group 2), and preferred is Na, K, or Li. M is preferably H, a metal atom, or $NR^{11}_4$, more preferably H, an alkali metal (Group 1), an alkaline earth metal (Group 2), or $NR^{11}_4$, still more preferably H, Na, K, Li, or $NH_4$, further preferably Na, K, or $NH_4$, particularly preferably Na or $NH_4$, and most preferably $NH_4$.

Examples of the compound (α) also include anionic surfactants represented by $R^{12}$-COOM, wherein $R^{12}$ is a linear or branched, alkyl group, alkenyl group, alkylene group, or alkenylene group having 1 or more carbon atoms and optionally having a substituent, or a cyclic alkyl group, alkenyl group, alkylene group, or alkenylene group having 3 or more carbon atoms and optionally having a substituent, each of which optionally contains an ether bond; when having 3 or more carbon atoms, $R^{12}$ optionally contains a monovalent or divalent heterocycle, or optionally forms a ring; and M is as described above.

Specific examples thereof include a compound represented by $CH_3-(CH_2)_n-COOM$, wherein n is an integer of 2 to 28, and M is as described above.

From the viewpoint of emulsion stability, the anionic hydrocarbon surfactant may be free from a carbonyl group which is not in a carboxyl group.

Preferred examples of the anionic hydrocarbon surfactant free from a carbonyl group include a compound of the following formula (A):

R-COO-M (A)

wherein R is an alkyl group, an alkenyl group, an alkylene group, or an alkenylene group, each of which optionally contains an ether bond; M is H, a metal atom, $NR^{11}_4$, imidazolium optionally having a substituent, pyridinium optionally having a substituent, or phosphonium optionally having a substituent; and $R^{11}$ is the same as or different from each other, and is H or an organic group having 1 to 10 carbon atoms.

In the formula (A), R is preferably an alkyl group or an alkenyl group, each of which optionally contains an ether group. The alkyl group or alkenyl group for R may be linear or branched. The number of carbon atoms in R may be, but is not limited to, 2 to 29, and preferably 4 to 29.

The alkyl group, alkenyl group, alkylene group, or alkenylene group for R is preferably free from a carbonyl group which is not in an ester group.

When the alkyl group is linear, the number of carbon atoms in R is preferably 3 to 29, and more preferably 5 to 23. When the alkyl group is branched, the number of carbon atoms in R is preferably 5 to 35, and more preferably 11 to 23.

When the alkenyl group is linear, the number of carbon atoms in R is preferably 2 to 29, and more preferably 9 to 23. When the alkenyl group is branched, the number of carbon atoms in R is preferably 2 to 29, more preferably 3 to 29, and still more preferably 9 to 23.

Examples of the alkyl group and alkenyl group include a methyl group, an ethyl group, an isobutyl group, a t-butyl group, and a vinyl group.

Examples of the anionic hydrocarbon surfactant include butyric acid, valeric acid, caproic acid, enanthic acid, caprylic acid, pelargonic acid, capric acid, lauric acid, myristic acid, pentadecylic acid, palmitic acid, palmitoleic acid, margaric acid, stearic acid, oleic acid, vaccenic acid, linoleic acid, (9,12,15)-linolenic acid, (6,9,12)linolenic acid, eleostearic acid, arachidic acid, 8,11-eicosadienoic acid, mead acid, arachidonic acid, behenic acid, lignoceric acid, nervonic acid, cerotic acid, montanic acid, melissic acid, crotonic acid, myristoleic acid, palmitoleic acid, sapienic acid, oleic acid, elaidic acid, vaccenic acid, gadoleic acid, eicosenoic acid, erucic acid, nervonic acid, linoleic acid, eicosadienoic acid, docosadienoic acid, linolenic acid, pinolenic acid, α-eleostearic acid, β-eleostearic acid, mead acid, dihomo-γ-linolenic acid, eicosatrienoic acid, stearidonic acid, arachidonic acid, eicosatetraenoic acid, adrenic acid, boseopentaenoic acid, eicosapentaenoic acid, osbond acid, clupanodonic acid, tetracosapentaenoic acid, docosahexaenoic acid, nisinic acid, and salts thereof.

Particularly, preferred is at least one selected from the group consisting of lauric acid, capric acid, myristic acid, pentadecylic acid, palmitic acid, and salts thereof. Lauric acid and salts thereof are still more preferred, salts of lauric acid are particularly preferred, and sodium laurate or ammonium laurate are most preferred.

Examples of the salts include, but are not limited to, those in which hydrogen of the carboxyl group is a metal atom, $NR^{11}_4$, imidazolium optionally having a substituent, pyridinium optionally having a substituent, or phosphonium optionally having a substituent as M in the formula described above.

Preferred examples of the hydrocarbon surfactant include a surfactant (hereinafter, also referred to as a surfactant (1-0)) represented by the following general formula (1-0):

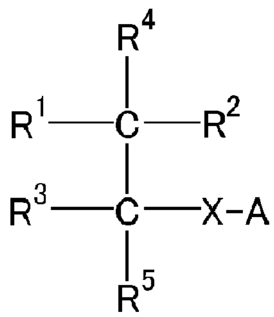

wherein $R^1$ to $R^5$ each represent H or a monovalent substituent, with the proviso that at least one of $R^1$ and $R^3$ represents a group represented by the general formula: $-Y-R^6$ and at least one of $R^2$ and $R^5$ represents a group represented by the general formula: -X-A or a group represented by the general formula: $-Y-R^6$;

X is the same or different at each occurrence and represents a divalent linking group or a bond;
A is the same or different at each occurrence and represents -COOM, $-SO_3M$, or $-OSO_3M$, wherein M is H, a metal atom, $NR^7_4$, imidazolium optionally having a substituent, pyridinium optionally having a substituent, or phosphonium optionally having a substituent, where $R^7$ is H or an organic group;
Y is the same or different at each occurrence and represents a divalent linking group selected from the group consisting of $-S(=O)_2-$, -O-, -COO-, -OCO-, $-CONR^8-$, and $-NR^8CO-$, or a bond, wherein $R^8$ is H or an organic group;
$R^6$ is the same or different at each occurrence and represents an alkyl group having 1 or more carbon atoms and optionally containing, between carbon atoms, at least one selected from the group consisting of a carbonyl group, an ester group, an amide group, and a sulfonyl group; and
any two of $R^1$ to $R^5$ optionally bind to each other to form a ring.

The surfactant (1-0) is described below.

In the formula, $R^1$ to $R^5$ each represent H or a monovalent substituent, with the proviso that at least one of $R^1$ and $R^3$ represents a group represented by the general formula: $-Y-R^6$ and at least one of $R^2$ and $R^5$ represents a group represented by the general formula: - X-A or a group represented by the general formula: $-Y-R^6$. Any two of $R^1$ to $R^5$ optionally bind to each other to form a ring.

The substituent which may be contained in the alkyl group for $R^1$ is preferably a halogen atom, a linear or branched alkyl group having 1 to 10 carbon atoms, or a cyclic alkyl group having 3 to 10 carbon atoms, or a hydroxy group, and particularly preferably a methyl group or an ethyl group.

The alkyl group for $R^1$ is preferably free from a carbonyl group.

In the alkyl group, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

The alkyl group preferably does not have any substituent.

$R^1$ is preferably a linear or branched alkyl group having 1 to 10 carbon atoms and optionally having a substituent or a cyclic alkyl group having 3 to 10 carbon atoms and optionally having a substituent, more preferably a linear or branched alkyl group having 1 to 10 carbon atoms and free from a carbonyl group or a cyclic alkyl group having 3 to 10 carbon atoms and free from a carbonyl group, still more preferably a linear or branched alkyl group having 1 to 10 carbon atoms and not having a substituent, further preferably a linear or branched alkyl group having 1 to 3 carbon atoms and not having a substituent, particularly preferably a methyl group ($-CH_3$) or an ethyl group ($-C_2H_5$), and most preferably a methyl group ($-CH_3$).

The monovalent substituent is preferably a group represented by the general formula: $-Y-R^6$, a group represented by the general formula: -X-A, -H, a $C_{1-20}$ alkyl group optionally having a substituent, $-NH_2$, $-NHR^9$ (wherein $R^9$ is an organic group), -OH, $-COOR^9$ (wherein $R^9$ is an organic group), or $-OR^9$ (wherein $R^9$ is an organic group). The alkyl group preferably has 1 to 10 carbon atoms.

$R^9$ is preferably a $C_{1-10}$ alkyl group or a $C_{1-10}$ alkylcarbonyl group, and more preferably a $C_{1-4}$ alkyl group or a $C_{1-4}$ alkylcarbonyl group.

In the formula, X is the same or different at each occurrence and represents a divalent linking group or a bond.

When $R^6$ does not contain any of a carbonyl group, an ester group, an amide group, and a sulfonyl group, X is preferably a divalent linking group containing at least one selected from the group consisting of a carbonyl group, an ester group, an amide group, and a sulfonyl group.

X is preferably a divalent linking group containing at least one bond selected from the group consisting of -CO-, $-S(=O)_2-$, -O-, -COO-, -OCO-, $-S(=O)_2-O-$, $-O-S(=O)_2-$, $-CONR^8-$, and $-NR^8CO-$, a $C_{1-10}$ alkylene group, or a bond. $R^8$ represents H or an organic group.

$R^8$ is preferably H or a $C_{1-10}$ organic group, more preferably H or a $C_{1-4}$ organic group, and still more preferably H.

In the formula, A is the same or different at each occurrence and represents -COOM, $-SO_3M$, or $-OSO_3M$, wherein M is H, a metal atom, $NR^7_4$, imidazolium optionally having a substituent, pyridinium optionally having a substituent, or phosphonium optionally having a substituent, where $R^7$ is H or an organic group; and four $R^7$s may be the same as or different from each other. In a preferred embodiment, in the general formula (1-0), A is -COOM.

$R^7$ is preferably H or a $C_{1-10}$ organic group, and more preferably H or a $C_{1-4}$ organic group.

Examples of the metal atom include alkali metals (Group 1) and alkaline earth metals (Group 2), and preferred is Na, K, or Li.

M is preferably H, a metal atom, or $NR^7_4$, more preferably H, an alkali metal (Group 1), an alkaline earth metal (Group 2), or $NR^7_4$, still more preferably H, Na, K, Li, or $NH_4$, further preferably Na, K, or $NH_4$, particularly preferably Na or $NH_4$, and most preferably $NH_4$.

In the formula, Y is the same or different at each occurrence and represents a divalent linking group selected from the group consisting of $-S(=O)_2-$, -O-, - COO-, -OCO-, $-CONR^8-$, and $-NR^8CO-$, or a bond, wherein $R^8$ is H or an

organic group.

Y is preferably a divalent linking group selected from the group consisting of a bond, -O-, -COO-, -OCO-, -$CONR^8$-, and -$NR^8CO$-, and more preferably a divalent linking group selected from the group consisting of a bond, -COO-, and -OCO-.

$R^8$ is preferably H or a $C_{1-10}$ organic group, more preferably H or a $C_{1-4}$ organic group, and still more preferably H.

In the formula, $R^6$ is the same or different at each occurrence and represents an alkyl group having 1 or more carbon atoms and optionally containing, between carbon atoms, at least one selected from the group consisting of a carbonyl group, an ester group, an amide group, and a sulfonyl group. The number of carbon atoms in the organic group of $R^6$ is preferably 2 or more, preferably 20 or less, more preferably 2 to 20, and still more preferably 2 to 10.

When the number of carbon atoms in the alkyl group for $R^6$ is 2 or more, it optionally contains, between carbon atoms, one or two or more of at least one selected from the group consisting of a carbonyl group, an ester group, an amide group, and a sulfonyl group, but the alkyl group contains no such groups at both ends. In the alkyl group for $R^6$, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

$R^6$ is preferably

a group represented by the general formula: $-R^{10}-CO-R^{11}$,
a group represented by the general formula: $-R^{10}-COO-R^{11}$,
a group represented by the general formula: $-R^{11}$,
a group represented by the general formula: $-R^{10}-NR^8CO-R^{11}$, or
a group represented by the general formula: $-R^{10}-CONR^8-R^{11}$,
wherein $R^8$ represents H or an organic group; $R^{10}$ represents an alkylene group; and $R^{11}$ represents an alkyl group optionally having a substituent.
$R^6$ is more preferably a group represented by the general formula: $-R^{10}-CO-R^{11}$.

$R^8$ is preferably H or a $C_{1-10}$ organic group, more preferably H or a $C_{1-4}$ organic group, and still more preferably H.

The alkylene group for $R^{10}$ preferably has 1 or more, and more preferably 3 or more carbon atoms, and preferably 20 or less, more preferably 12 or less, still more preferably 10 or less, and particularly preferably 8 or less carbon atoms. Further, the alkylene group for $R^{10}$ preferably has 1 to 20, more preferably 1 to 10, and still more preferably 3 to 10 carbon atoms.

The alkyl group for $R^{11}$ may have 1 to 20 carbon atoms, and preferably has 1 to 15, more preferably 1 to 12, still more preferably 1 to 10, further preferably 1 to 8, still further preferably 1 to 6, still much more preferably 1 to 3, particularly preferably 1 or 2, and most preferably 1 carbon atom. The alkyl group for $R^{11}$ preferably consists only of primary carbons, secondary carbons, and tertiary carbons, and particularly preferably consists only of primary carbons and secondary carbons. In other words, $R^{11}$ is preferably a methyl group, an ethyl group, an n-propyl group, or an isopropyl group, and most preferably a methyl group.

In a preferred embodiment, in the general formula (1-0), at least one of $R^2$ and $R^5$ is a group represented by the general formula: -X-A, and A is -COOM.

The surfactant (1-0) is preferably a compound represented by the general formula (1-1), a compound represented by the general formula (1-2), or a compound represented by the general formula (1-3), and more preferably a compound represented by the general formula (1-1) or a compound represented by the general formula (1-2) .

General Formula (1-1):

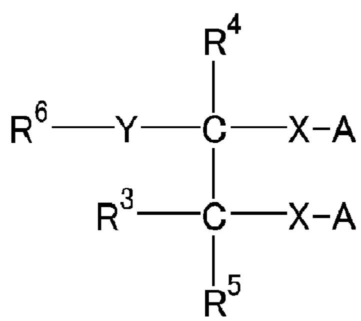

wherein $R^3$ to $R^6$, X, A, and Y are defined as described above.

General Formula (1-2):

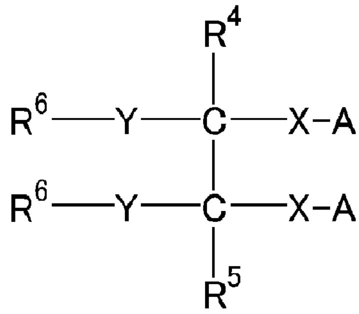

wherein $R^4$ to $R^6$, X, A, and Y are defined as described above.

General Formula (1-3):

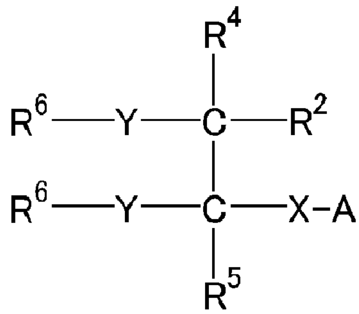

wherein $R^2$, $R^4$ to $R^6$, X, A, and Y are defined as described above.

The group represented by the general formula: -X-A is preferably

- COOM,
- $R^{12}COOM$,
- $SO_3M$,
- $OSO_3M$,
- $R^{12}SO_3M$,
- $R^{12}OSO_3M$,
- $OCO-R^{12}-COOM$,
- $OCO-R^{12}-SO_3M$,
- $OCO-R^{12}-OSO_3M$
- $COO-R^{12}-COOM$,
- $COO-R^{12}-SO_3M$,
- $COO-R^{12}-OSO_3M$,
- $CONR^8-R^{12}-COOM$,
- $CONR^8-R^{12}-SO_3M$,
- $CONR^8-R^{12}-OSO_3M$,
- $NR^8CO-R^{12}-COOM$,
- $NR^8CO-R^{12}-SO_3M$,
- $NR^8CO-R^{12}-OSO_3M$,
- $OS(=O)_2-R^{12}-COOM$,
- $OS(=O)_2-R^{12}-SO_3M$, or
- $OS(=O)_2-R^{12}-OSO_3M$,

wherein $R^8$ and M are defined as described above; and $R^{12}$ is a $C_{1-10}$ alkylene group.

In the alkylene group for $R^{12}$, 75% or less of the hydrogen atoms bonded to the carbon atoms may be replaced by halogen atoms, 50% or less thereof may be replaced by halogen atoms, or 25% or less thereof may be replaced by

halogen atoms. The alkylene group is preferably a non-halogenated alkylene group free from halogen atoms such as fluorine atoms and chlorine atoms.

The group represented by the general formula: $-Y-R^6$ is preferably

a group represented by the general formula: $-R^{10}-CO-R^{11}$,
a group represented by the general formula: $-OCO-R^{10}-CO-R^{11}$,
a group represented by the general formula: $-COO-R^{10}-CO-R^{11}$,
a group represented by the general formula: $-OCO-R^{10}-COO-R^{11}$,
a group represented by the general formula: $-COO-R^{11}$,
a group represented by the general formula: $-NR^8CO-R^{10}-CO-R^{11}$, or
a group represented by the general formula: $-CONR^8-R^{10}-NR^8CO-R^{11}$,
wherein $R^8$, $R^{10}$, and $R^{11}$ are defined as described above.

In the formula, $R^4$ and $R^5$ are each independently preferably H or a $C_{1-4}$ alkyl group.

In the alkyl group for $R^4$ and $R^5$, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

$R^3$ in the general formula (1-1) is preferably H or a $C_{1-20}$ alkyl group optionally having a substituent, more preferably H or a $C_{1-20}$ alkyl group having no substituent, and still more preferably H.

In the alkyl group for $R^3$, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

$R^2$ in the general formula (1-3) is preferably H, OH, or a $C_{1-20}$ alkyl group optionally having a substituent, more preferably H, OH, or a $C_{1-20}$ alkyl group having no substituent, and still more preferably H or OH.

In the alkyl group for $R^2$, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

An example of the hydrocarbon surfactant is a surfactant (1-0A) represented by the following formula (1-0A):

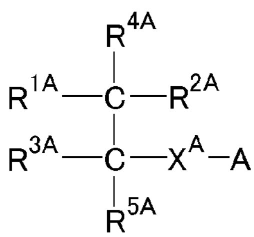

wherein $R^{1A}$ to $R^{5A}$ are each H, a monovalent hydrocarbon group optionally containing an ester group between carbon atoms, or a group represented by the general formula: $-X^A-A$, with the proviso that at least one of $R^{2A}$ and $R^{5A}$ represents a group represented by the general formula: $-X^A-A$;

$X^A$ is the same or different at each occurrence and represents a divalent hydrocarbon group or a bond;

A is the same or different at each occurrence and represents -COOM, wherein M is H, a metal atom, $NR^7_4$, imidazolium optionally having a substituent, pyridinium optionally having a substituent, or phosphonium optionally having a substituent, wherein $R^7$ is H or an organic group; and

any two of $R^{1A}$ to $R^{5A}$ optionally bind to each other to form a ring.

In $R^{1A}$ to $R^{5A}$ in the general formula (1-0A), the number of carbon atoms in the monovalent hydrocarbon group optionally containing an ester group between carbon atoms is preferably 1 to 50, and more preferably 5 to 20. Any two of $R^{1A}$ to $R^{5A}$ optionally bind to each other to form a ring. The monovalent hydrocarbon group optionally containing an ester group between carbon atoms is preferably an alkyl group.

In the formula, the number of carbon atoms in the divalent hydrocarbon group for $X^A$ is preferably 1 to 50, and more preferably 5 to 20. Examples of the divalent hydrocarbon group include an alkylene group and an alkanediyl group, and an alkylene group is preferred.

In the general formula (1-0A), any one of $R^{2A}$ and $R^{5A}$ is preferably a group represented by the general formula: $-X^A-A$, and it is more preferable that $R^{2A}$ is a group represented by the general formula: $-X^A-A$.

In the general formula (1-0A), in a preferred embodiment, $R^{2A}$ is a group represented by the general formula: $-X^A-A$ and $R^{1A}$, $R^{3A}$, $R^{4A}$, and $R^{5A}$ are each H. In this case, $X^A$ is preferably a bond or an alkylene group having 1 to 5 carbon atoms.

In the general formula (1-0A), in another preferred embodiment, $R^{2A}$ is a group represented by the general formula: $-X^A-A$; $R^{1A}$ and $R^{3A}$ are each a group represented by $-Y^A-R^6$; $Y^A$ is the same or different at each occurrence and is -COO-, -OCO-, or a bond; and $R^6$ is the same or different at each occurrence and is an alkyl group having 1 or more carbon atoms. In this case, $R^{4A}$ and $R^{5A}$ are each preferably H.

Examples of the hydrocarbon surfactant represented by the general formula (1-0A) include glutaric acid or salts thereof, adipic acid or salts thereof, pimelic acid or salts thereof, suberic acid or salts thereof, azelaic acid or salts thereof, and sebacic acid or salts thereof.

Also, the aliphatic carboxylic acid type hydrocarbon surfactant represented by the general formula (1-0A) may be a two-chain, two hydrophilic group type synthetic surfactant, and examples of the gemini type surfactant include Gemsurf (Chukyo Yushi Co., Ltd.), Gemsurf $\alpha$142 (the number of carbon atoms: 12, lauryl group), Gemsurf $\alpha$102 (the number of carbon atoms: 10), and Gemsurf $\alpha$182 (the number of carbon atoms: 14).

Examples of the hydrocarbon surfactant also include a hydrocarbon surfactant having 1 or more carbonyl groups which are not in a carboxyl group.

A hydrocarbon surfactant obtained by subjecting the hydrocarbon surfactant having 1 or more carbonyl groups which are not in a carboxyl group to a radical treatment or an oxidation treatment may also be used.

The radical treatment may be any treatment that generates radicals in the hydrocarbon surfactant having 1 or more carbonyl groups which are not in a carboxyl group, for example, a treatment in which deionized water and the hydrocarbon surfactant are added to the reactor, the reactor is sealed, the system is purged with nitrogen, the reactor is heated and pressurized, a polymerization initiator is charged, the reactor is stirred for a certain time, and then the pressure is released until the pressure in the reactor decreases to the atmospheric pressure, and the reactor is cooled. The oxidation treatment is a treatment in which an oxidizing agent is added to the hydrocarbon surfactant having 1 or more carbonyl groups which are not in a carboxyl group. Examples of the oxidizing agent include oxygen, ozone, hydrogen peroxide solution, manganese(IV) oxide, potassium permanganate, potassium dichromate, nitric acid, and sulfur dioxide. In order to accelerate the radical treatment or oxidation treatment, the radical treatment or oxidation treatment may be performed in an aqueous solution with adjusted pH. The pH of the aqueous solution for performing the radical treatment or oxidation treatment is preferably less than 7. For example, sulfuric acid, nitric acid, and hydrochloric acid can be used to adjust the pH of the aqueous solution.

The hydrocarbon surfactant having 1 or more carbonyl groups which are not in a carboxyl group is preferably a surfactant represented by the formula: R-X, wherein R is a fluorine-free organic group having 1 to 2,000 carbon atoms and having 1 or more carbonyl groups which are not in a carboxyl group; and X is $OSO_3X^1$, $-COOX^1$, or $-SO_3X^1$ where $X^1$ is H, a metal atom, $NR^1_4$, imidazolium optionally having a substituent, pyridinium optionally having a substituent, or phosphonium optionally having a substituent, and $R^1$ is H or an organic group and may be the same as or different from each other. The number of carbon atoms in R is preferably 500 or less, more preferably 100 or less, still more preferably 50 or less, and further preferably 30 or less.

The hydrocarbon surfactant is more preferably at least one selected from the group consisting of:

a surfactant (a) represented by the following formula (a):

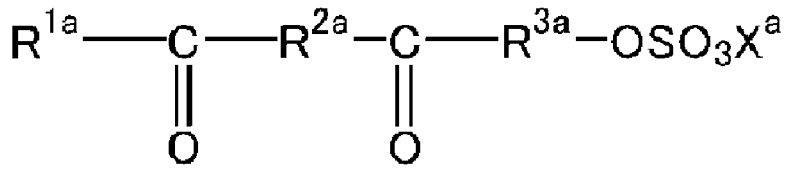

wherein $R^{1a}$ is a linear or branched alkyl group having 1 or more carbon atoms or a cyclic alkyl group having 3 or more carbon atoms, with a hydrogen atom bonded to a carbon atom therein being optionally replaced by a hydroxy group or a monovalent organic group containing an ester bond, optionally contains a carbonyl group when having 2 or more carbon atoms, and optionally contains a monovalent or divalent heterocycle or optionally forms a ring when having 3 or more carbon atoms; $R^{2a}$ and $R^{3a}$ are each independently a single bond or a divalent linking group; the total number of carbon atoms in $R^{1a}$, $R^{2a}$, and $R^{3a}$ is 6 or more; $X^a$ is H, a metal atom, $NR^{4a}_4$, imidazolium optionally having a substituent, pyridinium optionally having a substituent, or phosphonium optionally having a substituent, where $R^{4a}$ is H or an organic group and may be the same as or different from each other; and any two of $R^{1a}$, $R^{2a}$, and $R^{3a}$ optionally bind to each other to form a ring;

a surfactant (b) represented by the following formula (b):

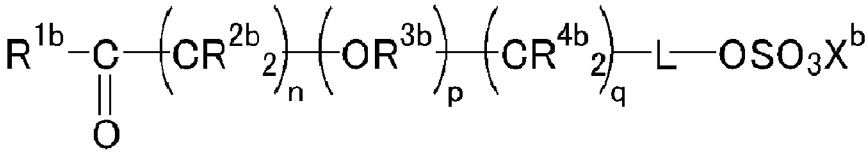

wherein $R^{1b}$ is a linear or branched alkyl group having 1 or more carbon atoms and optionally having a substituent, or a cyclic alkyl group having 3 or more carbon atoms and optionally having a substituent, and optionally contains a monovalent or divalent heterocycle or optionally forms a ring when having 3 or more carbon atoms; $R^{2b}$ and $R^{4b}$ are each independently H or a substituent; $R^{3b}$ is an alkylene group having 1 to 10 carbon atoms and optionally having a substituent; n is an integer of 1 or more; p and q are each independently an integer of 0 or more; $X^b$ is H, a metal atom, $NR^{5b}_4$, imidazolium optionally having a substituent, pyridinium optionally having a substituent, or phosphonium optionally having a substituent, where $R^{5b}$ is H or an organic group and may be the same as or different from each other; any two of $R^{1b}$, $R^{2b}$, $R^{3b}$, and $R^{4b}$ optionally bind to each other to form a ring; L is a single bond, - $CO_2$-B-*, -OCO-B-*, -CONR$^{6b}$-B-*, -NR$^{6b}$CO-B-*, or -CO- other than the carbonyl groups in -$CO_2$-B-, -OCO-B-, -CONR$^{6b}$-B-, and -NR$^6$CO-B-, where B is a single bond or an alkylene group having 1 to 10 carbon atoms and optionally having a substituent and $R^{6b}$ is H or an alkyl group having 1 to 4 carbon atoms and optionally having a substituent; and * indicates the side bonded to -$OSO_3X^b$ in the formula;
a surfactant (c) represented by the following formula (c):

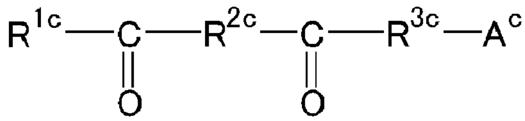

wherein $R^{1c}$ is a linear or branched alkyl group having 1 or more carbon atoms or a cyclic alkyl group having 3 or more carbon atoms, with a hydrogen atom bonded to a carbon atom therein being optionally replaced by a hydroxy group or a monovalent organic group containing an ester bond, optionally contains a carbonyl group when having 2 or more carbon atoms, and optionally contains a monovalent or divalent heterocycle or optionally forms a ring when having 3 or more carbon atoms; $R^{2c}$ and $R^{3c}$ are each independently a single bond or a divalent linking group; the total number of carbon atoms in $R^{1c}$, $R^{2c}$, and $R^{3c}$ is 5 or more; $A^c$ is -COOX$^c$ or-$SO_3X^c$, where $X^c$ is H, a metal atom, $NR^{4c}_4$, imidazolium optionally having a substituent, pyridinium optionally having a substituent, or phosphonium optionally having a substituent, and $R^{4c}$ is H or an organic group and may be the same as or different from each other; and any two of $R^{1c}$, $R^{2c}$, and $R^{3c}$ optionally bind to each other to form a ring; and
a surfactant (d) represented by the following formula (d):

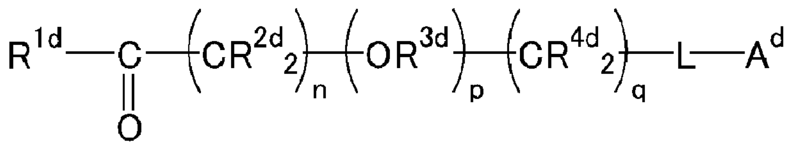

wherein $R^{1d}$ is a linear or branched alkyl group having 1 or more carbon atoms and optionally having a substituent, or a cyclic alkyl group having 3 or more carbon atoms and optionally having a substituent, and optionally contains a monovalent or divalent heterocycle or optionally forms a ring when having 3 or more carbon atoms; $R^{2d}$ and $R^{4d}$ are each independently H or a substituent; $R^{3d}$ is an alkylene group having 1 to 10 carbon atoms and optionally having a substituent; n is an integer of 1 or more; p and q are each independently an integer of 0 or more; $A^d$ is -$SO_3X^d$ or -COOX$^d$, where $X^d$ is H, a metal atom, $NR^{5d}_4$, imidazolium optionally having a substituent, pyridinium optionally having a substituent, or phosphonium optionally having a substituent, and $R^{5d}$ is H or an organic group and may be the same as or different from each other; any two of $R^{1d}$, $R^{2d}$, $R^{3d}$, and $R^{4d}$ optionally bind to each other to form a ring; L is a single bond, -$CO_2$-B-*, -OCO-B-*, -CONR$^{6d}$-B-*, -NR$^{6d}$CO-B-*, or -CO- other than the carbonyl groups in -$CO_2$-B-, -OCO-B-, -CONR$^{6d}$-B-, and -NR$^{6d}$CO-B-, where B is a single bond or an alkylene group having 1 to 10 carbon atoms and optionally having a substituent and $R^{6d}$ is H or an alkyl group having 1 to 4 carbon atoms and optionally having a substituent; and * indicates the side bonded to $A^d$ in the formula.

The surfactant (a) is described below.
In the formula (a), $R^{1a}$ is a linear or branched alkyl group having 1 or more carbon atoms or a cyclic alkyl group having 3 or more carbon atoms.

When having 3 or more carbon atoms, the alkyl group optionally contains a carbonyl group (-C(=O)-) between two carbon atoms. When having 2 or more carbon atoms, the alkyl group optionally contains the carbonyl group at an end of the alkyl group. In other words, acyl groups such as an acetyl group represented by $CH_3$-C(=O)- are also included in the alkyl group.

When having 3 or more carbon atoms, the alkyl group optionally contains a monovalent or divalent heterocycle, or optionally forms a ring. The heterocycle is preferably an unsaturated heterocycle, more preferably an oxygen-containing unsaturated heterocycle, and examples thereof include a furan ring. In $R^{1a}$, a divalent heterocycle may be present between two carbon atoms, or a divalent heterocycle may be present at an end and bind to -C(=O)-, or a monovalent heterocycle may be present at an end of the alkyl group.

The "number of carbon atoms" in the alkyl group as used herein includes the number of carbon atoms constituting the carbonyl groups and the number of carbon atoms constituting the heterocycles. For example, the number of carbon atoms in the group represented by $CH_3$-C(=O)-$CH_2$- is 3, the number of carbon atoms in the group represented by $CH_3$-C(=O)-$C_2H_4$-C(=O)-$C_2H_4$- is 7, and the number of carbon atoms in the group represented by $CH_3$-C(=O)- is 2.

In the alkyl group, a hydrogen atom bonded to a carbon atom may be replaced by a functional group such as a hydroxy group (-OH) or a monovalent organic group containing an ester bond. Still, it is preferably not replaced by any functional group.

An example of the monovalent organic group containing an ester bond is a group represented by the formula: -O-C(=O)-$R^{101a}$, wherein $R^{101a}$ is an alkyl group.

In the alkyl group, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

In the formula, $R^{2a}$ and $R^{3a}$ are each independently a single bond or a divalent linking group.

Preferably, $R^{2a}$ and $R^{3a}$ are each independently a single bond, or a linear or branched alkylene group having 1 or more carbon atoms, or a cyclic alkylene group having 3 or more carbon atoms.

The alkylene group constituting $R^{2a}$ and $R^{3a}$ is preferably free from a carbonyl group.

In the alkylene group, a hydrogen atom bonded to a carbon atom may be replaced by a functional group such as a hydroxy group (-OH) or a monovalent organic group containing an ester bond. Still, it is preferably not replaced by any functional group.

An example of the monovalent organic group containing an ester bond is a group represented by the formula: -O-C(=O)-$R^{102a}$, wherein $R^{102a}$ is an alkyl group.

In the alkylene group, 75% or less of the hydrogen atoms bonded to the carbon atoms may be replaced by halogen atoms, 50% or less thereof may be replaced by halogen atoms, or 25% or less thereof may be replaced by halogen atoms. The alkylene group is preferably a non-halogenated alkylene group free from halogen atoms such as fluorine atoms and chlorine atoms.

The total number of carbon atoms in $R^{1a}$, $R^{2a}$, and $R^{3a}$ is 6 or more. The total number of carbon atoms is preferably 8 or more, more preferably 9 or more, and still more preferably 10 or more, and preferably 20 or less, more preferably 18 or less, and still more preferably 15 or less.

Any two of $R^{1a}$, $R^{2a}$, and $R^{3a}$ optionally bind to each other to form a ring.

In the formula (a), $X^a$ is H, a metal atom, $NR^{4a}_4$, imidazolium optionally having a substituent, pyridinium optionally having a substituent, or phosphonium optionally having a substituent, and $R^{4a}$ is H or an organic group. Four $R^{4a}$s may be the same as or different from each other. $R^{4a}$ is preferably H or an organic group having 1 to 10 carbon atoms, and more preferably H or an organic group having 1 to 4 carbon atoms. Examples of the metal atom include monovalent and divalent metal atoms, alkali metals (Group 1), and alkaline earth metals

(Group 2), and preferred is Na, K, or Li. $X^a$ is preferably H, an alkali metal (Group 1), an alkaline earth metal (Group 2), or $NR^{4a}_4$, more preferably H, Na, K, Li, or $NH_4$ because they are easily dissolved in water, still more preferably Na, K, or $NH_4$ because they are more easily dissolved in water, particularly preferably Na or $NH_4$, and most preferably $NH_4$ because it can be easily removed. When $X^a$ is $NH_4$, the solubility of the surfactant in an aqueous medium is excellent, and the metal component is unlikely to remain in PTFE or the final product.

$R^{1a}$ is preferably a linear or branched alkyl group having 1 to 8 carbon atoms and free from a carbonyl group, a cyclic alkyl group having 3 to 8 carbon atoms and free from a carbonyl group, a linear or branched alkyl group having 2 to 45 carbon atoms and containing 1 to 10 carbonyl groups, a cyclic alkyl group having 3 to 45 carbon atoms and containing a carbonyl group, or an alkyl group having 3 to 45 carbon atoms and containing a monovalent or divalent heterocycle.

$R^{1a}$ is more preferably a group represented by the following formula:

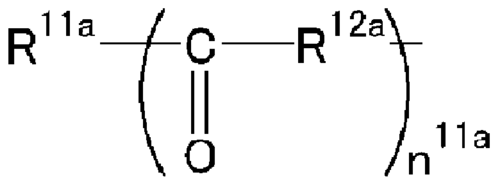

wherein $n^{11a}$ is an integer of 0 to 10; $R^{11a}$ is a linear or branched alkyl group having 1 to 5 carbon atoms or a cyclic alkyl group having 3 to 5 carbon atoms; $R^{12a}$ is an alkylene group having 0 to 3 carbon atoms; and when $n^{11a}$ is an integer of 2 to 10, each $R^{12a}$ may be the same or different.

$n^{11a}$ is preferably an integer of 0 to 5, more preferably an integer of 0 to 3, and still more preferably an integer of 1 to 3.

The alkyl group for $R^{11a}$ is preferably free from a carbonyl group.

In the alkyl group for $R^{11a}$, a hydrogen atom bonded to a carbon atom may be replaced by a functional group such as a hydroxy group (-OH) or a monovalent organic group containing an ester bond. Still, it is preferably not replaced by any functional group.

An example of the monovalent organic group containing an ester bond is a group represented by the formula: $-O-C(=O)-R^{103a}$, wherein $R^{103a}$ is an alkyl group.

In the alkyl group for $R^{11a}$, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

$R^{12a}$ is an alkylene group having 0 to 3 carbon atoms. The alkylene group preferably has 1 to 3 carbon atoms.

The alkylene group for $R^{12a}$ may be either linear or branched.

The alkylene group for $R^{12a}$ is preferably free from a carbonyl group. $R^{12a}$ is more preferably an ethylene group ($-C_2H_4-$) or a propylene group ($-C_3H_6-$).

In the alkylene group for $R^{12a}$, a hydrogen atom bonded to a carbon atom may be replaced by a functional group such as a hydroxy group (-OH) or a monovalent organic group containing an ester bond. Still, it is preferably not replaced by any functional group.

An example of the monovalent organic group containing an ester bond is a group represented by the formula: $-O-C(=O)-R^{104a}$, wherein $R^{104a}$ is an alkyl group.

In the alkylene group for $R^{12a}$, 75% or less of the hydrogen atoms bonded to the carbon atoms may be replaced by halogen atoms, 50% or less thereof may be replaced by halogen atoms, or 25% or less thereof may be replaced by halogen atoms. The alkylene group is preferably a non-halogenated alkylene group free from halogen atoms such as fluorine atoms and chlorine atoms.

$R^{2a}$ and $R^{3a}$ are preferably each independently an alkylene group having 1 or more carbon atoms and free from a carbonyl group, more preferably an alkylene group having 1 to 3 carbon atoms and free from a carbonyl group, and still more preferably an ethylene group ($-C_2H_4-$) or a propylene group ($-C_3H_6-$).

Examples of the surfactant (a) include the following surfactants. In each formula, $X^a$ is as described above.

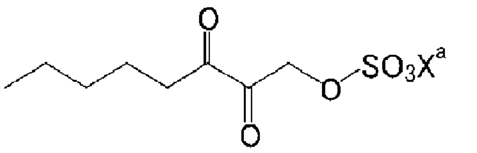

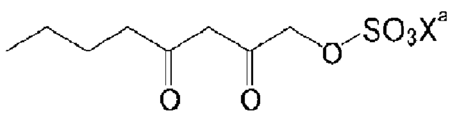

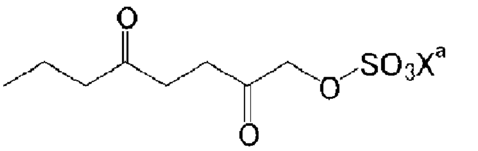

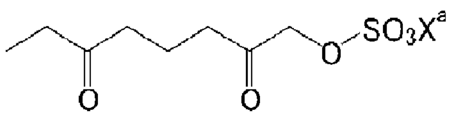

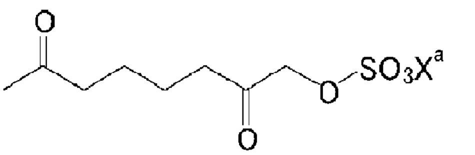

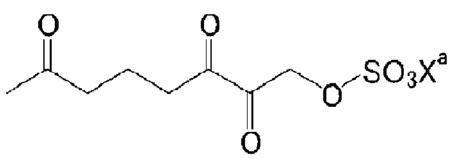

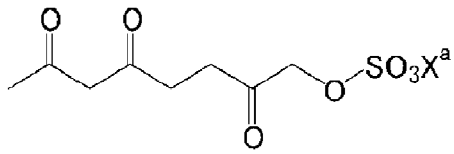

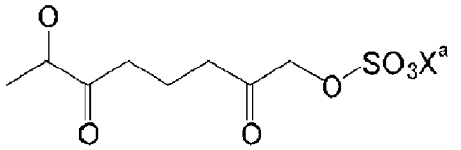

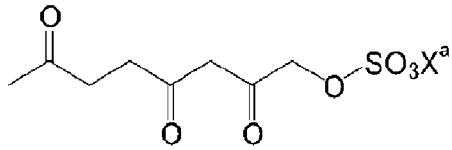

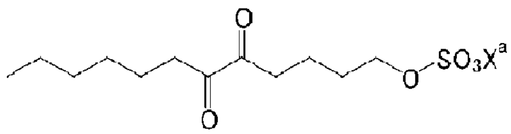

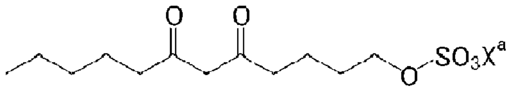

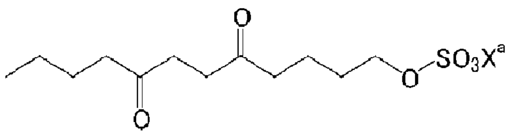

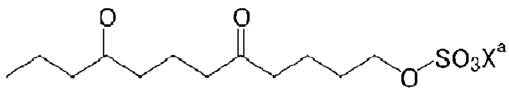

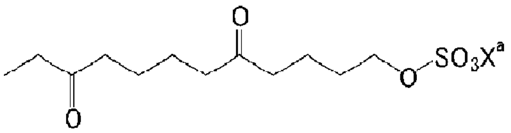

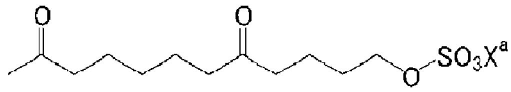

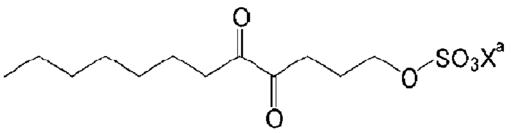

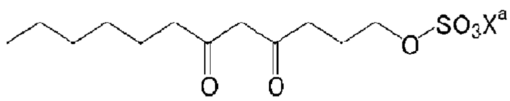

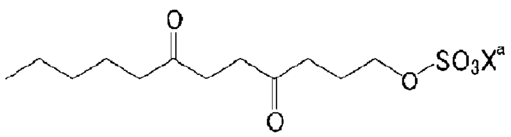

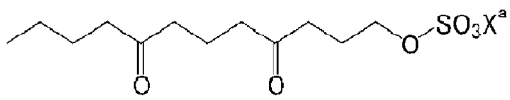

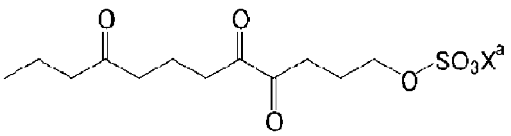

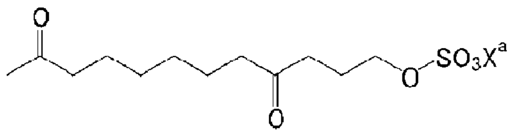

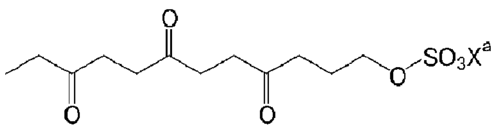

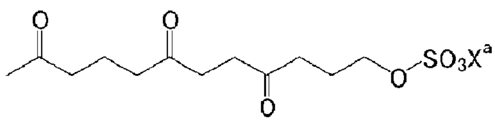

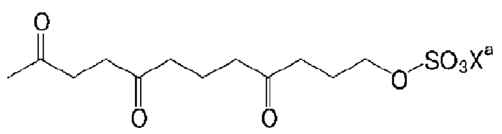

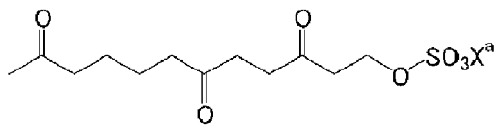

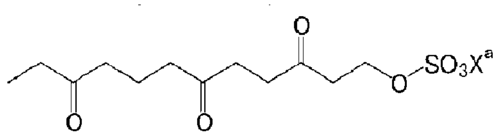

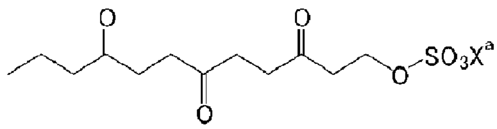

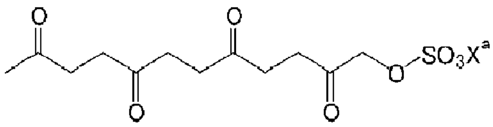

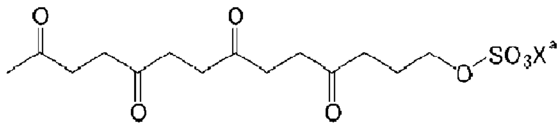

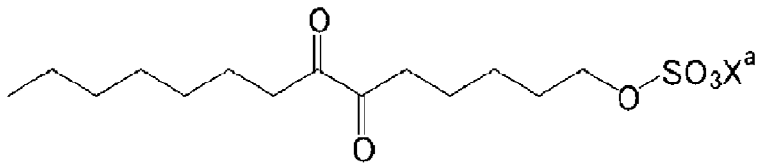

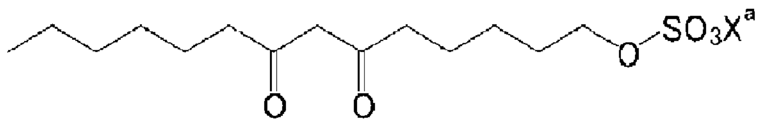

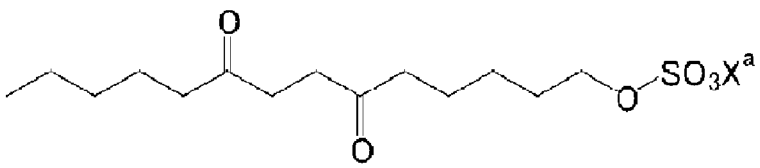

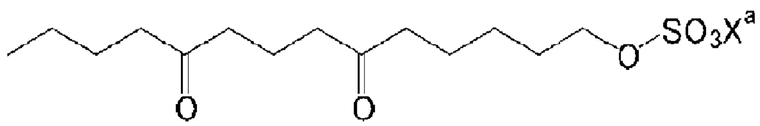

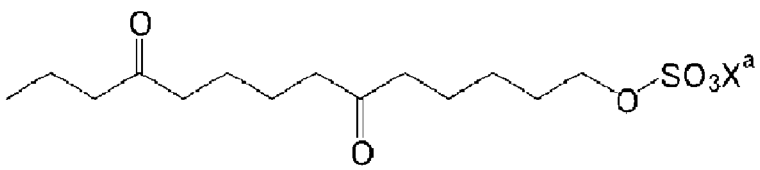

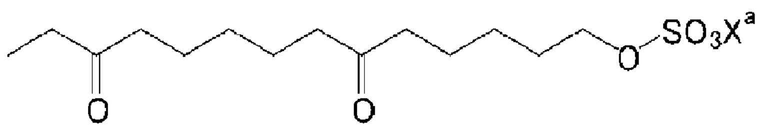

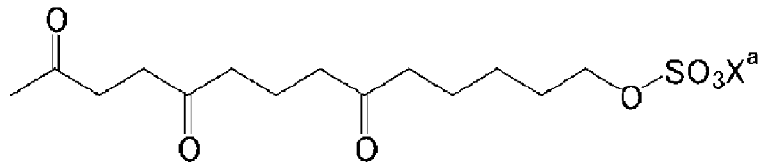

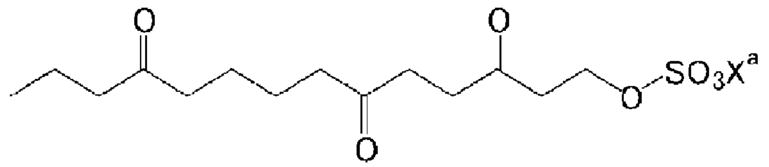

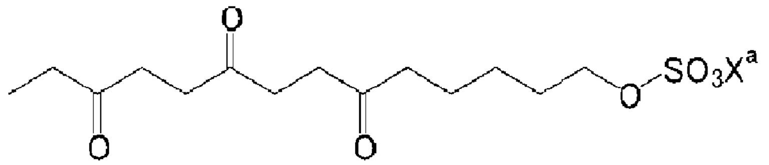

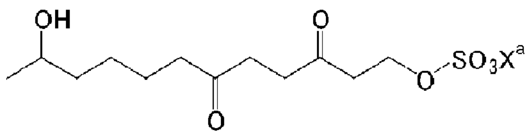

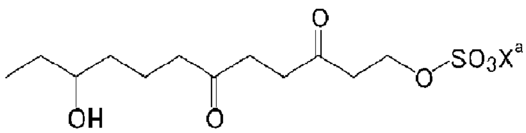

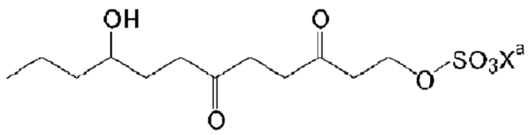

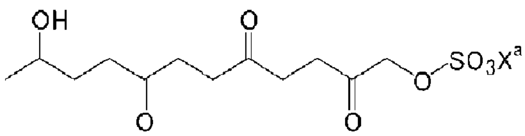

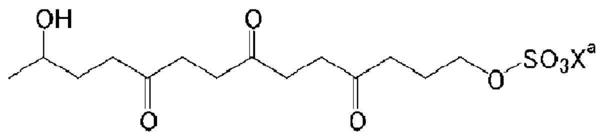

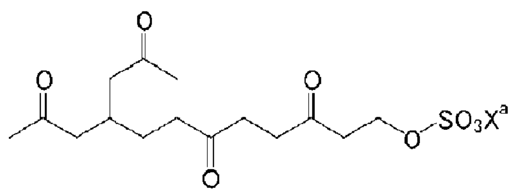

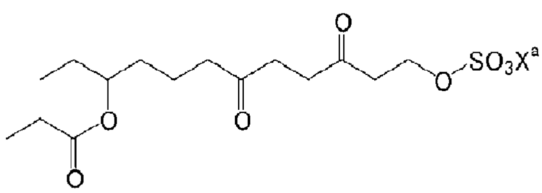

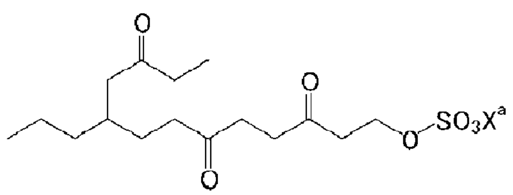

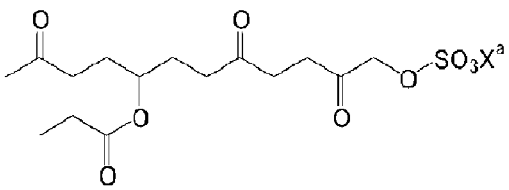

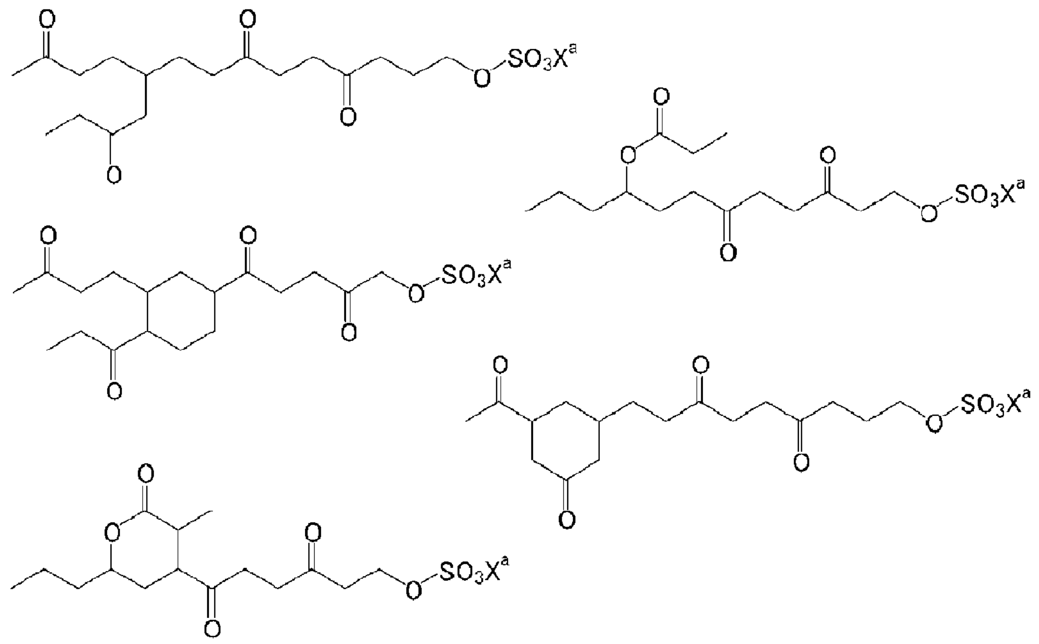

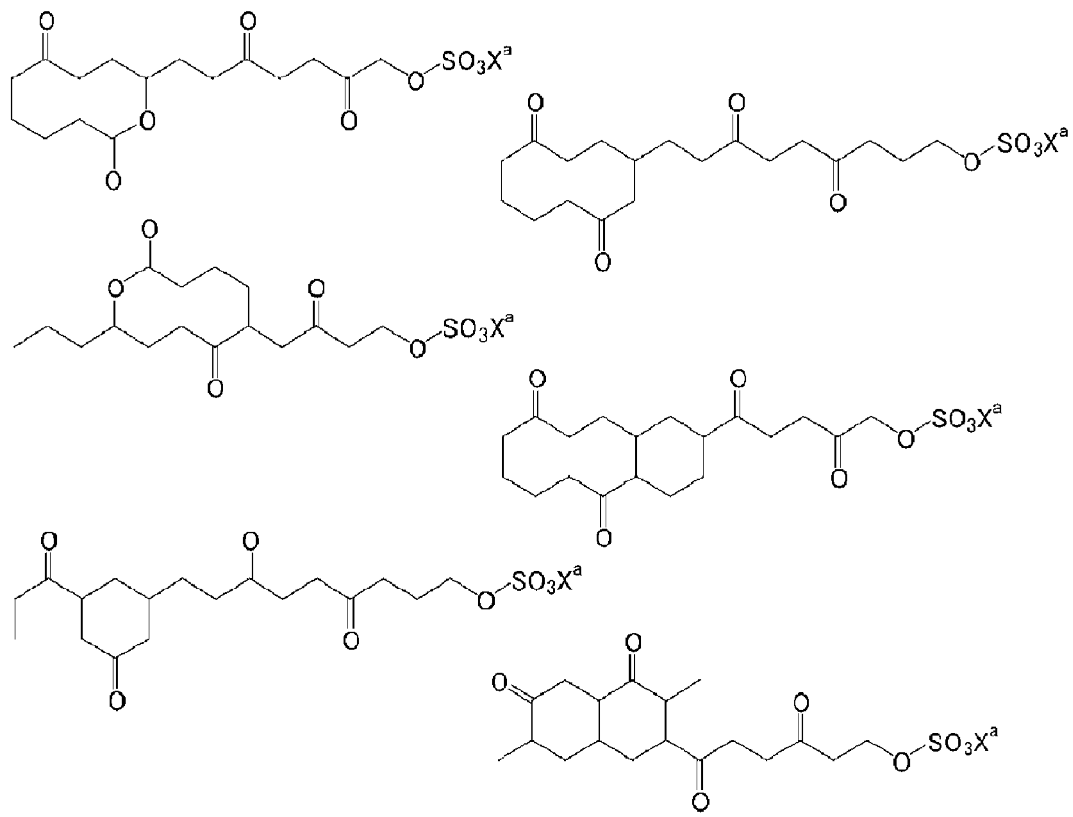

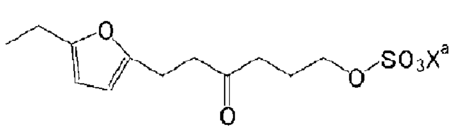

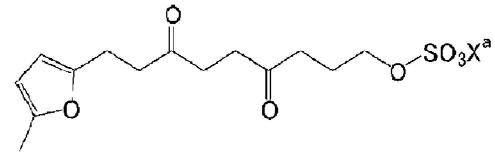

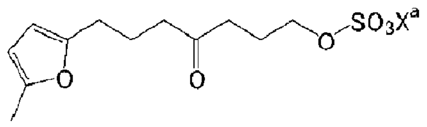

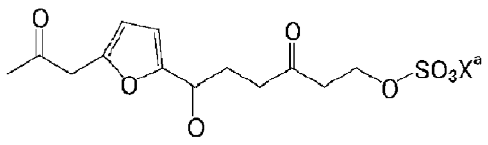

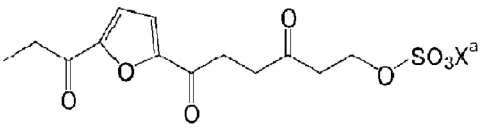

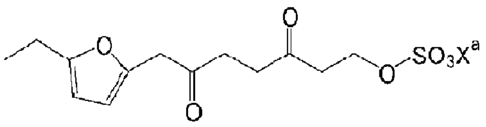

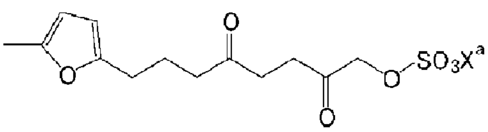

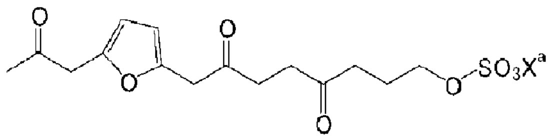

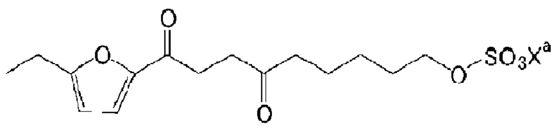

Next, the surfactant (b) is described below.

In the formula (b), $R^{1b}$ is a linear or branched alkyl group having 1 or more carbon atoms and optionally having a substituent or a cyclic alkyl group having 3 or more carbon atoms and optionally having a substituent.

When having 3 or more carbon atoms, the alkyl group optionally contains a monovalent or divalent heterocycle, or optionally forms a ring. The heterocycle is preferably an unsaturated heterocycle, more preferably an oxygen-containing unsaturated heterocycle, and examples thereof include a furan ring. In $R^{1b}$, a divalent heterocycle may be present between two carbon atoms, or a divalent heterocycle may be present at an end and bind to -C(=O)-, or a monovalent heterocycle may be present at an end of the alkyl group.

The "number of carbon atoms" in the alkyl group as used herein includes the number of carbon atoms constituting the heterocycles.

The substituent which may be contained in the alkyl group for $R^{1b}$ is preferably a halogen atom, a linear or branched alkyl group having 1 to 10 carbon atoms, or a cyclic alkyl group having 3 to 10 carbon atoms, or a hydroxy group, and particularly preferably a methyl group or an ethyl group.

The alkyl group for $R^{1b}$ is preferably free from a carbonyl group.

In the alkyl group, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

The alkyl group preferably does not have any substituent.

$R^{1b}$ is preferably a linear or branched alkyl group having 1 to 10 carbon atoms and optionally having a substituent or a cyclic alkyl group having 3 to 10 carbon atoms and optionally having a substituent, more preferably a linear or branched alkyl group having 1 to 10 carbon atoms and free from a carbonyl group or a cyclic alkyl group having 3 to 10 carbon atoms and free from a carbonyl group, still more preferably a linear or branched alkyl group having 1 to 10 carbon atoms and not having a substituent, further preferably a linear or branched alkyl group having 1 to 3 carbon atoms and not having a substituent, particularly preferably a methyl group ($-CH_3$) or an ethyl group ($-C_2H_5$), and most preferably a methyl group ($-CH_3$) .

In the formula (b), $R^{2b}$ and $R^{4b}$ are each independently H or a substituent. A plurality of $R^{2b}$s and $R^{4b}$s may be the same as or different from each other.

The substituent for each of $R^{2b}$ and $R^{4b}$ is preferably a halogen atom, a linear or branched alkyl group having 1 to 10 carbon atoms, or a cyclic alkyl group having 3 to 10 carbon atoms, or a hydroxy group, and particularly preferably a methyl group or an ethyl group.

The alkyl group for each of $R^{2b}$ and $R^{4b}$ is preferably free from a carbonyl group. In the alkyl group, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

The alkyl group preferably does not have any substituent.

The alkyl group for each of $R^{2b}$ and $R^{4b}$ is preferably a linear or branched alkyl group having 1 to 10 carbon atoms and free from a carbonyl group or a cyclic alkyl group having 3 to 10 carbon atoms and free from a carbonyl group, more preferably a linear or branched alkyl group having 1 to 10 carbon atoms and free from a carbonyl group, still more preferably a linear or branched alkyl group having 1 to 3 carbon atoms and not having a substituent, and particularly preferably a methyl group ($-CH_3$) or an ethyl group ($-C_2H_5$) .

$R^{2b}$ and $R^{4b}$ are preferably each independently H or a linear or branched alkyl group having 1 to 10 carbon atoms and free from a carbonyl group, more preferably H or a linear or branched alkyl group having 1 to 3 carbon atoms and not having a substituent, still more preferably H, a methyl group ($-CH_3$), or an ethyl group ($-C_2H_5$), and particularly preferably H.

In the formula (b), $R^{3b}$ is an alkylene group having 1 to 10 carbon atoms and optionally having a substituent. When a plurality of $R^{3b}$s are present, they may be the same or different.

The alkylene group is preferably free from a carbonyl group.

In the alkylene group, 75% or less of the hydrogen atoms bonded to the carbon atoms may be replaced by halogen atoms, 50% or less thereof may be replaced by halogen atoms, or 25% or less thereof may be replaced by halogen atoms. The alkylene group is preferably a non-halogenated alkyl group free from halogen atoms such as fluorine atoms and chlorine atoms.

The alkylene group preferably does not have any substituent.

The alkylene group is preferably a linear or branched alkylene group having 1 to 10 carbon atoms and optionally having a substituent or a cyclic alkylene group having 3 to 10 carbon atoms and optionally having a substituent, preferably a linear or branched alkylene group having 1 to 10 carbon atoms and free from a carbonyl group or a cyclic alkylene group having 3 to 10 carbon atoms and free from a carbonyl group, more preferably a linear or branched alkylene group having 1 to 10 carbon atoms and not having a substituent, and still more preferably a methylene group ($-CH_2-$), an ethylene group ($-C_2H_4-$), an isopropylene group ($-CH(CH_3)CH_2-$), or a propylene group ($-C_3H_6-$) .

Any two of $R^{1b}$, $R^{2b}$, $R^{3b}$, and $R^{4b}$ optionally bind to each other to form a ring, but it is preferable not to form a ring.

In the formula (b), n is an integer of 1 or more. n is preferably an integer of 1 to 40, more preferably an integer of 1 to 30, still more preferably an integer of 5 to 25, and particularly preferably an integer of 5 to 9 or 11 to 25.

In the formula (b), p and q are each independently an integer of 0 or more. p is preferably an integer of 0 to 10, and more preferably 0 or 1. q is preferably an integer of 0 to 10, and more preferably an integer of 0 to 5.

The sum of n, p, and q is preferably an integer of 5 or more. The sum of n, p, and q is more preferably an integer of 8 or more. The sum of n, p, and q is also preferably an integer of 60 or less, more preferably an integer of 50 or less, and still more preferably an integer of 40 or less.

In the formula (b), $X^b$ is H, a metal atom, $NR^{5b}{}_4$, imidazolium optionally having a substituent, pyridinium optionally having a substituent, or phosphonium optionally having a substituent, and $R^{5b}$ is H or an organic group. Four $R^{5b}$s may be the same as or different from each other. $R^{5b}$ is preferably H or an organic group having 1 to 10 carbon atoms, and more preferably H or an organic group having 1 to 4 carbon atoms. Examples of the metal atom include monovalent and divalent metal atoms, alkali metals (Group 1), and alkaline earth metals (Group 2), and preferred is Na, K, or Li. $X^b$ may be a metal atom or $NR^{5b}{}_4$, wherein $R^{5b}$ is defined as described above.

$X^b$ is preferably H, an alkali metal (Group 1), an alkaline earth metal (Group 2), or $NR^{5b}{}_4$, more preferably H, Na, K, Li, or $NH_4$ because they are easily dissolved in water, still more preferably Na, K, or $NH_4$ because they are more easily dissolved in water, particularly preferably Na or $NH_4$, and most preferably $NH_4$ because it can be easily removed. When $X^b$ is $NH_4$, the solubility of the surfactant in an aqueous medium is excellent, and the metal component is unlikely to remain in PTFE or the final product.

In the formula (b), L is a single bond, $-CO_2-B-*$, $-OCO-B-*$, $-CONR^{6b}-B-*$, $-NR^{6b}CO-B-*$, or -CO- other than the carbonyl groups in $-CO_2-B-$, $-OCO-B-$, $-CONR^{6b}-B-$, and$-NR^6CO-B-$, where B is a single bond or an alkylene group having 1 to 10 carbon atoms and optionally having a substituent and $R^{6b}$ is H or an alkyl group having 1 to 4 carbon atoms and optionally having a substituent. The alkylene group more preferably has 1 to 5 carbon atoms. $R^6$ is more preferably H or a methyl group. * indicates the side bonded to $-OSO_3X^b$ in the formula.

L is preferably a single bond.

The surfactant (b) is preferably a compound represented by the following formula:

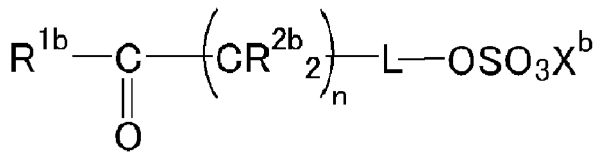

wherein $R^{1b}$, $R^{2b}$, L, n, and $X^b$ are defined as described above.

The surfactant (b) preferably has a $^1$H-NMR spectrum in which all peak intensities observed in a chemical shift range of 2.0 to 5.0 ppm give an integral value of 10% or higher.

The surfactant (b) preferably has a $^1$H-NMR spectrum in which all peak intensities observed in a chemical shift range of 2.0 to 5.0 ppm give an integral value within the above range. In this case, the surfactant preferably has a ketone structure in the molecule.

The integral value of the surfactant (b) is more preferably 15 or more, and preferably 95 or less, more preferably 80 or less, and still more preferably 70 or less.

The integral value is determined using a heavy water solvent at room temperature. The heavy water content is adjusted to 4.79 ppm.

Examples of the surfactant (b) include

$CH_3C(O)CH_2CH_2CH_2CH_2CH_2CH_2CH_2CH_2CH_2OSO_3Na$,
$CH_3C(O)CH_2CH_2CH_2CH_2CH_2CH_2CH_2CH_2OSO_3Na$,
$CH_3C(O)CH_2CH_2CH_2CH_2CH_2CH_2CH_2OSO_3Na$,
$CH_3C (O) CH_2CH_2CH_2CH_2CH_2CH_2OSO_3Na$,
$CH_3C (O) CH_2CH_2CH_2CH_2CH_2OSO_3Na$,
$CH_3C(O)CH_2CH_2CH_2CH_2OSO_3Na$,
$(CH_3)_3CC(O)CH_2CH_2CH_2CH_2CH_2CH_2CH_2CH_2CH_2OSO_3Na$,
$(CH_3)_2CHC(O)CH_2CH_2CH_2CH_2CH_2CH_2CH_2CH_2CH_2OSO_3Na$,
$(CH_2)_5CHC(O)CH_2CH_2CH_2CH_2CH_2CH_2CH_2CH_2CH_2OSO_3Na$,
$CH_3CH_2C (O) CH_2CH_2CH_2CH_2CH_2CH_2CH_2CH_2OSO_3Na$,
$CH_3CH_2CH_2C (O) CH_2CH_2CH_2CH_2CH_2CH_2CH_2OSO_3Na$,
$CH_3CH_2CH_2CH_2C(O)CH_2CH_2CH_2CH_2CH_2CH_2OSO_3Na$,
$CH_3CH_2CH_2CH_2CH_2C (O) CH_2CH_2CH_2CH_2CH_2OSO_3Na$,
$CH_3CH_2CH_2CH_2CH_2CH_2C (O) CH_2CH_2CH_2CH_2OSO_3Na$,
$CH_3CH_2CH_2CH_2CH_2CH_2CH_2C(O)CH_2CH_2CH_2OSO_3Na$,
$CH_3CH_2CH_2CH_2CH_2CH_2CH_2CH_2C (O) CH_2CH_2OSO_3Na$,
$CH_3CH_2CH_2CH_2CH_2CH_2CH_2CH_2CH_2C (O) CH_2OSO_3Na$,
$CH_3C (O) CH_2CH_2CH_2CH_2CH_2CH_2CH_2CH_2CH_2OCH_2CH_2OSO_3Na$,
$CH_3C(O)CH_2CH_2CH_2CH_2CH_2CH_2CH_2CH_2CH_2C(O)NHCH_2OSO_3Na$,
$CH_3C (O) CH_2CH_2CH_2CH_2CH_2CH_2CH_2CH_2CH_2NHC (O) CH_2OSO_3Na$,
$CH_3C(O)CH_2CH_2CH_2CH_2CH_2CH_2CH_2CH_2CH_2C(O)OSO_3Na$,
$CH_3C (O) CH_2CH_2CH_2CH_2CH_2CH_2CH_2CH_2CH_2C (O) OCH_2OSO_3Na$,
$CH_3C(O)CH_2CH_2CH_2CH_2CH_2CH_2CH_2CH_2CH_2OC(O)CH_2OSO_3Na$,
$CH_3C (O) CH_2CH_2CH_2CH_2CH_2CH_2CH_2CH_2CH_2OSO_3H$,
$CH_3C(O)CH_2CH_2CH_2CH_2CH_2CH_2CH_2CH_2CH_2OSO_3Li$, $CH_3C (O) CH_2CH_2CH_2CH_2CH_2CH_2CH_2CH_2CH_2OSO_3K$,
$CH_3C(O)CH_2CH_2CH_2CH_2CH_2CH_2CH_2CH_2CH_2OSO_3NH_4$,
$CH_3C (O) CH_2CH_2CH_2CH_2CH_2CH_2CH_2CH_2CH(CH_3)_2OSO_3Na$,
$CH_3C (O) CH_2CH_2CH_2CH_2CH_2CH_2CH_2CH_2CH_2CH_2CH_2CH_2CH_2CH_2CH_2CH_2CH_2OSO_3N$ a,
$CH_3C(O)CH_2CH_2CH_2CH_2CH_2CH_2CH_2CH_2CH_2CH_2CH_2CH_2CH_2CH_2CH_2CH_2OSO_3Na$,
$CH_3C(O)CH_2CH_2CH_2CH_2CH_2CH_2CH_2CH_2CH_2CH_2CH_2CH_2CH_2CH_2CH_2OSO_3Na$,
$CH_3C (O) CH_2CH_2CH_2CH_2CH_2CH_2CH_2CH_2CH_2CH_2CH_2CH_2CH_2CH_2OSO_3Na$,
$CH_3C (O) CH_2CH_2CH_2CH_2CH_2CH_2CH_2CH_2CH_2CH_2CH_2CH_2CH_2OSO_3Na$,
$CH_3C (O) CH_2CH_2CH_2CH_2CH_2CH_2CH_2CH_2CH_2CH_2CH_2CH_2OSO_3Na$,
$CH_3C(O)CH_2CH_2CH_2CH_2CH_2CH_2CH_2CH_2CH_2CH_2CH_2OSO_3Na$,
$CH_3C (O) CH_2CH_2CH_2CH_2CH_2CH_2CH_2CH_2CH_2CH_2OSO_3Na$,
$(CH_3) _3CC (O) CH_2CH_2CH_2CH_2CH_2CH_2CH_2CH_2CH_2CH_2CH_2CH_2CH_2CH_2CH_2CH_2CH_2O SO_3Na$,
$(CH_3) _2CHC (O) CH_2CH_2CH_2CH_2CH_2CH_2CH_2CH_2CH_2CH_2CH_2CH_2CH_2CH_2CH_2CH_2CH_2 OSO_3Na$,
$(CH_2) _5CHC (O) CH_2CH_2CH_2CH_2CH_2CH_2CH_2CH_2CH_2CH_2CH_2CH_2CH_2CH_2CH_2CH_2CH_2 OSO_3Na$,
$CH_3CH_2C (O) CH_2CH_2CH_2CH_2CH_2CH_2CH_2CH_2CH_2CH_2CH_2CH_2CH_2CH_2CH_2CH_2OSO_3N$ a,
$CH_3CH_2CH_2CH_2CH_2C (O) CH_2CH_2CH_2CH_2CH_2CH_2CH_2CH_2CH_2CH_2CH_2CH_2CH_2OSO_3N$ a,
$CH_3CH_2CH_2CH_2CH_2CH_2CH_2CH_2C (O) CH_2CH_2CH_2CH_2CH_2CH_2CH_2CH_2CH_2CH_2OSO_3N$ a,
$CH_3CH_2CH_2CH_2CH_2CH_2CH_2CH_2CH_2CH_2CH_2C(O)CH_2CH_2CH_2CH_2CH_2CH_2CH_2OSO_3N$ a,
$CH_3CH_2CH_2CH_2CH_2CH_2CH_2CH_2CH_2CH_2CH_2CH_2CH_2CH_2C (O) CH_2CH_2CH_2CH_2OSO_3N$ a,
$CH_3CH_2C(O)CH_2CH_2CH_2CH_2CH_2CH_2CH_2CH_2CH_2CH_2CH_2CH_2CH_2CH_2CH_2CH_2OCH_2C H_2OSO_3Na$,
$CH_3CH_2C(O)CH_2CH_2CH_2CH_2CH_2CH_2CH_2CH_2CH_2CH_2CH_2CH_2CH_2CH_2CH_2CH_2C(O)N HCH_2CH_2OSO_3Na$,
$CH_3CH_2C(O)CH_2CH_2CH_2CH_2CH_2CH_2CH_2CH_2CH_2CH_2CH_2CH_2CH_2CH_2CH_2CH_2NHC(O ) CH_2CH_2OSO_3Na$,
$CH_3CH_2C(O)CH_2CH_2CH_2CH_2CH_2CH_2CH_2CH_2CH_2CH_2CH_2CH_2CH_2CH_2CH_2CH_2C(O)O CH_2CH_2OSO_3Na$,

$CH_3CH_2C (O) CH_2CH_2CH_2CH_2CH_2CH_2CH_2CH_2CH_2CH_2CH_2CH_2CH_2CH_2CH_2CH_2OC(O) CH_2CH_2OSO_3Na$, $CH_3CH_2C(O)CH_2CH_2CH_2CH_2CH_2CH_2CH_2CH_2CH_2CH_2CH_2CH_2CH_2CH_2CH_2CH_2C(O)O SO_3Na$, $CH_3CH_2C (O)CH_2CH_2CH_2CH_2CH_2CH_2CH_2CH_2CH_2CH_2CH_2CH_2CH_2CH_2cH_2CH_2OSO_3H$, $CH_3CH_2C (O)CH_2CH_2CH_2CH_2CH_2CH_2CH_2CH_2CH_2CH_2CH_2CH_2CH_2CH_2cH_2CH_2OSO_3L i$, $CH_3CH_2C (O) CH_2CH_2CH_2CH_2CH_2CH_2CH_2CH_2CH_2CH_2CH_2CH_2CH_2CH_2CH_2CH_2OSO_3K$, $CH_3CH_2C (O) CH_2CH_2CH_2CH_2CH_2CH_2CH_2CH_2CH_2CH_2CH_2CH_2CH_2CH_2CH_2CH_2OSO_3N H_4$, and $CH_3C(O)CH_2CH_2CH_2CH_2CH_2CH_2CH_2CH_2CH_2CH_2CH_2CH_2CH_2CH_2CH_2CH_2CH_2CH_2CH\ _2CH_2CH_2OSO_3Na$ .

The surfactant (c) is described below.

In the formula (c), $R^{1c}$ is a linear or branched alkyl group having 1 or more carbon atoms or a cyclic alkyl group having 3 or more carbon atoms.

When having 3 or more carbon atoms, the alkyl group optionally contains a carbonyl group (-C(=O)-) between two carbon atoms. When having 2 or more carbon atoms, the alkyl group optionally contains the carbonyl group at an end of the alkyl group. In other words, acyl groups such as an acetyl group represented by $CH_3$-C(=O)- are also included in the alkyl group.

When having 3 or more carbon atoms, the alkyl group optionally contains a monovalent or divalent heterocycle, or optionally forms a ring. The heterocycle is preferably an unsaturated heterocycle, more preferably an oxygen-containing unsaturated heterocycle, and examples thereof include a furan ring. In $R^{1c}$, a divalent heterocycle may be present between two carbon atoms, or a divalent heterocycle may be present at an end and bind to -C(=O)-, or a monovalent heterocycle may be present at an end of the alkyl group.

The "number of carbon atoms" in the alkyl group as used herein includes the number of carbon atoms constituting the carbonyl groups and the number of carbon atoms constituting the heterocycles. For example, the number of carbon atoms in the group represented by $CH_3$-C(=O)-$CH_2$- is 3, the number of carbon atoms in the group represented by $CH_3$-C(=O)-$C_2H_4$-C(=O)-$C_2H_4$- is 7, and the number of carbon atoms in the group represented by $CH_3$-C(=O)- is 2.

In the alkyl group, a hydrogen atom bonded to a carbon atom may be replaced by a functional group such as a hydroxy group (-OH) or a monovalent organic group containing an ester bond. Still, it is preferably not replaced by any functional group.

An example of the monovalent organic group containing an ester bond is a group represented by the formula: -O-C(=O)-$R^{101c}$, wherein $R^{101c}$ is an alkyl group.

In the alkyl group, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

In the formula (c), $R^{2c}$ and $R^{3c}$ are each independently a single bond or a divalent linking group.

Preferably, $R^{2c}$ and $R^{3c}$ are each independently a single bond, or a linear or branched alkylene group having 1 or more carbon atoms, or a cyclic alkylene group having 3 or more carbon atoms.

The alkylene group constituting $R^{2c}$ and $R^{3c}$ is preferably free from a carbonyl group.

In the alkylene group, a hydrogen atom bonded to a carbon atom may be replaced by a functional group such as a hydroxy group (-OH) or a monovalent organic group containing an ester bond. Still, it is preferably not replaced by any functional group.

An example of the monovalent organic group containing an ester bond is a group represented by the formula: -O-C(=O)-$R^{102c}$, wherein $R^{102c}$ is an alkyl group.

In the alkylene group, 75% or less of the hydrogen atoms bonded to the carbon atoms may be replaced by halogen atoms, 50% or less thereof may be replaced by halogen atoms, or 25% or less thereof may be replaced by halogen atoms. The alkylene group is preferably a non-halogenated alkylene group free from halogen atoms such as fluorine atoms and chlorine atoms.

The total number of carbon atoms in $R^{1c}$, $R^{2c}$, and $R^{3c}$ is 5 or more. The total number of carbon atoms is preferably 7 or more, and more preferably 9 or more, and preferably 20 or less, more preferably 18 or less, and still more preferably 15 or less.

Any two of $R^{1c}$, $R^{2c}$, and $R^{3c}$ optionally bind to each other to form a ring.

In the formula (c), $A^c$ is -COOX$^c$ or -$SO_3X^c$, wherein $X^c$ is H, a metal atom, $NR^{4c}_4$, imidazolium optionally having a substituent, pyridinium optionally having a substituent, or phosphonium optionally having a substituent, and $R^{4c}$ is H or an organic group and may be the same as or different from each other. $R^{4c}$ is preferably H or an organic group having 1 to 10 carbon atoms, and more preferably H or an organic group having 1 to 4 carbon atoms. Examples of the metal atom include monovalent and divalent metal atoms, alkali metals (Group 1), and alkaline earth metals (Group 2), and preferred is Na, K, or Li.

$X^c$ is preferably H, an alkali metal (Group 1), an alkaline earth metal (Group 2), or $NR^{4c}_4$, more preferably H, Na, K, Li, or $NH_4$ because they are easily dissolved in water, still more preferably Na, K, or $NH_4$ because they are more

easily dissolved in water, particularly preferably Na or $NH_4$, and most preferably $NH_4$ because it can be easily removed. When $X^c$ is $NH_4$, the solubility of the surfactant in an aqueous medium is excellent, and the metal component is unlikely to remain in PTFE or the final product.

$R^{1c}$ is preferably a linear or branched alkyl group having 1 to 8 carbon atoms and free from a carbonyl group, a cyclic alkyl group having 3 to 8 carbon atoms and free from a carbonyl group, a linear or branched alkyl group having 2 to 45 carbon atoms and containing 1 to 10 carbonyl groups, a cyclic alkyl group having 3 to 45 carbon atoms and containing a carbonyl group, or an alkyl group having 3 to 45 carbon atoms and containing a monovalent or divalent heterocycle.

$R^{1c}$ is more preferably a group represented by the following formula:

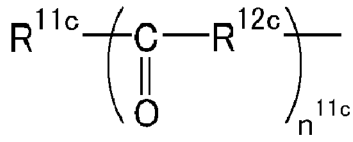

wherein $n^{11c}$ is an integer of 0 to 10; $R^{11c}$ is a linear or branched alkyl group having 1 to 5 carbon atoms or a cyclic alkyl group having 3 to 5 carbon atoms; $R^{12c}$ is an alkylene group having 0 to 3 carbon atoms; and when $n^{11c}$ is an integer of 2 to 10, each $R^{12c}$ may be the same or different.

$n^{11c}$ is preferably an integer of 0 to 5, more preferably an integer of 0 to 3, and still more preferably an integer of 1 to 3.

The alkyl group for $R^{11c}$ is preferably free from a carbonyl group.

In the alkyl group for $R^{11c}$, a hydrogen atom bonded to a carbon atom may be replaced by a functional group such as a hydroxy group (-OH) or a monovalent organic group containing an ester bond. Still, it is preferably not replaced by any functional group.

An example of the monovalent organic group containing an ester bond is a group represented by the formula: $-O-C(=O)-R^{103c}$, wherein $R^{103c}$ is an alkyl group.

In the alkyl group for $R^{11c}$, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

$R^{12c}$ is an alkylene group having 0 to 3 carbon atoms. The alkylene group preferably has 1 to 3 carbon atoms.

The alkylene group for $R^{12c}$ may be either linear or branched.

The alkylene group for $R^{12c}$ is preferably free from a carbonyl group. $R^{12c}$ is more preferably an ethylene group ($-C_2H_4-$) or a propylene group ($-C_3H_6-$) .

In the alkylene group for $R^{12c}$, a hydrogen atom bonded to a carbon atom may be replaced by a functional group such as a hydroxy group (-OH) or a monovalent organic group containing an ester bond. Still, it is preferably not replaced by any functional group.

An example of the monovalent organic group containing an ester bond is a group represented by the formula: $-O-C(=O)-R^{104c}$, wherein $R^{104c}$ is an alkyl group.

In the alkylene group for $R^{12c}$, 75% or less of the hydrogen atoms bonded to the carbon atoms may be replaced by halogen atoms, 50% or less thereof may be replaced by halogen atoms, or 25% or less thereof may be replaced by halogen atoms. The alkylene group is preferably a non-halogenated alkylene group free from halogen atoms such as fluorine atoms and chlorine atoms.

$R^{2c}$ and $R^{3c}$ are preferably each independently an alkylene group having 1 or more carbon atoms and free from a carbonyl group, more preferably an alkylene group having 1 to 3 carbon atoms and free from a carbonyl group, and still more preferably an ethylene group ($-C_2H_4-$) or a propylene group ($-C_3H_6-$) .

Examples of the surfactant (c) include the following surfactants. In each formula, $A^c$ is as described above.

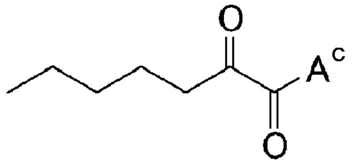

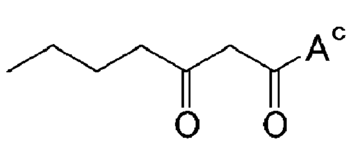

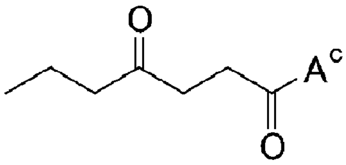

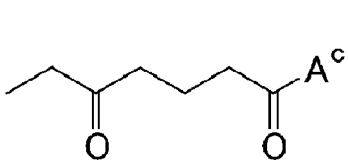

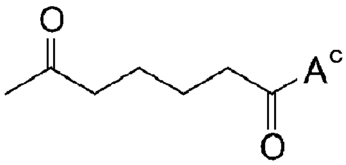

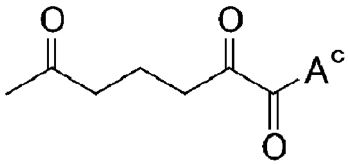

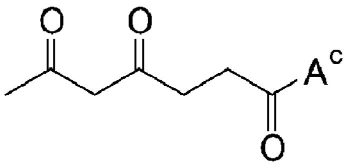

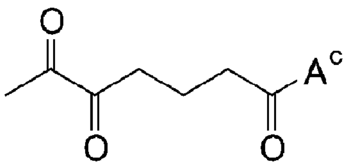

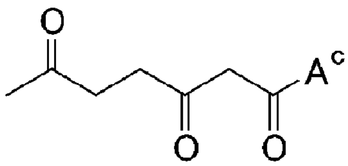

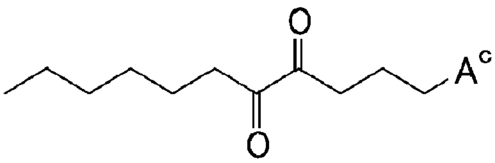

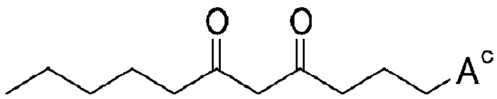

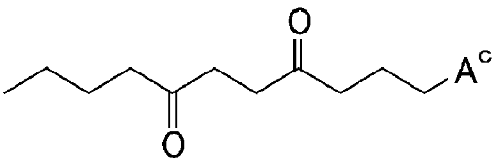

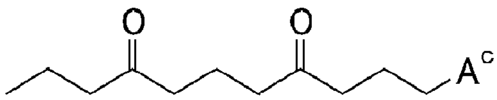

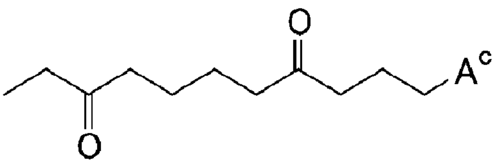

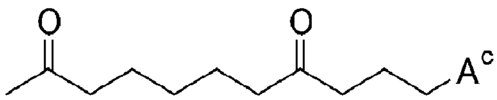

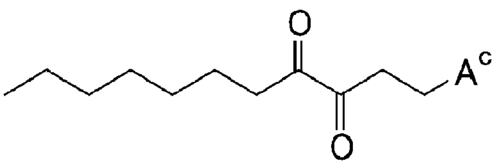

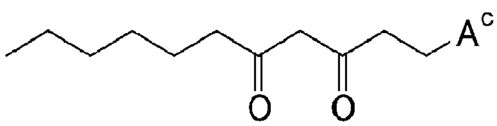

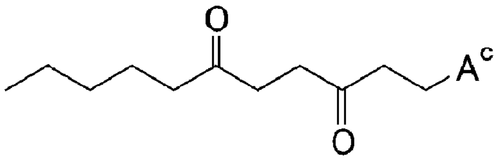
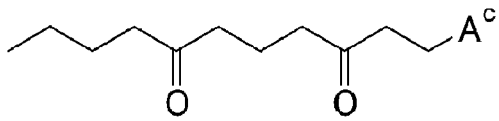

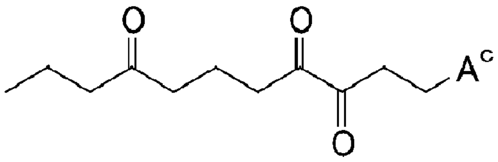
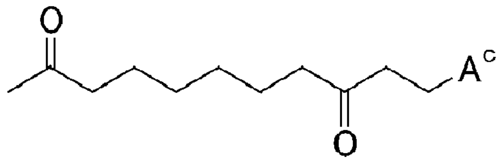

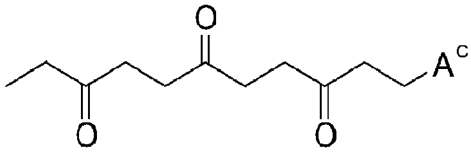
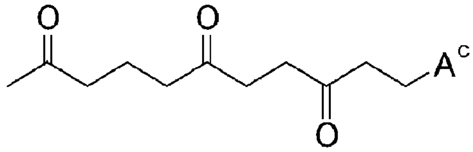

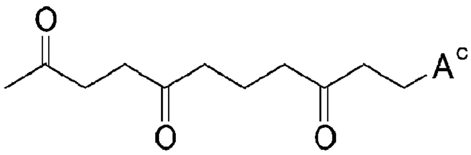
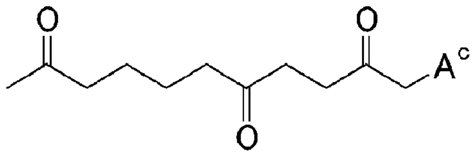

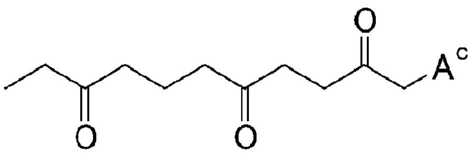
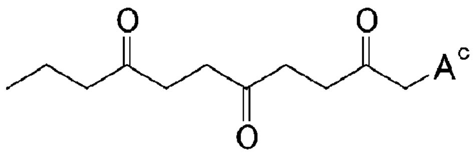

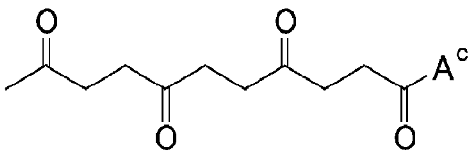
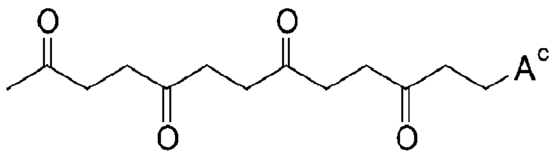

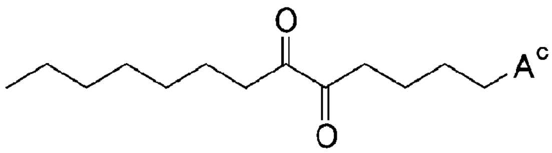

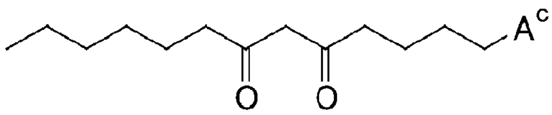

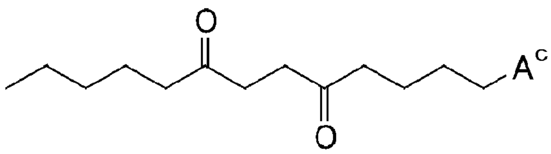

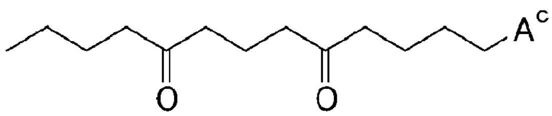

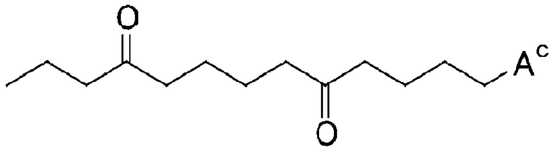

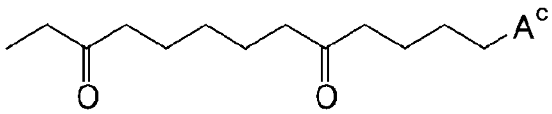

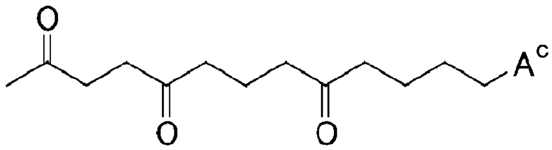

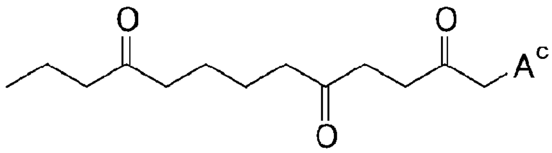

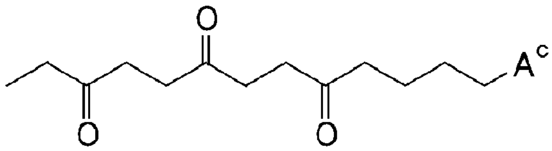

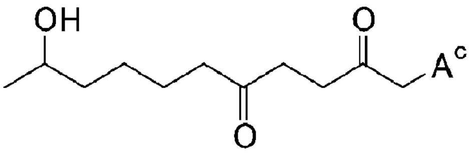

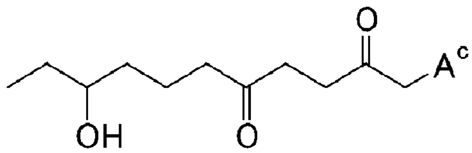

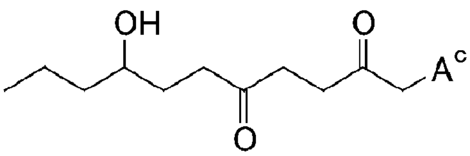

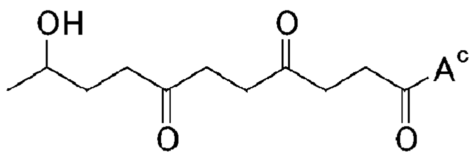

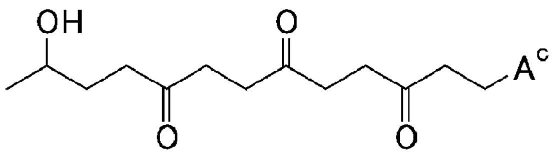

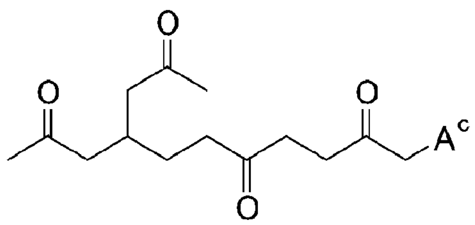

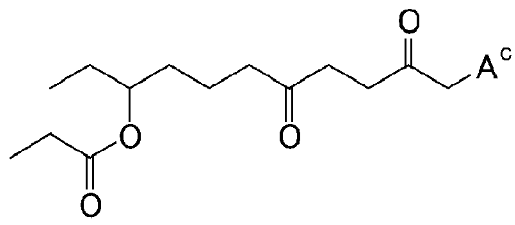

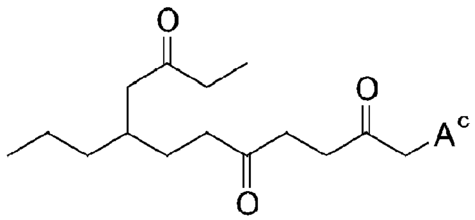

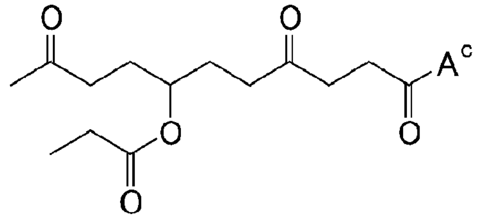

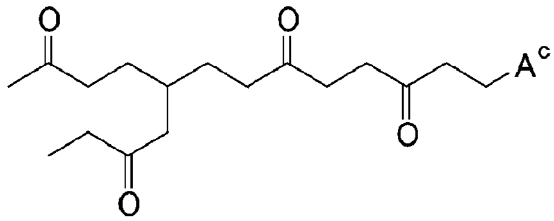

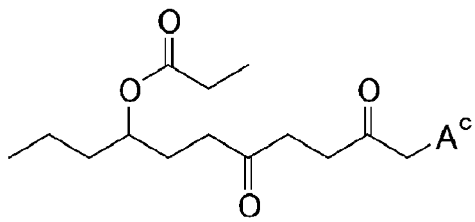

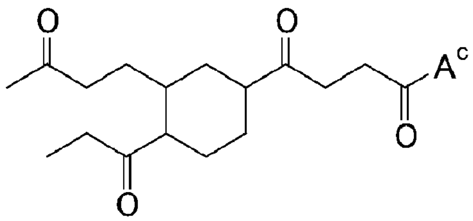

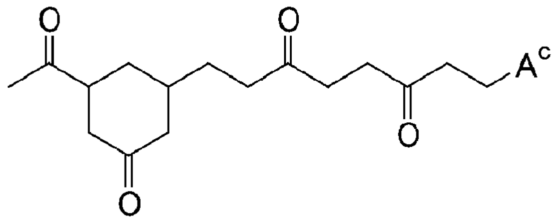

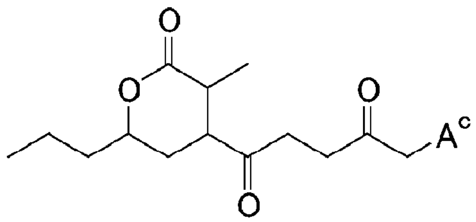

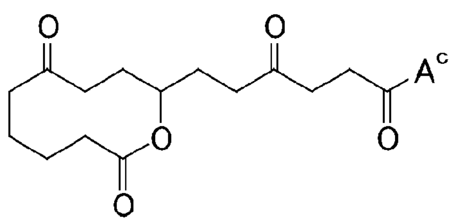

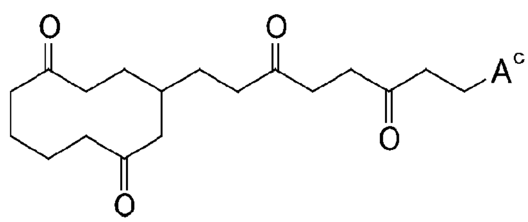

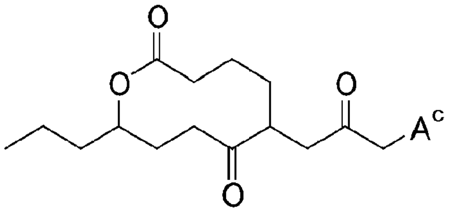
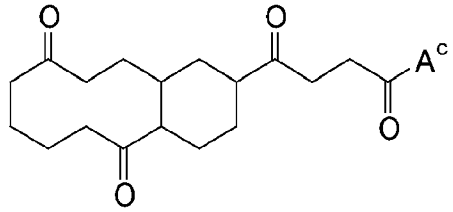
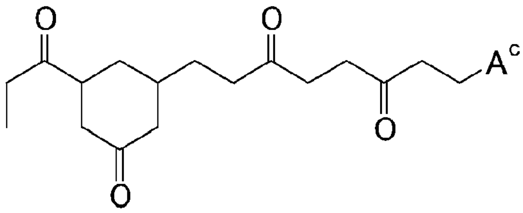
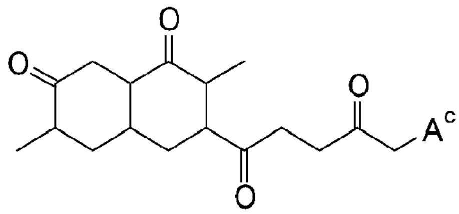
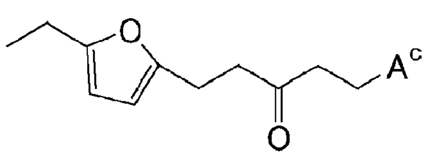
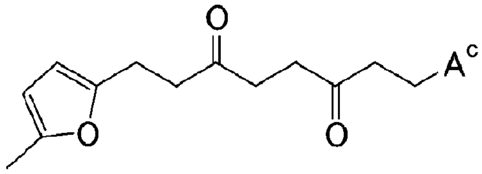
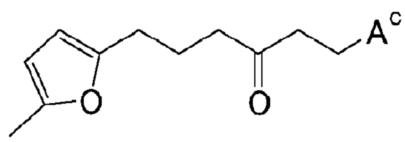
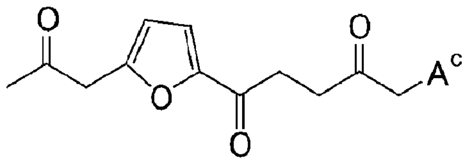
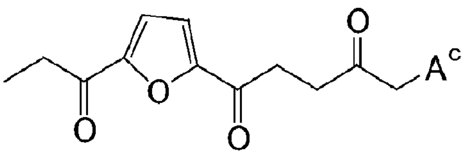
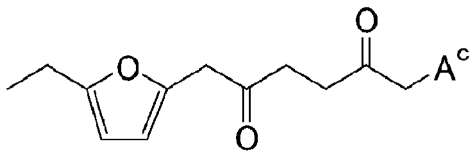
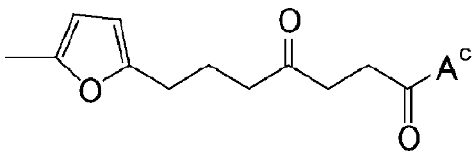
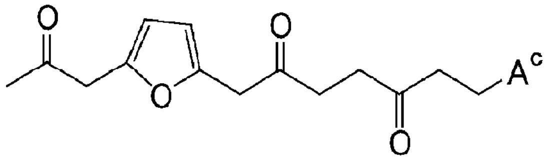
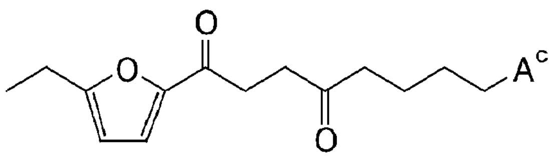

The surfactant (d) is described below.

In the formula (d), $R^{1d}$ is a linear or branched alkyl group having 1 or more carbon atoms and optionally having a substituent or a cyclic alkyl group having 3 or more carbon atoms and optionally having a substituent.

When having 3 or more carbon atoms, the alkyl group optionally contains a monovalent or divalent heterocycle, or optionally forms a ring. The heterocycle is preferably an unsaturated heterocycle, more preferably an oxygen-containing unsaturated heterocycle, and examples thereof include a furan ring. In $R^{1d}$, a divalent heterocycle may be present between two carbon atoms, or a divalent heterocycle may be present at an end and bind to -C(=O)-, or a monovalent heterocycle may be present at an end of the alkyl group.

The "number of carbon atoms" in the alkyl group as used herein includes the number of carbon atoms constituting

the heterocycles.

The substituent which may be contained in the alkyl group for $R^{1d}$ is preferably a halogen atom, a linear or branched alkyl group having 1 to 10 carbon atoms, or a cyclic alkyl group having 3 to 10 carbon atoms, or a hydroxy group, and particularly preferably a methyl group or an ethyl group.

The alkyl group for $R^{1d}$ is preferably free from a carbonyl group.

In the alkyl group, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

The alkyl group preferably does not have any substituent.

$R^{1d}$ is preferably a linear or branched alkyl group having 1 to 10 carbon atoms and optionally having a substituent or a cyclic alkyl group having 3 to 10 carbon atoms and optionally having a substituent, more preferably a linear or branched alkyl group having 1 to 10 carbon atoms and free from a carbonyl group or a cyclic alkyl group having 3 to 10 carbon atoms and free from a carbonyl group, still more preferably a linear or branched alkyl group having 1 to 10 carbon atoms and not having a substituent, further preferably a linear or branched alkyl group having 1 to 3 carbon atoms and not having a substituent, particularly preferably a methyl group ($-CH_3$) or an ethyl group ($-C_2H_5$), and most preferably a methyl group ($-CH_3$) .

In the formula (d), $R^{2d}$ and $R^{4d}$ are each independently H or a substituent. A plurality of $R^{2d}$s and $R^{4d}$s may be the same as or different from each other.

The substituent for each of $R^{2d}$ and $R^{4d}$ is preferably a halogen atom, a linear or branched alkyl group having 1 to 10 carbon atoms, or a cyclic alkyl group having 3 to 10 carbon atoms, or a hydroxy group, and particularly preferably a methyl group or an ethyl group.

The alkyl group for each of $R^{2d}$ and $R^{4d}$ is preferably free from a carbonyl group. In the alkyl group, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

The alkyl group preferably does not have any substituent.

The alkyl group for each of $R^{2d}$ and $R^{4d}$ is preferably a linear or branched alkyl group having 1 to 10 carbon atoms and free from a carbonyl group or a cyclic alkyl group having 3 to 10 carbon atoms and free from a carbonyl group, more preferably a linear or branched alkyl group having 1 to 10 carbon atoms and free from a carbonyl group, still more preferably a linear or branched alkyl group having 1 to 3 carbon atoms and not having a substituent, and particularly preferably a methyl group ($-CH_3$) or an ethyl group ($-C_2H_5$) .

$R^{2d}$ and $R^{4d}$ are preferably each independently H or a linear or branched alkyl group having 1 to 10 carbon atoms and free from a carbonyl group, more preferably H or a linear or branched alkyl group having 1 to 3 carbon atoms and not having a substituent, still more preferably H, a methyl group ($-CH_3$), or an ethyl group ($-C_2H_5$), and particularly preferably H.

In the formula (d), $R^{3d}$ is an alkylene group having 1 to 10 carbon atoms and optionally having a substituent. When a plurality of $R^{3d}$s are present, they may be the same or different.

The alkylene group is preferably free from a carbonyl group.

In the alkylene group, 75% or less of the hydrogen atoms bonded to the carbon atoms may be replaced by halogen atoms, 50% or less thereof may be replaced by halogen atoms, or 25% or less thereof may be replaced by halogen atoms. The alkylene group is preferably a non-halogenated alkyl group free from halogen atoms such as fluorine atoms and chlorine atoms.

The alkylene group preferably does not have any substituent.

The alkylene group is preferably a linear or branched alkylene group having 1 to 10 carbon atoms and optionally having a substituent or a cyclic alkylene group having 3 to 10 carbon atoms and optionally having a substituent, preferably a linear or branched alkylene group having 1 to 10 carbon atoms and free from a carbonyl group or a cyclic alkylene group having 3 to 10 carbon atoms and free from a carbonyl group, more preferably a linear or branched alkylene group having 1 to 10 carbon atoms and not having a substituent, and still more preferably a methylene group ($-CH_2-$), an ethylene group ($-C_2H_4-$), an isopropylene group ($-CH(CH_3)CH_2-$), or a propylene group ($-C_3H_6-$).

Any two of $R^{1d}$, $R^{2d}$, $R^{3d}$, and $R^{4d}$ optionally bind to each other to form a ring.

In the formula (d), n is an integer of 1 or more. n is preferably an integer of 1 to 40, more preferably an integer of 1 to 30, and still more preferably an integer of 5 to 25.

In the formula (d), p and q are each independently an integer of 0 or more. p is preferably an integer of 0 to 10, and more preferably 0 or 1. q is preferably an integer of 0 to 10, and more preferably an integer of 0 to 5.

The sum of n, p, and q is preferably an integer of 6 or more. The sum of n, p, and q is more preferably an integer of 8 or more. The sum of n, p, and q is also preferably an integer of 60 or less, more preferably an integer of 50 or less, and still more preferably an integer of 40 or less.

In the formula (d), $A^d$ is $-SO_3X^d$ or $-COOX^d$, wherein $X^d$ is H, a metal atom, $NR^{5d}_4$, imidazolium optionally having a substituent, pyridinium optionally having a substituent, or phosphonium optionally having a substituent, and $R^{5d}$ is H or an organic group and may be the same as or different from each other. $R^{5d}$ is preferably H or an organic group having 1 to 10 carbon atoms, and more preferably H or an organic group having 1 to 4 carbon atoms. Examples of the metal atom include monovalent and divalent metal atoms, alkali metals (Group 1), and alkaline earth metals (Group 2), and preferred is Na, K, or Li. $X^d$ may be a metal atom or $NR^{5d}_4$, wherein $R^{5d}$ is defined as described above.

$X^d$ is preferably H, an alkali metal (Group 1), an alkaline earth metal (Group 2), or $NR^{5d}_4$, more preferably H, Na, K, Li, or $NH_4$ because they are easily dissolved in water, still more preferably Na, K, or $NH_4$ because they are more easily dissolved in water, particularly preferably Na or $NH_4$, and most preferably $NH_4$ because it can be easily removed. When $X^d$ is $NH_4$, the solubility of the surfactant in an aqueous medium is excellent, and the metal component is unlikely to remain in PTFE or the final product.

In the formula (d), L is a single bond, $-CO_2$-B-*, -OCO-B-*, $-CONR^{6d}$-B-*, $-NR^{6d}CO$-B-*, or -CO- other than the carbonyl groups in $-CO_2$-B-, -OCO-B-, $-CONR^{6d}$-B-, and-$NR^{6d}CO$-B-, where B is a single bond or an alkylene group having 1 to 10 carbon atoms and optionally having a substituent and $R^{6d}$ is H or an alkyl group having 1 to 4 carbon atoms and optionally having a substituent. The alkylene group more preferably has 1 to 5 carbon atoms. $R^{6d}$ is more preferably H or a methyl group. * indicates the side bonded to $A^d$ in the formula.

L is preferably a single bond.

The surfactant preferably has a $^1$H-NMR spectrum in which all peak intensities observed in a chemical shift range of 2.0 to 5.0 ppm give an integral value of 10 or more.

The surfactant preferably has a $^1$H-NMR spectrum in which all peak intensities observed in a chemical shift range of 2.0 to 5.0 ppm give an integral value within the above range. In this case, the surfactant preferably has a ketone structure in the molecule.

The integral value of the surfactant is more preferably 15 or more, and preferably 95 or less, more preferably 80 or less, and still more preferably 70 or less.

The integral value is determined using a heavy water solvent at room temperature. The heavy water content is adjusted to 4.79 ppm.

Examples of the surfactant (d) include

$CH_3C$ (O) $CH_2CH_2CH_2CH_2CH_2CH_2CH_2CH_2COOK$,
$CH_3C$ (O) $CH_2CH_2CH_2CH_2CH_2CH_2CH_2COONa$,
$CH_3C(O)CH_2CH_2CH_2CH_2CH_2CH_2COONa$,
$CH_3C$ (O) $CH_2CH_2CH_2CH_2CH_2COONa$,
$CH_3C$ (O) $CH_2CH_2CH_2CH_2COONa$,
$CH_3C(O)CH_2CH_2CH_2COONa$,
$CH_3C$ (O) $CH_2CH_2CH_2CH_2CH_2CH_2CH_2CH_2CH_2CH_2CH_2CH_2CH_2COONa$,
$CH_3C$ (O) $CH_2CH_2CH_2CH_2CH_2CH_2CH_2CH_2CH_2CH_2CH_2CH_2CH_2CH_2CH_2CH_2CH_2CH_2CO$ ONa,
$(CH_3)_3CC(O)CH_2CH_2CH_2CH_2CH_2CH_2CH_2CH_2COONa$,
$(CH_3)$ $_2CHC$ (O) $CH_2CH_2CH_2CH_2CH_2CH_2CH_2CH_2COONa$,
$(CH_2)$ $_5CHC$ (O) $CH_2CH_2CH_2CH_2CH_2CH_2CH_2CH_2COONa$,
$CH_3CH_2C(O)CH_2CH_2CH_2CH_2CH_2CH_2CH_2COONa$,
$CH_3CH_2CH_2C$ (O) $CH_2CH_2CH_2CH_2CH_2CH_2COONa$,
$CH_3CH_2CH_2CH_2C$ (O) $CH_2CH_2CH_2CH_2CH_2COONa$,
$CH_3CH_2CH_2CH_2CH_2C(O)CH_2CH_2CH_2CH_2COONa$,
$CH_3CH_2CH_2CH_2CH_2CH_2C$ (O) $CH_2CH_2CH_2COONa$,
$CH_3CH_2CH_2CH_2CH_2CH_2CH_2C$ (O) $CH_2CH_2COONa$,
$CH_3CH_2CH_2CH_2CH_2CH_2CH_2CH_2C(O)CH_2COONa$,
$CH_3C$ (O) $CH_2CH_2CH_2CH_2CH_2CH_2CH_2CH_2OCH_2CH_2COONa$,
$CH_3C$ (O) $CH_2CH_2CH_2CH_2CH_2CH_2CH_2CH_2C$ (O) $NHCH_2COOK$,
$CH_3C(O)CH_2CH_2CH_2CH_2CH_2CH_2CH_2CH_2NHC(O)CH_2COOK$,
$CH_3C$ (O) $CH_2CH_2CH_2CH_2CH_2CH_2CH_2CH_2C$ (O) $OCH_2COONa$,
$CH_3C(O)CH_2CH_2CH_2CH_2CH_2CH_2CH_2CH_2OC(O)CH_2COONa$,
$CH_3C$ (O) $CH_2CH_2CH_2CH_2CH_2CH_2CH_2CH_2C$ (O) COONa,
$CH_3C(O)CH_2CH_2CH_2CH_2CH_2CH_2CH_2CH_2C(O)COOH$,
$CH_3C$ (O) $CH_2CH_2CH_2CH_2CH_2CH_2CH_2CH_2C$ (O) COOLi,
$CH_3C$ (O) $CH_2CH_2CH_2CH_2CH_2CH_2CH_2CH_2C(O)COONH_4$,
$CH_3C$ (O) $CH_2CH_2CH_2CH_2CH_2CH_2CH_2CH_2C$ (O) COONa,
$CH_3C$ (O) $CH_2CH_2CH_2CH_2CH_2CH_2CH_2C$ $(CH_3)_2COOK$,
$CH_3C(O)CH_2CH_2CH_2CH_2CH_2CH_2CH_2CH_2CH_2SO_3Na$,

$CH_3C\ (O)\ CH_2CH_2CH_2CH_2CH_2CH_2CH_2CH_2SO_3Na$,
$CH_3C\ (O)\ CH_2CH_2CH_2CH_2CH_2CH_2CH_2SO_3Na$,
$CH_3C(O)CH_2CH_2CH_2CH_2CH_2CH_2SO_3Na$,
$CH_3C\ (O)\ CH_2CH_2CH_2CH_2CH_2SO_3Na$,
$CH_3C\ (O)\ CH_2CH_2CH_2CH_2SO_3Na$,
$CH_3C(O)CH_2CH_2CH_2CH_2CH_2CH_2CH_2CH_2CH_2CH_2CH_2CH_2CH_2SO_3Na$,
$CH_3C\ (O)\ CH_2CH_2CH_2CH_2CH_2CH_2CH_2CH_2CH_2CH_2CH_2CH_2CH_2CH_2CH_2CH_2CH_2CH_2SO\ _3Na$,
$CH_3C\ (O)\ CH_2CH_2CH_2CH_2CH_2CH_2CH_2CH_2CH_2CH_2SO_3Na$,
$(CH_3)\ _3CC(O)CH_2CH_2CH_2CH_2CH_2CH_2CH_2CH_2CH_2SO_3Na$,
$(CH_3)\ _2CHC\ (O)\ CH_2CH_2CH_2CH_2CH_2CH_2CH_2CH_2CH_2SO_3Na$,
$(CH_2)\ _5CHC\ (O)\ CH_2CH_2CH_2CH_2CH_2CH_2CH_2CH_2CH_2SO_3Na$,
$CH_3C(O)CH_2CH_2CH_2CH_2CH_2CH_2CH_2CH_2SO_3Na$,
$CH_3C\ (O)\ CH_2CH_2CH_2CH_2CH_2CH_2CH_2SO_3Na$,
$CH_3C\ (O)\ CH_2CH_2CH_2CH_2CH_2CH_2SO_3Na$,
$CH_3C(O)CH_2CH_2CH_2CH_2CH_2SO_3Na$,
$CH_3C\ (O)\ CH_2CH_2CH_2CH_2SO_3Na$,
$CH_3C\ (O)\ CH_2CH_2CH_2SO_3Na$,
$CH_3C\ (O)CH_2CH_2SO_3Na$,
$CH_3C\ (O)\ CH_2SO_3Na$,
$CH_3C(O)CH_2CH_2CH_2CH_2CH_2CH_2CH_2CH_2CH_2OCH_2CH_2CH_2SO_3Na$.
$CH_3C\ (O)\ CH_2CH_2CH_2CH_2CH_2CH_2CH_2CH_2CH_2C(O)NHCH_2SO_3Na$.
$CH_3C\ (O)\ CH_2CH_2CH_2CH_2CH_2CH_2CH_2CH_2CH_2NHC(O)CH_2SO_3Na$,
$CH_3C\ (O)\ CH_2CH_2CH_2CH_2CH_2CH_2CH_2CH_2CH_2C(O)SO_3Na$,
$CH_3C\ (O)\ CH_2CH_2CH_2CH_2CH_2CH_2CH_2CH_2CH_2C\ (O)\ OCH_2SO_3Na$,
$CH_3C\ (O)\ CH_2CH_2CH_2CH_2CH_2CH_2CH_2CH_2CH_2OC(O)CH_2SO_3Na$,
$CH_3C(O)CH_2CH_2CH_2CH_2CH_2CH_2CH_2CH_2CH_2SO_3H$,
$CH_3C(O)CH_2CH_2CH_2CH_2CH_2CH_2CH_2CH_2CH_2SO_3K$,
$CH_3C(O)CH_2CH_2CH_2CH_2CH_2CH_2CH_2CH_2CH_2SO_3Li$,
$CH_3C(O)CH_2CH_2CH_2CH_2CH_2CH_2CH_2CH_2CH_2SO_3NH_4$, and
$CH_3C\ (O)\ CH_2CH_2CH_2CH_2CH_2CH_2CH_2CH_2C(CH_3)_2SO_3Na$.

In the polymerization, two or more of the hydrocarbon surfactants may be used at the same time.

The hydrocarbon surfactant in the polymerization is preferably at least one selected from the group consisting of the compound ($\alpha$), the surfactant (1-0) represented by the general formula (1-0), the surfactant (a) represented by the formula (a), the surfactant (b) represented by the formula (b), the surfactant (c) represented by the formula (c), and the surfactant (d) represented by the formula (d).

Alternatively, the hydrocarbon surfactant may be one obtained by subjecting at least one surfactant selected from the group consisting of the compound ($\alpha$), the surfactant (1-0) represented by the general formula (1-0), the surfactant (a) represented by the formula (a), the surfactant (b) represented by the formula (b), the surfactant (c) represented by the formula (c), and the surfactant (d) represented by the formula (d) to a radical treatment or oxidation treatment. The radical treatment may be any treatment that generates radicals in the surfactant, for example, a treatment in which deionized water and the hydrocarbon surfactant are added to the reactor, the reactor is sealed, the system is purged with nitrogen, the reactor is heated and pressurized, a polymerization initiator is charged, the reactor is stirred for a certain time, and then the pressure is released until the pressure in the reactor decreases to the atmospheric pressure, and the reactor is cooled. The oxidation treatment is a treatment in which an oxidizing agent is added to the surfactant. Examples of the oxidizing agent include oxygen, ozone, hydrogen peroxide solution, manganese(IV) oxide, potassium permanganate, potassium dichromate, nitric acid, and sulfur dioxide.

The hydrocarbon surfactant is also preferably a carboxylic acid type hydrocarbon surfactant. The carboxylic acid type hydrocarbon surfactant may be any hydrocarbon surfactant having a carboxyl group (-COOH) or a group in which the hydrogen atom of a carboxyl group is replaced by an inorganic cation (for example, metal atom, ammonium, etc.). For example, among the hydrocarbon surfactants described above, hydrocarbon surfactants having a carboxyl group or a group in which the hydrogen atom of a carboxyl group is replaced by an inorganic cation can be used.

As the carboxylic acid type hydrocarbon surfactant, preferred is at least one selected from the group consisting of the following: the compound ($\alpha$); those having a carboxyl group (-COOH) or a group in which the hydrogen atom of a carboxyl group is replaced by an inorganic cation among the surfactants (1-0) represented by the general formula (1-0); the surfactant (c) represented by the formula (c); and the surfactant (d) represented by the formula (d).

The polymerization provides an aqueous dispersion containing the fluoropolymer (fluoropolymer aqueous dispersion). The fluoropolymer is usually at a concentration of 8 to 50% by mass in the aqueous dispersion obtained by

the polymerization. In the fluoropolymer aqueous dispersion, the lower limit of the concentration of the fluoropolymer is preferably 10% by mass, and more preferably 15% by mass, while the upper limit thereof is preferably 40% by mass, and more preferably 35% by mass.

The purified fluoropolymer aqueous dispersion obtained by the production method of the present disclosure has a reduced amount of the fluorine-containing compound represented by the general formula (1) or (2).

The aqueous dispersion obtained by the production method of the present disclosure may be concentrated or subjected to a dispersion stabilization treatment to form a dispersion, or may be subjected to coagulation or agglomeration, and collected and dried into powder or other solid.

The production method of the present disclosure can produce the fluoropolymer aqueous dispersion of the present disclosure described below.

The present disclosure also provides a fluoropolymer aqueous dispersion comprising a fluoropolymer and water, the dispersion comprising a compound represented by the following general formula (1), wherein the total content of the compound represented by the following general formula (1) is 1,000 ppb or less based on the fluoropolymer:

General Formula (1): $(H-(CF_2)_m-COO)_pM^1$

wherein m is 3 to 19; $M^1$ is H, a metal atom, $NR^5_4$ where $R^5$ may be the same as or different from each other and is H or an organic group having 1 to 10 carbon atoms, imidazolium optionally having a substituent, pyridinium optionally having a substituent, or phosphonium optionally having a substituent; and p is 1 or 2.

The total content is the sum of the contents of all fluorine-containing compounds encompassed in the general formula (1).

In the fluoropolymer aqueous dispersion of the present disclosure, the total content of the compounds represented by the general formula (1) may be 500 ppb or less, may be 400 ppb or less, may be 300 ppb or less, may be 250 ppb or less, may be 200 ppb or less, may be 150 ppb or less, may be 100 ppb or less, may be 25 ppb or less, may be 15 ppb or less, or may be 10 ppb or less, based on PTFE. The lower limit thereof may be, but is not limited to, 0.1 ppb or 1 ppb.

The present disclosure also provides a fluoropolymer aqueous dispersion comprising a fluoropolymer and water, the dispersion comprising at least one of a compound represented by the following general formula (4) and a compound represented by the following general formula (4'), wherein the content of the compound represented by the following general formula (4) is 1,000 ppb or less based on PTFE and the content of the compound represented by the following general formula (4') is 1,000 ppb or less based on PTFE. The content of the compound represented by the general formula (4) may be 500 ppb or less, may be 400 ppb or less, may be 300 ppb or less, may be 250 ppb or less, may be 200 ppb or less, may be 150 ppb or less, may be 100 ppb or less, may be 25 ppb or less, may be 15 ppb or less, or may be 10 ppb or less, based on PTFE. The lower limit of the content of the compound represented by the general formula (4) may be, but is not limited to, 0 ppb, may be 0.1 ppb, or may be 1 ppb. The content of the compound represented by the general formula (4') may be 500 ppb or less, may be 400 ppb or less, may be 300 ppb or less, may be 250 ppb or less, may be 200 ppb or less, may be 150 ppb or less, may be 100 ppb or less, may be 25 ppb or less, may be 15 ppb or less, or may be 10 ppb or less, based on PTFE. The lower limit of the content of the compound represented by the general formula (4') may be, but is not limited to, 0 ppb, may be 0.1 ppb, or may be 1 ppb.

General Formula (4): $(H-(CF_2)_7-COO)_pM^1$

wherein $M^1$ is H, a metal atom, $NR^5_4$ where $R^5$ may be the same as or different from each other and is H or an organic group having 1 to 10 carbon atoms, imidazolium optionally having a substituent, pyridinium optionally having a substituent, or phosphonium optionally having a substituent; and p is 1 or 2.

General Formula (4'): $(H-(CF_2)_8-COO)_pM^1$

wherein $M^1$ is H, a metal atom, $NR^5_4$ where $R^5$ may be the same as or different from each other and is H or an organic group having 1 to 10 carbon atoms, imidazolium optionally having a substituent, pyridinium optionally having a substituent, or phosphonium optionally having a substituent; and p is 1 or 2.

The present disclosure also provides a fluoropolymer aqueous dispersion comprising a fluoropolymer and water, the dispersion comprising at least one of a compound represented by the following general formula (5) and a compound represented by the following general formula (5'), wherein the content of the compound represented by the following general formula (5) is 1,000 ppb or less based on PTFE and the content of the compound represented by the following general formula (5') is 1,000 ppb or less based on PTFE. The content of the compound represented by the general formula (5) may be 500 ppb or less, may be 400 ppb or less, may be 300 ppb or less, may be 250 ppb or less, may be 200 ppb or less, may be 150 ppb or less, may be 100 ppb or less, may be 25 ppb or less, may be 15 ppb or

less, or may be 10 ppb or less, based on PTFE. The lower limit of the content of the compound represented by the general formula (5) may be, but is not limited to, 0 ppb, may be 0.1 ppb, or may be 1 ppb. The content of the compound represented by the general formula (5') may be 500 ppb or less, may be 400 ppb or less, may be 300 ppb or less, may be 250 ppb or less, may be 200 ppb or less, may be 150 ppb or less, may be 100 ppb or less, may be 25 ppb or less, may be 15 ppb or less, or may be 10 ppb or less, based on PTFE. The lower limit of the content of the compound represented by the general formula (5') may be, but is not limited to, 0 ppb, may be 0.1 ppb, or may be 1 ppb.

General Formula (5): $(H\text{-}(CF_2)_{13}\text{-}COO)_pM^1$

wherein $M^1$ is H, a metal atom, $NR^5_4$ where $R^5$ may be the same as or different from each other and is H or an organic group having 1 to 10 carbon atoms, imidazolium optionally having a substituent, pyridinium optionally having a substituent, or phosphonium optionally having a substituent; and p is 1 or 2.

General Formula (5'): $(H\text{-}(CF_2)_{14}\text{-}COO)_pM^1$

wherein $M^1$ is H, a metal atom, $NR^5_4$ where $R^5$ may be the same as or different from each other and is H or an organic group having 1 to 10 carbon atoms, imidazolium optionally having a substituent, pyridinium optionally having a substituent, or phosphonium optionally having a substituent; and p is 1 or 2.

The present disclosure also provides a fluoropolymer aqueous dispersion comprising a fluoropolymer and water, the dispersion comprising at least one of a compound represented by the following general formula (6) and a compound represented by the following general formula (6'), wherein the content of the compound represented by the following general formula (6) is 1,000 ppb or less based on PTFE and the content of the compound represented by the following general formula (6') is 1,000 ppb or less based on PTFE. The content of the compound represented by the general formula (6) may be 500 ppb or less, may be 400 ppb or less, may be 300 ppb or less, may be 250 ppb or less, may be 200 ppb or less, may be 150 ppb or less, may be 100 ppb or less, may be 25 ppb or less, may be 15 ppb or less, or may be 10 ppb or less, based on PTFE. The lower limit of the content of the compound represented by the general formula (6) may be, but is not limited to, 0 ppb, may be 0.1 ppb, or may be 1 ppb. The content of the compound represented by the general formula (6') may be 500 ppb or less, may be 400 ppb or less, may be 300 ppb or less, may be 250 ppb or less, may be 200 ppb or less, may be 150 ppb or less, may be 100 ppb or less, may be 25 ppb or less, may be 15 ppb or less, or may be 10 ppb or less, based on PTFE. The lower limit of the content of the compound represented by the general formula (6') may be, but is not limited to, 0 ppb, may be 0.1 ppb, or may be 1 ppb.

General Formula (6): $(H\text{-}(CF_2)_{17}\text{-}COO)_pM^1$

wherein $M^1$ is H, a metal atom, $NR^5_4$ where $R^5$ may be the same as or different from each other and is H or an organic group having 1 to 10 carbon atoms, imidazolium optionally having a substituent, pyridinium optionally having a substituent, or phosphonium optionally having a substituent; and p is 1 or 2.

General Formula (6'): $(H\text{-}(CF_2)_{18}\text{-}COO)_pM^1$

wherein $M^1$ is H, a metal atom, $NR^5_4$ where $R^5$ may be the same as or different from each other and is H or an organic group having 1 to 10 carbon atoms, imidazolium optionally having a substituent, pyridinium optionally having a substituent, or phosphonium optionally having a substituent; and p is 1 or 2.

It is preferable that the fluoropolymer aqueous dispersion of the present disclosure is substantially free from a compound represented by the general formula (3). The expression "substantially free from a compound represented by the general formula (3)" means that, for example, the content of the compound represented by the general formula (3) may be 150 ppb or less based on PTFE. The content of the compound represented by the general formula (3) may be 100 ppb or less, may be 25 ppb or less, may be 15 ppb or less, or may be 10 ppb or less, based on PTFE. The lower limit thereof may be, but is not limited to, 0 ppb, may be 0.1 ppb, or may be 1 ppb.

General Formula (3): $(H\text{-}(CF_2)_8\text{-}SO_3)_qM^2$

wherein $M^2$ is H, a metal atom, $NR^5_4$ where $R^5$ may be the same as or different from each other and is H or an organic group having 1 to 10 carbon atoms, imidazolium optionally having a substituent, pyridinium optionally having a substituent, or phosphonium optionally having a substituent; and q is 1 or 2.

The fluoropolymer aqueous dispersion of the present disclosure may contain the compound represented by the following general formula (4) in an amount of 1,000 ppb or less based on PTFE. The content of the compound represented by the general formula (4) may be 500 ppb or less, may be 400 ppb or less, may be 300 ppb or less, may

be 250 ppb or less, may be 200 ppb or less, may be 150 ppb or less, may be 100 ppb or less, may be 25 ppb or less, may be 15 ppb or less, or may be 10 ppb or less, based on PTFE. The lower limit thereof may be, but is not limited to, 0.1 ppb or 1 ppb.

General Formula (4): $(H-(CF_2)_7-COO)_pM^1$

wherein $M^1$ is H, a metal atom, $NR^5_4$ where $R^5$ may be the same as or different from each other and is H or an organic group having 1 to 10 carbon atoms, imidazolium optionally having a substituent, pyridinium optionally having a substituent, or phosphonium optionally having a substituent; and p is 1 or 2.

The fluoropolymer aqueous dispersion of the present disclosure may contain the compound represented by the following general formula (4') in an amount of 1,000 ppb or less based on PTFE. The content of the compound represented by the general formula (4') may be 500 ppb or less, may be 400 ppb or less, may be 300 ppb or less, may be 250 ppb or less, may be 200 ppb or less, may be 150 ppb or less, may be 100 ppb or less, may be 25 ppb or less, may be 15 ppb or less, or may be 10 ppb or less, based on PTFE. The lower limit thereof may be, but is not limited to, 0.1 ppb or 1 ppb.

General Formula (4'): $(H-(CF_2)_8-COO)_pM^1$

wherein $M^1$ is H, a metal atom, $NR^5_4$ where $R^5$ may be the same as or different from each other and is H or an organic group having 1 to 10 carbon atoms, imidazolium optionally having a substituent, pyridinium optionally having a substituent, or phosphonium optionally having a substituent; and p is 1 or 2.

The fluoropolymer aqueous dispersion of the present disclosure may contain the compound represented by the following general formula (5) in an amount of 1,000 ppb or less based on PTFE. The content of the compound represented by the general formula (5) may be 500 ppb or less, may be 400 ppb or less, may be 300 ppb or less, may be 250 ppb or less, may be 200 ppb or less, may be 150 ppb or less, may be 100 ppb or less, may be 25 ppb or less, may be 15 ppb or less, or may be 10 ppb or less, based on PTFE. The lower limit thereof may be, but is not limited to, 0.1 ppb or 1 ppb.

General Formula (5): $(H-(CF_2)_{13}-COO)_pM^1$

wherein $M^1$ is H, a metal atom, $NR^5_4$ where $R^5$ may be the same as or different from each other and is H or an organic group having 1 to 10 carbon atoms, imidazolium optionally having a substituent, pyridinium optionally having a substituent, or phosphonium optionally having a substituent; and p is 1 or 2.

The fluoropolymer aqueous dispersion of the present disclosure may contain the compound represented by the following general formula (5') in an amount of 1,000 ppb or less based on PTFE. The content of the compound represented by the general formula (5') may be 500 ppb or less, may be 400 ppb or less, may be 300 ppb or less, may be 250 ppb or less, may be 200 ppb or less, may be 150 ppb or less, may be 100 ppb or less, may be 25 ppb or less, may be 15 ppb or less, or may be 10 ppb or less, based on PTFE. The lower limit thereof may be, but is not limited to, 0.1 ppb or 1 ppb.

General Formula (5'): $(H-(CF_2)_{14}-COO)_pM^1$

wherein $M^1$ is H, a metal atom, $NR^5_4$ where $R^5$ may be the same as or different from each other and is H or an organic group having 1 to 10 carbon atoms, imidazolium optionally having a substituent, pyridinium optionally having a substituent, or phosphonium optionally having a substituent; and p is 1 or 2.

The fluoropolymer aqueous dispersion of the present disclosure may contain the compound represented by the following general formula (6) in an amount of 1,000 ppb or less based on PTFE. The content of the compound represented by the general formula (6) may be 500 ppb or less, may be 400 ppb or less, may be 300 ppb or less, is further preferably 250 ppb or less, is still further preferably 200 ppb or less, may be 150 ppb or less, may be 100 ppb or less, may be 25 ppb or less, may be 15 ppb or less, or may be 10 ppb or less, based on PTFE. The lower limit thereof may be, but is not limited to, 0.1 ppb or 1 ppb.

General Formula (6): $(H-(CF_2)_{17}-COO)_pM^1$

wherein $M^1$ is H, a metal atom, $NR^5_4$ where $R^5$ may be the same as or different from each other and is H or an organic group having 1 to 10 carbon atoms, imidazolium optionally having a substituent, pyridinium optionally having a substituent, or phosphonium optionally having a substituent; and p is 1 or 2.

The fluoropolymer aqueous dispersion of the present disclosure may contain the compound represented by

the following general formula (6') in an amount of 1,000 ppb or less based on PTFE. The content of the compound represented by the general formula (6') may be 500 ppb or less, may be 400 ppb or less, may be 300 ppb or less, is further preferably 250 ppb or less, may be 200 ppb or less, may be 150 ppb or less, may be 100 ppb or less, may be 25 ppb or less, may be 15 ppb or less, or may be 10 ppb or less, based on PTFE. The lower limit thereof may be, but is not limited to, 0.1 ppb or 1 ppb.

General Formula (6'): $(H-(CF_2)_{18}-COO)_pM^1$

wherein $M^1$ is H, a metal atom, $NR^5_4$ where $R^5$ may be the same as or different from each other and is H or an organic group having 1 to 10 carbon atoms, imidazolium optionally having a substituent, pyridinium optionally having a substituent, or phosphonium optionally having a substituent; and p is 1 or 2.

In the fluoropolymer aqueous dispersion of the present disclosure, among the compounds represented by the following general formula (2), the content of the compound in which n is 4 may be 150 ppb or less based on PTFE, the content of the compound in which n is 5 may be 150 ppb or less based on PTFE, the content of the compound in which n is 6 may be 150 ppb or less based on PTFE, the content of the compound in which n is 7 may be 150 ppb or less based on PTFE, the content of the compound in which n is 8 may be 150 ppb or less based on PTFE, the content of the compound in which n is 9 may be 150 ppb or less based on PTFE, the content of the compound in which n is 10 may be 150 ppb or less based on PTFE, the content of the compound in which n is 11 may be 150 ppb or less based on PTFE, the content of the compound in which n is 12 may be 150 ppb or less based on PTFE, the content of the compound in which n is 13 may be 150 ppb or less based on PTFE, the content of the compound in which n is 14 may be 150 ppb or less based on PTFE, the content of the compound in which n is 15 may be 150 ppb or less based on PTFE, the content of the compound in which n is 16 may be 150 ppb or less based on PTFE, the content of the compound in which n is 17 may be 150 ppb or less based on PTFE, the content of the compound in which n is 18 may be 150 ppb or less based on PTFE, the content of the compound in which n is 19 may be 150 ppb or less based on PTFE, and the content of the compound in which n is 20 may be 150 ppb or less based on PTFE.

General Formula (2): $(H-(CF_2)_n-SO_3)_qM^2$

wherein n is 4 to 20; $M^2$ is H, a metal atom, $NR^5_4$ where $R^5$ may be the same as or different from each other and is H or an organic group having 1 to 10 carbon atoms, imidazolium optionally having a substituent, pyridinium optionally having a substituent, or phosphonium optionally having a substituent; and q is 1 or 2.

The content of each compound in which n is 4 to 20 may be 100 ppb or less, may be 25 ppb or less, may be 15 ppb or less, or may be 10 ppb or less. The lower limit thereof may be, but is not limited to, 0 ppb, may be 0.1 ppb, or may be 1 ppb. In the fluoropolymer aqueous dispersion of the present disclosure, the content of any of the compounds represented by the general formula (2) may be 0 ppb.

In the fluoropolymer aqueous dispersion of the present disclosure, among the compounds represented by the following general formula (1), the content of the compound in which m is 3 may be 150 ppb or less based on PTFE, the content of the compound in which m is 4 may be 150 ppb or less based on PTFE, the content of the compound in which m is 5 may be 150 ppb or less based on PTFE, the content of the compound in which m is 6 may be 150 ppb or less based on PTFE, the content of the compound in which m is 7 may be 150 ppb or less based on PTFE, the content of the compound in which m is 8 may be 150 ppb or less based on PTFE, the content of the compound in which m is 9 may be 150 ppb or less based on PTFE, the content of the compound in which m is 10 may be 150 ppb or less based on PTFE, the content of the compound in which m is 11 may be 150 ppb or less based on PTFE, the content of the compound in which m is 12 may be 150 ppb or less based on PTFE, the content of the compound in which m is 13 may be 150 ppb or less based on PTFE, the content of the compound in which m is 14 may be 150 ppb or less based on PTFE, the content of the compound in which m is 15 may be 150 ppb or less based on PTFE, the content of the compound in which m is 16 may be 150 ppb or less based on PTFE, the content of the compound in which m is 17 may be 150 ppb or less based on PTFE, the content of the compound in which m is 18 may be 150 ppb or less based on PTFE, and the content of the compound in which m is 19 may be 150 ppb or less based on PTFE.

General Formula (1): $(H-(CF_2)_m-COO)_pM^1$

wherein m is 3 to 19; $M^1$ is H, a metal atom, $NR^5_4$ where $R^5$ may be the same as or different from each other and is H or an organic group having 1 to 10 carbon atoms, imidazolium optionally having a substituent, pyridinium optionally having a substituent, or phosphonium optionally having a substituent; and p is 1 or 2.

The content of each compound in which m is 3 to 19 may be 100 ppb or less, may be 25 ppb or less, may be 15 ppb or less, or may be 10 ppb or less. The lower limit thereof may be, but is not limited to, 0 ppb, may be 0.1 ppb, or may be 1 ppb.

In the general formula (1), (2), (3), (4), (4'), (5), (5'), (6), or (6') four $R^5$s may be the same or different from each other. $R^5$ is preferably H or an organic group having 1 to 10 carbon atoms, and more preferably H or an organic group having 1 to 4 carbon atoms.

In the fluoropolymer aqueous dispersion of the present disclosure, the content of the compound represented by the general formula (1), (2), (3), (4), (4'), (5), (5'), (6), or (6') is a value determined by liquid chromatography-mass spectrometry as described in Examples to be described later.

In the fluoropolymer aqueous dispersion of the present disclosure, the fluoropolymer is preferably at a concentration of 10 to 90% by mass of the fluoropolymer aqueous dispersion. The lower limit of the concentration of the fluoropolymer is preferably 20% by mass, more preferably 30% by mass, still more preferably 40% by mass, further preferably 50% by mass, and particularly preferably 55% by mass. The upper limit thereof is preferably 80% by mass, and more preferably 70% by mass.

The fluoropolymer aqueous dispersion of the present disclosure may contain a nonionic surfactant.

The content of the nonionic surfactant is preferably 0.5% by mass or more, more preferably 1% by mass or more, and still more preferably 2% by mass or more, based on the fluoropolymer. Further, the content thereof is preferably 10% by mass or less, more preferably 8% by mass or less, and still more preferably 7% by mass or less.

As the nonionic surfactant, the nonionic surfactants described in the step of adding the nonionic surfactant to the fluoropolymer aqueous dispersion, which is performed before the step (B) described above, may be used.

It is preferable that the fluoropolymer aqueous dispersion of the present disclosure is substantially free from a fluorine-containing surfactant. The expression "substantially free from a fluorine-containing surfactant" as used herein means that the fluorine-containing surfactant is 10 ppm or less based on the fluoropolymer. The content of the fluorine-containing surfactant is preferably 1 ppm or less, more preferably 100 ppb or less, still more preferably 10 ppb or less, further preferably 1 ppb or less, and particularly preferably the fluorine-containing surfactant is below the detection limit as measured by liquid chromatography-mass spectrometry (LC/MS/MS).

The amount of the fluorine-containing surfactant can be determined by a known method. For example, it can be determined by LC/MS/MS analysis. First, the obtained fluoropolymer aqueous dispersion is extracted into an organic solvent of methanol, and the extracted liquid is subjected to LC/MS/MS analysis. Then, the molecular weight information is extracted from the LC/MS/MS spectrum to confirm agreement with the structural formula of the candidate surfactant.

Thereafter, aqueous solutions having five or more different concentration levels of the confirmed surfactant are prepared, and LC/MS/MS analysis is performed for each concentration level to prepare a calibration curve with the area.

The obtained fluoropolymer aqueous dispersion may be subjected to Soxhlet extraction with methanol, and the extracted liquid may be subjected to LC/MS/MS analysis for quantitative measurement.

In other words, the content of the fluorine-containing surfactant can be quantified by, for example, LC/MS/MS analysis. First, methanol is added to the aqueous dispersion for extraction, and the resulting extracted liquid is subjected to LC/MS/MS analysis. In order to further increase the extraction efficiency, a treatment by Soxhlet extraction, ultrasonic treatment, or the like may be performed. The molecular weight information is extracted from the obtained LC/MS/MS spectrum to confirm agreement with the structural formula of the candidate fluorine-containing surfactant. Thereafter, aqueous solutions having five or more different content levels of the confirmed fluorine-containing surfactant are prepared, and LC/MS/MS analysis is performed on the aqueous solutions with the respective content levels, and the relationship between the content level and the area corresponding to that content level is plotted to draw a calibration curve. Then, using the calibration curve, the area of the LC/MS/MS chromatogram of the fluorine-containing surfactant in the extracted liquid can be converted to the content of the fluorine-containing surfactant.

The content of the fluorine-containing surfactant contained in the aqueous dispersion can be quantified by the method described below, but the quantification limit can be lowered by adding an extraction solvent to the aqueous dispersion and further concentrating the extracted liquid after performing the extraction. Alternatively, the quantification limit can also be lowered by increasing the liquid volume of the aqueous dispersion during extraction or by decreasing the liquid volume of the extraction solvent.

The fluorine-containing surfactant is the same as those exemplified in the above-described method for producing the fluoropolymer aqueous dispersion. For example, the surfactant may be a fluorine atom-containing surfactant having, in the portion excluding the anionic group, 20 or less carbon atoms in total, may be a fluorine-containing surfactant having an anionic moiety having a molecular weight of 800 or less, and may be a fluorine-containing surfactant having a Log POW of 3.5 or less.

Examples of the anionic fluorine-containing surfactant include compounds represented by the general formula ($N^0$), and specific examples thereof include compounds represented by the general formula ($N^1$), compounds represented by the general formula ($N^2$), compounds represented by the general formula ($N^3$), compounds represented by the general formula ($N^4$), and compounds represented by the general formula ($N^5$). More specific examples thereof include a perfluorocarboxylic acid (I) represented by the general formula (I), an ω-H perfluorocarboxylic acid (II) represented by the general formula (II), a perfluoropolyethercarboxylic acid (III) represented by the general formula (III), a perfluoroalkylalkylenecarboxylic acid (IV) represented by the general formula (IV), a perfluoroalkoxyfluorocarboxylic acid (V) represented

by the general formula (V), a perfluoroalkylsulfonic acid (VI) represented by the general formula (VI), an ω-H perfluorosulfonic acid (VII) represented by the general formula (VII), a perfluoroalkylalkylene sulfonic acid (VIII) represented by the general formula (VIII), an alkylalkylene carboxylic acid (IX) represented by the general formula (IX), a fluorocarboxylic acid (X) represented by the general formula (X), an alkoxyfluorosulfonic acid (XI) represented by the general formula (XI), a compound (XII) represented by the general formula (XII), and a compound (XIII) represented by the general formula (XIII).

## EXAMPLES

Hereinafter, the present disclosure will be described with reference to experimental examples, but the present disclosure is not limited solely to such Examples.
In Examples, each physical property was measured by the following method.

### Solid content

In an air dryer, 1 g of PTFE aqueous dispersion was dried at a condition of 150°C for 60 minutes, and the proportion of the mass of the non-volatile matter to the mass of the aqueous dispersion (1 g) was expressed by percentage and taken as the solid concentration thereof.

### Average primary particle size

The average primary particle size is determined by dynamic light scattering. A fluoropolymer aqueous dispersion with the fluoropolymer solid concentration being adjusted to about 1.0% by mass was prepared. The average primary particle size was determined from 70 measurement processes using ELSZ-1000S (manufactured by Otsuka Electronics Co., Ltd.) at 25°C. The refractive index of the solvent (water) was 1.3328 and the viscosity of the solvent (water) was 0.8878 mPa·s.
Content of specific compound containing fluorine The following describes the method of measuring the contents of compounds represented by the following general formulas (1) and (2), as specific compounds containing fluorine.

General Formula (1): $(H-(CF_2)_m-COO)_pM^1$

wherein m is 3 to 19; $M^1$ is H, a metal atom, $NR^5_4$, imidazolium optionally having a substituent, pyridinium optionally having a substituent, or phosphonium optionally having a substituent; and p is 1 or 2.

General Formula (2) : $(H-(CF_2)_n-SO_3)_qM^2$

wherein n is 4 to 20; $M^2$ is H, a metal atom, $NR^5_4$, imidazolium optionally having a substituent, pyridinium optionally having a substituent, or phosphonium optionally having a substituent; and q is 1 or 2.
The contents of specific compounds containing fluorine were measured under the following conditions using liquid chromatography-mass spectrometry.
The solid content in the aqueous dispersion was determined, and the aqueous dispersion in an amount equivalent to 0.5 g of the solid PTFE was put into a 100-mL screw tube. Thereafter, water and methanol were added thereto such that the extraction solvent was to be 40 g (43.14 mL) having a water/methanol ratio by vol% of 50/50 including the water originally contained in the aqueous dispersion. Thereafter, the mixture was well shaken until coagulation occurred. The solid was removed and the liquid phase was centrifuged at 4,000 rpm for one hour, and then the supernatant containing the compound represented by the general formula (1) and the compound represented by the general formula (2) was extracted as the extracted liquid.
(Method of measuring content of compound represented by general formula (1))
The content of the compound represented by the general formula (1) contained in the extract was determined by conversion in terms of perfluorooctanoic acid equivalent.

### Calibration curve of perfluorooctanoic acid

Five methanol standard solutions of perfluorooctanoic acid having known concentrations within 1 ng/mL to 100 ng/mL were prepared, and subjected to analysis using a liquid chromatograph-mass spectrometer (Waters, LC-MS ACQUITY UPLC/TQD). Using the first order approximation from the respective sample concentrations and the peak integral values, the values a and b were determined by the following relational formula (1):

$$A = a \times X + b \quad (1)$$

A: peak area of perfluorooctanoic acid
X: concentration (ng/mL) of perfluorooctanoic acid

Measurement equipment configuration and LC/MS/MS measurement conditions

[Table 1]

Table 1

| | | | |
|---|---|---|---|
| LC unit | | | |
| Apparatus | Acquity UPLC manufactured by Waters | | |
| Column | Acquity UPLC manufactured by Waters BEH C18 1.7 mm (2.1 × 50 mm) | | |
| Mobile phase | A | $CH_3CN$ | |
| | B | 20 mM $CH_3COONH_4/H_2O$ | |
| | | 0 → 1.5 min | A:B=10:90 |
| | | 1.5 → 8.5 min | A:B= 10:90 → A:B=90:10 Linear gradient |
| | | 8.5 → 10 min | A:B=90:10 |
| Flow rate | | 0.4 mL/min | |
| Column temperature | 40°C | | |
| Sample injection volume | 5 μL | | |
| MS unit | | | |
| Apparatus | TQ Detecter | | |
| Measurement mode | MRM (Multiple Reaction Monitoring) | | |
| Ionization method | Electrospray ionization<br>Negative mode | | |

MRM measurement parameters

[Table 2]

Table 2

| Compound | Precursor | Product |
|---|---|---|
| Perfluorooctanoic acid | 413 | 369 |

Content of compounds represented by general formula (1) having 4 or more and 20 or less carbon atoms contained in extract

Using a liquid chromatograph-mass spectrometer, compounds represented by the general formula (1) having 4 or more and 20 or less carbon atoms were subjected to analysis. For the extracted liquid phase, the peak areas of the compounds represented by the general formula (1) having the respective numbers of carbon atoms were determined by MRM.

MRM measurement parameters

[Table 3]

Table 3

| Compound name | Number of carbon atoms | Precursor | Product |
|---|---|---|---|
| $(H-(CF_2)_3-COO)M^1$ | 4 | 195 | 131 |
| $(H-(CF_2)_4-COO)M^1$ | 5 | 245 | 181 |
| $(H-(CF_2)_5-COO)M^1$ | 6 | 295 | 231 |
| $(H-(CF_2)_6-COO)M^1$ | 7 | 345 | 281 |
| $(H-(CF_2)_7-COO)M^1$ | 8 | 395 | 331 |
| $(H-(CF_2)_8-COO)M^1$ | 9 | 445 | 381 |
| $(H-(CF_2)_9-COO)M^1$ | 10 | 495 | 431 |
| $(H-(CF_2)_{10}-COO)M^1$ | 11 | 545 | 481 |
| $(H-(CF_2)_{11}-COO)M^1$ | 12 | 595 | 531 |
| $(H-(CF_2)_2-COO)M^1$ | 13 | 645 | 581 |
| $(H-(CF_2)_{13}-COO)M^1$ | 14 | 695 | 631 |
| $(H-(CF_2)_{14}-COO)M^1$ | 15 | 745 | 681 |
| $(H-(CF_2)_{15}-COO)M^1$ | 16 | 795 | 731 |
| $(H-(CF_2)_{16}-COO)M^1$ | 17 | 845 | 781 |
| $(H-(CF_2)_{17}-COO)M^1$ | 18 | 895 | 831 |
| $(H-(CF_2)_{18}-COO)M^1$ | 19 | 945 | 881 |
| $(H-(CF_2)_{19}-COO)M^1$ | 20 | 995 | 931 |

The content of the compound represented by the general formula (1) having (m + 1) carbon atoms in the extract was calculated by the following formula (3). The values a and b in the formula (3) were determined by the formula (1):

$$XCm = ((ACm - b)/a) \times ((50 \times m + 45)/413) \quad (3)$$

XCm: content (ng/mL) of compound represented by general formula (1) having (m + 1) carbon atoms in extract solution
ACm: peak area of compound represented by general formula (1) having (m + 1) carbon atoms in extract solution

The quantification limit in this measurement is 1 ng/mL.

Content of compound represented by general formula (1) having (m + 1) carbon atoms contained in aqueous dispersion

The content of the compound represented by the general formula (1) having (m + 1) carbon atoms contained in the aqueous dispersion was determined by the following formula (5)::

$$ZCm = XCm \times 86.3 \quad (5)$$

ZCm: content (ppb based on PTFE) of compound represented by general formula (1) having (m + 1) carbon atoms contained in aqueous dispersion

(Method of measuring content of compound represented by general formula (2))

Measurement of content of compound represented by general formula (2) contained in extract

The content of the compound represented by the general formula (2) contained in the extract was determined by conversion in terms of perfluorooctanesulfonic acid equivalent.

Calibration curve of perfluorooctanesulfonic acid

Five methanol standard solutions of perfluorooctanesulfonic acid having known concentrations within 1 ng/mL to 100 ng/mL were prepared, and subjected to analysis using a liquid chromatograph-mass spectrometer (Waters, LC-MS ACQUITY UPLC/TQD). Using the first order approximation from the respective sample concentrations and the peak integral values, the values a and b were determined by the following relational formula (1) :

$$A = a \times X + b \quad (1)$$

A: peak area of perfluorooctanesulfonic acid
X: concentration (ng/mL) of perfluorooctanesulfonic acid

Measurement equipment configuration and LC/MS/MS measurement conditions

[Table 4]

Table 4

| | | | |
|---|---|---|---|
| LC unit | | | |
| Apparatus | Acquity UPLC manufactured by Waters | | |
| Column | Acquity UPLC manufactured by Waters BEH C18 1.7 mm (2.1 × 50 mm) | | |
| Mobile phase | A $CH_3CN$ | | |
| | B 20 mM $CH_3COONH_4/H_2O$ | | |
| | | 0 → 1.5 min | A:B= 10:90 |
| | | 1.5 → 8.5 min | A:B= 10:90 → A:B=90:10 Linear gradient |
| | | 8.5 → 10 min | A:B=90:10 |
| Flow rate | | 0.4 mL/min | |
| Column temperature | 40°C | | |
| Sample injection volume | 5 μL | | |
| MS unit | | | |
| Apparatus | TQ Detecter | | |
| Measurement | MRM (Multiple Reaction Monitoring) | | |
| Ionization method | Electrospray ionization | | |
| | Negative mode | | |

MRM measurement parameters

[Table 5]

Table 5

| Compound | Precursor | Product |
|---|---|---|
| Perfluorooctanesulfonic acid | 499 | 99 |

Content of compounds represented by general formula (2) having 4 or more and 20 or less carbon atoms contained in extract

Using a liquid chromatograph-mass spectrometer, compounds represented by the general formula (2) having 4 or more and 20 or less carbon atoms were subjected to analysis. For the extracted liquid phase, the peak areas of the compounds represented by the general formula (2) having the respective numbers of carbon atoms were determined by MRM.

MRM measurement parameters

[Table 6]

Table 6

| Compound name | Number of carbon atoms | Precursor | Product |
|---|---|---|---|
| $(H-(CF_2)_4-SO_3)M^2$ | 4 | 281 | 99 |
| $(H-(CF_2)_5-SO_3)M^2$ | 5 | 331 | 99 |
| $(H-(CF_2)_6-SO_3)M^2$ | 6 | 381 | 99 |
| $(H-(CF_2)_7-SO_3)M^2$ | 7 | 431 | 99 |
| $(H-(CF_2)_8-SO_3)M^2$ | 8 | 481 | 99 |
| $(H-(CF_2)_9-SO_3)M^2$ | 9 | 531 | 99 |
| $(H-(CF_2)_{10}-SO_3)M^2$ | 10 | 581 | 99 |
| $(H-(CF_2)_{11}-SO_3)M^2$ | 11 | 631 | 99 |
| $(H-(CF_2)_{12}-SO_3)M^2$ | 12 | 681 | 99 |
| $(H-(CF_2)_{13}-SO_3)M^2$ | 13 | 731 | 99 |
| $(H-(CF_2)_{14}-SO_3)M^2$ | 14 | 781 | 99 |
| $(H-(CF_2)_{15}-SO_3)M^2$ | 15 | 831 | 99 |
| $(H-(CF_2)_{16}-SO_3)M^2$ | 16 | 881 | 99 |
| $(H-(CF_2)_{17}-SO_3)M^2$ | 17 | 931 | 99 |
| $(H-(CF_2)_{18}-SO_3)M^2$ | 18 | 981 | 99 |
| $(H-(CF_2)_{19}-SO_3)M^2$ | 19 | 1031 | 99 |
| $(H-(CF_2)_{20}-SO)M^2$ | 20 | 1081 | 99 |

The content of the compound represented by the general formula (2) having n carbon atoms in the extracted liquid was calculated by the following formula (3). The values a and b in the formula (3) were determined by the formula (1):

$$XSn = ((ASn - b)/a) \times ((50 \times n + 81)/499) \quad (3)$$

XSn: content (ng/mL) of compound represented by general formula (2) having n carbon atoms in extract solution
ASn: peak area of compound represented by general formula (2) having n carbon atoms in extract solution

The quantification limit in this measurement is 1 ng/mL.

Content of compound represented by general formula (2) having n carbon atoms contained in aqueous dispersion

The content of the compound represented by the general formula (2) having n carbon atoms contained in the aqueous dispersion was determined by the following formula (5):

$$ZSn = XSn \times 86.3 \quad (5)$$

ZSn: content (ppb based on PTFE) of compound represented by general formula (2) having n carbon atoms contained in aqueous dispersion

In Synthesis Examples, polymerization was carried out using sodium 10-oxoundecyl sulfate (hereinafter, referred to as a surfactant A).

Synthesis Example 1

To a glass reactor with an internal volume of 1 L and equipped with a stirrer, 588.6g of deionized water and 70.0 g of the surfactant A were added. The reactor was sealed, and the system was purged with nitrogen, so that oxygen was removed. The reactor was heated up to 90°C and pressurized to 0.4 MPaG with nitrogen. Then, 41.4 g of ammonium persulfate (APS) was charged thereinto and stirred for 3 hours. The stirring was stopped, the pressure was released until the reactor was adjusted to the atmospheric pressure, and the reactor was cooled to obtain an aqueous surfactant solution B.

Synthesis Example 2

To a reactor made of SUS with an internal volume of 6 L and equipped with a stirrer, 3,600 g of deionized

degassed water, 180 g of paraffin wax, and 0.540 g of the surfactant A were added. The reactor was sealed and the system was purged with nitrogen, so that oxygen was removed. The reactor was heated up to 90°C and TFE was filled into the reactor such that the reactor was adjusted to 2.70 MPaG. Then, 0.031 g of ammonium persulfate (APS) and 1.488 g of disuccinic acid peroxide (DSP) serving as polymerization initiators were charged thereinto. TFE was charged so as to keep the reaction pressure constant at 2.70 MPaG. At the same time as TFE was started to be charged, the aqueous surfactant solution B was started to be continuously charged. When 1,650 g of TFE was charged, the stirring was stopped and the pressure was released until the reactor was adjusted to the atmospheric pressure. By the end of the reaction, 139 g of the aqueous surfactant solution B was charged. The contents were collected from the reactor and cooled so that the paraffin wax was separated, whereby a PTFE aqueous dispersion C was obtained.

The solid content in the resulting PTFE aqueous dispersion C was 31.7% by mass, and the average primary particle size was 357 nm.

Synthesis Example 3: Preparation example of PTFE aqueous dispersion containing nonionic surfactant

To the PTFE aqueous dispersion C obtained in Synthesis Example 2, a nonionic surfactant (T-Det A138, manufactured by Hacros Chemicals Inc., cloud point 44°C) was added in an amount equivalent to 10.0% by mass based on PTFE, and gently dispersed with a resin rod to obtain a PTFE aqueous dispersion D containing the nonionic surfactant.

Synthesis Example 4

In a 200 mL beaker, 100 g of the PTFE aqueous dispersion D obtained in Synthesis Example 3 was placed, 18 g of an anion exchange resin (Amberjet IRA4002OH, manufactured by DuPont de Nemours, Inc.) was added thereto, and the mixture was stirred using a stirrer for 30 min at an intensity sufficient to prevent agglomeration. After allowing it to stand still for 3 hours, the anion exchange resin was removed using a mesh to obtain a PTFE aqueous dispersion E.

Example 1

To the purified PTFE aqueous dispersion E obtained in Synthesis Example 4, an anion exchange resin (PFA694E, manufactured by Purolite Corporation) was further added at the same proportion (18 g) as in Synthesis Example 4, and the same operations were performed to obtain a PTFE aqueous dispersion F.

To the PTFE aqueous dispersion F, a nonionic surfactant (T-Det A138, manufactured by Hacros Chemicals Inc.) was added to 15% by mass/PTFE and the mixture was allowed to stand still for 4 hours at 48°C. Then, the mixture was separated into two phases: a supernatant phase substantially free from PTFE and a concentrated phase. The supernatant phase was removed to obtain the concentrated phase (PTFE aqueous dispersion G).

To the concentrated phase (PTFE aqueous dispersion G), a nonionic surfactant (T-Det A138, manufactured by Hacros Chemicals Inc.) and water were added such that the PTFE content was 25% by mass and the nonionic surfactant content was 15% by mass/PTFE, and the mixture was allowed to stand still for 4 hours at 44°C. Then, the mixture was separated into two phases: a supernatant phase substantially free from PTFE and a concentrated phase. The supernatant phase was removed to obtain the concentrated phase (PTFE aqueous dispersion H).

Example 2

To the concentrated phase (PTFE aqueous dispersion H) obtained in Example 1, a nonionic surfactant (T-Det
A138, manufactured by Hacros Chemicals Inc.) and water were added such that the PTFE content was 25% by mass and the nonionic surfactant content was 15% by mass/PTFE, and the mixture was allowed to stand still for 4 hours at 44°C. Then, the mixture was separated into two phases: a supernatant phase substantially free from PTFE and a concentrated phase. The supernatant phase was removed to obtain the concentrated phase (PTFE aqueous dispersion I).

Example 3

To the PTFE aqueous dispersion F of Example 1, an anion exchange resin (PFA694E, manufactured by Purolite Corporation) was further added at the same proportion (18 g) as in Synthesis Example 4, and the same operations were performed to obtain a PTFE aqueous dispersion J.

To the PTFE aqueous dispersion J, a nonionic surfactant (T-Det A138, manufactured by Hacros Chemicals Inc.) was added to 15% by mass/PTFE and the mixture was allowed to stand still for 4 hours at 48°C. Then, the mixture was separated into two phases: a supernatant phase substantially free from PTFE and a concentrated phase. The supernatant phase was removed to obtain the concentrated phase (PTFE aqueous dispersion K).

To the concentrated phase (PTFE aqueous dispersion K), a nonionic surfactant (T-Det A138, manufactured by Hacros Chemicals Inc.) and water were added such that the PTFE content was 25% by mass and the nonionic surfactant content was 15% by mass/PTFE, and the mixture was allowed to stand still for 4 hours at 44°C. Then, the mixture was separated into two phases: a supernatant phase substantially free from PTFE and a concentrated phase. The supernatant phase was removed to obtain the concentrated phase (PTFE aqueous dispersion L).

Example 4

To the concentrated phase (PTFE aqueous dispersion L) obtained in Example 3, a nonionic surfactant (T-Det A138, manufactured by Hacros Chemicals Inc.) and water were added such that the PTFE content was 25% by mass and the nonionic surfactant content was 15% by mass/PTFE, and the mixture was allowed to stand still for 4 hours at 44°C. Then, the mixture was separated into two phases: a supernatant phase substantially free from PTFE and a concentrated phase. The supernatant phase was removed to obtain the concentrated phase (PTFE aqueous dispersion M).

Example 5

To the PTFE aqueous dispersion F of Example 1, a synthetic adsorbent (Amberlite FPX66, manufactured by DuPont de Nemours, Inc., pore size: 243 Å, pore volume: 1.9 $cm^3/g$, specific surface area: 914 $m^2/g$) was further added at the same proportion (18 g) as in Synthesis Example 4, and the same operations were performed to obtain a PTFE aqueous dispersion N.

To the PTFE aqueous dispersion N, a nonionic surfactant (T-Det A138, manufactured by Hacros Chemicals Inc.) was added to 15% by mass/PTFE and the mixture was allowed to stand still for 4 hours at 48°C. Then, the mixture was separated into two phases: a supernatant phase substantially free from PTFE and a concentrated phase. The supernatant phase was removed to obtain the concentrated phase (PTFE aqueous dispersion O).

To the PTFE aqueous dispersion O, a nonionic surfactant (T-Det A138, manufactured by Hacros Chemicals Inc.) was added to 15% by mass/PTFE and the mixture was allowed to stand still for 4 hours at 44°C. Then, the mixture was separated into two phases: a supernatant phase substantially free from PTFE and a concentrated phase. The supernatant phase was removed to obtain the concentrated phase (PTFE aqueous dispersion P).

Example 6

To the PTFE aqueous dispersion P obtained in Example 5, a nonionic surfactant (T-Det A138, manufactured by Hacros Chemicals Inc.) was added to 15% by mass/PTFE and the mixture was allowed to stand still for 4 hours at 44°C. Then, the mixture was separated into two phases: a supernatant phase substantially free from PTFE and a concentrated phase. The supernatant phase was removed to obtain the concentrated phase (PTFE aqueous dispersion R).

Comparative Example 1

To the PTFE aqueous dispersion E obtained in Synthesis Example 4, an anion exchange resin (Amberjet IRA4002OH, manufactured by DuPont de Nemours, Inc.) was further added at the same proportion (18 g) as in Synthesis Example 4, and the same operations were performed to obtain a PTFE aqueous dispersion S.

To the PTFE aqueous dispersion S, a nonionic surfactant (T-Det A138, manufactured by Hacros Chemicals Inc.) was added to 15% by mass/PTFE and the mixture was allowed to stand still for 4 hours at 48°C. Then, the mixture was separated into two phases: a supernatant phase substantially free from PTFE and a concentrated phase. The supernatant phase was removed to obtain the concentrated phase (PTFE aqueous dispersion T).

Comparative Example 2

To the PTFE aqueous dispersion T of Comparative Example 1, a nonionic surfactant (T-Det A138, manufactured by Hacros Chemicals Inc.) and water were added such that the PTFE content was 25% by mass and the nonionic surfactant content was 15% by mass/PTFE, and the mixture was allowed to stand still for 4 hours at 48°C. Then, the mixture was separated into two phases: a supernatant phase substantially free from PTFE and a concentrated phase. The supernatant phase was removed to obtain the concentrated phase (PTFE aqueous dispersion U).

[Table 7]

Table 7

| | | | Synthesis Example 3 | Example 1 | Example 2 | Example 3 | Example 4 | Example 5 | Example 6 | Comparative Example 1 | Comparative Example 2 |
|---|---|---|---|---|---|---|---|---|---|---|---|
| Ion exchange treatment Adsorption treatment (Resin type) | First time | – | – | 4002OH | 4002OH | 4002OH | 4002OH | 4002OH | 4002OH | 4002OH | 4002OH |
| | Second time | – | – | PFA694E | PFA694E | PFA694E | PFA694E | PFA694E | PFA694E | 4002OH | 4002OH |
| | Third time | – | – | - | - | PFA694E | PFA694E | FPX66 | FPX66 | - | - |
| | Number of concentrations | Times | – | 2 | 3 | 2 | 3 | 2 | 3 | 1 | 2 |
| PTFE aqueous dispersion | | | D | H | I | L | M | P | R | T | U |
| PTFE content (P) in PTFE aqueous dispersion containing nonionic surfactant | | % by mass | 26.5 | 64.4 | 66.2 | 66.2 | 63.4 | 63.8 | 62.7 | 66.8 | 67.1 |
| Nonionic surfactant content (N) in PTFE aqueous dispersion containing nonionic surfactant | | % by mass/PTFE | 10.0 | 3.2 | 3.0 | 2.8 | 3.1 | 3.1 | 3.4 | 2.7 | 2.9 |
| pH | | - | 2 | 11 | 11 | 10 | 10 | 11 | 11 | 10 | 10 |
| Content of general formula (2) contained in aqueous dispersion | n=4 | ppb/PTFE | 2.8E+03 | Quantification limit or lower | Quantification limit or lower | Quantification limit or lower | Quantification limit or lower | Quantification limit or lower | Quantification limit or lower | Quantification limit or lower | Quantification limit or lower |
| | n=6 | ppb/PTFE | 1.0E+04 | Quantification limit or lower | Quantification limit or lower | Quantification limit or lower | Quantification limit or lower | Quantification limit or lower | Quantification limit or lower | Quantification limit or lower | Quantification limit or lower |
| | n=8 | ppb/PTFE | 4.8E+03 | Quantification limit or lower | Quantification limit or lower | Quantification limit or lower | Quantification limit or lower | Quantification limit or lower | Quantification limit or lower | Quantification limit or lower | Quantification limit or lower |
| | n=10 | ppb/PTFE | 3.1E+03 | Quantification limit or lower | Quantification limit or lower | Quantification limit or lower | Quantification limit or lower | Quantification limit or lower | Quantification limit or lower | 3.2E+02 | 1.7E+02 |
| | n=12 | ppb/PTFE | 1.1E+03 | Quantification limit or lower | Quantification limit or lower | Quantification limit or lower | Quantification limit or lower | Quantification limit or lower | Quantification limit or lower | 2.0E+02 | 1.5E+02 |
| | n=14 | ppb/PTFE | Quantification limit or lower | Quantification limit or lower | Quantification limit or lower | Quantification limit or lower | Quantification limit or lower | Quantification limit or lower | Quantification limit or lower | Quantification limit or lower | Quantification limit or lower |
| | n=16 | ppb/PTFE | Quantification limit or lower | Quantification limit or lower | Quantification limit or lower | Quantification limit or lower | Quantification limit or lower | Quantification limit or lower | Quantification limit or lower | Quantification limit or lower | Quantification limit or lower |
| | n=18 | ppb/PTFE | Quantification limit or lower | Quantification limit or lower | Quantification limit or lower | Quantification limit or lower | Quantification limit or lower | Quantification limit or lower | Quantification limit or lower | Quantification limit or lower | Quantification limit or lower |
| | n=20 | ppb/PTFE | Quantification limit or lower | Quantification limit or lower | Quantification limit or lower | Quantification limit or lower | Quantification limit or lower | Quantification limit or lower | Quantification limit or lower | Quantification limit or lower | Quantification limit or lower |
| | Total | ppb/PTFE | 2.2E+04 | Quantification limit or lower | Quantification limit or lower | Quantification limit or lower | Quantification limit or lower | Quantification limit or lower | Quantification limit or lower | 5.3E+02 | 3.3E+02 |
| Content of general formula (1) contained in aqueous dispersion | m=3 | ppb/PTFE | 5.2E+03 | Quantification limit or lower | Quantification limit or lower | Quantification limit or lower | Quantification limit or lower | Quantification limit or lower | Quantification limit or lower | Quantification limit or lower | Quantification limit or lower |
| | m=5 | ppb/PTFE | 7.8E+03 | Quantification limit or lower | Quantification limit or lower | Quantification limit or lower | Quantification limit or lower | Quantification limit or lower | Quantification limit or lower | Quantification limit or lower | Quantification limit or lower |
| | m=7 | ppb/PTFE | 1.8E+04 | Quantification limit or lower | Quantification limit or lower | Quantification limit or lower | Quantification limit or lower | Quantification limit or lower | Quantification limit or lower | 8.7E+01 | Quantification limit or lower |
| | m=9 | ppb/PTFE | 1.8E+04 | Quantification limit or lower | Quantification limit or lower | Quantification limit or lower | Quantification limit or lower | Quantification limit or lower | Quantification limit or lower | 3.0E+02 | 1.8E+02 |
| | m=11 | ppb/PTFE | 1.8E+04 | 2.7E+02 | Quantification limit or lower | 1.2E+02 | Quantification limit or lower | 1.4E+02 | Quantification limit or lower | 2.8E+03 | 9.8E+02 |
| | m=13 | ppb/PTFE | 6.8E+03 | Quantification limit or lower | Quantification limit or lower | Quantification limit or lower | Quantification limit or lower | Quantification limit or lower | Quantification limit or lower | 2.9E+02 | 1.6E+02 |
| | m=15 | ppb/PTFE | 8.1E+02 | Quantification limit or lower | Quantification limit or lower | Quantification limit or lower | Quantification limit or lower | Quantification limit or lower | Quantification limit or lower | Quantification limit or lower | Quantification limit or lower |
| | m=17 | ppb/PTFE | Quantification limit or lower | Quantification limit or lower | Quantification limit or lower | Quantification limit or lower | Quantification limit or lower | Quantification limit or lower | Quantification limit or lower | Quantification limit or lower | Quantification limit or lower |
| | m=19 | ppb/PTFE | Quantification limit or lower | Quantification limit or lower | Quantification limit or lower | Quantification limit or lower | Quantification limit or lower | Quantification limit or lower | Quantification limit or lower | Quantification limit or lower | Quantification limit or lower |
| | Total | ppb/PTFE | 7.4E+04 | 2.7E+02 | Quantification limit or lower | 1.2E+02 | Quantification limit or lower | 1.4E+02 | Quantification limit or lower | 3.5E+03 | 1.3E+03 |

The quantification limit was 86 ppb for the aqueous dispersion. In the present disclosure, "E" in the table represents an exponent. For example, the description of "2.8E+03" means $2.8 \times 10^3$.

## Claims

1. A method for producing a purified fluoropolymer aqueous dispersion, comprising: (A) bringing a fluoropolymer aqueous dispersion obtained using a hydrocarbon surfactant into contact with an anion exchange resin A or a synthetic adsorbent,
   wherein the anion exchange resin A has:

   an ion-exchange group represented by the following general formula (A1):

   $$-N^+R^1R^2R^3X^-$$

   wherein $R^1$, $R^2$, and $R^3$ are the same as or different from each other, and are each a hydrogen atom or an organic group, and at least one of $R^1$, $R^2$, and $R^3$ is an organic group having 3 or more carbon atoms; and X is a counter ion; or
   an ion-exchange group represented by the following general formula (A2):

   $$-NR^4R^5$$

   wherein $R^4$ and $R^5$ are the same as or different from each other, and are each a hydrogen atom or an organic group, and at least one of $R^4$ and $R^5$ is an organic group having 2 or more carbon atoms.

2. The method according to claim 1, wherein in the general formula (A1), at least one of $R^1$, $R^2$, and $R^3$ is an organic group having 4 or more carbon atoms.

3. The method according to claim 1 or 2, wherein in the general formula (A1), $R^1$, $R^2$, and $R^3$ are each an organic group having 2 or more carbon atoms.

4. The method according to any of claims 1 to 3, wherein the synthetic adsorbent has a pore volume of 0.6 to 2.5 $cm^3/g$.

5. The method according to any of claims 1 to 4, wherein the step (A) is performed twice or more times.

6. The method according to any of claims 1 to 5, further comprising: (B) bringing the fluoropolymer aqueous dispersion into contact with an anion exchange resin B,
   wherein the anion exchange resin B is different from the anion exchange resin A.

7. The method according to claim 6, wherein the anion exchange resin B has:

   an ion-exchange group represented by the following general formula (B1):

   $$-N^+(CH_3)_3X^-$$

   wherein X represents a counter ion; or
   an ion-exchange group represented by the following general formula (B2):

   $$-N^+(CH_3)_2(C_2H_4OH)X^-$$

   wherein X represents a counter ion.

8. The method according to claim 6 or 7, wherein the step (B) is carried out before the step (A).

9. The method according to any of claims 1 to 8, further comprising: (C) adding a nonionic surfactant to the fluoropolymer aqueous dispersion that has undergone the step (A) for concentration by phase separation.

10. The method according to claim 9, wherein the step (C) is performed twice or more times.

**11.** The method according to claim 10, wherein in the first step (C), the concentration by phase separation is performed by heating the fluoropolymer aqueous dispersion at a temperature 5°C lower than the cloud point of the nonionic surfactant or higher and then allowing it to stand still to separate it into a supernatant phase and a concentrated phase.

**12.** The method according to claim 10 or 11, wherein in the second step (C), the concentration by phase separation is performed by heating the fluoropolymer aqueous dispersion at a temperature 5°C lower than the cloud point of the nonionic surfactant or higher and then allowing it to stand still to separate it into a supernatant phase and a concentrated phase.

**13.** A fluoropolymer aqueous dispersion comprising a fluoropolymer and water,
wherein the dispersion comprises a compound represented by the following general formula (1) and a total content of the compound represented by the following general formula (1) is 1,000 ppb or less based on the fluoropolymer:

General Formula (1): $(H\text{-}(CF_2)_m\text{-}COO)_pM^1$

wherein m is 3 to 19; $M^1$ is H, a metal atom, $NR^5{}_4$ where $R^5$ is the same as or different from each other and is H or an organic group having 1 to 10 carbon atoms, imidazolium optionally having a substituent, pyridinium optionally having a substituent, or phosphonium optionally having a substituent; and p is 1 or 2.

**INTERNATIONAL SEARCH REPORT**

International application No.
PCT/JP2020/018045

A. CLASSIFICATION OF SUBJECT MATTER
C08F 6/16(2006.01)i; C08K 5/095(2006.01)i; C08K 5/098(2006.01)i; C08L 27/12(2006.01)i; B01J 20/26(2006.01)i; B01J 20/28(2006.01)i; B01J 41/05(2017.01)i; B01J 41/14(2006.01)i; B01J 47/018(2017.01)i
FI: C08F6/16; B01J20/26 G; B01J20/28 Z; B01J41/05; B01J41/14; B01J47/018; C08K5/095; C08K5/098; C08L27/12
According to International Patent Classification (IPC) or to both national classification and IPC

B. FIELDS SEARCHED
Minimum documentation searched (classification system followed by classification symbols)
C08F6/16; C08K5/095; C08K5/098; C08L27/12; B01J20/26; B01J20/28; B01J41/05; B01J41/14; B01J47/018

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2008-525591 A (E.I. DU PONT DE NEMOURS AND COMPANY) 17.07.2008 (2008-07-17) claims | 13<br>1-12 |
| A | WO 2014/084397 A1 (DAIKIN INDUSTRIES, LTD.) 05.06.2014 (2014-06-05) | 1-13 |
| A | JP 2016-130328 A (DAIKIN INDUSTRIES, LTD.) 21.07.2016 (2016-07-21) | 1-13 |
| A | JP 2005-325327 A (DAIKIN INDUSTRIES, LTD.) 24.11.2005 (2005-11-24) | 1-13 |

☐ Further documents are listed in the continuation of Box C.   ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 08 July 2020 (08.07.2020) | 21 July 2020 (21.07.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2020/018045

| Patent Documents referred in the Report | Publication Date | Patent Family | Publication Date |
|---|---|---|---|
| JP 2008-525591 A | 17 Jul. 2008 | WO 2006/069104 A1 claims | |
| WO 2014/084397 A1 | 05 Jun. 2014 | US 2015/0299341 A1 | |
| JP 2016-130328 A | 21 Jul. 2016 | US 2015/0299341 A1 | |
| JP 2005-325327 A | 24 Nov. 2005 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 9255164 B
- US 8563670 B
- US 9074025 B
- WO 2011014715 A
- WO 2004050719 A
- WO 2002532583 A
- JP 55120630 A
- US 7897682 B, Brothers
- US 7977438 B, Brothers
- US 20070015864
- US 20070015865
- US 20070015866
- US 20070276103
- US 20070117914
- US 2007142541
- US 20080015319
- US 3250808 A
- US 3271341 A
- JP 2003119204 A
- WO 2005042593 A
- WO 2008060461 A
- WO 2007046377 A
- WO 2007119526 A
- WO 2007046482 A
- WO 2007046345 A
- US 20140228531
- WO 2013189824 A
- WO 2013189826 A
- JP 61049327 A
- WO 2005527652 A
- WO 2012002038 A
- JP 11049912 A
- US 5804654 A
- JP 11029679 A
- JP 2003002980 A
- JP 2827152 B
- JP 2538783 B
- WO 2007004250 A
- WO 2007000812 A
- JP 10147617 A
- WO 2011520020 A
- WO 0001741 A
- WO 9724381 A
- JP 61057324 A
- JP 4081608 A
- JP 5013961 A
- WO 2013542308 A
- WO 2013542309 A
- WO 2013542310 A
- US 6841616 B


### Non-patent literature cited in the description


- **ROMPP.** Lexikon Chemie. Georg Thieme Verlag, 1999
- **KASAI.** *J. Appl. Polymer Sci.,* 1995, vol. 57, 797
- **R.M. HILL.** Silicone Surfactants. Marcel Dekker, Inc,